(19)

Europäisches
Patentamt
European
Patent Office
Office européen
des brevets

(11)  **EP 2 942 928 A1**

(12)  **EUROPEAN PATENT APPLICATION**

(43) Date of publication:
**11.11.2015 Bulletin 2015/46**

(51) Int Cl.:
*H04L 29/08* (2006.01)       *H04W 4/00* (2009.01)
*G06Q 30/00* (2012.01)

(21) Application number: **15173937.2**

(22) Date of filing: **24.04.2013**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **24.04.2012  US 201261637834 P
11.07.2012  US 201261670226 P
24.08.2012  US 201261693169 P
14.09.2012  US 201261701457 P
12.10.2012  US 201261713239 P
19.10.2012  US 201261716373 P
24.10.2012  US 201261717964 P
20.11.2012  US 201261728677 P
21.12.2012  US 201261745395 P
21.12.2012  US 201261745308 P
21.02.2013  US 201313773336
21.02.2013  US 201313773379
15.03.2013  US 201313833227**

(62) Document number(s) of the earlier application(s) in
accordance with Art. 76 EPC:
**13720706.4 / 2 842 295**

(71) Applicant: **Qualcomm Technologies, Inc.**
**San Diego, CA 92121 (US)**

(72) Inventors:
• **HUNTER, Kevin E.**
**San Diego, CA 92121 (US)**
• **SPRIGG, Stephen A.**
**San Diego, CA 92121 (US)**
• **MEIJERS, Neville J.**
**San Diego, CA 92121 (US)**
• **WURSTER, Charles S.**
**San Diego, CA 92121 (US)**
• **MENENDEZ, Jose R.**
**San Diego, CA 92121 (US)**
• **CANOY, Michael-David**
**San Diego, CA 92121 (US)**

(74) Representative: **Dunlop, Hugh Christopher**
**RGC Jenkins & Co.**
**26 Caxton Street**
**London SW1H 0RJ (GB)**

Remarks:
This application was filed on 25-06-2015 as a
divisional application to the application mentioned
under INID code 62.

(54)  **SYSTEM FOR DELIVERING RELEVANT USER INFORMATION BASED ON PROXIMITY AND
PRIVACY CONTROLS**

(57)  Methods, systems and devices for providing
profile information associated with a user based on prox-
imity. A mobile device stores (2956) the profile informa-
tion; receives (2957) a short-range wireless message
from a proximate device; identifies (2960) relevant profile
information within the stored profile information that is
authorized to be shared based on the received message;
and transmits (2966) a message including the identified
relevant profile information that is authorized to be
shared.

FIG. 29B

**EP 2 942 928 A1**

**Description**

RELATED APPLICATIONS

The present application is a continuation-in-part of and claims priority to U.S. Patent Application No. 13/773,379, titled "Platform for Wireless Identity Transmitter and System Using Short-Range Wireless Broadcasts," filed February 21, 2013 and U.S. Patent Application No. 13/773,336, titled "Preserving Security By Synchronizing a Nonce or Counter Between Systems," filed February 21, 2013, each of which claims the benefit of priority to U.S. Provisional Application No. 61/601,620 , filed February 22, 2012, U.S. Provisional Application No. 61/637,834, filed April 24, 2012, U.S. Provisional Application No. 61/693,169, filed August 24, 2012, U.S. Provisional Application No. 61/670,226, filed July 11, 2012, U.S. Provisional Application No. 61/701,457, filed September 14, 2012, U.S. Provisional Application No. 61/713,239, filed October 12, 2012, U.S. Provisional Application No. 61/716,373, filed October 19, 2012, U.S. Provisional Application No. 61/717,964, filed October 24, 2012, U.S. Provisional Application No. 61/728,677, filed November 20, 2012, and U.S. Provisional Application No. 61/745,395, filed December 21, 2012, U.S. Provisional Application No. 61/745,308, filed December 21, 2012, the entire contents of all of which are hereby incorporated by reference.

BACKGROUND

Efficient, directed customer service is often difficult for merchants, retailers, and other businesses to accomplish. For market or service models that utilize numerous locations and customer service representatives, merchants may not be able to immediately address and attend to customers with seamless, "high touch" service. In particular, counter staff, waiters, and attendants may have to conduct "cold start" interactions with customers to learn the customers' identities, preferences, and particular needs. For example, customer service personnel may have to ask many questions of customers to discover preference information, such as favorite colors/styles of clothing, sizing information, shoe size, and other essential data related to the customers' experience. Merchants may benefit from an automated process that provides such customer information to expedite, customize, and improve dining, shopping, and other service experiences.
Further, when customers do provide essential customer information, merchants may access non-essential customer information that is unnecessary for serving the customer. For example, to meet with state alcohol licensing regulations, a bartender may request to see a customer's driver's license to confirm a legal drinking age and, as a result, may view the customer's address and other unrelated personal information. Customers may desire a more controlled manner of delivering personal information to services that protects privacy by only disclosing information authorized by the customers.
Additionally, retailers, merchants, and payment providers are trying to innovate around new payment technologies and processes utilizing mobile devices and enhanced foot traffic metrics. A key problem these providers are trying to solve involves hands-free payment via proximity. Currently providers are using global positioning systems (GPS) and near-field communication (NFC) to try to achieve a hands-free payment authentication system, but each technology has its own advantages and disadvantages. In particular, some providers may use geofencing GPS technology to establish a virtual fence, however GPS geofencing requires a much larger radius that what is necessarily ideal for a payment engagement. For example many providers may use a geofence radius of 300 feet which may place a customer into a point-of-sale system for payment engagement when he/she is not even located within the retail store. Additionally problematic, in an area with numerous closely positioned retailers (e.g., a mall), retailer geofences may overlap and cause a customer to be in proximity for payment engagement at many merchants' stores at the same time. Further, due to various interferences, GPS does not work well within buildings. NFC systems may provide more granular proximity detections useful for hands-free payment engagements. However, NFC may utilize too small a proximity for hands-free payments (e.g., less than one foot radius), and NFC devices used in payment engagements may need to be pulled out and bumped or come very close to point-of-sale devices (e.g., cash registers, etc.).

SUMMARY

The various embodiments provide systems, devices, and methods for dynamically providing relevant user information to devices within proximity of a user, such as a customer within a retail store. In general, a compact wireless identity transmitter associated with a registered user (or customer) may be configured to broadcast messages that include a unique and secure identification code via a short-range wireless radio, such as a Bluetooth® Low Energy (LE) transceiver. The identification broadcast packets ("broadcast messages") may be received by physically proximate proximity broadcast receivers (PBR), which may be dedicated receivers, smartphones configured with a PBR application, tablet computers configured with a PBR application, and stationary receivers, to name just a few examples. The broadcast messages may be received by proximity broadcast receivers when the wireless identity transmitter is within reception range (e.g., within 0 to 25 feet). Proximity broadcast receivers may be mobile (e.g., smartphones configured with a PBR application) or stationary. Stationary proximity broadcast receivers may be positioned in strategic locations, such as in a movie theater, in or near stores within a shopping mall, at various locations within an amusement park, near doors of a house, and near particular product displays within a retail store. Because the wireless identity transmitter broadcasts short-range wireless signals, the proximity of the wireless identity transmitter to the areas may be recognized by reception of the signals by a proximity broadcast receiver located in the area. As the user travels through the place (e.g., a retail store), the proximity broadcast receivers may receive broadcast messages from user's wireless identity transmitter.

Proximity broadcast receivers may relay received broadcast messages, along with other information (e.g., timestamp data, proximity information, etc.), to a central server in the form of sighting messages. Such a central server may use the information received in sighting messages to track the wireless identity transmitter, and thus a user associated with that device. The central server may maintain a database of relayed information that may represent both historical and actively updated information for the customer's wireless identity transmitter, such as proximities to proximity broadcast receivers and/or point-of-sale devices over a period. The central server may use the identification code within the relayed messages to identify the wireless identity transmitter, and thus the user of the device.

Once the user is identified as being within proximity of a proximity broadcast receiver, the central server may be configured to identify profile information associated with the user and relevant to the proximity broadcast receiver and/or a registered service deploying the proximity broadcast receiver. For example, the central server may identify information indicating the user's food preference as relevant to a restaurant deploying the proximity broadcast receiver. In various embodiments, the central server may compare information within profiles associated with both the user and the registered service related to the proximity broadcast receiver to identify relevant or matching profile information. The central server may transmit such relevant profile information to the proximity broadcast receiver or another device associated with the proximity broadcast receiver (e.g., another computing device within the same restaurant). In this way, the central server may not divulge the entirety or unnecessary information within the user's stored profile, and thus third-parties, such as stores and restaurants, may only gain access to information on a "need-to-know" basis. In various embodiments, the user may provide permissions (or permissions settings) that are stored and used by the central server to protect the privacy of the user. For example, the central server may only identify and transmit profile information that is authorized by the user for transmission to a particular store or type of business. Thus, the user may provide his/her information only when a possible recipient may need the information and is authorized to receive it by the user.

In another embodiment, the central server may identify and transmit profile information that may be used to authenticate payments related to the user. The central server may determine when the user is within proximity of a point-of-sale device within a place, such as a cash register device within a retail store, and may transmit payment-related profile information to the point-of-sale device. For example, the central server may transmit a photograph or signature sample of the user to a device for verification by a cashier. Transmitting payment authentication information authorized by the user for delivery may promote proximity payment authentication services, such as identification confirmation, queuing for proximity payments, and expedited payment for goods while in line at a cash register

BRIEF DESCRIPTION OF THE DRAWINGS

The accompanying drawings, which are incorporated herein and constitute part of this specification, illustrate exemplary embodiments of the invention, and together with the general description given above and the detailed description given below, serve to explain the features of the invention.

FIG. 1 is a system diagram illustrating network components suitable for use in various embodiments.

FIG. 2 is a communication system diagram illustrating network components of embodiment architectures suitable for use in various embodiments.

FIG. 3 is a process flow diagram illustrating an embodiment method for broadcasting an identifier from a wireless identity transmitter.

FIG. 4 is a process flow diagram illustrating an embodiment method for a wireless identity transmitter receiving configuration settings after performing boot-up operations.

FIG. 5 is a process flow diagram of an embodiment method for a wireless identity transmitter performing two-way wireless communications with a proximity broadcast receiver.

FIG. 6 is a component diagram illustrating various modules within a mobile proximity broadcast receiver suitable for use in various embodiments.

FIG. 7 is a process flow diagram illustrating an embodiment method of a mobile proximity broadcast receiver relaying a wireless identity transmitter's identifier along with other data such as a time or location.

FIG. 8 is a call flow diagram for responding to a user request for a wireless identity transmitter's location in accordance with various embodiments.

FIG. 9 is a process flow diagram illustrating an embodiment method of performing code within a received broadcast message.

FIG. 10 is a process flow diagram illustrating an embodiment method of receiving an instruction from a central server in response to transmitting a sighting message based on proximity to a wireless identity transmitter.

FIG. 11 is a process flow diagram illustrating an embodiment method for a proximity broadcast receiver relaying a received broadcast message to and receiving a return message from a central server.

FIG. 12 is a component diagram illustrating various modules within a central server suitable for use in various embodiments.

FIG. 13 is a diagram illustrating a wireless identity transmitter registration process for use in various embodiments.

FIGS. 14A and 14B are process flow diagrams illustrating embodiment methods for a central server to process sighting messages received from proximity broadcast receivers.

FIGS. 15A-B are call flow diagrams illustrating communications between a wireless identity transmitter, a proximity broadcast receiver, and a central server in accordance with various embodiments.

FIG. 16 is a process flow diagram illustrating an embodiment method for a central server receiving sighting messages from a proximity broadcast receiver and transmitting return messages including various data.

FIG. 17 is a process flow diagram illustrating an embodiment method for a central server determining whether a proximity broadcast receiver has lost a wireless identity transmitter.

FIGS. 18A and 18C are communication system diagrams of mobile proximity broadcast receivers in communication with a wireless identity transmitter.

FIGS. 18B and 18D are process flow diagrams illustrating embodiment methods for determining the location of the wireless identity transmitter in the communication systems illustrated in FIGS. 18A and 18C, respectively.

FIG. 19 is a process flow diagram illustrating an embodiment method for a server handling a rolling identifier.

FIG. 20 is a process flow diagram illustrating embodiment operations by a wireless identity transmitter and a central server for transmitting and processing rolling identifiers encrypted with an encryption algorithm.

FIG. 21A is a process flow diagram illustrating an embodiment method for a wireless identity transmitter generating and broadcasting rolling identifier payloads using an encryption algorithm.

FIG. 21B a process flow diagram illustrating an embodiment method for a central server receiving and handling rolling identifier payloads using an encryption algorithm.

FIG. 22 is a process flow diagram illustrating embodiment operations by a wireless identity transmitter and a central server for transmitting and processing rolling identifiers using a pseudo-random function.

FIG. 23A is a process flow diagram illustrating an embodiment method for a wireless identity transmitter generating and broadcasting rolling identifier payloads using a pseudo-random function.

FIG. 23B a process flow diagram illustrating an embodiment method for a central server receiving and handling rolling identifier payloads using a pseudo-random function.

FIG. 24A is a process flow diagram illustrating an embodiment method for a wireless identity transmitter generating and broadcasting messages with rolling identifiers and encoded counters.

FIGS. 24B-24C are process flow diagrams illustrating embodiment methods for a central server receiving and handling messages including rolling identifiers and encoded counters.

FIG. 25 is a diagram illustrating an embodiment scenario including a wireless identity transmitter in communication with a proximity broadcast receiver, and a mobile device displaying information received from a central server.

FIGS. 26A-26B are process flow diagrams illustrating embodiment methods for a central server to transmit relevant profile information to a computing device.

FIGS. 27A-27B are diagrams illustrating embodiment data tables that include a user's profile information that may be stored by a central server and transmitted in response to receiving a sighting message.

FIGS. 28A-28B are diagrams illustrating various proximity broadcast receivers and a mobile device receiving different authorized information based on related profiles.

FIG. 28C is a process flow diagram of an embodiment method for a central server to identify authorized data to share based on two different profiles.

FIGS. 29A-29B are diagrams illustrating a first mobile device sharing authorized profile information in response to receiving short-range wireless signals from a second mobile device within proximity.

FIG. 29C is a process flow diagram of an embodiment method for a first mobile device to share authorized profile information in response to receiving short-range signals from a second mobile device within proximity.

FIG. 30 is an illustrative display of payment authentication information on a local computing device in accordance with an embodiment.

FIG. 31 is a process flow diagram of an embodiment method for a central server to transmit payment authentication information in response to receiving a sighting message from a proximity broadcast receiver within a retail store.

FIGS. 32A-32C are process flow diagrams of embodiment methods for a local computing device to utilize payment authentication information to conduct transactions within a retail store.

FIGS. 33A-33B are component block diagrams of wireless identity transmitters in accordance with various embodiments.

FIGS. 34A-34B are component block diagrams of proximity broadcast receivers in accordance with various embodiments.

FIG. 35 is a component block diagram of a mobile device suitable for use in various embodiments.

FIG. 36 is a component block diagram of a server device suitable for use in various embodiments.

DETAILED DESCRIPTION

The various embodiments will be described in detail with reference to the accompanying drawings. Wherever possible, the same reference numbers will be used throughout the drawings to refer to the same or like parts. References made to particular examples and implementations are for illustrative purposes, and are not intended to limit the scope of the invention or the claims.

The word "exemplary" is used herein to mean "serving as an example, instance, or illustration." Any implementation described herein as "exemplary" is not necessarily to be construed as preferred or advantageous over other implementations.

The term "mobile device" is used herein to refer to any one or all of cellular telephones, smart-phones (e.g., iPhone®), web-pads, tablet computers, Internet enabled cellular telephones, WiFi enabled electronic devices, personal data assistants (PDA's), laptop computers, personal computers, and similar electronic devices equipped with a short-range radio (e.g., a Bluetooth® radio, a Peanut® radio, a WiFi radio, etc.) and a wide area network connection (e.g., an LTE, 3G or 4G wireless wide area network transceiver or a wired connection to the Internet). Reference to a particular type of computing device as being a mobile device is not intended to limit the scope of the claims unless a particular type of mobile device is recited in the claims.

The term "broadcast message" is used herein to refer to short-range wireless broadcast signals broadcast by wireless identity transmitters (defined below) that may include identification information (i.e., identifiers) associated with the wireless identity transmitters and/or their users. Such identifiers may be periodically changed and encrypted, encoded, or otherwise obscured (i.e., rolling identifiers). In various embodiments, broadcast messages may include other identifying information, such as Bluetooth® MAC addresses and counters, which may also be encrypted. Additionally, broadcast messages may include metadata and other data, such as characteristics of the transmitting wireless identity transmitter (e.g., device type), sensor data, and/or commands or other instructions. In various embodiments, broadcast messages may be transmitted via a wireless communication protocol, such as Bluetooth® Low Energy, WiFi, WiFi Direct, Zigbee®, Peanut®, and other RF protocol. In various embodiments, because of the high unreliability of certain short-range transmission channels, broadcast messages may be single packet transmissions limited to a certain size (e.g., 80 bits, 10 bytes, 20 bytes, etc.). For example, the payload of an embodiment broadcast message may be 80 total bits, including 4 bits that indicate battery status information and 76 bits that indicate a rolling identifier. As another example, an embodiment broadcast message may include 20 bits representing a counter and 60 bits representing a rolling identifier, such as generated with a pseudo-random function or encryption algorithm.

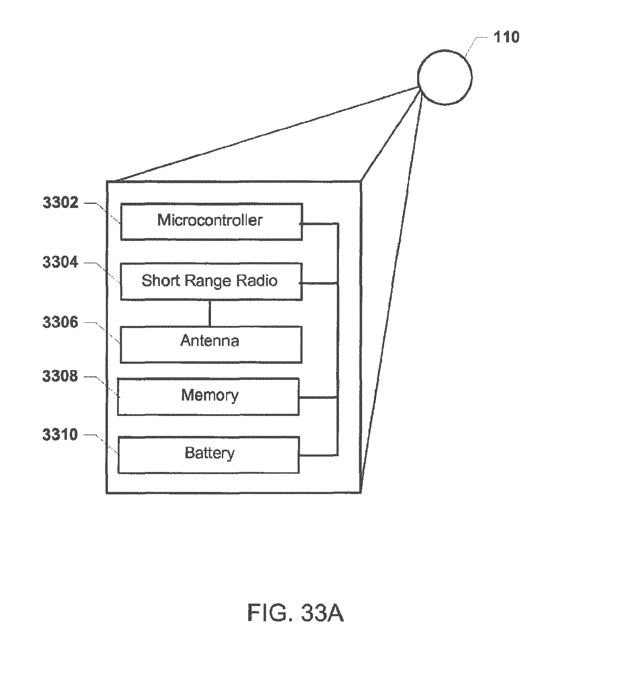

The term "wireless identity transmitter" is used herein to refer to a compact device configured to periodically transmit broadcast messages via short-range wireless transmitters. Wireless identity transmitters may be mobile, such as when carried or affixed to mobile persons or items, or alternatively may be stationary, such as when installed within buildings. Wireless identity transmitters may store and be associated with a unique device identifier (i.e., a "*deviceID*"), such as a factory ID. In an embodiment, the unique device identifier may be a code 56-bits in length. In various embodiments, for security purposes, this unique device identifier, along with other data (e.g., counter values), may be encoded, encrypted, or otherwise obfuscated when included within broadcast messages as a "rolling identifier." Wireless identity transmitters may be configured to maintain inaccurate time (e.g., UTC) information, such as by using a 30 ppm 16 kHz crystal oscillator as a clock. In an embodiment, the wireless identity transmitter may be within or a mobile device, or alternatively, operations may be performed by a mobile device that are similar to the operations of the wireless identity transmitter. For example, a smartphone may execute software that configures that smartphone to utilize its Bluetooth® radio to transmit broadcast messages that include a secured, unique identifier. Wireless identity transmitters are described in more detail below with reference to FIGS. 33A-33B. In various figures and diagrams of this disclosure, wireless identity transmitters may be referred to as "WIT" or "WITs".

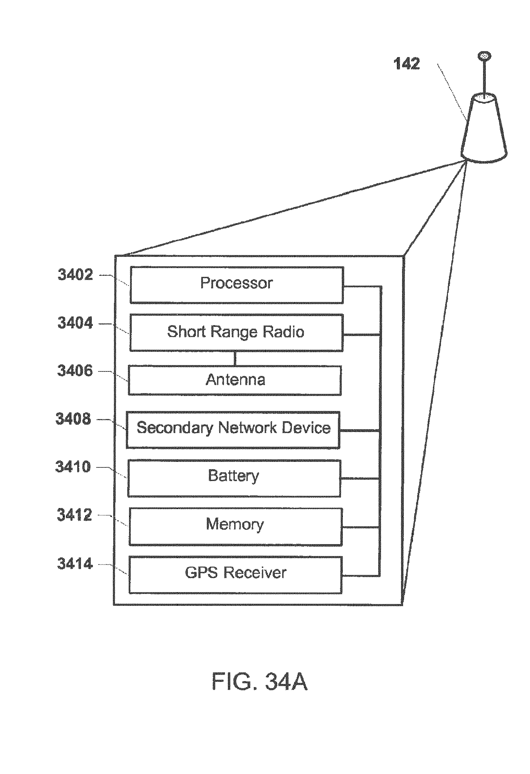

The term "proximity broadcast receiver" is used herein to refer to devices that are configured to receive broadcast messages, such as transmitted by wireless identity transmitters. In various embodiments, proximity broadcast receivers may be stationary devices (or "stationary proximity broadcast receivers") permanently positioned throughout places (e.g., buildings, retail stores, etc.) or alternatively may be mobile devices configured to operate as proximity broadcast receivers (or "mobile proximity broadcast receivers"). For example, a smartphone may be configured to receive broadcast messages and operate as a mobile proximity broadcast receiver. Reference to a particular type of computing device as being a proximity broadcast receiver is not intended to limit the scope of the claims unless a particular type of device is recited in the claims. Further, unless otherwise indicated, references to proximity broadcast receivers throughout this disclosure are not intended to limit any method or system to a particular type of proximity broadcast receiver device (e.g., wireless or stationary). Proximity broadcast receivers are described in more detail below with reference to FIGS. 34A-34B. In various figures and diagrams of this disclosure, proximity broadcast receivers may be referred to as "PBR" or "PBRs," and mobile proximity broadcast receivers are referred to in the figures as "MPBR" or "MPBRs."

The terms "identity transceiver" and "wireless identity transceiver" are used herein to refer to devices that are configured to receive and transmit broadcast messages. In other words, an identity transceiver may function as both a proximity broadcast receiver and an identity transmitter. For example, a smartphone may be configured to broadcast short-range signals that include its unique identifier as well as receive broadcast messages from wireless identity transmitters within proximity. Throughout this disclosure, various operations may be described as being distinctly performed by either a wireless identity transmitter or a proximity broadcast receiver, however, those skilled in the art should appreciate that a device configured to operate as an identity transceiver may be configured to perform any or all of the same operations and thus may be interchangeable with references to either a wireless identity transmitter or a proximity broadcast receiver.

The term "sighting message" is used herein to refer to reports, signals, and/or messages sent by proximity broadcast receivers to a central server in response to receiving broadcast messages from wireless identity transmitters. Sighting messages may be transmissions that include part or all of the information encoded in received broadcast messages, including any obscured or encrypted information, such as identifiers of wireless identity transmitters. Additionally, sighting messages may include metadata and other information (or "associated data"), such as the sending proximity broadcast receivers' identification information (e.g., device ID, third-party affiliations, etc.), whether the proximity broadcast receiver paired with a wireless identity transmitter, transmissions context information (e.g., a code indicating the sighting message is related to an alert or a registered service), information regarding software or applications executing on proximity broadcast receivers (e.g., app IDs), location information, proximity information with respect to known areas within a place, and timestamp data. In an embodiment, sighting messages may also include authentication information (e.g., secret keys, passes, special codes, digital certificates, etc.) that may be used by a central server to confirm the identification (or identification information) of proximity broadcast receivers transmitting the sighting messages. For example, a sighting message may include a code from a hash function that can be decoded by the central server to ensure the sending proximity broadcast receiver is associated with a particular registered service. In various embodiments, sighting messages may be sent immediately after receipt of broadcasts (e.g., when related to an alert), buffered, or scheduled along with other scheduled transmissions.

The various embodiments provide methods, devices, and systems for dynamically providing user profile information to computing devices within proximity of a wireless identity transmitter associated with a user in a trusted architecture. Using a proximity-based signaling system, the embodiments provide mechanisms for delivering user profile information as permitted by the user to the organization where the user is standing in a manner that can be trusted by both the user and the recipient, such as a merchant. For example, when a user approaches a proximity broadcast receiver, such as at a merchant check out counter, that proximity broadcast receiver receives signals broadcasted by the user's wireless identity transmitter. The proximity broadcast receiver relays identity information obtained from the received broadcast signal in a sighting message sent to a central server trusted that by both the user and the merchant. The central server uses the identity information received in the sighting message to access a data record that includes user profile information (e.g., photo, name, address, credit card numbers, etc.). The central server may send a portion of the user's profile information, selected based on user privacy settings and permissions, to a merchant computing device, such as a computing device near or coupled to the proximity broadcast receiver. Since the central server is trusted by the merchant and the user profile information is sent to the merchant only when the user is close to the proximity broadcast receiver, the merchant can rely on the profile information to complete a transaction with the user.

In various embodiments, the wireless identity transmitter may be a compact device configured to transmit a packet with an identification code in a format that can be received by any proximity broadcast receiver within range of the short-range wireless broadcast. Since the wireless identity transmitter relies on relatively short-range wireless signaling (e.g., short-range radio signals, Peanut®, Zigbee®, RF, WiFi, Bluetooth® Low Energy signals, light signals, sound signals, etc.) to transmit broadcast messages that include its identifier, only proximity broadcast receivers within proximity of the transmitter may receive such broadcast messages. Thus, a proximity broadcast receiver's own location may provide an approximate location for the wireless identity transmitter at the time of receipt of a broadcast message. Wireless identity transmitters may be deployed by various parties registered with the central server, such as government agencies, merchants, retailers, and stores. In an embodiment, the broadcast range of wireless identity transmitters may be three or less to one hundred feet while within a retail store.

Proximity broadcast receivers, in particular mobile proximity broadcast receivers (e.g., smartphones, etc.), may be configured with processor-executable instructions, such as an application that users may download or that may be incorporated in the device by the manufacturer. By configuring many mobile devices with such an application, a wide spread network of proximity broadcast receivers may be deployed for little or no cost, taking advantage of the popularity of smartphones. Stationary proximity broadcast receivers may be deployed in strategic places, such as throughout retail stores, to supplement the network of smartphones. Proximity broadcast receivers may be located coincident to, within, or otherwise within proximity of certain areas within a place, such as merchandise displays in a move theater, point-of-sale devices, or an entrance to a retail store. For example, a proximity broadcast receiver may be on top of, next to, or within a product display arranged within a product aisle. Point-of-sale devices may coincide with either stationary proximity broadcast receivers or wireless identity transmitters deployed within an area (e.g., a retail store) to detect nearby customers. For example, a cash register device may coincide with a wireless identity transmitter that broadcasts messages related to a merchant.

Each proximity broadcast receiver receiving a broadcast message from the wireless identity transmitter may pass information to a central server for processing, such as by transmitting sighting messages including the rolling identifier of the wireless identity transmitter. Sighting messages transmitted by proximity broadcast receivers to the central server may include part or all of the information encoded in received broadcast messages from proximate wireless identity transmitters, including any rolling, obscured, or encrypted information related to the wireless identity transmitters. In various embodiments, sighting messages may be sent immediately after receipt of broadcast message (e.g., when related to an alert), buffered, scheduled along with other scheduled transmissions, or otherwise based on characteristics of broadcast message. Sighting messages may include metadata, header information, or other encodings to indicate various reported data. For example, a sighting message may contain metadata that includes a code for a particular merchant, and may therefore indicate that the sighting message was transmitted by a proximity broadcast receiver within the merchant's store. As another example, a sighting message may contain metadata that includes a code indicating a user's smartphone and therefore the proximity broadcast receiver may be a mobile proximity broadcast receiver belonging to the user. In an alternative embodiment, a local computing device, such as a retail store server or router, may receive sighting messages from proximity broadcast receivers and may in turn pass each sighting message to the central server.

Upon receipt of sighting messages, the central server may decode, decrypt, or otherwise access obscured information (e.g., rolling identifiers) within the sighting messages. For example, the central server may decode a broadcast message within a sighting message and determine the customer associated with the broadcast message using data stored within a registration database. Based on the location of a proximity broadcast receiver that transmitted a sighting message, the central server may determine the proximity of the related broadcast message, or the approximate proximity. For example, since a stationary proximity broadcast receiver that transmits a sighting message is within proximity of a customer's wireless identity transmitter at the time of receiving a broadcast message, the central server may determine the customer's wireless identity transmitter is within several feet of the GPS coordinates indicated in the proximity broadcast receiver's sighting message or known to the central server in the case of fixed proximity broadcast receivers. Further, the central server may be configured to transmit messages in response to receiving and processing sighting messages. For example, the central server may transmit return messages to devices associated with a merchant/retailer/store, such as a store server, a point-of-sale device (e.g., a cash register device), a mobile device or other computing device used by an employee of the merchant (e.g., a tablet device used by a waiter/hostess/customer service rep, etc.), and/or a proximity broadcast receiver associated with the merchant (e.g., a stationary proximity broadcast receiver that relayed the broadcast signal from the customer's wireless identity transmitter).

In various embodiments, the central server may serve as a trusted "middle-man" that delivers certain profile information to devices associated with registered services (e.g., retailers, merchants, marketing services), and only when the user's wireless identity transmitter is in proximity with a proximity broadcast receiver of the registered service. In other words, the central server may act as an indirection mechanism that transmits subsets of a user's profile when the user is within proximity of a registered service's devices. The central server may store profiles (or profile information) of users received during registration procedures. For example, a user may be required to submit personal information to the central server when activating a wireless identity transmitter and/or a mobile proximity broadcast receiver. During such a registration, users may indicate various profile information describe the users' interests, personal demographics or personal information (e.g., race, gender, age, etc.), characteristics, issues, needs, wants, and preferences regarding various topics. For example, profile information may include a user's birth date, residence, medical information, health conditions (e.g., food allergies), age, customer preferences, and clothing size information (e.g., shirts, pants, shoes, etc.). As another example, profile information may indicate preferences for certain products, colors, styles, brands, sellers, stores, communities, websites, shopping experiences (e.g., how to be approached by salespersons), foods, beverages, and automobiles.

The central server may categorize or otherwise label all profile information associated within user profiles. For example, individual pieces of data provided by a customer may be labeled as relating to "Food," "Clothes," "Entertainment," "Personal," "Health," "Politics," etc. The types of categories may be simple, discrete headings (e.g., "Shopping") and/or may include detailed sub-categories/groups (e.g., Shopping->Shoes->Sandals). In an embodiment, the central server may obtain (or "scrape") profile information from other databases or online services users may be affiliated with or use to store personal information. For example, the central server may perform operations to receive preference information, shopping history, personal data, and other historical information about the user from shopping accounts or websites, such as an Amazon shopping profile/account, or social networking accounts, such as a Facebook, LinkedIn, MySpace, or FourSquare account.

In an embodiment, the profile information may be continually updated based on scheduled operations by the central server (e.g., the central server may query an Amazon account daily to detect shopping patterns or preferences) and/or from received sighting messages associated with the user. For example, the central server may determine the user was last in a certain restaurant based on broadcast signals being received by stationary proximity broadcast receivers within that restaurant. Additionally, the central server may determine profile information based on the user's behavior over time. For example, the central server may store indicators that the user prefers a certain sporting team based on recorded attendance at a sporting event.

In various embodiments, the central server may determine categories describing profile information based on predefined relationships. For example, a certain profile creation question presented to the user during registration may be related to a "Job" category. Users may also manually modify and/or set categories for profile information stored within the central server. Further, the central server may process stored profile information using natural language processing to determine the nature or topic of particular data within a profile. Alternatively, the central server may simply prompt parties registering with the central server, such as individual users or registered services (e.g., merchants, retailers, etc.), to provide categories that describe their primary demographics (e.g., "Shoe store," "customer," etc).

The central server may also store permissions corresponding to user profiles that may indicate how the central server is authorized to share profile information with third-parties, such as merchants, government entities, and/or other users (i.e., registered services). The terms "permissions" or "permissions settings" are used herein to refer to settings, tags, flags, or other information that indicates whether a user authorizes to have various information stored within a profile provided to third-parties, merchants, retailers, and other registered services. Permissions may be set, provided, or otherwise indicated during procedures initiated and/or participated in by users, such as during registration as a user with the central server or during configuration of a wireless identity transmitter. For example, a user may update his/her permission settings to indicate a certain store may subsequently receive messages including the user's preference of cola drink. Permissions may indicate authorizations for individual recipients (e.g., no information sharing with Restaurant B), general types of recipients (e.g., information sharing is authorized for all hospitals), individual pieces of profile information (e.g., birth date is private), or sections of profiles (e.g., any data related to shopping habits is public), and any combination of similar authorizations (e.g., birth date is authorized for any recipient EXCEPT Restaurant B). Alternatively, permissions may include global settings for all profile information (i.e., an entire profile is private/public).

During and after registration, users may set profile permissions that may indicate subsets (e.g., "windows") of the stored profile information that may be provided to particular registered services or in particular circumstances. For example, a user may indicate that all personal information stored within his/her profile, such as birth date, address, and health information, may be private and thus may not be disclosed to any merchant. As another example, the user may indicate that his/her shopping preferences may be shared with merchants who offer particular products or services. When permissions are stored, the central server may only transmit profile information that is authorized, regardless of its relevant to a registered service. With permissions, the central server may provide profile information that assists third-parties in providing improved services to users while maintaining relative anonymity of the users.

In another embodiment, permissions may indicate a hierarchy of profile information that may be shared with third-parties. Such a hierarchy may indicate various conditions or categories must be present for certain profile information to be authorized for transmission to a registered service. For example, a user may indicate permissions settings that enable the central server to share basic information with a restaurant hostess (e.g., share the user's first name), more specific information with the restaurant's bartender (e.g., the user's is above the legal drinking age), and more information with the restaurant's waiter (e.g., a signature or photo for payment authentication).

In response to receiving a sighting message corresponding to broadcast messages from a user's wireless identity transmitter, the central server may identify profile information within the user's profile that is relevant to a registered service related to a received sighting message. Relevant profile information may be determined by matching categories related to the user and the registered service. Registered services may be associated with various categories that describe at least one of the services offered, the products offered, the type of business, demographics, interests, and/or target audience of the registered service. For example, a show seller that is registered with the central server may be associated with the categories of "Shoes," "Stores," and "Shopping," and thus the central server may identify profile information within the user's profile that relate to the categories of "Shoes," "Clothing," and/or "Shopping," such as prior sneaker purchases or preferences in sneaker brands or shoe design. In an embodiment, the central server may find matches of categories related to information stored in two different profiles corresponding to the sighting message. For example, the central server may compare a first profile of the registered service (or another user) and a second profile of the user to find any similar or matching categories to determine relevant profile information of the user.

When there is relevant profile information that is authorized for sharing based on permissions, the central server may transmit a return message including the relevant profile information. For example, the central server may transmit a message to a computer within a retail store that instructs customer service representatives in the retail store to approach the user by name and show him/her shoes that are in his/her size. As another example, a waiter receiving food/beverage preferences profile information on a tablet device may offer a preferred drink or food selection, or alternatively avoid offering food with nuts when the profile information indicates a customer has a nut allergy.

In an embodiment, profile information may be shared between mobile devices without transmitting messages to the central server. For example, in response to receiving a short-range wireless signal from a first device within proximity that shares data from a first user's profile information, a second mobile device may respond with a transmission that includes certain profile information of a second user. In another embodiment, the central server may transmit payment authentication information to a point-of-sale device (e.g., a cash register computing device) when a user is determined to be within proximity. The term "payment authentication information" is used herein to refer to information stored within a user's profile that may be utilized by third-parties to confirm the user's identity and otherwise facilitate a transaction. For example, payment authentication information may include address information, email addresses, photographs, audio samples of a user's voice, and signature samples that may be used to verify the identity of the user carrying a wireless identity transmitter within a retail store. Additionally, payment authentication information may include financial information, such as a user's credit card information (e.g., number, expiration date, etc.) or information about a preferred banking account. Store agents (e.g., customer service representatives, managers, cashiers, salesmen, etc.) may use payment authentication information to approach users waiting in line to efficiently conduct transactions and provide "high-touch" service.

To transmit payment authentication information, the central server may compare the location of a proximity broadcast receiver that transmitted a received sighting message to known locations of point-of-sale device within a place, such as a retail store. For example, the central server may compare the location of the proximity broadcast receiver indicated within the sighting message to the locations of all cash register point-of-sale devices within the retail store. When the proximity broadcast receiver is within a certain proximity threshold of a point-of-sale device, the wireless identity transmitter related to the sighting message may be assumed to be near a payment area (e.g., waiting at a check-out counter, in line at a cash register, etc.), and so the central server may transmit payment authentication information to the retail store. For example, the central server may send a photo of the user to a cash register near the user to assist store employees operating the cash register. Payment authentication information may only be relevant when users are in a location that is likely to include payment transactions, such as in a cash register line. Thus, the central server may use a rather small proximity threshold to ensure data is not sent to point-of-sale devices when users are merely walking or alternatively when users are not in a payment area. In an embodiment, the proximity threshold may be three feet or less to twenty-five feet or more.

In various embodiments, proximity information of wireless identity transmitters may be estimated by proximity broadcast receivers and/or a server (e.g., a local computing device, a central server, etc.). Based on signal strength of received broadcast messages or concurrent sighting messages from more than one proximity broadcast receiver, a server may determine the proximity broadcast receiver closest to the wireless identity transmitter. In other words, a central server may determine the proximity broadcast receiver among a plurality of proximity broadcast receivers that is closest to a wireless identity transmitter. When the proximity broadcast receivers are placed in strategic places, such as on a cash register or embedded within aisles of a retail store, determining the proximity broadcast receiver that is closest to a transmitter possessed by a user may enable a server to determine the area or point-of-sale device the user intends to address (e.g., a particular check-out line).

In various embodiments, the operations to determine whether a wireless identity transmitter is within proximity of a point-of-sale device may be performed by a central server as described above, a local computing device, such as a retail store server, and/or proximity broadcast receivers. For example, a local computing device within the retail store may compare the location of a proximity broadcast receiver receiving a broadcast message to the locations of all cash register computing devices within the retail store to detect whether a wireless identity transmitter is within a proximity threshold.

In another embodiment, data within received sighting messages may be useful in generating statistical information and customer trending data (i.e., foot traffic information). For example, even when broadcast messages are received outside of the proximity threshold for a particular area within the retail store (e.g., the wireless identity transmitter is twenty-five to one hundred feet from a product aisle or point-of-sale device), data within the sighting message may be stored by the central server. The central server may store data from sighting messages in relation to users and collect valuable information about the users' habits while within places. Such data may include unique visitor counts, aggregated dwell time, specific customer dwell time, purchase conversions, passing-by data, and data useful in developing loyalty programs. Over time, the central server may receive and store proximity information of a particular customer's wireless identity transmitter to various areas within a place, and may determine paths the customer repeatedly made throughout the place. For example, the data may describe the customer as walking from the entry of a retail store to a particular department numerous times over a period of time. As another example, the data from sighting messages may show that the user went to a check-out area after visiting a particular department, indicating a completed transaction. The various statistical information and trending data may be used by merchants, retailers, and other registered services to create profit equations and understand customer behaviors.

In various embodiments, a place, such as a retail store, building, or location associated with a registered service, may utilize stationary proximity broadcast receivers to receive and relay broadcast messages from customers' wireless identity transmitters. Alternatively, the place may deploy stationary wireless identity transmitters and customers' mobile proximity broadcast receivers may receive and relay broadcast messages. In further embodiments, the place may employ both proximity broadcast receivers and wireless identity transmitters to receive, relay, and process data from both users carrying wireless identity transmitters and/or mobile proximity broadcast receivers. Regardless of the source of broadcast messages, the central server (or a local computing device) may determine approximate proximities between a proximity broadcast receiver and a wireless identity transmitter based on received sighting messages.

Additionally, based on identification of the proximity broadcast receiver and the wireless identity transmitter related to a received sighting message, the central server may be configured to determine which device is related to a registered service (e.g., a retail store) and which is related to a user (e.g., a customer). The term "registered service" may be used herein to refer to a party or service that is registered, authenticated, valid, or otherwise known to a central server and that may be related with sighting messages. Registered services may include merchants, retailers, services, stores (e.g., big-box retailers, local coffee shops, etc.), and various other third-parties that are registered with the central server. Registered services may also include known routines, actions, or services managed by the central server, such as particular searches or active alerts, or alternatively applications that may be executing on a mobile device (e.g., a third-party app). In an embodiment, registered services may further include any third-parties that have registered as developers with the central server. For example, a registered service may correspond to a merchant that has registered proximity broadcast receivers with the central server. In an embodiment, registered users (e.g., customers) employing mobile proximity broadcast receivers that transmit sighting messages in response to receiving broadcast messages from others' wireless identity transmitters (e.g., a merchant's stationary identity transmitter positioned within a retail store) may also be considered registered services by the central server.

For illustration purposes, a mobile proximity broadcast receiver (e.g., a smartphone configured to operate as a proximity broadcast receiver) carried by the user waiting in the check-out line may receive a broadcast message from a wireless identity transmitter positioned on top of the cash register point-of-sale device within the retail store and may transmit a sighting message to the central server. Upon receive of the sighting message, the central server may determine that the wireless identity transmitter belongs to the retail store based on the profile that corresponds to a rolling identifier and that the mobile proximity broadcast receiver is associated with a customer profile based on an identifier of the proximity broadcast receiver included within metadata in the sighting message. From this information, the central server may securely transmit payment authentication information to a cash register point-of-sale device within proximity of the customer's proximity broadcast receiver.

In various embodiments, a wireless identity transmitter may be configured to periodically generate new identification data (referred to as a rolling identifier) that may be decoded by a central server to reveal the unique device identifier and other identifying information of the wireless identity transmitter. For example, a wireless identity transmitter may be configured to periodically broadcast a Bluetooth® packet including an encoded version of the wireless identity transmitter's device identifier (i.e., *deviceID*). Such encryption of identifiers indicated in broadcast messages may be required to enable the central server to reliably identify the wireless identity transmitter that sent the broadcast message while forcing a third-party (e.g., passive attacker) to determine the origin of the broadcast message by guessing. For example, if the identifier was static, the third party could sniff the identifier, such as by impersonating a proximity broadcast receiver, and then use the identifier to track the wireless identity transmitter. Rolling identifiers may make such an attack impossible if the third party lacks the means of generating the encrypted identifiers.

In various embodiments, a single packet broadcast message may not support a payload that can fit cipher text of a conventional asymmetric key encryption, making standard private/public key pair encryption impossible. Additionally, communications between wireless identity transmitters and various devices, such as direct transmissions to proximity broadcast receivers or indirect messages to a central server, may be one-way and not utilize any back channels. Therefore, in various embodiments, the central server may process encrypted message payloads by pre-provisioning a shared secret key unique to each wireless identity transmitter. Such secret keys may be associated with each wireless identity transmitter's unique device identifier at the central server and may be used to decode data (e.g., identifiers) encoded by the each wireless identity transmitter. Performing an embodiment method, a wireless identity transmitter may use a streaming-like encryption algorithm (e.g., AES-CTR) to encrypt its device identifier, shared secret key, and a counter, broadcasting a payload that includes the encrypted data with and the counter in the clear. Performing another embodiment method, a wireless identity transmitter may use a pseudo-random function to encrypt the device identifier, shared secret key, and a counter, broadcasting a payload that includes the encrypted data without the counter in the clear. Performing another embodiment method, a wireless identity transmitter may use a combination of a streaming-like and pseudo-random function encryptions to generate a payload to broadcast. In an embodiment, the wireless identity transmitter and the central server may each have a cryptographically secure pseudo-random number generator or algorithm that is used to generate identifiers on a common time scale so that any given moment, the central server can calculate the identifier being transmitted by a particular wireless identity transmitter.

In various embodiments, the wireless identity transmitter may maintain a counter (or clock data) that periodically increments to represent the passage of time and that may be used in various encryption methods. When the wireless identity transmitter is powered on (or the battery is replaced), the counter may be set to a known initial value, such as 0. As the wireless identity transmitter functions, the counter may increment periodically (e.g., increment by one every several minutes/hour). If the wireless identity transmitter encounters inconsistent power (e.g., the battery is taken out or replaced), the counter may reset. Using such a counter, a wireless identity transmitter may be configured to periodically broadcast messages with encrypted payloads that include changing and encrypted device identification. In an embodiment, an encrypted payload may contain a concatenation of the device's unique identifier (i.e., the *deviceID*) and a current counter value for that wireless identity transmitter. In an embodiment, the wireless identity transmitter may encrypt the concatenated data using a secret key. Payloads may be broadcast at varying frequencies.

In an embodiment, the central server may be configured to identify wireless identity transmitters by matching received encrypted payloads with pre-generated payloads (or model payloads) corresponding to registered wireless identity transmitters. Based on information obtained during registration operations between the central server and wireless identity transmitters, the central server may store unique information about each wireless identity transmitter. For example, the central server may know the secret key, device identifier (or *deviceID*), and initial counter value of a wireless identity transmitter based on registration communications. Using such stored information, the central server may generate a series of model payloads the wireless identity transmitter is expected (or likely) to broadcast within a time period, such as a 24-hour period. If the central server receives a payload that matches any of these model payloads, the central server may determine the identity of the originating wireless identity transmitter as well as a loosely-accurate counter value within the wireless identity transmitter. Model payloads may be generated based off of a current, synched counter for each registered wireless identity transmitter (i.e., current model payloads). In an embodiment, the central server may also adjust for wireless identity transmitter clock skew by keeping a window of model payloads. For example, the central server may generate payloads using counter values representing times before and after an expected counter. The central server may also determine the period of the wireless identity transmitter clock by monitoring the change in the received payloads over time. In an embodiment, the central server may track changes of the reported counter values of a wireless identity transmitter and may report how inaccurate a device clock is for a particular period of time.

Model payloads may also be generated based off of initial counter values reported by each registered wireless identity transmitter during registration operations (i.e., initial model payloads). When a wireless identity transmitter is powered off and on again (e.g., rest, battery replaced, etc.), the wireless identity transmitter may reset to the original or initial counter value. If an encrypted payload received at the central server does not match any current model payload, the central server may compare the received encrypted payload to stored initial model payloads. When the central server finds an initial model payload matches the received encrypted payload (e.g., the wireless identity transmitter was reset), the central server may update a database to indicate the corresponding wireless identity transmitter's counter was reset, thus re-synchronizing with the reset wireless identity transmitter's clock.

In a situation in which a wireless identity transmitter pauses for a period but does not reset its counter used for generating encrypted payloads, payloads subsequently generated by the wireless identity transmitter may not match expected payloads stored in the central server (e.g., current model payloads and initial model payloads). Accordingly, the central server may determine that a pause occurred when model payloads and/or counter values do not match a received encrypted payload. The central server may identify the wireless identity transmitter by performing a brute-force search of all known and/or registered wireless identity transmitters represented in a database and decode the received encrypted payload based on recorded secret keys and device identifications. In an embodiment, the brute-force search may include only wireless identity transmitters that have not broadcast payloads recently received by the central server.

Additional precautions may be important to protect against security breaches, such as hacker attacks against databases associated with a central server, as well as to provide registered users (e.g., merchants, parents, children, etc.) peace of mind and confidence their privacy may be fully protected. Such privacy safeguards may be provided to parties registered with embodiment systems by storing identifying information (e.g., names, addresses, financial information, medical information, etc.) separately from other information related to tracking devices and/or proximity information of users. In particular, to avoid unintended leaking of personal information of registered merchants, customers, children, or individuals, embodiment systems may utilize "double-blind" architectures. For example, such a double-blind architecture may use a first unit (e.g., a server, database, or other computing hub) that stores and has access to information related to the proximity information or other location-based data of registered users' devices (e.g., wireless identity transmitters, proximity broadcast receivers, identity transceivers, mobile devices, etc.). In other words, the first unit may access information associated with sighting messages that indicate approximate locations/proximities of various users' devices. However, the first unit may not store uniquely identifying personal information, such as user names, addresses, and/or social security numbers. Instead, a second unit may store the identifying personal information without being configured to access any location/proximity information as used by the first unit. The first and second units may use anonymous identifiers that connect data stored within the two units without indicating the protected information stored in either unit. In an embodiment, the first and second units may be maintained by separate entities (e.g., service providers), and further, at least one of such entities may be trusted by registered users who provide identifying information.

The various embodiments may leverage a large infrastructure of mobile devices already in place. Many modern mobile devices, such as smartphones, are already equipped with multiple radios, including short-range radios such as Bluetooth® radios, and therefore may be configured to perform as mobile proximity broadcast receivers and receive identification codes from a proximate wireless identity transmitter. For example, a customer carrying a smartphone configured to operate as a mobile proximity broadcast receiver (or mobile identity transceiver) may receive broadcast messages from wireless identity transmitters within a retail store. Mobile devices are also often equipped with a clock that may provide a current time and a GPS receiver that may provide a current location whenever a wireless identity transmitter identifier is received. The mobile devices may communicate these identification codes, times, and locations via sighting messages to central servers through longer range network connections, such as a cellular radio connection. Thus, many of the large number of mobile devices already in use or soon to be in use may be incorporated as mobile proximity broadcast receivers to extend the reach of various embodiment systems.

By relying on the long range radios and other services of proximity broadcast receivers to report the location and time of received broadcast message (or "sightings") to a central server, wireless identity transmitters can be relatively small, inexpensive, and simple devices, including little more than a short-range radio, such as a Bluetooth® LE transceiver, and a battery. In various embodiments, wireless identity transmitters may also include additional short-range radios, such as Peanut® radios. In various embodiments, the wireless identity transmitters may not include a user interface, multiple radios, global positioning system (GPS) receiver, or other features common on mobile devices. Embodiment wireless identity transmitters may also consume very little power allowing them to be deployed without needing to be frequently recharged or replaced. These characteristics make them ideal for a wide variety of uses and implementation in a variety of physical configurations. For example, wireless identity transmitters may be easily hidden or incorporated into many different personal objects, such as buttons, watches, shoes, briefcases, backpacks, ID badges, clothing, product packaging, etc.

In further embodiments, wireless identity transmitters and proximity broadcast receivers may be configured to exchange transmissions using various wireless technologies, such as LTE-D, peer-to-peer LTE-D, WiFi, and WiFi Direct. In an embodiment, wireless identity transmitters may be configured to broadcast messages via a WiFi radio such that proximity broadcast receivers with WiFi transceivers may receive the broadcast messages. In such embodiments, wireless identity transmitters may utilize WiFi transmissions to broadcast identification information similar to WiFi access point broadcasts advertisements. For example, a wireless identity transmitter including a WiFi radio may be configured to transmit broadcast messages via WiFi transmissions with low power so that the reception range is limited, thereby providing a short-range radio signal with a range similar to that of Bluetooth® LE transmissions. In utilizing various wireless broadcast technologies and communication protocols with wireless identity transmitters, proximity broadcast receivers with limited capabilities may still be capable of receiving and processing broadcast messages from wireless identity transmitters. For example, a smartphone configured to operate as a mobile proximity broadcast receiver and including a WiFi transceiver but not a Bluetooth® LE radio may receive and process broadcast messages from a wireless identity transmitter configured to broadcast short-range signals with a WiFi radio. In an embodiment, wireless identity transmitters may broadcast over multiple radios, such as a Bluetooth® LE transceiver and a low-power WiFi transceiver, in order to enable more models of proximity broadcast receivers (e.g., more types of smartphones) to receive and relay sightings.

Wireless identity transmitters and proximity broadcast receivers are described throughout this disclosure as exchanging short-range wireless signals that include short-range RF signals, such as Bluetooth®, Bluetooth® Low Energy, Peanut, Zigbee, etc. However, such short-range wireless signals are not limited to short-range RF signals, and wireless identity transmitters may broadcast messages using other forms of wireless signaling, such as infrared light, visible light, vibration, heat, inaudible sound, and audible sound, as well as combinations of radio frequency (RF) signals and non-RF signals. For example, wireless identity transmitters may emit heat signals, such as infrared light, using infrared light-emitting diodes or other components capable of emitting infrared radiation. Additionally, wireless identity transmitters may emit vibration signals using vibration motors and other mechanical components capable of generating controlled vibrations. Wireless identity transmitters may also emit light signals from a number of common emitters, such as light emitting diodes, incandescent lights and projectors. Light signals may be received by light sensors (e.g., cameras) on proximity broadcast receivers, and may include visuals, such as lights, colors, and imagery (e.g., photos, projections, videos, symbols, etc.). Wireless identity transmitters may also or alternatively emit audible or inaudible (i.e., infrasonic or ultrasonic) sound signals from a speaker (e.g., a piezoelectric speaker). Sound signals may be received by a microphone of the proximity broadcast receivers, and may include a variety of sounds, such as beeps, voices, noise, clicks, ultrasounds, tones, and musical notes.

Wireless identity transmitters may be configured to broadcast the various short-range wireless signals in particular sequences, patterns, manners, durations, or manifestations such that proximity broadcast receivers may convert the signals into data in a manner similar to how RF signals (e.g., Bluetooth® LE signals) are interpreted in embodiments described herein. For example, a wireless identity transmitter may broadcast particular sequences of modulating visible or sound signals, such as strings of differing musical notes, changing images, or flashing lights that a proximity broadcast receiver may receive and convert into data that includes an identity of the wireless identity transmitter. In an embodiment, proximity broadcast receivers may convert such wireless signals into data (and vice versa) based on matching sequences of signals with patterns within predefined protocols. As an illustrative example, a wireless identity transmitter affixed to the outside of a child's clothing may periodically emit a sequence of flashes using an embedded light source (e.g., an LED bulb) that may be received, converted to data, and relayed by a proximity broadcast receiver to a central server for determining identification information related to the child. As another example, a wireless identity transmitter within a business establishment may be mounted on the ceiling and may periodically emit a sequence of flashes using an embedded light source that may be received, converted to data, and relayed by a proximity broadcast receiver to a central server to obtain coupons, announcements or customer-incentives tied to the customer being on the premises.

The various embodiments are described within this disclosure as including communication systems for providing intermediary communications between wireless identity transmitters, proximity broadcast receivers (e.g., mobile proximity broadcast receivers and stationary proximity broadcast receivers) and a central server that utilize short-range messaging (such as with Bluetooth® LE signaling) that enables proximity detection based simply on signal reception. However, the various embodiments are not limited to the described communication systems and methods, and other communication systems, protocols, devices, methods and messaging protocols may be used to convey information to a central server to enable identifying when customers are within proximity of predefined areas to enable the central server to distribute relevant information without disclosing unauthorized information of customers. For example, transceivers in a retail store may be configured to monitor for WiFi, Zigbee®, Bluetooth®, Peanut®, and/or other radio frequency signaling from customers' mobile devices or wireless broadcasting devices within proximity, and relay proximity information to a central server that delivers coupons to customers. Further, embodiments may not require determining exact locations for wireless identity transmitters and/or proximity broadcast receivers but instead may determine approximate and/or relative locations of devices between each other. Accordingly, references to determining location and/or distance throughout the disclosure may be for the purpose of determining proximity between signaling devices.

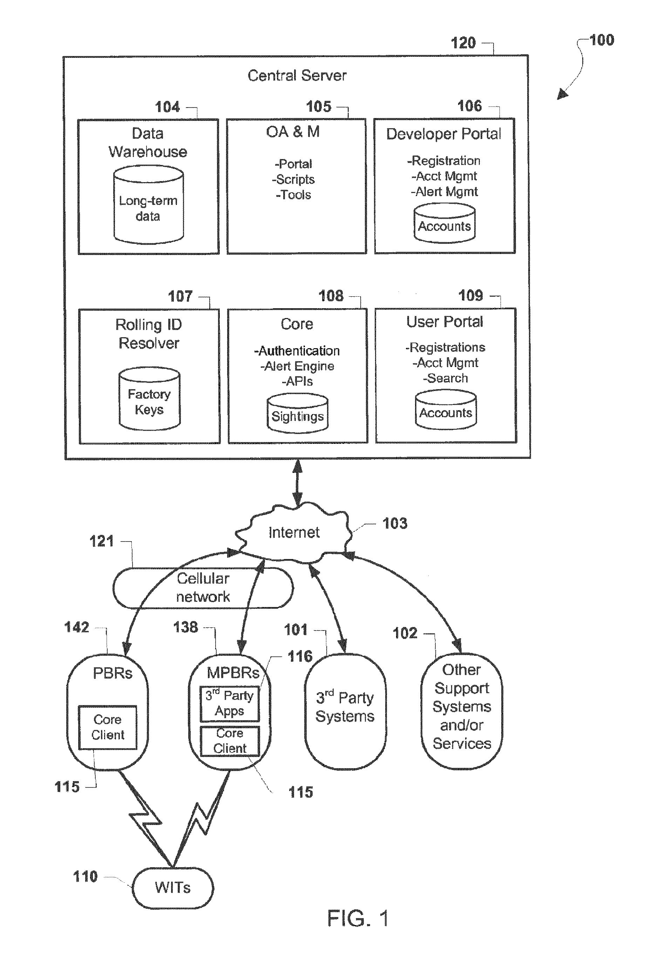

FIG. 1 illustrates an exemplary system 100 that may be used in various embodiments. In general, a central server 120 may be configured to receive, store, and otherwise process data corresponding to wireless identity transmitters 110. The central server 120 may be configured to exchange communications with various devices via the Internet 103, such as proximity broadcast receivers 142, mobile proximity broadcast receivers 138, third-party systems 101, and other support systems and/or services 102. The wireless identity transmitters 110 may broadcast messages that may be received by nearby proximity broadcast receivers 142 and/or the mobile proximity broadcast receivers 138 via short-range wireless signals. The proximity broadcast receivers 142, 138 may utilize long-range communications to relay received broadcast messages as sighting messages to the central server 120 via the Internet 103. For example, the proximity broadcast receivers 142 and mobile proximity broadcast receivers may utilize a cellular network 121 to transmit sighting messages to the central server 120. The third-party systems 101 may include merchant servers, retail store computing devices, computing devices associated with emergency services. The other support systems and/or services 102 may include computing devices associated with various technologies, such as computing devices utilized by users to provide registration information, systems that deliver user-relevant content (e.g., Qualcomm Gimbal™), and services that provide location-specific information (e.g., Qualcomm IZat™).

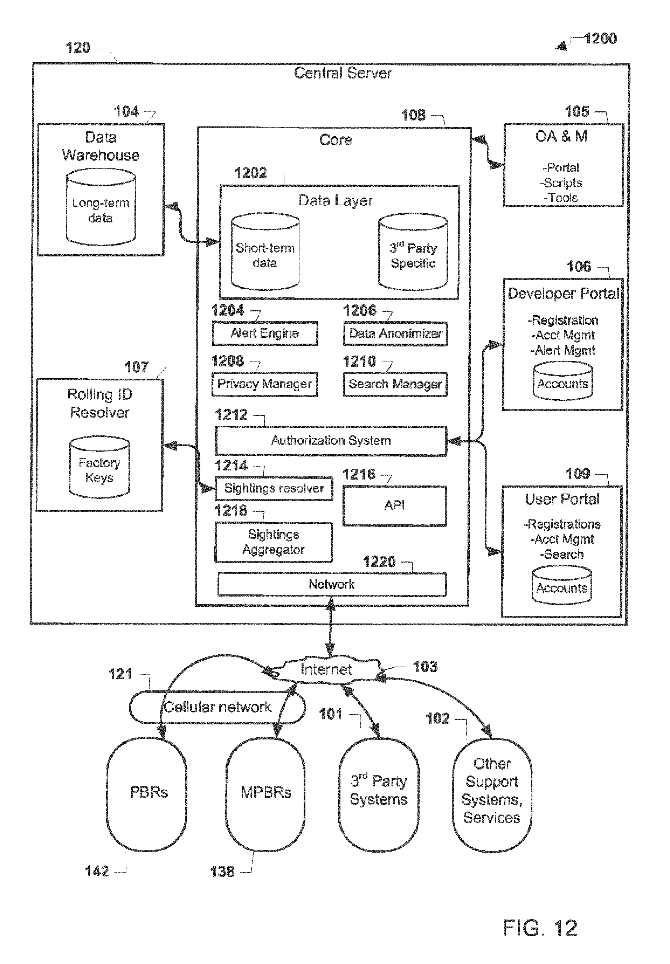

The central server 120 may include several components 104-109 to perform various operations to process data, such as received from proximity broadcast receivers 142, 138, third-party systems 101, or other support systems and/or services 102. In particular, the central server 120 may include a data warehouse component 104 that may store long-term data (e.g., archived user data, past location information, etc.). The central server 120 may also include an operations, administration and management (or OA&M) component 105 that may manage, process and/or store software associated with user portal accesses, scripts, tools (e.g., software utilities, routines, etc.), and any other elements for administering the central server 120. The central server 120 may also include a developer portal component 106 that may store developer account data and perform registration, account management, and alert (or notice) management routines associated with developers, such as vendors or merchants that register to interact with users of wireless identity transmitters 110. The central server 120 may also include a rolling identifier (or ID) resolver component 107 that may store factory keys associated with wireless identity transmitters 110 as well as perform operations, software, or routines to match encrypted, encoded, rolling, or otherwise obfuscated identification information within received sighting messages with affiliated user data. The central server 120 may also include a user portal component 109 that may store user account data and perform registration, account management, and search routines associated with users, such as persons associated with wireless identity transmitters 110. The central server 120 may also include a core component 108 that may process sighting messages, execute an alert or notice engine module, handle application programming interface (API) commands, and exchange data with other components within the central server 120. The core component 108 is described below with reference to FIG. 12.

In various embodiments, the various system components 104-109 may be computing devices, servers, software, and/or circuitry that is included within, connected to, or otherwise associated with the central server 120. For example, the core component 108 may be a server blade or computing unit included within the central server 120. As another example, the data warehouse component 104 may be a remote cloud storage device that the central server 120 communicates with via Internet protocols. In an embodiment, the proximity broadcast receivers 142 and mobile proximity broadcast receivers 138 may be configured to execute a core client module 115 that may be software, instructions, routines, applications, operations, or other circuitry that enable the proximity broadcast receivers 142, 138 to process received broadcast messages from proximate wireless identity transmitters 110. The core client module 115 may also handle communications between the proximity broadcast receivers 142, 138 and the central server 120, such as transmitting sighting messages and receiving return messages from the central server 120. Further, the mobile proximity broadcast receivers 138 may be configured to execute third-party applications module 116 that may related to performing software instructions, routines, applications, or other operations provided by various third-parties (e.g., merchant apps). In an embodiment, when configured as registered services with the central server 120, the third-party applications module 116 may receive various data from the core client module 115. For example, a third-party application that is registered with the central server 120 may be configured to receive notifications from the core client module 115 when the user of the mobile proximity broadcast receiver 138 enters, remains, and/or leaves a particular place (e.g., a geofence, a retail store, etc.).

In another embodiment, the mobile proximity broadcast receivers 138 may be configured to receive and transmit broadcast messages and may also be referred to as "wireless identity transceivers." For example, a user may employ a smartphone that is configured to receive broadcast messages from nearby wireless identity transmitters 110 as well as broadcast signals that include identifying information associated with the user.

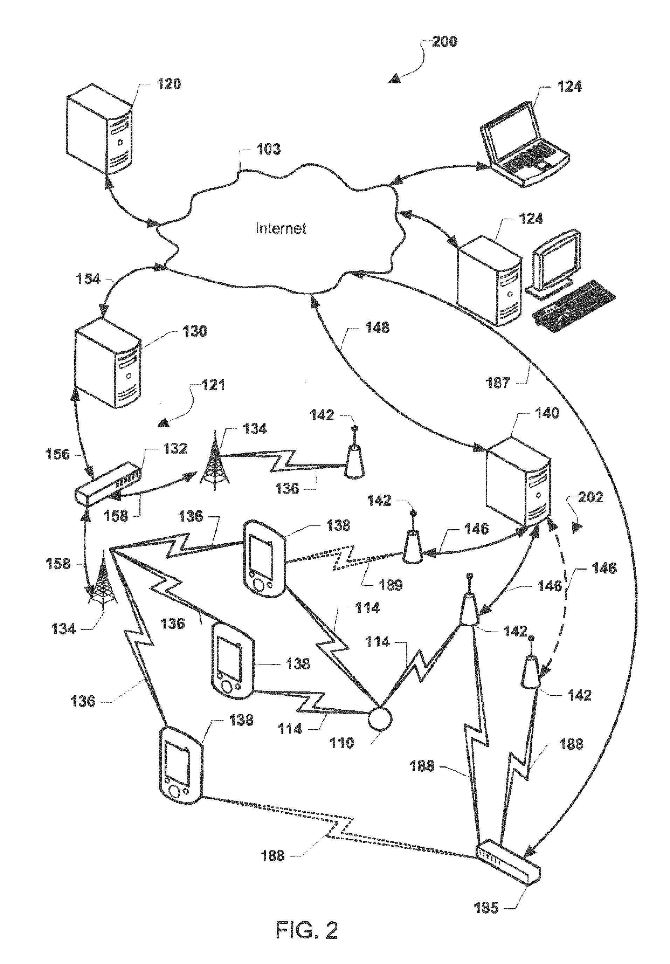

FIG. 2 illustrates an exemplary communication system 200 that may be used in various embodiments. The communication system 200 effectively enables wireless identity transmitters 110 (e.g., Bluetooth® LE transmitters) to transmit broadcast messages that include identification information to the central server 120 via a plurality of mobile proximity broadcast receivers 138 and/or stationary proximity broadcast receivers 142, without the need to negotiate a direct communication link. Such broadcast messages may be collected automatically by any proximity broadcast receiver within proximity (or broadcast range) of wireless identity transmitters. For example, a mobile proximity broadcast receiver 138 within a certain proximity may receive a broadcast message transmitted by a Bluetooth® radio within the wireless identity transmitter 110.

The communication system 200 may include a wireless identity transmitter 110. The wireless identity transmitter 110 may be coupled with various objects. For example, it may be embedded in a bracelet. The wireless identity transmitter 110 may transmit a short-range wireless signal 114, such as a broadcast message as described above. For example, this short-range wireless signal 114 may be a periodic broadcast of a packet, which includes the wireless identity transmitter's identification code. Alternately, the short-range wireless signal 114 may be an attempt to establish a wireless communication link with any of a plurality of mobile devices 138 that may be acting as proximity broadcast receivers. The short-range wireless signal 114 may be received by proximate proximity broadcast receivers, such as stationary proximity broadcast receivers 142 and/or mobile proximity broadcast receivers 138.

The short-range wireless signal 114 may be according to any of a variety of communication protocols, such as Bluetooth®, Bluetooth® LE®, Wi-Fi, infrared wireless, induction wireless, ultra-wideband (UWB), wireless universal serial bus (USB), Zigbee®, Peanut ®, or other short-range wireless technologies or protocols which have or which can be modified (e.g., by restricting transmit power) to limit their effective communication range to relatively short range (e.g., within about 100 meters). In some embodiments, the wireless identity transmitter 110 may use the low energy technology standardized in the Bluetooth® 4.0 protocol (or later versions). For example, in some embodiment systems a wireless identity transmitter 110 may periodically broadcast identification packets configured as an advertiser as described in the Bluetooth® 4.0 protocol, and proximate proximity broadcast receivers 142, 138 may be configured to act as scanners according to that protocol.

The Bluetooth® protocol and Bluetooth® devices (e.g., Bluetooth® LE devices) have a relatively short effective communication range, are widely used in deployed communication and computing devices, have standard advertising or pairing procedures that meets the discovery and reporting needs of various embodiments, and exhibit low power consumption, which make the protocol ideal for many applications of the various embodiments. For this reason, Bluetooth® and Bluetooth® LE protocols and devices are referred to in many of the examples herein for illustrative purposes. However, the scope of the claims should not be limited to Bluetooth® or Bluetooth® LE devices and protocol unless specifically recited in the claims. For example, Peanut® transceivers may be included within wireless identity transmitters 110 and may be used to transmit two-way communications with proximity broadcast receivers 142, 138 also configured to utilize Peanut® short-range radio transmissions.

The communication system 200 may include a plurality of stationary proximity broadcast receivers 142, which may be deployed by authorities, merchants, or various third-parties throughout a region, building, or place. Such stationary proximity broadcast receivers 142 may be designed specifically for wireless identity transmitters 110 (or include such tracking functions in addition to other primary functionality, such as traffic lights, utility transformers, etc.). Stationary proximity broadcast receivers 142 may be located in strategic locations within a locality, such as forming a perimeter about a community and/or being located in high traffic areas (e.g., major intersections and highway on-ramps). The stationary proximity broadcast receivers 142 may be in communication with a local area network 202, such as a WiFi network, that may include an Internet access server 140 that provides a connection 148 to the Internet 103. Stationary proximity broadcast receivers 142 may be connected to the local area network 202 by a wired or wireless link 146. In various embodiments, the stationary proximity broadcast receivers 142 may be contained within or located nearby the Internet access server 140. For example, the stationary proximity broadcast receivers 142 may be components within the Internet access server 140 or alternatively, may be placed on top of or to the sides of the Internet access server 140. In an embodiment, stationary proximity broadcast receivers 142 may be located in strategic places within a locality, such as forming a perimeter about a community and/or being located in high traffic areas (e.g., along aisles of a retail store, at entry ways to buildings, etc.). In an embodiment, stationary proximity broadcast receivers 142 may have additional functionality. For example, stationary proximity broadcast receivers 142 may also function as or be included within cash registers, point-of-sale devices, and/or display units within a retail store.

The communication system 200 may also include one or more mobile devices configured to act as mobile proximity broadcast receivers 138. The mobile proximity broadcast receivers 138 may be typical mobile devices or smartphones communicating with a cellular network 121 via long range wireless links 136 to one or more base stations 134 coupled to one or more network operations centers 132 by a wired or wireless connection 158. Such cellular network 121 may utilize various technologies, such as 3G, 4G, and LTE. The network operations centers 132 may manage voice calls and data traffic through the cellular network 121, and typically may include or may be connected to one or more servers 130 by a wired or wireless connection 156. The servers 130 may provide a connection 154 to the Internet 103. In the various embodiments, the mobile proximity broadcast receivers 138 may be mobile devices configured by an application or other software module to act as proximity broadcast receivers to relay reports of received broadcast messages from wireless identity transmitters 110 (i.e., sighting messages) to the central server 120 by way of the Internet 103. In an embodiment, stationary proximity broadcast receivers 142 may also communicate with the cellular network 121 via long range wireless links 136 to a base station 134.

Proximity broadcast receivers 138, 142 may be configured to report contacts (or sightings) with a wireless identity transmitter 110 to a central server 120 via the Internet 103. For example, the proximity broadcast receivers 142 may transmit a sighting message to the central server 120 that includes a rolling identifier corresponding to the identity of a user of the wireless identity transmitter 110. Each time a proximity broadcast receiver 138, 142 receives an identifier from a wireless identity transmitter 110, the identifier may be associated with the time of the connection and the location of the proximity broadcast receiver 138, 142, and this information may be transmitted to the central server 120, such as within a sighting message. In some embodiments, the identifier, the time, and the location of the contact may be stored in the memory of the proximity broadcast receiver 138, 142 (or an intermediary server 130, 140) for later reporting, such as in response to a query message broadcast or multicast by the central server 120. Also, the central server 120 may store location information reported by sighting messages in a database, which may be used for locating, tracking or otherwise monitoring movements of the wireless identity transmitter 110.

In an embodiment, mobile proximity broadcast receivers 138 may be configured to exchange short-range wireless signals 189 with stationary proximity broadcast receivers 142. In other words, a mobile proximity broadcast receiver 138 may be configured to operate as a wireless identity transceiver that is capable of receiving short-range wireless signals 114 (i.e., broadcast messages) from the wireless identity transmitter 110 as well as transmitting short-range wireless signals 189 for receipt by proximity broadcast receivers 142.

In an embodiment, proximity broadcast receivers 138, 142 may transmit wireless signals 188 to a wireless router 185, such as part of the local area network 202, which may provide a connection 187 to the Internet 103. For example, the stationary proximity broadcast receivers 142 may transmit sighting messages that include data from broadcast messages transmitted by the wireless identity transmitter 110 to a WiFi wireless router 185.

The central server 120 may also be connected to the Internet 103, thereby allowing communication between proximity broadcast receivers 142, 138 and the central server 120. As described above, the central server 120 may include a plurality of components, blades, or other modules to process sighting messages and data received from proximity broadcast receivers 142, 138. Further embodiments may provide a direct connection (not shown) between the central servers 120 and any of the mobile device network components, such as the network operations centers 132, to more directly connect the proximity broadcast receivers 142, 138 and the central servers 120.

The communication system 200 may also include computing terminals 124, such as personal computers at home or work, through which users may communicate via the Internet 103 with the central server 120. Such terminals 124 may allow users, such as parents, police, fire, medical attendants, and other authorized authorities to register devices (e.g., wireless identity transmitters 110), access tracking records on the central servers 120, and/or to request that the central server 120 initiate a search for a particular wireless identity transmitter 110. In an embodiment, users may use such terminals 124 to register wireless identity transmitters 110, proximity broadcast receivers 142, 138 (e.g., smart-phones configured to execute client software associated with the central server), and/or identity transceivers (not shown), such as by accessing web portals and/or user accounts associated with the central server 120. Similarly, third-parties, such as merchants, may use terminals 124 to register wireless identity transmitters 110, proximity broadcast receivers 142, 138 (e.g., stationary receivers configured to execute client software and relay broadcast to the central server), and/or identity transceivers (not shown).

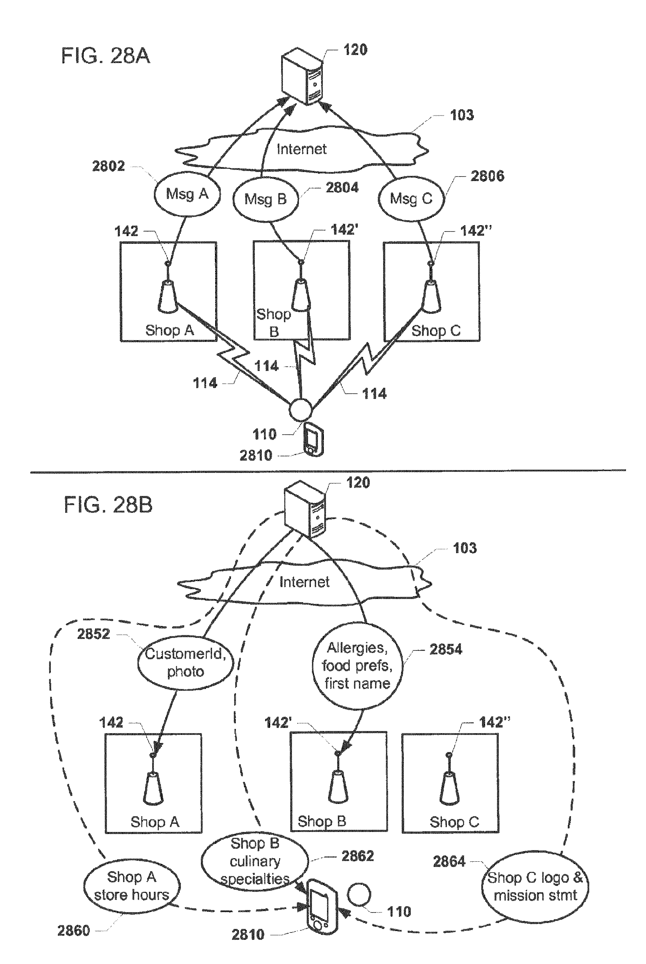

Based on the location of the proximity broadcast receivers 138, 142 within a place, multiple proximity broadcast receivers 138, 142 may be within the broadcast area of the wireless identity transmitter 110 and may concurrently receive broadcast messages. As described below with reference to FIGS. 28A-28D, the central server 120 may detect when proximity broadcast receivers 138, 142 concurrently (or within a certain time period) transmit sighting messages that indicate receipt of broadcast messages from the wireless identity transmitter. Such concurrent sighting messages may be used to determine more precise proximity information relating to the wireless identity transmitter at the time of broadcasting.

The communication system 200 may operate in a passive information gathering mode and/or an active search mode. In the passive information gathering mode, proximity broadcast receivers 138, 142 may continuously listen for broadcasts from any wireless identity transmitters 110, and report all identifier reception events via sighting messages (e.g., transmissions including identifiers, time and location) to the central server 120. When no active search is underway (i.e., no one is looking for a particular wireless identity transmitter 110), sightings of wireless identity transmitters 110 or received broadcast messages from wireless identity transmitters 110 may be stored in memory of the proximity broadcast receivers 138, 142 or the central server 120 for access at a later time. In order to protect privacy, such stored data may be stored for a limited period of time, such as a day, a week or a month, depending upon the person or asset being tracked. Then, if a person or asset is discovered to be missing, the stored data may be instantly accessed to locate and track the associated wireless identity transmitter 110, or at least determine its last reported location.

In a modification of the passive tracking mode, each proximity broadcast receiver 138, 142 may store IDs, times and locations corresponding to received broadcast messages (or contacts) from wireless identity transmitters 110 for a limited period of time. Alternatively, such information may be stored in servers 130, 140 connected to such proximity broadcast receivers 138, 142. Then, if a person or asset associated with a wireless identity transmitter 110 is discovered missing, a search can be initiated by the central server 120 querying the proximity broadcast receivers 138, 142 (or servers 130, 140) to download their stored data (e.g., databases indicating contacts with wireless identity transmitters 110) for analysis and storage in a database of the central server 120.

In an embodiment, in order to limit the demands on civilian mobile devices configured to operate as mobile proximity broadcast receivers 138, the passive tracking mode may only be implemented on the stationary proximity broadcast receivers 142. While the fewer number of such devices means the tracking of wireless identity transmitters 110 may be less effective, this embodiment may nevertheless enable receiving broadcast messages and thus the tracking of wireless identity transmitters 110 through high-traffic zones, such as intersections, highway on/off ramps, bus stations, airports, etc.

In the passive information gathering mode/embodiment, a user may use the communication system 200 to request the location of a particular wireless identity transmitter 110, such as by sending a request from a terminal 124 to the central server 120. For example, a mother may log in on her home computer terminal 124 and request the location of the wireless identity transmitter 110 in her child's backpack. The request may include a serial number, code, or other identifier corresponding to the wireless identity transmitter 110. The central server 120 may search the stored identification messages for the serial number, code, or other identifier and return any reported locations matching entered information, along with the times of such locations were reported via sighting messages. In further embodiments, the serial number or code entered by the parent may be cross-referenced with the identifier that the requested wireless identity transmitter 110 communicates in broadcast messages and that are relayed to the central server 120 in sighting messages submitted by proximity broadcast receivers 138, 142. In this manner only an authorized user (i.e., someone who knows the access code, password, or other secret code associated with a particular wireless identity transmitter 110) can obtain information regarding a given wireless identity transmitter 110 even though data is being gathered continuously.

In the active search mode/embodiment, the central server 120 may instruct proximity broadcast receivers 138, 142 to actively search for a particular wireless identity transmitter 110 (i.e., a "targeted" wireless identity transmitter). An active search may be initiated in response to a request received from a terminal 124. Such a request may include the identifier for the particular wireless identity transmitter 110, or an account number/name that is or can be crosslinked to the identifier of the wireless identity transmitter 110. The central server 120 may transmit activation messages, such as via broadcast or multicast, to proximity broadcast receivers 138, 142 that may instruct proximity broadcast receivers 138, 142 to search for a particular wireless identity transmitter 110 and that may include an identifier of the targeted wireless identity transmitter 110 (i.e., target device ID). For example, an activation message corresponding to an active search for a targeted wireless identity transmitter 110 may include a rolling identifier that the wireless identity transmitter 110 changes periodically in an unpredictable manner and that is known to the central server 120. In an embodiment, activation messages transmitted, broadcast or multicast by the central server 120 may be sent only to proximity broadcast receivers 138, 142 within particular sectors or within a given distance of a particular location. Alternatively, the activation messages may identify particular sectors or a distance from a particular location to enable the proximity broadcast receivers 138, 142 to determine whether the activation message is applicable to them based on their own known location. In this manner the search can be focused on a given area, such as a sector encompassing the last known location of the wireless identity transmitter 110 or an eye witness sighting. By focusing the search in this manner, proximity broadcast receivers 138, 142 not within the sector of search need not be activated.

In the active search mode/embodiment, in response to receiving activation messages from the central server 120 that include target device IDs and determining that they are within the identified sector of search, proximity broadcast receivers 138, 142 may configure their short-range radios (e.g., Bluetooth® radio) to listen for broadcast messages having the identifiers. In other words, the proximity broadcast receivers 138, 142 may be considered activated for a search and may or pairing attempts with an identifier look for the identifiers included in the activation message (i.e., target device IDs). In embodiments that do not rely on pairing with the wireless identity transmitter, proximity broadcast receivers 138, 142 matching an identifier within a received broadcast message to a target device ID within an activation message may promptly report the event to the central server 120 via sighting messages transmitted via links 146 or long-range wireless links 136. In embodiments that rely on pairing or an exchange of messages between the wireless identity transmitter and proximity broadcast receivers, proximity broadcast receivers 138, 142 may listen for and only complete communication handshaking or pairing with a device that broadcasts the target device ID, and ignore other pairing attempts. In this alternative embodiment, proximity broadcast receivers 138, 142 may be protected from pairing with unauthorized devices while in the active search mode. Also, proximity broadcast receivers 138, 142 may modify the pairing process in the active search mode to terminate the communication link as soon as the device ID is received, further protecting against pairing with unauthorized devices in the active search mode. In the active search mode/embodiment, proximity broadcast receivers 138, 142 receiving the target device ID may promptly report that event to the central server 120 via a wired or wireless link to the Internet 103. As mentioned above, such a report may include the location of the proximity broadcast receiver 138, 142 and the time when the identifier was received if the report is not transmitted immediately. In the active search mode/embodiment, each sighting message received by the central server 120 may be reported to an interested person or authority, such as in the form of a webpage showing an update location indicator on a map.

Further, in the active search mode/embodiment, an authorized user, such as a police, FBI, fire/rescue or other person of authority may use the communication system 200 to activate a search for a particular wireless identity transmitter 110, such as by using a terminal 124 to provide the central server 120 with the target device ID and search location or sectors to be searched. For example, a mother discovering that her child is missing may call the police and provide them with an identifier of the wireless identity transmitter 110 concealed in her child's clothing. With the search activated, the central server 120 may transmit an alert (or message that indicates a search for a wireless identity transmitter has been activated) to proximity broadcast receivers 138, 142 within the initial targeted search sector. The central server 120 may then activate a webpage that presents a map of the search area and that may be maintained in near-real time so, that as relevant sighting messages are received, reported location information is displayed on the map. Authorized users may then access the website (or other information provided by the server) to coordinate in-person search efforts.

Of course, information gathered and stored in proximity broadcast receivers 138, 142 or in a database of the central server in the passive mode may be used upon initiation of an active search, such as to identify an initial search location or sector, track recent locations and movements, and to provide/display a history of locations reported by sighting messages that may be combined with near-real time search reports.

In another embodiment, the communication system 200 may further include a plurality of wireless identity transmitters (not shown in FIG. 2) that are placed throughout a building. In such a situation, the plurality's broadcast areas may cover a large portion of the enclosed area of such a building. For example, the building may be a retail store and the plurality of wireless identity transmitters may be permanently stationed throughout the sales floor of the building. As a mobile proximity broadcast receiver 138, such as a smartphone carried by a customer, moves throughout the building and within the broadcast areas of the plurality of wireless identity transmitters, the mobile proximity broadcast receiver 138 may receive broadcast messages associated with the building. In another embodiment, the Internet access server 140 may be configured to store, receive, and otherwise process information relevant to the building. For example, the Internet access server 140 may be configured to perform as a local server for a retail store or alternatively a point-of-sale device that is configured to perform software and operations for conducting transaction with customers. For example, the Internet access server 140 may be configured to perform operations related to a customer purchase within a retail store building.

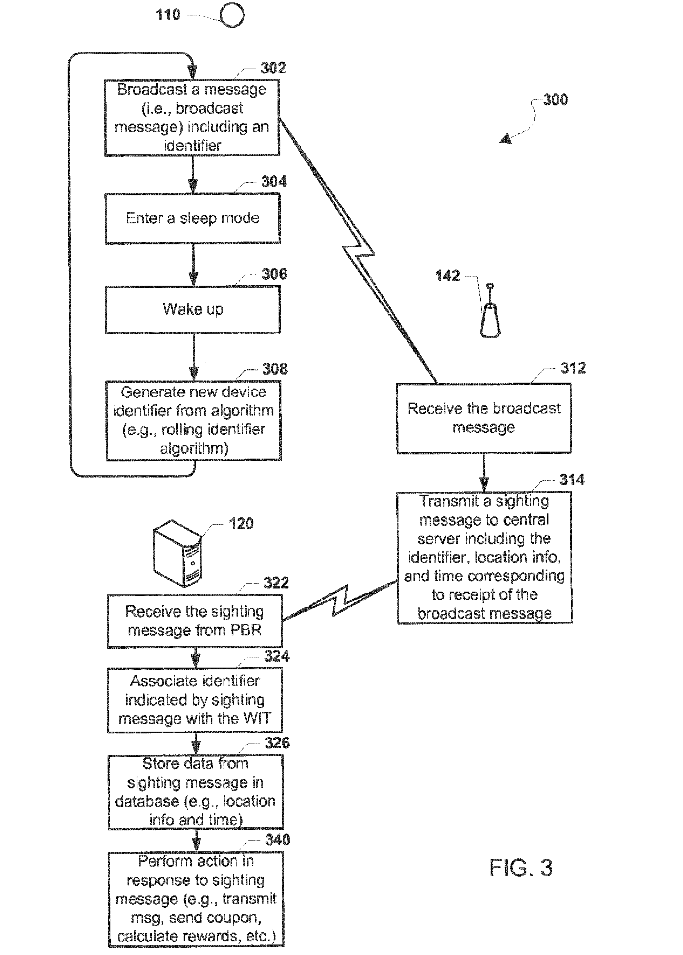

FIG. 3 illustrates an embodiment method 300 for implementation in a wireless identity transmitter 110 (referred to as "WIT" in FIG. 3), a proximity broadcast receiver 142, and a central server 120. In block 302, a wireless identity transmitter 110 may broadcast a message that includes an identifier, such as a broadcast message as described above. For example, the wireless identity transmitter 110 may broadcast a Bluetooth® LE advertising packet that includes a rolling identifier as described herein. This may be accomplished in block 302 by a microcontroller within the wireless identity transmitter 110 determining that it is time to broadcast its identifier, configuring a suitable broadcast message (e.g., an advertisement packet as specified for Bluetooth® LE devices in the Bluetooth® 4.0 protocol), and transmitting that packet via a short-range radio.

In various embodiments, the message broadcast by the wireless identity transmitter (i.e., the broadcast message) may include an identifier segment, such as a rolling identifier. In various embodiments, the broadcast message may also include additional segments, such as a type segment. The type segment may indicate the type of wireless identity transmitter. For example, wireless identity transmitters may be marketed for various purposes, such as child safety devices, dog collars, or security tags for stores. The wireless identity transmitters may have a different type segment based on the intended purpose (e.g., one code for child safety devices, a second code for dog collars, etc.). Type segments may be static and set by manufacturers, while the remaining portion of the identifier may be unique to each device, and may roll as described below. The type segment may also be changed by a user, such as when a wireless identity transmitter is reset for a different purpose or application.

In other embodiments, a broadcast message may also include one or more static or dynamic segments with instructions or commands to be implemented by a proximity broadcast receiver. Such command segments may also be passed along to instruct a central server or other network device. Command segments may be set or static, similar to type segments, or may vary over time based on various conditions, such as pairings or data from one or more proximity broadcast receivers. Such command settings may also be configured by a user of the wireless identity transmitter. Second or additional segments may also indicate the status of the wireless identity transmitter. For example, a second segment may indicate the remaining power or estimated time left before the battery dies. Proximity broadcast receivers or a central server may interpret this status and respond accordingly.

Returning to FIG. 3, in block 304, the wireless identity transmitter 110 may enter a sleep mode. For example, after broadcasting the broadcast message having the identifier, the wireless identity transmitter 110 may be configured to enter a power conservation state that may continue for a predetermined period of time. In various embodiments, the wireless identity transmitter 110 may sleep for a predetermined time, never sleep, or sleep for varying times determined based on various inputs. In block 306, the wireless identity transmitter 110 may wake up from the sleep mode, such as after the predetermined duration expires. In block 308, the wireless identity transmitter 110 may generate a new device identifier from an algorithm, such as a rolling identifier algorithm. For example, the wireless identity transmitter 110 may generate a rolling identifier using a pseudo-random function or a streaming-like encryption algorithm (e.g., AES-CTR), as described below. The wireless identity transmitter 110 may then return to block 302 to broadcast again. In an embodiment, the broadcast message may contain timing, counter, count-down, or scheduling information indicating the availability of the wireless identity transmitter for receiving messages. For example, the broadcast message may indicate that the wireless identity transmitter will accept incoming configuration messages within a specified time window. In various embodiments, the operations in blocks 302-308 may be performed by an identity transceiver (e.g., a smartphone configured to operate as both an identity transmitter and a proximity broadcast receiver).

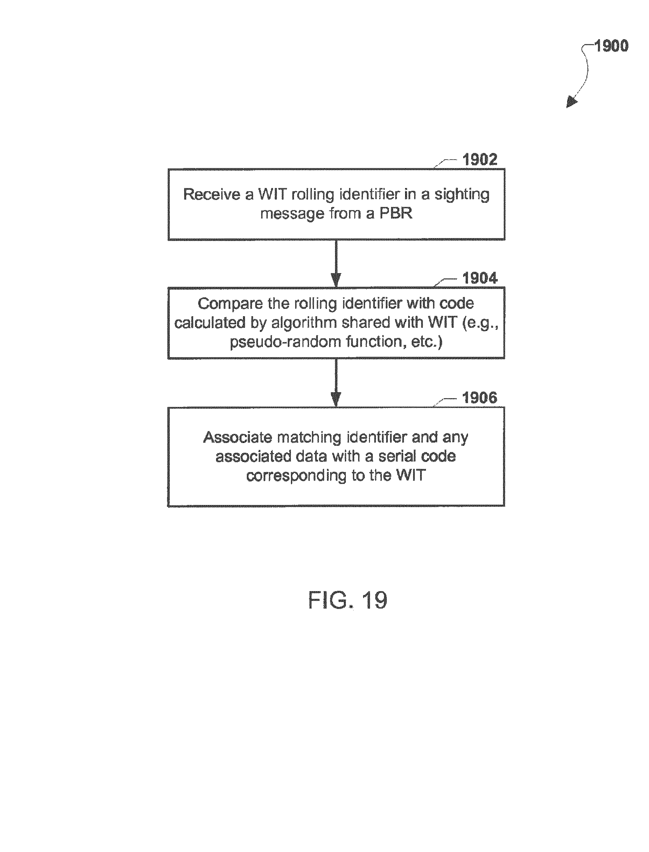

As mentioned above, the algorithm (or rolling identifier algorithm) used in block 308 may generate a rolling identifier which is very difficult to predict or recognize by a device or system that does not know either an identity of the wireless identity transmitter 110 (e.g., a MAC or Bluetooth® ID), a decode key, and/or the algorithm used to generate the rolling identifier. As discussed below with reference to FIG. 19, the central server 120, configured with the algorithm (or a decoding algorithm) or a decode key, and in possession of the wireless identity transmitter 110 identities, can use the rolling identifier to determine a corresponding account or device identity. While method 300 shows the rolling identifier changing with every wake and broadcast cycle as one example, in other embodiments the identifier may be changed less frequently, such as once per minute, once per hour, etc. In such embodiments, the operation of generating a new identifier in block 308 may be performed only at the designated interval, so at other times upon waking (i.e., block 306) the wireless identity transmitter 110 may return to block 302 to broadcast the identifier. Various algorithms for generating rolling identifiers or other encoded identifiers, as well as other decoding algorithms, are discussed below as well as in related application_U.S. Patent Application No. 13/773,336, entitled "Preserving Security By Synchronizing a Nonce or Counter Between Systems," the entire contents of which are hereby incorporated by reference for purposes of algorithms for generating, transmitting and decoding rolling identifiers and other data.

The method 300 also illustrates operations that may be implemented in the proximity broadcast receiver 142. In block 312, the proximity broadcast receiver 142 may receive the broadcast message from the wireless identity transmitter 110. The proximity broadcast receiver 142 may receive the broadcast message when within proximity of the wireless identity transmitter 110 (i.e., within communication range). When the broadcasted message with included identifier is received, the proximity broadcast receiver 142 may analyze header or metadata within the received broadcast message, as well as parse and evaluate various data within the broadcast message. In an embodiment, the broadcast message may contain encrypted and non-encrypted data that the proximity broadcast receiver 142 may or may not be configured to decrypt or otherwise access. In block 314, the proximity broadcast receiver 142 may transmit a sighting message to the central server 120 including the identifier, location information, and time corresponding to the receipt of the broadcast message. This transmission may be accomplished via a wireless wide area network, such as a cellular data network coupled to the Internet. In various embodiments, the operations in blocks 312 and 314 may be performed by a stationary proximity broadcast receiver, a mobile proximity broadcast receiver, or alternatively, an identity transceiver (e.g., a smartphone configured to operate as both a transmitter and a receiver).

In general, sighting messages may include metadata or header information that may describe received broadcast messages (e.g., message size, indicators of subject matter, etc.), the proximity broadcast receiver 142, such as the proximity broadcast receiver identification (e.g., a code, username, etc.), indications of services with which the proximity broadcast receiver 142 is affiliated regarding the server (e.g., the proximity broadcast receiver 142 participates in a tracking program for a particular vendor, merchant, area, etc.), as well as the conditions at the time of receipt of the broadcast message. For example, the sighting message may include signal strength information of the received broadcast message. In an embodiment, sighting messages may each include codes, flags, or other indicators that describe the general topic, subject matter, or reason for the sighting message. For example, the sighting message may contain a flag that indicates a relation to an active alert.

Additionally, sighting messages may include location information of the proximity broadcast receiver 142. In particular, sighting messages may indicate network-specific information that relates to a location. For example, a sighting message may indicate the cell site (e.g., cell site ID), cellular network tower (e.g., cell tower ID), or other wireless network with which a mobile proximity broadcast receiver was in communication at the time of receipt of the broadcast message. Further, sighting messages may include more refined location information based on data from global positioning systems (GPS) or chips included within the proximity broadcast receiver 142. For example, the proximity broadcast receiver 142 may determine GPS information (i.e., GPS coordinates) of the proximity broadcast receiver 142 at the time of receipt of a broadcast message, including the coordinates in the corresponding sighting message. In an embodiment, sighting messages may also include sensor data from various sensors within the proximity broadcast receiver 142, such as accelerometers, gyroscopes, and magnetometers. Further, sighting messages may include authentication information that may confirm the legitimacy of the sighting message as coming from a known, registered, or otherwise valid proximity broadcast receiver 142. For example, authentication information included in a sighting message may include secret codes, certificates, or hash data that is shared between the proximity broadcast receiver and the central server 120.

In various embodiments, the proximity broadcast receiver 142 may generate sighting messages by appending data and various information to broadcast messages received from the wireless identity transmitter 110. In an embodiment, sighting messages may include the entirety of received broadcast messages or, alternatively, only portions of the received broadcast messages that the proximity broadcast receiver 142 determines to be of significance. For example, the proximity broadcast receiver 142 may extract particular header or metadata information from a broadcast message before generating a corresponding sighting message. As another example, the proximity broadcast receiver 142 may compress, abbreviate, truncate and/or summarize data within the broadcast message. In another embodiment, the proximity broadcast receiver 142 may simply redirect, relay, or retransmit received broadcast messages to the central server.

Sighting messages may be transmitted via a wireless or wired communication link, such as a wireless cellular network, a local area network configured to communicate via Internet protocols, a long-range radio communication link, or a short-range radio. For example, the proximity broadcast receiver 142 may transmit sighting messages over a cellular network via the Internet to the central server. As another example, the proximity broadcast receiver 142 may transmit sighting messages via a wired Ethernet connection.

Returning to FIG. 3, the method 300 also illustrates operations that may be implemented in the central server 120. In block 322, the central server 120 may receive the sighting message from the proximity broadcast receiver 142. In block 324, the central server 120 may associate an identifier indicated by the sighting message with the wireless identity transmitter 110. The central server 120 may associate the identifier within the sighting message with an account registered/created by a user. Associating the identifier with a particular wireless identity transmitter 110 or user account may be accomplished by comparing the identifier with a database of codes corresponding to the wireless identity transmitter 110 or user accounts to determine the database record in which information from the sighting message (e.g., location info) should be stored. Since in some embodiments the wireless identity transmitter 110 identifier changes (rolls) frequently, this process may involve comparing the identifier received in the sighting message to several possible serial codes generated by a pseudo-random number generator algorithm, or applying a reverse algorithm which uses the received identifier as an input and outputs the corresponding account number. In block 326, the central server 120 may store data from the sighting message in a database, such as location information and time data. For example, the central server 120 may determine the location of the proximity broadcast receiver 142 when the broadcast message was received based evaluating the received sighting message, and may store that data in a database linked to the wireless identity transmitter 110 or its user/owner.

In block 340, the central server 120 may perform an action in response to the sighting message, such as transmit a message to a recipient, send a coupon, and/or calculate rewards. In an embodiment, the central server 120 may transmit a return message to a recipient, such as the proximity broadcast receiver 142, that includes instructions, software, or codes indicating how the proximity broadcast receiver 142 may respond to the received broadcast message. For example, the return message may direct the proximity broadcast receiver 142 to transmit a link advertisement message. Recipients of such messages from the central server may include various devices and parties, including computing devices of registered services (e.g., merchants, emergency personnel), mobile devices of users, and proximity broadcast receivers (e.g., the proximity broadcast receiver 142 that received the broadcast message). In another embodiment, the central server 120 may use the stored data to identify when the wireless identity transmitter 110 enters, is within, and/or leaves a designated area. In other words, the central server 120 may identify when the wireless identity transmitter 110 comes within proximity, stays within proximity, or leaves proximity of a proximity broadcast receiver 142.

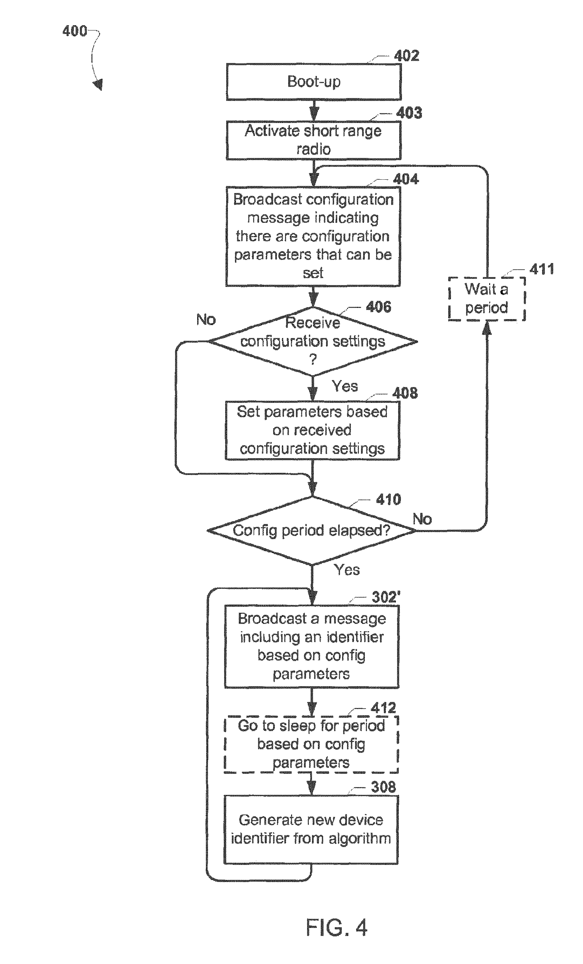

FIG. 4 illustrates an embodiment method 400 for a wireless identity transmitter (referred to as "WIT" in FIG. 4) receiving configuration settings after performing boot-up operations. Typically, wireless identity transmitters may only perform one-way communications, broadcasting signals for receipt by proximity broadcast receivers. However, wireless identity transmitters may be configured to selectively engage in two-way communications with other devices with similar short-range wireless signaling capabilities (e.g., Bluetooth® LE transceivers). In particular, upon initialization operations (or "booting-up"), a wireless identity transmitter may be configured to receive incoming short-range wireless communications from proximity broadcast receivers. For example, when a battery is replaced or inserted for the first time, the wireless identity transmitter may accept incoming Bluetooth® packets for a predefined period of time, such as sixty seconds. Alternatively, the wireless identity transmitter may receive incoming messages as part of power-cycling (e.g., receive for the sixty seconds after a reboot of the wireless identity transmitter).

Such incoming short-range wireless communications may include instructions, software, firmware, commands, or other code for setting values for configuration parameters utilized by the wireless identity transmitter for performing various functions. In particular, the incoming communications may include configuration settings (or values) the wireless identity transmitter may use to set or modify established configuration parameters associated with transmitting broadcast messages that include identification information of the wireless identity transmitter. In an embodiment, incoming communications that include configuration settings may be Bluetooth® signals (e.g., setters or getters) that may not require pairing operations between the sender and receiver (i.e., the wireless identity transmitter). In other words, the incoming communications may be non-pairing Bluetooth® advertisements.

Configuration parameters may include the transmit interval for transmitting broadcast messages (i.e., how often the wireless identity transmitter should broadcast packets that include its identity) and the transmit power for transmitting broadcast messages (i.e., what signal strength to use when broadcasting). For example, received configuration settings may vary the intervals (i.e., broadcasting frequency) at which the wireless identity transmitter broadcasts its identifier in a manner configured to facilitate accurate tracking of the wireless identity transmitter while conserving battery power. This may be important as setting transmit power configuration parameters may affect the battery service life of the wireless identity transmitter (e.g., a longer interval may include a longer sleep mode and thus decreased power consumption). In an embodiment, configuration parameters may also include a debug parameter that may be set or modified by a manufacturer or administrative party (e.g., a central server). The debug parameter may be utilized by software or algorithms executed by the wireless identity transmitter and may indicate when the wireless identity transmitter should generate new identifiers to broadcast (e.g., an interval for generating a new rolling identifier or Bluetooth® MAC address identifier). In another embodiment, incoming communications with configuration settings may include commands that instruct the wireless identity transmitter to change the data represented within broadcast messages, such as by entering/exiting an encoded mode. Alternatively, incoming communications may include instructions for the wireless identity transmitter to shorten its broadcast signal range to emulate near field communications (NFC).

In block 402, the wireless identity transmitter may boot-up. In other words, the wireless identity transmitter may be energized, initialized, and otherwise configured to operate from a hibernating, sleep, dormant, or otherwise deactivated state. In various embodiments, the boot-up operations may be performed in response to a user input (e.g., a button press), the insertion of a battery in the wireless identity transmitter, or receiving a short-range wireless signal (e.g., an activation signal). In block 403, the wireless identity transmitter's short-range radio may be activated. This activation may be accomplished by a timer or by the microcontroller determining that a duration has expired since the boot-up operations were performed or concurrently with the boot-up operations. In an embodiment, the activation of the short-range radio may be a routine within the boot-up operations in block 402.

In block 404, the wireless identity transmitter may broadcast a configuration message indicating there are configuration parameters that can be set in the wireless identity transmitter. For example, the configuration message may include the wireless identity transmitter's identity (or identifier) as well as an indication that a certain number or type of configuration parameters can be set, modified, or initialized by subsequent short-range wireless signals. In an embodiment, the configuration message may include a list of configuration parameters available to be set, such as the transmit interval.

In an alternative embodiment, the configuration message may include an indicator that the wireless identity transmitter is available to receive configuration settings. In such an embodiment, any responding devices, such as proximate proximity broadcast receivers, may transmit responses (e.g., Bluetooth® LE signals) that request the list of configuration parameters. In response to receiving such a request, the mobile proximity broadcast receiver may transmit a second message that includes the list of configuration parameters.

In determination block 406, the wireless identity transmitter may determine whether configuration settings are received, such as in a short-range wireless signal from a proximate proximity broadcast receiver or identity transceiver. The wireless identity transmitter may monitor the short-range radio to determine whether a response is received from a proximate device. A response may be in the form of a simple response packet or pulse that the wireless identity transmitter microcontroller can recognize, or alternatively, an advertisement according to the Bluetooth® LE protocol. If configuration settings are received (i.e., determination block 406 = "Yes"), in block 408 the wireless identity transmitter may set parameters based on the received configuration settings. For example, the wireless identity transmitter may set a value that indicates how often it transmits broadcast messages. If no configuration settings are received (i.e., determination block 406 = "No"), or if the wireless identity transmitter performs the operations in block 408, in determination block 410 the wireless identity transmitter may determine whether a configuration period has elapsed. For example, the wireless identity transmitter may evaluate a counter or timer to determine whether a predefined number of seconds (e.g., 60 seconds) have elapsed since the boot-up operations were performed. If the configuration period has not elapsed (i.e., determination block 410 = "No"), in optional block 411 the wireless identity transmitter may wait a period, such as a number of milliseconds, seconds, etc., and then may continue with the operations in block 404.

However, if the configuration period has elapsed (i.e., determination block 410 = "Yes"), in block 302' the wireless identity transmitter may broadcast a message including an identifier based on the configuration parameters. For example, the wireless identity transmitter may transmit a broadcast message at a signal strength indicated by configuration parameters set in response to receiving configuration settings (or values) from a nearby proximity broadcast receiver. In optional block 412, the wireless identity transmitter may go to sleep for a period based on the configuration parameters, such as a transmit interval configuration parameter. In block 308, the wireless identity transmitter may generate a new device identifier (e.g., rolling identifier) from an algorithm, and may continue with the operations in block 302'.

In alternate embodiments, the wireless identity transmitter may be configured to receive incoming messages from proximity broadcast receivers based on clock timing (or clock signals), detected inputs from a user (e.g., a detected button press), or information within a previously received signal (e.g., a received message from a proximity broadcast receiver may instruct the wireless identity transmitter to become available for subsequent messages at a particular future time).

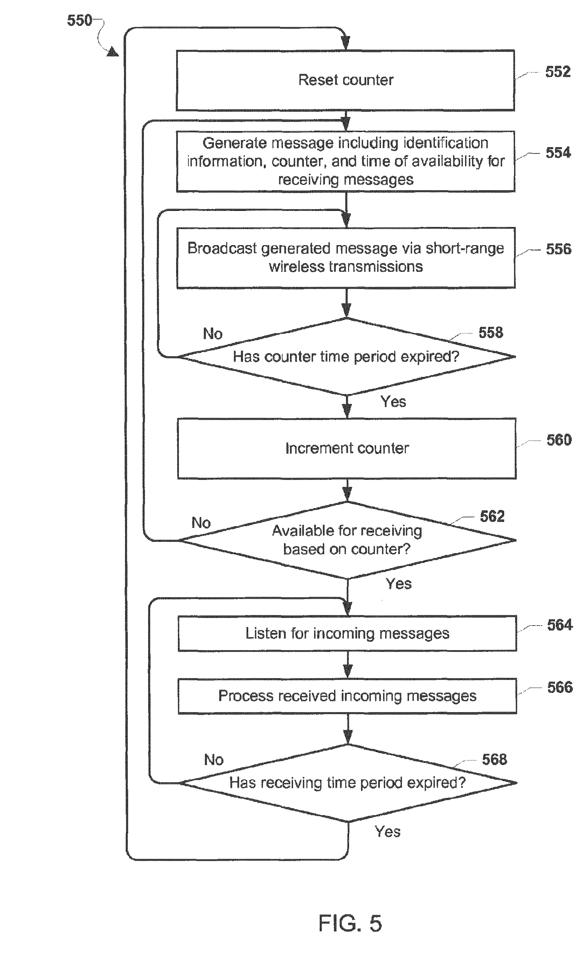

FIG. 5 illustrates an embodiment method 550 for a wireless identity transmitter performing two-way wireless communications with a proximity broadcast receiver. As described above, wireless identity transmitters may typically be used for one-way signaling, such as transmitting broadcast messages for receipt, use, and relay by proximity broadcast receivers. However, wireless identity transmitters may be configured to conduct two-way communications in order to receive firmware, software instructions or trigger signals directing the transmitter to perform certain operations (e.g., activate sensors), configuration data, and other information the wireless identity transmitter may use to transmit broadcast messages. Such two-way communications may be available to wireless identity transmitters that include short-range radio transceivers, such as Bluetooth® radios. However, wireless identity transmitters may be configured to selectively engage in two-way communications with proximity broadcast receivers to minimize power consumption and maximize battery service life. In an embodiment, the wireless identity transmitter may broadcast messages indicating to proximity broadcast receivers a period of time when the wireless identity transmitter may be available for receiving messages from proximity broadcast receivers, and may receive messages for a limited or predefined period of time.

In block 552, the wireless identity transmitter may reset a counter, such as a counter variable to indicate the beginning (or initialization) of a period during which the wireless identity transmitter may not receive messages. The counter may be reset to a zero value and may be incremented up to a predefined number during the operations of the method 550. Alternatively, the counter may be reset or initialized at a predefined number and decremented down to a zero value. The use of a counter variable is merely a non-limiting example technique for the wireless identity transmitter determining when to configure itself for receiving messages. In alternate embodiments, the wireless identity transmitter may instead determine when to be available for receiving incoming messages based on clock timing (or clock signals), detected inputs from a user (e.g., a detected button press), information within a previously received signal (e.g., a received message from a proximity broadcast receiver may instruct the wireless identity transmitter to become available for subsequent messages at a particular future time), or power-cycling (e.g., one such time might be for the sixty seconds after initial boot-up or reboot of the wireless identity transmitter).

In an embodiment, the wireless identity transmitter may be roughly in clock synchronization with or maintain the counter variable that it is known and roughly tracked by various proximity broadcast receivers (e.g., smartphones, listening radios throughout a place, etc.) and/or a central server. For example, when the wireless identity transmitter is activated (e.g., turned on, initialized by inserting a battery, etc.), a user may register the wireless identity transmitter with a central server that stores the wireless identity transmitter identification along with information that enables the central server to estimate a counter value or clock timing within the wireless identity transmitter. In an embodiment, such a counter variable or clock synchronization may be used to disambiguate wireless identity transmitter identities and/or be used as a decryption key for obfuscated or encoded messages. Such registration and synchronization operations are described further below.

In block 554, the wireless identity transmitter may generate a message including identification information, counter, and time of availability for receiving messages. The generated message may include information about the wireless identity transmitter's identity (e.g., a serial code/number, a username, or a rolling identifier). In an embodiment, the generated message may be encrypted, encoded, or otherwise obscured to prevent proximity broadcast receivers from determining the identity of the wireless identity transmitter and/or the user thereof. For example, the generated message may employ a rolling identifier or code known only to the wireless identity transmitter and a central server but not proximity broadcast receivers.

The generated message may also include information indicating a time or condition when the wireless identity transmitter may be available for accepting communications for proximity broadcast receivers. For example, the message may describe the current value of the counter or indicate a count-down timer showing when the wireless identity transmitter may be available. In another embodiment, the generated message may include instructions for proximity broadcast receivers to enable successful transmissions to the wireless identity transmitter. For example, the generated message may contain specifications (e.g., required codes, content, delivery time, etc.) for any messages transmitted by proximity broadcast receivers to the wireless identity transmitter.

In block 556, the transmitter may broadcast the generated message via short-range wireless transmissions, such as Bluetooth® LE packets. If within the range of the short-range broadcasts, a proximity broadcast receiver may receive and process the broadcasts as described below.

The wireless identity transmitter may periodically broadcast the same generated message multiple times for each counter time period. In other words, the wireless identity transmitter may broadcast the generated message more than once before modifying the counter variable value. In determination block 558, the wireless identity transmitter may determine whether the predetermined counter time period has expired. If the counter time period has not expired (i.e., determination block 558 = "No"), the wireless identity transmitter may continue to broadcast the generated message periodically in block 556.

If the counter time period has expired (i.e., determination block 558 = "Yes"), in block 560 the wireless identity transmitter may increment the counter and, in determination block 562, determine whether the wireless identity transmitter has become available for receiving messages based on the counter value. For example, the wireless identity transmitter may compare the current counter variable value to a predefined maximum (or minimum) counter value. As stated above, in various other embodiments, the wireless identity transmitter may determine availability for receiving messages based on other evaluations of time or instructions stored within the wireless identity transmitter.

If it is not available to receive messages (i.e., determination block 562 = "No"), the wireless identity transmitter may continue with the operations in block 554 to generate a new message to broadcast. If the wireless identity transmitter is available to receive messages (i.e., determination block 562 = "Yes"), in block 564 the wireless identity transmitter may listen for incoming messages, such as by monitoring a receiver circuit for incoming short-range radio transmissions, and in block 566 the wireless identity transmitter may process any received incoming messages, such as with software or operations running on a processor or wireless modem within the wireless identity transmitter.

In determination block 568, the wireless identity transmitter may determine whether the receiving time period has expired. In other words, the wireless identity transmitter may determine whether incoming messages may still be received. The time period for receiving incoming messages may be based on a counter variable maintained by the wireless identity transmitter, a clock signal indication, or information within a received message. If the receiving time period has not expired (i.e., determination block 568 = "No"), the wireless identity transmitter may continue to listen for incoming messages in block 564. However, if the receiving time period has expired (i.e., determination block 568 = "Yes"), the wireless identity transmitter may repeat the process by returning to block 552.

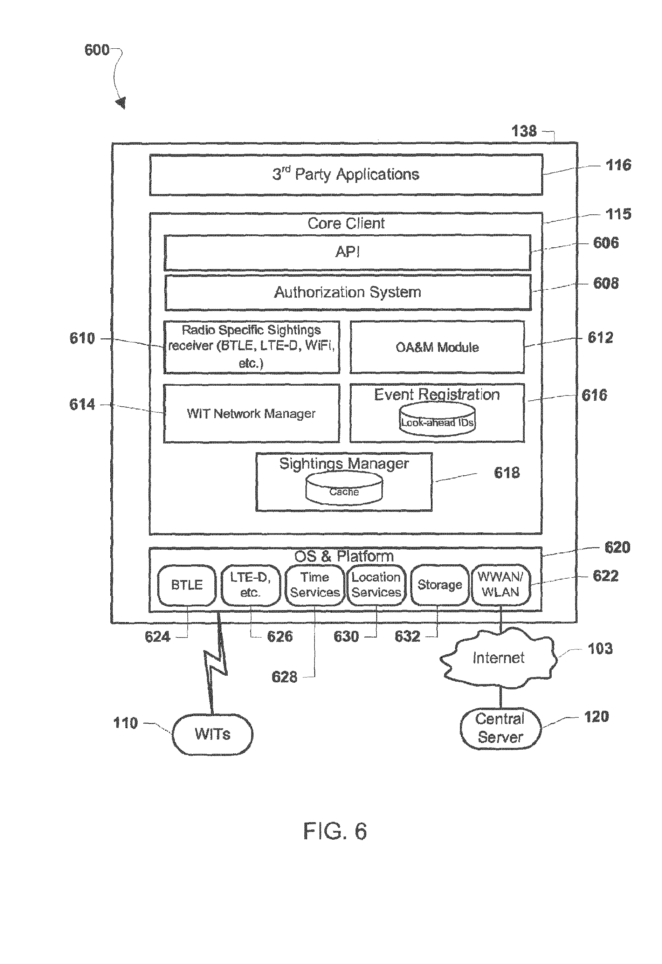

FIG. 6 illustrates various modules within a mobile proximity broadcast receiver 138. As described above, proximity broadcast receivers may include stationary proximity broadcast receivers, such as dedicated devices placed around a building, and mobile proximity broadcast receivers 138, such as mobile devices that are configured to perform operations to receive broadcast messages from wireless identity transmitters 110 and transmit sighting messages over the Internet 103 to a central server 120 via long-range communications (e.g., via WiFi or a cellular network). The various modules and components are described below in the context of elements within a mobile proximity broadcast receiver 138, however in various embodiments, any proximity broadcast receiver, such as a stationary proximity broadcast receiver, may include similar modules and/or components.

The mobile proximity broadcast receiver 138 may include a core client module 115 that may be software, instructions, routines, applications, operations, or other circuitry utilized to process received broadcast messages from proximate wireless identity transmitters 110. The core client module 115 may also handle communications between the proximity broadcast receivers 142, 138 and the central server 120, such as transmitting sighting messages and receiving return messages from the central server 120. For example, the core client module 115 may operate as a background service that performs operations, such as uploading or transmitting sighting messages, without interaction from a user.

The core client module 115 may include an API component 606 that corresponds to application programming interface data, code, or other commands related to broadcast messages and/or sighting messages. For example, the API component 606 may be utilized by a proximity broadcast receiver when listening for Bluetooth® LE advertising packets received from the wireless identity transmitter 110. As another example, the API component 606 may be utilized to register the mobile proximity broadcast receiver 138 to receive notifications, alerts, or other communications corresponding to wireless identity transmitters 110. The core client module 115 may also include an authorization system component 608 for processing received broadcast messages. For example, the mobile proximity broadcast receiver 138 may support oAuth for authorization requests and xAuth for approved communication partners. The core client module 115 may also include a radio specific sightings receiver component 610 (e.g., a component for handling Bluetooth® LE, LTE-D, WiFi, and other communications), an operations, administration, and management module 612, a wireless identity transmitter network manager component 614, an event registration component 616 that relates to stored look-ahead identifiers, and a sightings manager component 618. In an embodiment, the event registration component 616 may store numerous rolling identifiers downloaded from the central server 120 and corresponding to a particular wireless identity transmitter 110, such as a set of rolling identifiers that may match possible rolling identifiers broadcast by the wireless identity transmitter 110 during a certain time window.

Like many modern mobile devices, the mobile proximity broadcast receiver 138 may be configured to execute third-party applications (or "apps"), and thus may include a third-party applications module 116 that may execute, manage, and otherwise perform software instructions and routines related to applications provided by various third-parties (e.g., merchants). For example, the third-party applications module 116 may receive various data from the core client module 115 to be used by various third-party applications. For illustration purposes, a third-party application related to a department store that is registered with the central server 120 may be configured to receive notifications from the core client module 115 when the user of the mobile proximity broadcast receiver 138 enters, remains, and/or leaves the department store (e.g., a geofence of the store). In an embodiment, for optimization purposes, applications or apps executing via the third-party applications module 116 may register or otherwise be configured to received notifications from the core client module 115 when particular wireless identity transmitters are within proximity, or alternatively, leave proximity. For example, applications may register in advance with the core client module 115 to receive event notifications that indicate whether a particular wireless identity transmitter enters proximity, stays within proximity (e.g., standing nearby and not moving), or leaves proximity of a proximity broadcast receiver.

The mobile proximity broadcast receiver 138 may also include an operating system and platform module 620 for performing various operations and managing circuitry, such as short-range signal receiver circuitry. In particular, the operating system and platform module 620 may include a Bluetooth® Low Energy module 624 for processing communications utilizing Bluetooth® LE protocols, a cellular network module 626 for processing communications corresponding to various cellular and similar long-range wireless networks (e.g., LTE-D, etc.). The operating system and platform module 620 may also include a time services component 628 that may track time and generate timestamp data, a location services component 630 that may maintain low-precision location data or alternatively more precise GPS (or A-GPS) location data, a storage component 632, and a wireless wide area network/ wireless local area network component 622 for enabling communications via WiFi or other wireless networks.

In an embodiment, the core client module 115 may request from the central server sets of wireless identity transmitter identifiers (e.g., rolling identifiers of all transmitters on an interested list, identifiers for all transmitters owned by a user, etc.). Such sets may correspond to wireless identity transmitters that are currently in use and are expected to be in use for some period of time.

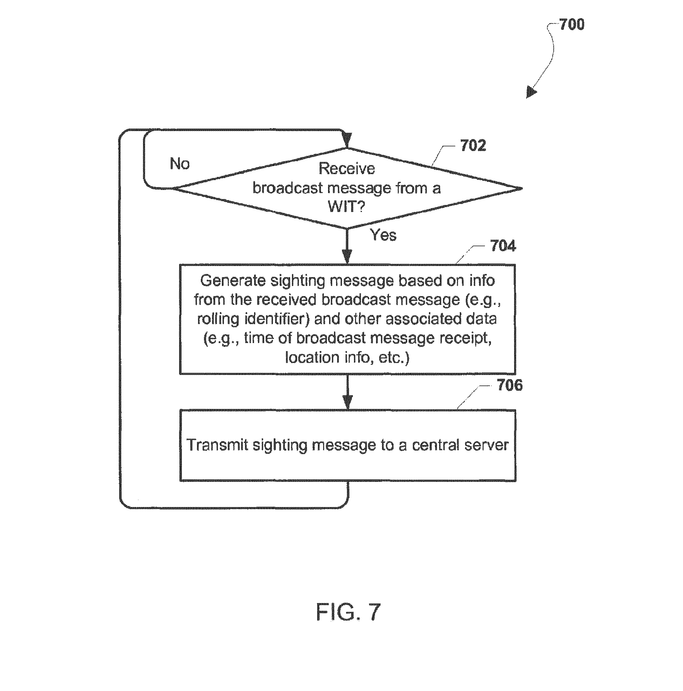

FIG. 7 illustrates an embodiment method 700 that may be implemented on a proximity broadcast receiver, such as a stationary proximity broadcast receiver or a mobile proximity broadcast receiver. In determination block 702, the proximity broadcast receiver may determine whether a broadcast message is received. For example, the proximity broadcast receiver may begin listening for broadcast advertisement packets or pairing attempts by wireless identity transmitters. As discussed above, in the passive mode/embodiment, the proximity broadcast receiver may continuously be in a monitoring mode, or begin listening for particular identifiers in response to an alert (or search activation message) received from a central server. In embodiments in which pairing takes place, the pairing may be established automatically if the proximity broadcast receiver is set to pair with any wireless identity transmitter without using a key, by using a key saved from a previous pairing with the wireless identity transmitter, or by using a key received from a central server. If the proximity broadcast receiver does not receive a broadcast message (i.e., determination block 702 = "No"), the proximity broadcast receiver may continue with the operations in determination block 702.

If the proximity broadcast receiver receives a broadcast message (i.e., determination block 702 = "Yes"), in block 704 the proximity broadcast receiver may generate a sighting message based on information from the received broadcast message and other associated data. In particular, the sighting message may include an identifier specific to the wireless identity transmitter that transmitted the received broadcast message, such as a rolling identifier (i.e., an encoded device identifier), MAC address, or other unique code that may be used to identify the particular wireless identity transmitter. In alternate embodiments, the wireless identity transmitter's identifier may be received as part of a pairing process. The other associated data may include various information related to the receipt of the broadcast message, such as the time the proximity broadcast receiver received the broadcast message, location information, the proximity broadcast receiver's identification information, related services (e.g., associated merchants), and signal strength information. In other words, the proximity broadcast receiver may associate data about present conditions (e.g., a timestamp, GPS coordinates, Cell ID of the closest base station, etc.) with the broadcast message and/or the wireless identity transmitter's identifier. This data may be stored in any of various types of data structures, such as an array with one or more identifiers associated with timestamps and GPS coordinates from when the sighting corresponding to each identifier occurred. In an embodiment, the sighting message may include authentication data, such as a digital certificate or code, that may be used by a central server to confirm the identity of the proximity broadcast receiver. For example, within the metadata of the sighting message, the proximity broadcast receiver may include a special hash code known only to the proximity broadcast receiver and the central server.

In block 706, the proximity broadcast receiver may transmit the sighting message to a central server, such as via a cellular (e.g., an LTE, 3G, or 4G network) or other network and the Internet as discussed above with reference to FIGS. 2A-2B. Upon reporting a contact event by transmitting the sighting message, the proximity broadcast receiver may promptly return to perform the operations in determination block 702 and await further broadcasts from wireless identity transmitters. This enables the proximity broadcast receiver to continuously report contact events to the central server.

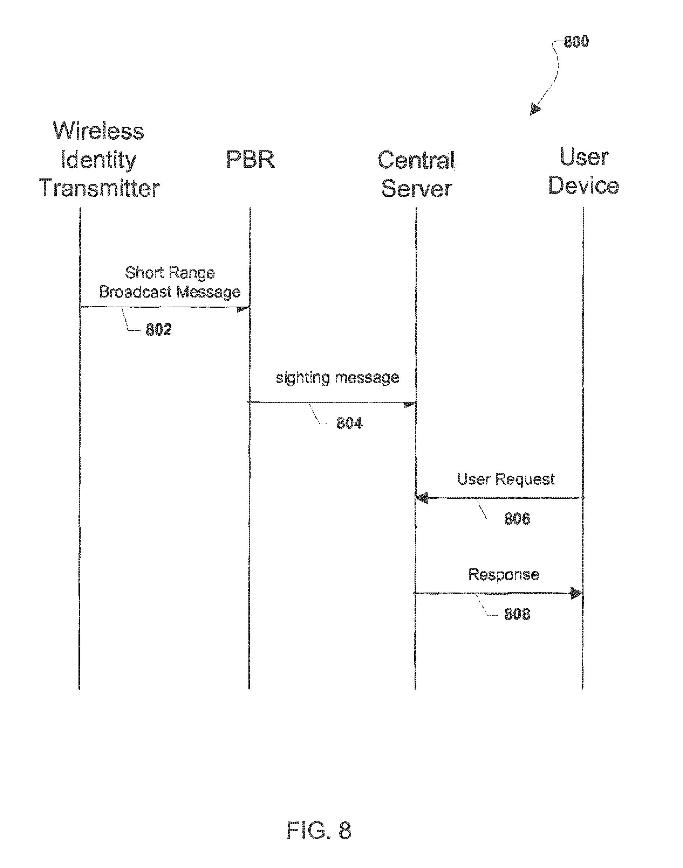

FIG. 8 is a call flow diagram 800 illustrating communications during various embodiments. A wireless identity transmitter 110 may transmit a short range broadcast message 802 (e.g., a Bluetooth® LE signal) to a proximity broadcast receiver, such as a mobile proximity broadcast receiver (e.g., a mobile device, cellular phone, etc.) or various other proximity broadcast receivers as discussed above. The broadcast message 802 may contain an identifier for the wireless identity transmitter. The proximity broadcast receiver may transmit (or upload) the wireless identity transmitter's identifier along with any associated data (e.g., timestamp, GPS coordinates, Cell ID, etc.) as a sighting message 804 to a central server 120. The central server 120 may receive the sighting message 804 and store many different identifiers from one or more proximity broadcast receivers.

In some embodiments, identifiers and the associated data may be transmitted (or uploaded) to the central server without any of a user's personal data to protect privacy. In the various embodiments attempting to leverage personal mobile phones, the phone users may opt-in as mobile proximity broadcast receivers. However, these phone users may refuse to opt-in if they fear that personally identifiable data will also be transmitted to the central server. Therefore, an application for uploading received identifiers installed on these personal mobile devices (i.e., mobile proximity broadcast receivers) may prohibit transmission of personal data or other data that may identify the mobile proximity broadcast receivers.

The central server 120 may receive a user request 806 from a user device, such as a terminal 124 or a mobile device, requesting the location of a wireless identity transmitter. This request may be sent by a user after logging into an account associated with a particular wireless identity transmitter. For example, each wireless identity transmitter may be registered with an authenticated user such that a request 806 for the registered wireless identity transmitter's location can only be transmitted after the authenticated user logs into a secure account.

After receiving a user request 806, the central server 120 may search through the previously reported wireless identity transmitter identifiers that are received via sighting messages to find any matches with the identifier of the requested wireless identity transmitter. Any matches could be reported to the user in a response 808. The response 808 may also include associated data (e.g. timestamp, GPS coordinates, Cell ID) within the sighting message 804. A user may use this associated data to help locate or track the wireless identity transmitter (e.g., a mother could look for a lost child at the latest location reported for the child's wireless identity transmitter).

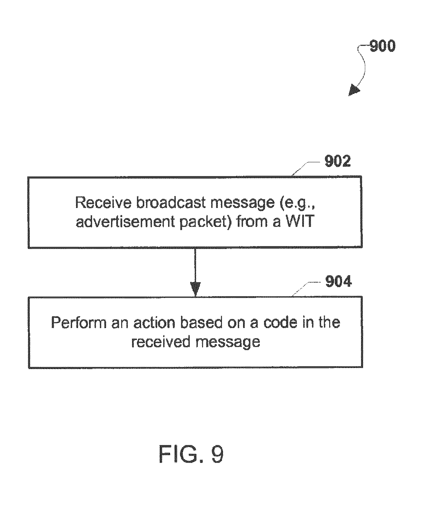

FIG. 9 illustrates an embodiment method 900 for including a type or command segment. In block 902, a proximity broadcast receiver may receive a broadcast message, such as a broadcast advertising packet, from a wireless identity transmitter (referred to as "WIT" in FIG. 9). In alternate embodiments, this message may be sent over a connection established by pairing or as part of the pairing procedure. The broadcast message may contain an identifier segment, as well as an additional segment or code, such as a type segment or command segment. The proximity broadcast receiver may perform an action based on this code in the received broadcast message in block 904. In various embodiments, this action may include any operation the proximity broadcast receiver is capable of performing. For example, the proximity broadcast receiver may assign different levels of priority to messages or identifiers based on a type segment or command segment (e.g., child safety devices have higher priority than security tags from stores). Received messages or identifiers with higher priority may be transmitted to a central server first or deleted last from a proximity broadcast receiver's local log.

A proximity broadcast receiver may handle the broadcast message or identifier differently based on a type or command segment. For example, the message may be stored locally for a certain time (e.g., various times depending on the value of the segment) prior to being transmitted to a central server. Alternatively, the message or identifier, along with any associated data such as timestamps and GPS coordinates, may be transmitted to multiple locations.

As another example, a proximity broadcast receiver may initiate various communications based on the type and/or command segments. The proximity broadcast receiver may report to particular URLs, transmit an SMS message, initiate a phone call, or establish new network connections. In various embodiments, some of these actions may be optionally disabled to protect user privacy.

In further embodiments, the proximity broadcast receiver may be configured to transmit the additional segment or other message to another network device for the other network device to take some action. For example, the proximity broadcast receiver may forward the message along with associated data to the central server. The central server may perform an action based on the additional segment in the message, such as automatically sending a message to a user without waiting for a user request.

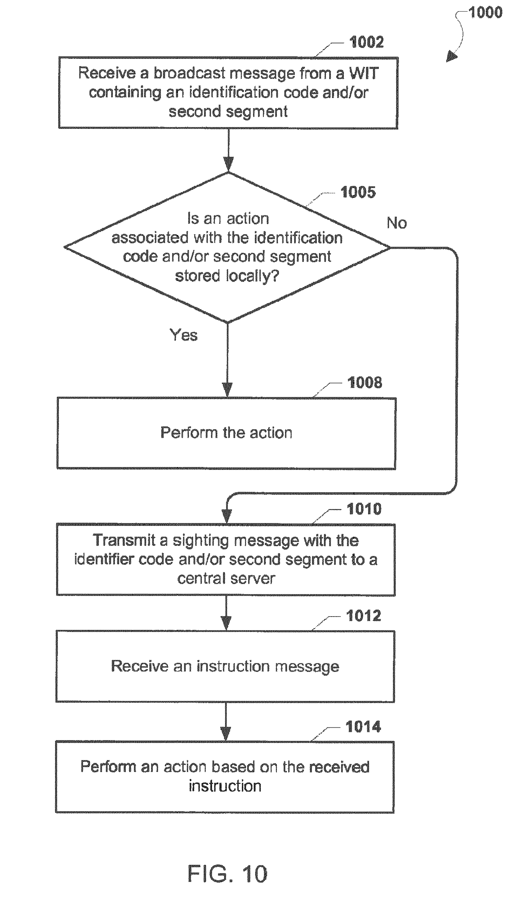

FIG. 10 illustrates an embodiment method 1000 for providing content based on proximity to a wireless identity transmitter. A proximity broadcast receiver may receive a broadcast message from a wireless identity transmitter (referred to as "WIT" in FIG. 10) containing an identification code and/or second segment in block 1002. The proximity broadcast receiver may determine whether an action associated with the identification code and/or second segment is stored locally (e.g., in the proximity broadcast receiver's memory) in determination block 1005. If an associated action is found locally (i.e., determination block 1005 = Yes), the action may be performed by the proximity broadcast receiver in block 1008.

If an associated action is not found locally (i.e., determination block 1005 = No), the proximity broadcast receiver may transmit a sighting message with the identifier and/or second segment to a central server in block 1010. In an embodiment, the proximity broadcast receiver may transmit a message to another device, such as a user device. The proximity broadcast receiver may receive an instruction message in block 1012. This instruction may be sent by the central server or other device in response to the sighting message with the identifier and/or second segment. In block 1014, the proximity broadcast receiver may perform an action based on the received instruction message, such as access content by going to a web page or other online resource. In alternate embodiments, the proximity broadcast receiver may skip the determination block 1005 and automatically proceed to either transmit a sighting message in block 1010 or attempt to perform an action stored locally.

A proximity-based content publishing system may be used for a wide range of activities. For example, teens may carry a wireless identity transmitter with them that they point to their social networking pages (e.g., Facebook®). When they are proximate to friends, the pages can be quickly accessed on proximity broadcast receivers (i.e., mobile phones configured to operate as mobile proximity broadcast receivers). Realtors may setup a web page for a home and affix to the home's signpost a wireless identity transmitter pointing to the web page so that anyone driving by the home can access that information. Stores may include wireless identity transmitters with products to provide dynamic displays such as links to coupons, customer reports, or additional nutritional information. If a lost dog has a wireless identity transmitter on its collar, instead of trying to wrestle the dog for access to his collar, a proximity broadcast receiver may simply access the wireless identity transmitter and send a message or call the owner.

The various features and alternative actions may enable the system to have flexible and extensible functionality. The functionality could be added later as the actions taken are controlled by applications that may be updated in proximity broadcast receivers over time.

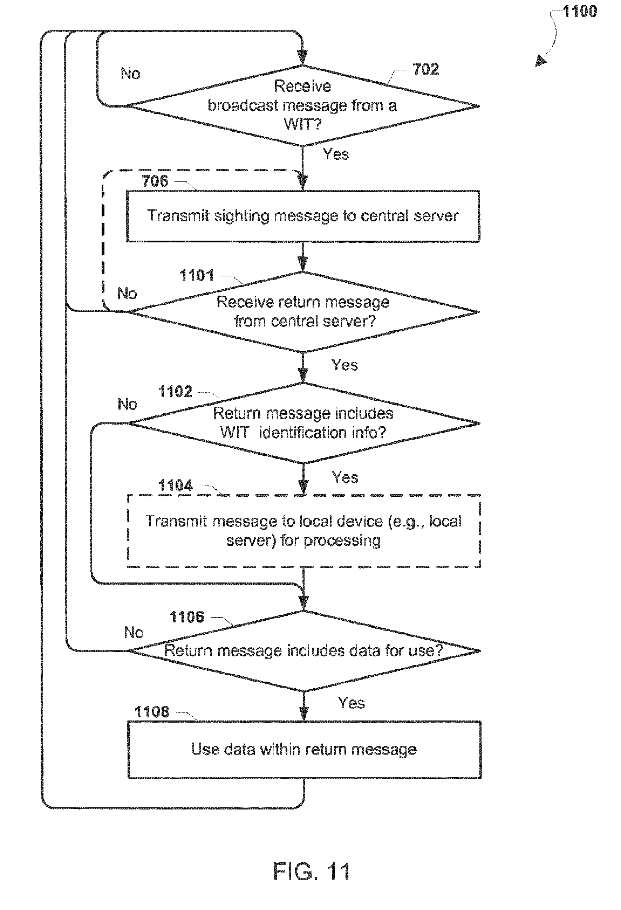

FIG. 11 illustrates an embodiment method 1100 for a proximity broadcast receiver relaying a broadcast message to and receiving a return message from a central server. Proximity broadcast receivers may be connected to facilities, such as houses, stores, gyms, schools, etc., and may be configured to execute various operations relating to those facilities. For example, a proximity broadcast receiver may be contained within equipment that executes software routines. Such proximity broadcast receivers may be configured to execute particular routines in response to receiving broadcast messages from a wireless identity transmitter (referred to as "WIT" in FIG. 11). For example, the proximity broadcast receiver may modify the execution of operations to suit preferences of the user of the wireless identity transmitter.

However, as discussed above, the wireless identity transmitter may obscure, encode, or encrypt data within broadcast messages to protect the privacy and identity of the wireless identity transmitter user. For example, the broadcast messages may not transmit the user's identity in the clear. To determine the identity information related to received broadcast messages, the proximity broadcast receiver may relay the broadcast messages to the central server, which may identify the wireless identity transmitter and its user based on information in the messages (e.g., a disguised, rolled, or encrypted device ID). As discussed above, the central server may store a secret to decrypt messages transmitted by the wireless identity transmitter. In response to receiving a sighting message, the central server may transmit a return message to the proximity broadcast receiver including identification information of the wireless identity transmitter.

In an embodiment, the central server may also store additional information relevant to the operations of the facility associated with the proximity broadcast receiver. For example, the central server may be an information hub that stores proprietary information related to the operations of the facility the proximity broadcast receiver is within. As another example, the central server may contain instructions for the proximity broadcast receiver to perform based on the identity of the wireless identity transmitter. Accordingly, the central server may transmit a return message that may not identify the wireless identity transmitter (or its user) related to a sighting message, but may instead includes data relevant to the wireless identity transmitter. In various embodiments, return messages may include or not include either data or identification information based on the preferences of the user of the wireless identity transmitter and/or the services associated with the proximity broadcast receiver. For example, the proximity broadcast receiver may be registered as relating to a trusted service for the user of the wireless identity transmitter, and therefore the central server may transmit return messages that identify the user. As another example, the user of the wireless identity transmitter may have set privacy permissions (or settings) during a registration procedure with the central server that enable anonymous data to be distributed to proximity broadcast receivers. Privacy permissions are further discussed below.

In determination block 702, the proximity broadcast receiver may determine whether a broadcast message is received, such as from a wireless identity transmitter. If no broadcast message is received (i.e., determination block 702 = "No"), the proximity broadcast receiver may continue with the operations in determination block 702. If a broadcast message is received (i.e., determination block 702 = "Yes"), in block 706 the proximity broadcast receiver may transmit a sighting message to a central server. For example, the sighting message may include identification information of the wireless identity transmitter as well as associated data, such as the location of the proximity broadcast receiver and a timestamp. In determination block 1101, the proximity broadcast receiver may determine whether a return message from the central server is received. In an embodiment, the proximity broadcast receiver may record identification information about the sighting message and may compare that information to received messages to find a match. If no return message is received (i.e., determination block 1101 = "No"), the proximity broadcast receiver may continue with the operations in determination block 702. Alternatively, if no return message is received (i.e., determination block 1101 = "No"), the proximity broadcast receiver may optionally re-transmit the sighting message to the central server in block 706. In an embodiment, the proximity broadcast receiver may retransmit sighting messages a predefined number of times over a period of time when no return message is received.

When a return message is received (i.e., determination block 1101 = "Yes"), in determination block 1102 the proximity broadcast receiver may determine whether the return message includes wireless identity transmitter identification information. For example, identification information may include user names, addresses, sensitive information (e.g., social security number, banking information, passwords, etc.), and other data describing the wireless identity transmitter and/or the user of the wireless identity transmitter. If the return message does contain identification information (i.e., determination block 1102 = "Yes"), in optional block 1104 the proximity broadcast receiver may transmit a message to a local device, such as a local server, for processing. In other words, the proximity broadcast receiver may relay the identification information in the return message to a local device associated with proximity broadcast receiver and/or the facility in which the proximity broadcast receiver is located. For example, the proximity broadcast receiver may transmit the identification information of the wireless identity transmitter to a local computing device of a gym, retail store, a school, or other third-party that may in turn determine instructions for the proximity broadcast receiver based on the identification information. In an embodiment, the local device may store the identification information and/or relate the identification information to database data for further use with the various related devices of the facility.

If the return message does not include identification information (i.e., determination block 1102 = "No") or the proximity broadcast receiver transmits a message to the local device in optional block 1104, the proximity broadcast receiver may determine whether the return message includes other data for use, such as by the proximity broadcast receiver or other devices associated with the proximity broadcast receiver in determination block 1106. For example, the return message may include commands or instructions for the proximity broadcast receiver to perform. Additionally, the return message may contain configuration data (or configuration information) that may be used by various devices to accommodate the wireless identity transmitter and/or the preferences of the wireless identity transmitter's user. For example, the data may contain configuration data for the proximity broadcast receiver to use or transfer to the local device, the wireless identity transmitter, or various other associated devices. If the return message includes data for use (i.e., determination block 1106 = "Yes"), in block 1108 the proximity broadcast receiver may use the data within the return message. For example, the proximity broadcast receiver may execute operations to utilize configuration data from the return message (e.g., set equipment to suit the user's preferences). If the return message does not contain data from use by the proximity broadcast receiver (i.e., determination block 1106 = "No"), the proximity broadcast receiver may continue with the operations in determination block 702.

As a non-limiting, illustrative example: the proximity broadcast receiver may be connected to a piece of exercise equipment within a fitness facility that is registered with a central server (i.e., the facility relates to a registered service). When the proximity broadcast receiver receives a broadcast message from the wireless identity transmitter carried by a user intending to work-out on the exercise equipment, the proximity broadcast receiver may transmit a sighting message to the central server. The proximity broadcast receiver may receive a return message from the central server that includes data which may be used to configure the exercise equipment to suit the anatomical dimensions and preferences of the user of the wireless identity transmitter without necessarily sharing the user's identity. For example, the proximity broadcast receiver may use the data to adjust the height of the equipment's seat or pedals. As another example, the data may define a workout routine to be executed on the exercise equipment. Alternatively, the return message may include the user's fitness facility identification, which the proximity broadcast receiver may transmit to a local server (e.g., a gym administrative server). The local server may compare the user's fitness facility identification to a local database and in response to the comparison, may transmit personalized configuration instructions to the proximity broadcast receiver and exercise equipment. Other non-limiting but illustrative applications of return message data may include configuring rental cars (e.g., seat positions, settings, etc.) and computer components (e.g., mouse, keyboards, etc.) for personalized use by the user of the wireless identity transmitter.

In an embodiment, return messages may include identification information such as photographic imagery useful to identify the user of the wireless identity transmitter. For example, in response to receiving a return message identifying the user of the wireless identity transmitter, the proximity broadcast receiver may display an image of the user or a sample of the user's handwriting (e.g., a signature). This functionality may be used by emergency personnel, citizens on alert, or merchants when attempting to quickly verify the identity of a person (e.g., a missing child, customer, etc.) equipped with a wireless identity transmitter. In another embodiment, a merchant's proximity broadcast receiver engaged in a business transaction (e.g., a point-of-sale device with an embedded proximity broadcast receiver) may transmit a sighting message including information broadcast by a proximate user's wireless identity transmitter. The resulting return message may include confirmation that the identities of the registered user of the wireless identity transmitter and the user match (i.e., the in-store person matches the user indicated in the central server as relating to the wireless identity transmitter). Additionally, if the identities are the same, the return message may include additional information to assist in the transactions, such as payment information, credit card numbers, or contact information for follow-up communications.

In another embodiment, the return message from the central server may include software instructions and/or data that may cause the proximity broadcast receiver to modify, adjust, remove, activate, or disable components, sensors, features, software, and/or functions of the proximity broadcast receiver. For example, the return message may include software instructions that the proximity broadcast receiver executes upon receiving the return message, or triggers the proximity broadcast receiver to execute a pre-loaded routine or enter a particular operating mode. Such software instructions may define operations the proximity broadcast receiver may execute that configure the proximity broadcast receiver, such as activating (or de-activating) a camera component, a cellular network modem, speaker systems, WiFi transceivers, etc. As another example, the return message may instruct the proximity broadcast receiver, such as a smartphone configured to operate as a mobile proximity broadcast receiver, to execute an application, transmit a message (e.g., email, SMS, short-range radio signal, etc.), or turn itself off. Software instructions within such return messages may include timing information that indicates when affected components, sensors, features, software, and/or functions may be configured and/or re-configured. For example, the return message may include instructions that cause the proximity broadcast receiver to disable a microphone for a certain period of time. In an embodiment, the proximity broadcast receiver may be configured to reverse any modifications, adjustments, operating mode selections, or other configurations identified in return message software instructions after a period of time and/or when the proximity broadcast receiver no longer receives broadcast messages from wireless identity transmitters related to the return message. For example, the proximity broadcast receiver may disable the speakers on the proximity broadcast receiver so long as the proximity broadcast receiver receives broadcast messages from the wireless identity transmitter. In another embodiment, the proximity broadcast receiver may modify, adjust, remove, activate, or disable components, sensors, features, software, and/or functions of the proximity broadcast receiver based on information within received broadcast messages. For example, the proximity broadcast receiver may process a received broadcast message and execute detected software instructions that direct the proximity broadcast receiver to disable a sensor, such as a camera.

FIG. 12 illustrates a diagram 1200 of various modules within a central server 120. The various modules and components are described below in the context of modules, components, and/or elements within a central server 120. However, in various embodiments, the central server 120 may include or be connected to individual computing devices, server blades, or other units that may perform the operations associated with the various modules and/or components described below.

As described above with reference to FIG. 1, the central server 120 may be configured to receive, store, and otherwise process data corresponding to wireless identity transmitters. For example, the central server 120 may be configured to exchange communications with various devices via the Internet 103, such as proximity broadcast receivers 142 and mobile proximity broadcast receivers 138 communicating via a cellular network 121, third-party systems 101, and other support systems and/or services 102.

The central server 120 may include several components 104-109 to perform various operations to process data, such as received from proximity broadcast receivers 142, 138, third-party systems 101, or other support systems and/or services 102. In particular, the central server 120 may include a core component 108 that may process sighting messages, execute an alert or notice engine module, handle application programming interface (API) commands, and exchange data with other components within the central server 120. The core component 108 may include a data layer module 1202 that may include units for storing short-term data and third-party specific data. The core component 108 may also include an alert engine module 1204 for generating alert messages for transmissions to proximity broadcast receivers and initiating searches of various target wireless identity transmitters. The core component 108 may further include a data anonimizer module 1206 that may generate generic, anonymous, or otherwise processed data based on privacy policies or profile preferences of users. For example, the data anonimizer module 1206 may strip personal information from return messages transmitted to a proximity broadcast receiver associated with a store so that a customer user of a wireless identity transmitter is not identified to the store, but the fact that the user is within the store is still reported to the store. The core component 108 may also include a privacy manager module 1208 that may maintain privacy permission information for various users. For example, the privacy manager module 1208 may include a database of privacy parameters provided by users at registration. In an embodiment, the data anonimizer module 1206 and/or the privacy manager module 1208 may utilize the permissions described below.

The core component 108 may also include a search manager module 1210 for assisting in organizing and administering searches and an authorization system module 1212. The core component 108 may further include a sightings resolver module 1214 that may be utilized by the central server 120 for identifying wireless identity transmitters associated with broadcast messages reported within received sighting messages from proximity broadcast receivers 142, 138. The core component 108 may include an API module 1216 that may include functions and interfaces for initiating operations, a sightings aggregator module 1218 for compounding various sighting messages over a period for transmissions in consolidated form to merchants, third-parties, and other services. The core component 108 may also include a network module 1220 for transmitting and receiving various communications with devices, such as proximity broadcast receivers 142, 138 and third-party systems 101 via the Internet.

The central server 120 may also include a data warehouse component 104 that may store long-term data (e.g., archived user data, past location information, etc.). The data warehouse component 104 may include various databases for storing information pertinent to users of wireless identity transmitters, such as profile information provided by users via registration websites. The data warehouse component 104 may be configured to exchange data with the data layer module 1202 of the core component 108. The central server 120 may also include an operations, administration, and management component 105 that may process and/or store software associated with user portal accesses, scripts, and tools (e.g., software utilities, routines, etc.). The operations, administration, and management component 105 may be configured to exchange data with the core component 108.

The central server 120 may also include a developer portal component 106 that may store developer account data and perform registration, account management, and alert (or notice) management routines associated with developers, such as vendors or merchants that register to interact with users of wireless identity transmitters 110. The central server 120 may also include a user portal component 109 that may store user account data and perform registration, account management, and search routines associated with users, such as persons associated with wireless identity transmitters. The user portal component 109 and developer portal component 106 may be configured to exchange data with the authorization system module 1212 of the core component 108. The central server 120 may also include a rolling identifier (or ID) resolver component 107 that may store factory keys associated with wireless identity transmitters 110 as well as perform operations, software, or routines to match encrypted, encoded, rolling, or otherwise obfuscated identification information within received sighting messages with affiliated user data. The rolling identifier (or ID) resolver component 107 may be configured to exchange data with the sightings resolver module 1214 of the core component 108.

In various embodiments, the modules and components described with reference to FIG. 12, such as the rolling ID resolver component 107, may be performed or otherwise enabled by software instructions, applications, routines, threads, circuitry, or hardware units.

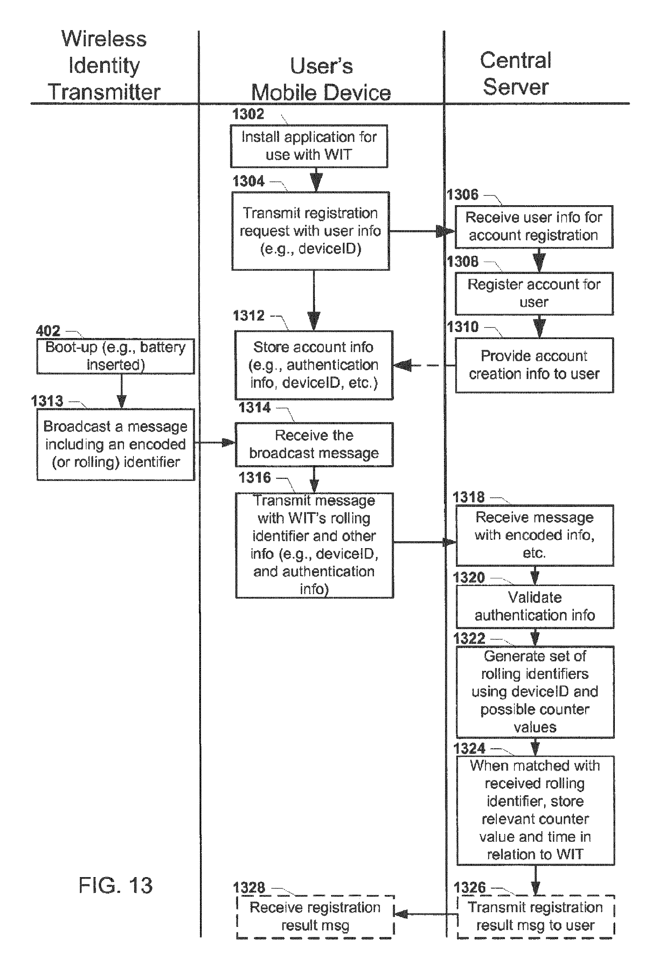

FIG. 13 illustrates a wireless identity transmitter registration process for use in various embodiments. In general, before broadcast messages may be processed by a central server, the central server may require that wireless identity transmitters and their users be registered with the central server. For example, before any tracking, searching, or other location-based activities related to a wireless identity transmitter can be initiated, the central server must be able to determine the users associated with the various wireless identity transmitters circulating in the world. Registration may create links between identifiers transmitted by wireless identity transmitters in broadcast messages, the wireless identity transmitters, and their users. For example, in order to transmit a notification to a missing child's parents that the child has been found, relayed obfuscated (or encoded) identifiers must be matched to account information that indicates the parents' cell phone numbers as stored in relation to a registered user account.

In particular, through registration, a timing mechanism may be synchronized between each wireless identity transmitter and the central server (i.e., a counter). With such a counter, a wireless identity transmitter and the central server may encode (or roll) and decode identifiers respectively, keeping the identity associated with the wireless identity transmitter (and its users) concealed and private. The most appropriate time to synchronize such a timing mechanism or counter may be during a device registration and/or account creation process as described below. For the purpose of FIG. 13, a mobile device, such as a smartphone, is described as being used by a user to perform account creation and registration operations (e.g., the mobile device accesses a web portal to register with the central server, etc.). However, any computing device connected to the Internet and capable of exchanging communications with the central server via a registration web portal or website may be relevant.

In block 1302, a user's mobile device (e.g., an iPhone, Android, tablet device, etc.) may install an application for use with wireless identity transmitters. Such an application (or "app") may execute on the mobile device's processor as a background service or alternatively may be activated for selective use by the user. As described throughout this disclosure, such an application may enable the mobile device to process short-range broadcast messages from proximate wireless identity transmitters, such as by identifying received signals as broadcast messages and relaying sighting messages having location information to the central server in response. In block 1304, the mobile device may transmit a registration request with user information (e.g., a device identity or "deviceID"). The registration request may be sent to the central server via Internet communications with a web portal, web site, or web server controlled or otherwise accessible by the central server. In other words, the mobile device may invoke the registration process or by providing user information (e.g., device ID) through the installed app by providing the device ID (deviceID) and other information the central server may utilize to bind the registration request to an account. For example, the user's mobile device may access a registration website, receive inputs from the user, and transmit the user input as data to the registration website for use by the central server as described above with reference to FIG. 12. In an embodiment, the user information may include personal information about the user, such as name, address, contact information (e.g., social network sites, cell phone number, email address, telephone number, etc.) age, and other demographic information, as well as identifying information about wireless identity transmitters and/or proximity broadcast receivers that may be associated with the user's account. For example, the user information transmitted to the central server may include the serial number on a wireless identity transmitter and/or a confirmation code produced by the mobile device in response to installing the application with the operations in block 1302. The user information may also include preference information, such as the user's preferred retails stores, product lines, and areas to eat or consume. The user information may further include privacy permissions that indicate how personal information may be distributed or used by the central server, such as discussed below. In an embodiment, users may register as anonymous users, such that the central server does not store any identifying information about the users. For example, an account may be registered that is linked to a non-descript post office box, a disposable cellular telephone number, or other contact information that does not directly identify the user or the holder of the account. This may be important for those who may choose to utilize services provided by the central server, but who are concerned about leaked private or identifying information. In block 1312, the user's mobile device may store account information, such as authentication information (e.g., codes, messages) from the central server or device ID associated with an owned wireless identity transmitter.

In block 1306, the central server may receive the user information for account registration. In block 1308, the central server may register an account for the user. For example, the central server may store the user's information, including provided device identifications, in a database of all registered users. In block 1310 the central server may provide account creation information to the user. The account creation information may include an authentication code or other information the user's mobile device may store for future use. For example, the central server may display confirmation of account creation on a website accessible by the user's mobile device or alternatively may transmit a confirmation signal, text message, email, or other communication to the user's mobile device.

In block 402, the wireless identity transmitter boots-up, such as in response to the user inserting a battery. When the wireless identity transmitter boots, a counter value may be initialized. For example, the wireless identity transmitter may begin to increment a value that represents the passage of time, starting from a zero value. In block 1313, the wireless identity transmitter may broadcast a message (i.e., a broadcast message) that includes an encoded (or rolling) identifier. For example, the wireless identity transmitter may begin transmitting broadcast messages every few seconds. The wireless identity transmitter may generate rolling identifiers with the embodiment methods described below. In general, the broadcast message may include a payload that includes data generated by performing a pseudo-random function. For example, the wireless identity transmitter may perform a pseudo-random function to generate encoded data based on input values of the wireless identity transmitter's device ID, a counter value, and a secret key, seed, or other value known only to the wireless identity transmitter and the central server. In an embodiment, the pseudo-random function may be a polynomial time computable function that may utilize a randomly selected seed value only known to the wireless identity transmitter and the central server, such that the pseudo-random function may be computationally indistinguishable from a random function defined on the same domain with output to the same range as the pseudo-random function. In an embodiment, the keyed-hash Message Authentication Code (HMAC) or the cipher-based Message authentication Code (CMAC) may be used as the pseudo-random function.

In an embodiment, the wireless identity transmitter may be required to be activated within a predefined number of seconds within the time the mobile device begins the registration process with the operations in block 1304. In other words, once the wireless identity transmitter begins incrementing its counter value, the user must register with the central server within a certain period. This enables the central server to try at only a certain number of values when trying to determine the counter value at the wireless identity transmitter during registration.

In an embodiment, the wireless identity transmitter may indicate an initial broadcast by adjusting data within a broadcast message's payload. For example, the wireless identity transmitter may change a bit within a broadcast message that the central server may recognize as indicating an initialization time period for the wireless identity transmitter. If there are initialization indicators within payloads, the central server may expedite comparisons between received payloads and stored payloads by avoiding comparisons to payloads corresponding to already registered (or recognized) wireless identity transmitters within a central server lookup data table.

In block 1314, the user's mobile device may receive the broadcast message. In other words, based on the installed application (or app), the mobile device may function as a mobile proximity broadcast receiver. An installed application may, such as the app installed with the operations in block 1302, may be waiting to receive such a broadcast message in response to initiating registration operations with the central server via the registration request. In block 1316, the mobile device may transmit the wireless identity transmitter's rolling identifier and other information, such as the stored device ID and authentication information. In an embodiment, the mobile device may extract encoded information from the received broadcast message, such as by using text comparison and/or parsing operations. For example, the mobile device may perform a most-significant bit operation.

In block 1318, the central server may receive the message with the encoded information, as well as the authentication information and the device ID. In block 1320, the central server may validate authentication information, such as in the received message from the mobile device. In particular, the central server may compare the authentication information to information generated in the operations in blocks 1308-1310. In block 1322, the central server may generate a set of rolling identifiers using the device ID and possible counter values. The central server may compare the encoded identifiers of the set with the rolling identifier received from the mobile device. In an embodiment, the central server may compute a set of encoded data by using a pseudo-random function, such as described above, along with the device ID and a number of counter values. For example, the central server may execute the pseudo-random function with a seed shared with wireless identity transmitters, the device ID indicated by the mobile device, and many counter values, starting with 0. In block 1324, when the central server matches the received rolling identifier to one of the rolling identifiers in the generated set, the central server may store relevant counter value and time in relation to the WIT. The central server may use the counter value used to generate the matching rolling identifier to sync with the counter running on the wireless identity transmitter. In an embodiment, the central server may store an indicator that describes the wireless identity transmitter as having been successfully registered and/or synced. In optional block 1326, the central server may then transmit a registration result message to the user, such as by transmitting a message to the mobile device. The registration result message may indicate whether or not the central server was able to match the received encoded identifier with a generated identifier. In optional block 1328, the mobile device may receive the registration result message. In an embodiment, the registration result message indicates that the registration process failed (e.g., the received broadcast message received by the mobile device did not correspond to the user's wireless identity transmitter), the mobile device may re-attempt the registration by receiving and relaying another broadcast message.

The operations described above, particularly within blocks 1313-1324, assume that message processing operations performed by the various devices, as well as any propagation delay, may be much smaller than the time required to increment (or update) the counter value at the wireless identity transmitter. This ensures that the counter values at the wireless identity transmitter and central server do not differ by more than 1.

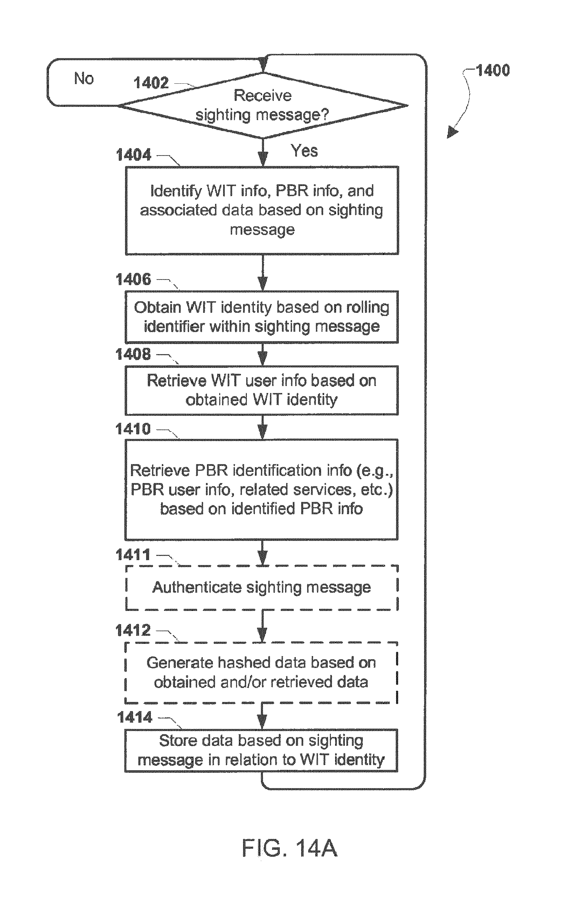

FIG. 14A illustrates an embodiment method 1400 for a central server to process sighting messages received from proximity broadcast receivers. As described above, the central server may be configured to utilize various modules, components, circuitry, and software to process sighting messages. In determination block 1402, the central server may determine whether a sighting message is received. The central server may evaluate a receiving circuit, buffer, queue or other indicator to determine when messages are received from various devices, such as proximity broadcast receivers. In an embodiment, the central server may utilize a network module as described above to determine whether a sighting message is received. In general, sighting messages may be received via long-range communications, such as packets transmitted via a cellular network over the Internet. If the central server does not receive a sighting message (i.e., determination block 1402 = "No"), the central server may continue with the operations in determination block 1402.

If the central server receives a sighting message (i.e., determination block 1402 = "Yes"), in block 1404 the central server may identify wireless identity transmitter information, proximity broadcast receiver information, and associated data based on the sighting message. The central server may evaluate, parse, and otherwise make accessible various data and information segments within the received sighting message. For example, the central server may parse the sighting message to identify an included broadcast message from the wireless identity transmitter. As another example, the central server may identity encoded data corresponding to a wireless identity transmitter identity (i.e., rolling identifier), proximity broadcast receiver identification information (e.g., a receiver ID), location information, timestamp information, sensor data (e.g., accelerometer sensor data, etc.), identifiers of applications (or apps) associated with a proximity broadcast receiver (e.g., a list of installed applications, an identifier for a relevant app executing on the proximity broadcast receiver, etc.). In an embodiment, the central server may perform the operations of block 1404 with a sightings resolver module as described above.

In block 1406, the central server may obtain the wireless identity transmitter identity based on the rolling identifier within the sighting message. The central server may perform operations to decode, descramble, decrypt, or otherwise make accessible the rolling identifier. For example, the central server may perform operations to apply a secret key or decoding algorithm to obtain the identity of the wireless identity transmitter. In an embodiment, the operations of block 1406 may be performed by the central server by way of a rolling ID resolver component as described above. For example, the central server may cause a sightings resolver module to exchange data with the rolling ID resolver component to obtain a decoded wireless identity transmitter identifier. Embodiment operations to identity the wireless identity transmitter based on a sighting message that includes a rolling identifier are described below.

In block 1408, the central server may retrieve the wireless identity transmitter user information based on the obtained wireless identity transmitter identity. For example, the central server may retrieve user account information related to the wireless identity transmitter, such as demographics information, stored data indicating previous behaviors (e.g., travel paths, location history, etc.). In an embodiment, the operations of block 1408 may be performed by the central server by way of an authorization system module as described above. For example, the central server may cause the authorization system module to exchange wireless identity transmitter identity information with a user portal component to obtain user information as saved within user registration databases.

In block 1410, the central server may retrieve proximity broadcast receiver identification information, such as proximity broadcast receiver user information and related services, based on the identified proximity broadcast receiver information. For example, the central server may retrieve the merchant identity associated with the proximity broadcast receiver that transmitted the received sighting message, the tracking services the proximity broadcast receiver is registered to participate in, as well as any other relevant information to the proximity broadcast receiver. The central server may retrieve email addresses, MAC addresses, phone numbers, and other contact information related to a user of related proximity broadcast receiver based on the information within the sighting message. For example, the central server may determine the user contact information associated with a proximity broadcast receiver that may be used for subsequent transmissions from the central server, such as emails or SMS text messages that indicate proximity to an item of interest. In an embodiment, the central server may determine the identity of a user of a smartphone that is configured to perform operations of a mobile proximity broadcast receiver. In an embodiment, the operations of block 1410 may be performed by the central server by way of an authorization system module as described above. For example, the central server may cause the authorization system module to exchange proximity broadcast receiver information with a developer (or user) portal component to obtain information about related registered services (e.g., merchants, stores, vendors, services, etc.) as saved within developer registration databases.

In optional block 1411, the central server may authenticate the sighting message. Based on authentication information within the received sighting message, the central server may perform authentication operations that confirm the legitimacy of the sighting message as coming from a known or otherwise valid proximity broadcast receiver. As described above, sighting messages may include data, such as secret codes, certificates, or hash data, that can be used to confirm the identities of valid proximity broadcast receivers. As third-parties may attempt to spoof proximity broadcast receivers associated with registered services (e.g., a nefarious spammer may attempt to imitate a merchant's store proximity broadcast receiver by sending a fraudulent sighting message), the central server may check for authentication information that confirms the information within the sighting message is useful and related to a registered service (e.g., a registered merchant, a valid developer, or other party that deploys legitimate proximity broadcast receivers). For example, the central server may detect obscured header information within the sighting message that relates to a merchant established within the central server as a registered developer. When the sighting message does not include authentication information expected by the central server, such as a special code that all proximity broadcast receivers within a certain building possess, or does include authentication information that does not match information stored in the central server, the central server may disregard the sighting message and all included information. For example, a sighting message with out-of-date or incomplete authentication information may be disregarded by the central server, or alternatively stored in a list for potentially fraudulent proximity broadcast receivers.

In optional block 1412, the central server may generate hashed data based on the obtained and/or retrieve data. In an embodiment, the operations of optional block 1412 may be performed by the central server by way of a data anonimizer module as described above. In block 1414, the central server may store data based on the sighting message in relation to the wireless identity transmitter identity. For example, the central server may store identified associated data from the sighting message in a database in relation to the wireless identity transmitter's decoded identity. In an embodiment, the operations of block 1414 may be performed by the central server by way of a data layer module as described above.

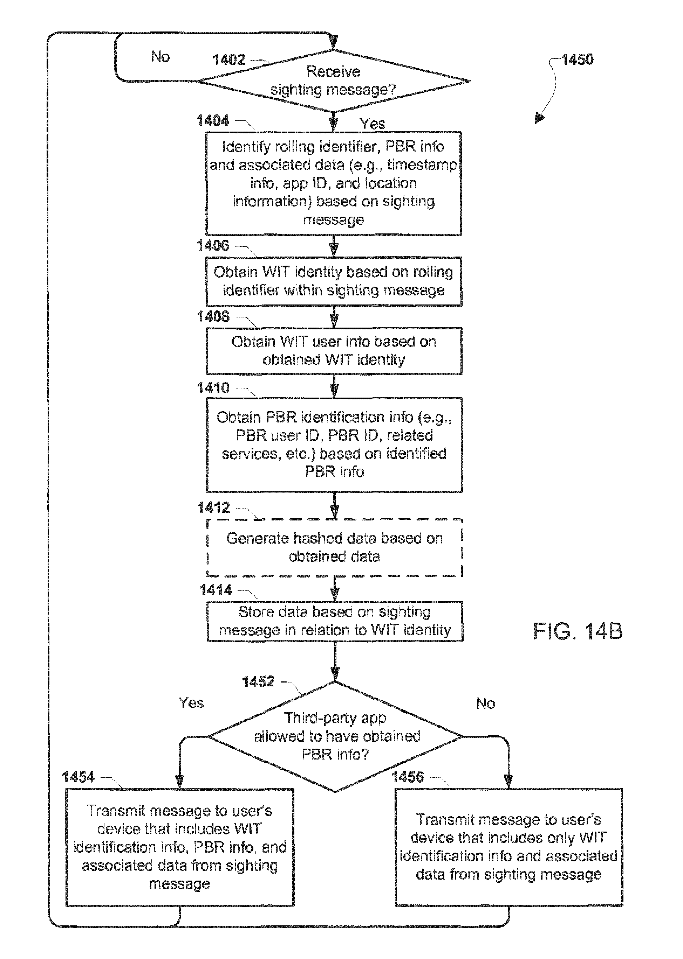

FIG. 14B illustrates an embodiment method 1450 for a central server to process sighting messages received from proximity broadcast receivers. The method 1450 is similar to the method 1400 described above, except that the central server may perform the method 1450 to transmit messages for use by a third-party application executing on mobile device carried by a user. As described above, various messages, such as return messages, alerts (or search activation messages), may be transmitted by the central server to various recipients, such as mobile devices associated with a user. For example, the central server may transmit messages to a user's tablet, smartphone, mobile proximity broadcast receiver, or other computing device. A recipient may also include an application or app executing on a mobile device. In an embodiment, the central server may also transmit messages to other third-party recipients or devices, such registered services that may include emergency medical technicians (EMTs), fire, local police, retail store, merchant computing devices, and ad servers.

Messages transmitted by the central server in response to receiving sighting messages may be transmitted to inform devices, such as a mobile phone or mobile proximity broadcast receiver carried by a user, of the location of proximity of known wireless identity transmitters. For example, when a proximity broadcast receiver, such as a stationary proximity broadcast receiver within a retail store, relays a broadcast message from a wireless identity transmitter associated with a user, the central server may respond by transmitting a message back to a mobile device of the user indicating the user is near the store's proximity broadcast receiver. Further, a third-party application running on the user's device may use information within the message. For example, a retail store app running on a user's smartphone may receive a notice that the user has moved within proximity of a display area within proximity of a retail store building. In various other embodiments, the third-party applications may be utilized to track owned items associated with wireless identity transmitters. For example, a particular third-party application may perform a ring tone when the user is within proximity of a searched for missing child.

In determination block 1402, the central server may determine whether a sighting message is received. If the central server does not receive a sighting message (i.e., determination block 1402 = "No"), the central server may continue with the operations in determination block 1402. If the central server receives a sighting message (i.e., determination block 1402 = "Yes"), in block 1404 the central server may identify wireless identity transmitter information, proximity broadcast receiver information, and associated data based on the sighting message. In block 1406, the central server may obtain the wireless identity transmitter identity based on the rolling identifier within the sighting message. In block 1408, the central server may retrieve the wireless identity transmitter user information based on the obtained wireless identity transmitter identity. In block 1410, the central server may retrieve proximity broadcast receiver identification information, such as proximity broadcast receiver user information and related services, based on the identified proximity broadcast receiver information. In optional block 1412, the central server may generate hashed data based on the obtained and/or retrieve data. In block 1414, the central server may store data based on the sighting message in relation to the wireless identity transmitter identity.

In determination block 1452, the central server may determine whether a third-party application (or app) is allowed to have obtained proximity broadcast receiver information. In other words, based on data stored in the central server that is associated with the user of the wireless identity transmitter, the central server may detect any registered services or third-party applications that are associated with the user's devices. For example, the central server may evaluate database information to identify the user has installed a third-party application on his/her smartphone that corresponds to a retail store. The proximity broadcast receiver information may include proximity broadcast receiver identification (e.g., an ID code or identifier) and the user identity of the proximity broadcast receiver. In an embodiment, the central server may identify whether third-party applications are allowed such information based on the third-party's developer rights, such as indicated when the third-party registered as a developer or registered service, or alternatively based on the user's permission settings, as described below. In an embodiment, the central server may use application identification information provided within the received sighting message to determine whether the third-party applications on the user's device may receive proximity broadcast receiver information. For example, the sighting message may contain indicators of applications (e.g., app IDs) that correspond to the sighting message and thus are allowed to receive any proximity broadcast receiver information from the central server.

If the third-party app is not allowed to have the obtained proximity broadcast receiver information (i.e., determination block 1452 = "No"), in block 1456 the central server may transmit a message to the user's device that includes only wireless identity transmitter identification information and associated data from the sighting message. For example, the message transmitted by the central server may include the obtained wireless identity transmitter identity, user information, timestamp data, and location information from the sighting message. If the third-party app is allowed to have the obtained proximity broadcast receiver information (i.e., determination block 1452 = "Yes"), in block 1454 the central server may transmit a message to the user's device that includes wireless identity transmitter identification information, proximity broadcast receiver information, and associated data from the sighting message. For example, the message transmitted by the central server to the user's smartphone may include indicators of the obtained proximity broadcast receiver identification (e.g., serial code, group affiliation, merchant category, etc.). The central server may then continue with the operations in determination block 1402. In an embodiment, the central server may utilize an alert engine module, such as described above with reference to FIG. 12, to transmit and/or generate messages for transmission to various devices.

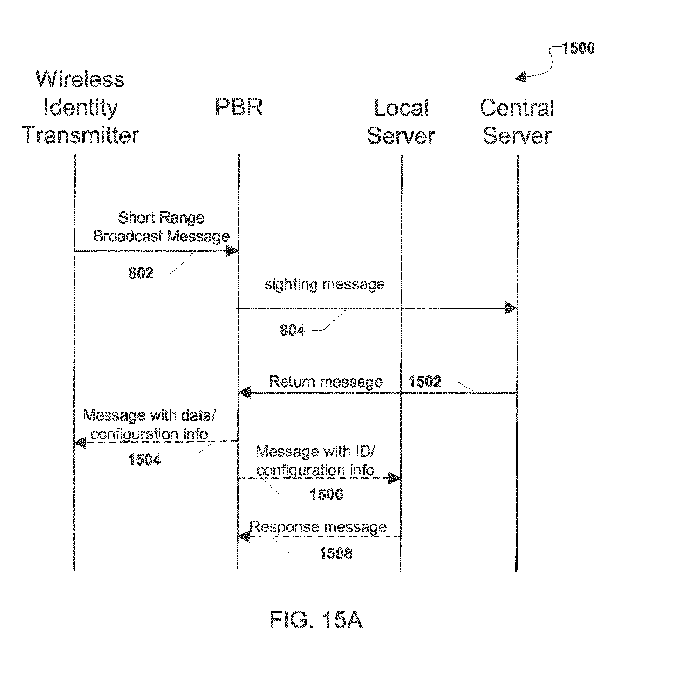

FIG. 15A illustrates an embodiment call flow diagram 1500 illustrating communications between a wireless identity transmitter, a proximity broadcast receiver, and a central server. As described above, the wireless identity transmitter may periodically transmit a short-range broadcast message 802 via a short-range radio. When within signal range of the broadcast message 802, the proximity broadcast receiver may receive the broadcast message 802 using a similar short-range radio. The broadcast message 802 may be processed by the proximity broadcast receiver and related data may be relayed to the central server as a sighting message 804. In an embodiment, the sighting message 804 may include the broadcast message, identification information of the proximity broadcast receiver and/or the wireless identity transmitter, encrypted information the proximity broadcast receiver is incapable of decoding, and other information related to the reception of the broadcast message 802. In an embodiment, the sighting message 804 may be transmitted over various wireless or wired networks that may be configured to communicate via Internet protocols.

The central server may receive and process the sighting message 804. When the central server determines that the sighting message 804 requires a response based on the information in the sighting messages (e.g., metadata requesting a response, the sighting message relates to a wireless identity transmitter that needs to receive upgraded firmware, etc.), the central server may generate and transmit a return message 1502 to the proximity broadcast receiver. In various embodiments, the return message 1502 may contain configuration information, identification information describing the wireless identity transmitter, or other data as described above. The proximity broadcast receiver may receive and process the return message 1502. Based on the data within the return message 1502, the proximity broadcast receiver may optionally transmit a message 1504 to the wireless identity transmitter that may contain configuration information and other data from the central server. The wireless identity transmitter may selectively accept transmissions such as the message 1504 using operations as described above with reference to FIGs. 4.

As another option, the proximity broadcast receiver may transmit a message 1506 to a local server based on the return message 1502. The message 1506 may contain wireless identity transmitter identification information, configuration information, software routines, and various other data from the return message 1502 for storage, processing, and otherwise additional use by the local server. Based on the message 1506, the local server may in turn transmit an optional response message 1508 to the proximity broadcast receiver that may include software instructions, configuration data, or other data generated in response to receiving the message 1506.

In an embodiment, the central server may also transmit messages directly to the local server (not shown) that include configuration information and other data. For example, the sighting message 804 from the proximity broadcast receiver may provide the contact information for the local server which the central server may utilize for subsequent communications.

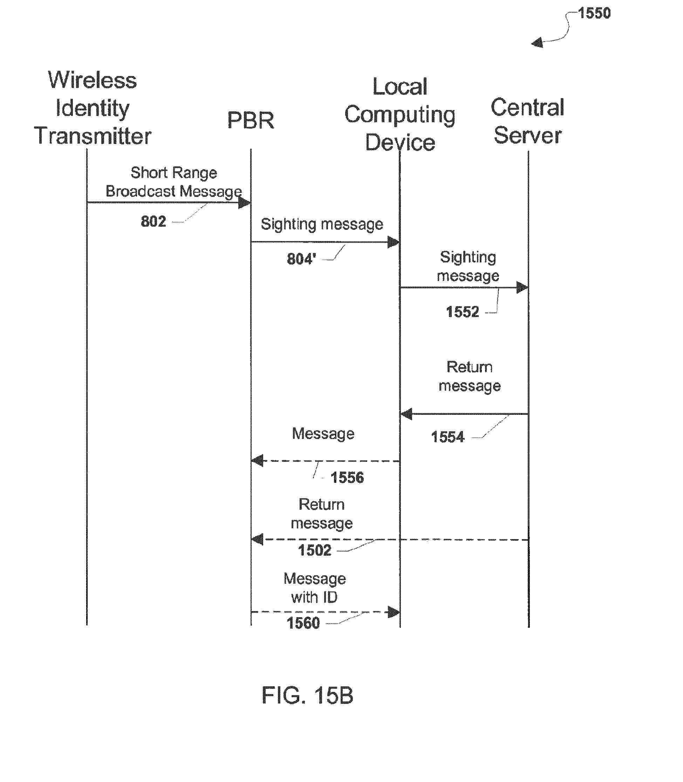

FIG. 15B illustrates an embodiment call flow diagram 1550 illustrating communications between a wireless identity transmitter, a proximity broadcast receiver, a local computing device, and a central server. The local computing device may be a local server, such as within a retail store, or alternatively, a device configured to perform operations of a point-of-sale device (e.g., a cash register). The proximity broadcast receiver may be a stationary receiver device associated with and communicates information to the local computing device. For example, the local computing device and the proximity broadcast receiver may both be associated with a merchant and/or both communicate over a common local area network, such as via a WiFi router. For example, the stationary proximity broadcast receiver may be placed at the cash register of the retail store and may receive transmissions from wireless identity transmitters when customers walk within proximity of the cash register.

As described above, the wireless identity transmitter 110 may periodically transmit a broadcast message 802 via short-range wireless signals

(e.g., Bluetooth® LE radio signals). When within signal range of the broadcast message 802, the proximity broadcast receiver may receive the broadcast message 802 using a similar transceiver. The broadcast message 802 may be processed by the proximity broadcast receiver and transmitted to the local computing device as a first sighting message 804' for processing. The local computing device may in turn transmit a second sighting message 1552 to the central server. The second sighting message 1552 may be identical to the first sighting message 804' or alternatively a new or modified version of the first sighting message 840'. For example, the second sighting message 1552 may include identification information of the local computing device in addition to a representation of the broadcast message 802.

The central server may receive and process the second sighting message 1552, as described above, and may generate and transmit a return message 1554 to the local computing device. In an embodiment, the local computing device may be configured to act as a message router and may transmit a message 1556 to the proximity broadcast receiver. The message 1556 may be similar to the return message 1554 or alternatively may include only portions of the return message 1554. For example, the message 1556 may contain information (e.g., marketing information, payment authentication information, etc.) to be rendered or otherwise used by the proximity broadcast receiver. In an embodiment, the message 1556 may include instructions for presenting marketing information, such as software instructions for rendering an advertising video.

In an embodiment, the central server may transmit a return message 1502 to the proximity broadcast receiver, which may in turn transmit a message 1560 to the local computing device that reports various information (e.g., the identification information of the wireless identity transmitter). In an embodiment, the proximity broadcast receiver may process the return message 1502 and the message 1556 and may store, utilize, and/or evaluate data of the return message 1502. For example, the stationary proximity broadcast receiver may detect software instructions within the return message 1502 or the message 1556, such as an instruction to re-calibrate a radio within the proximity broadcast receiver, and may perform operations in response to detecting the software instructions. As another example, the proximity broadcast receiver may store a list of wireless identity transmitter identities based on the return message 1502 or the message 1556. In an embodiment, the return message 1502, 1554 may not include identification information of the wireless identity transmitter, but may instead include an indicator of whether the wireless identity transmitter is related to an authorized user.

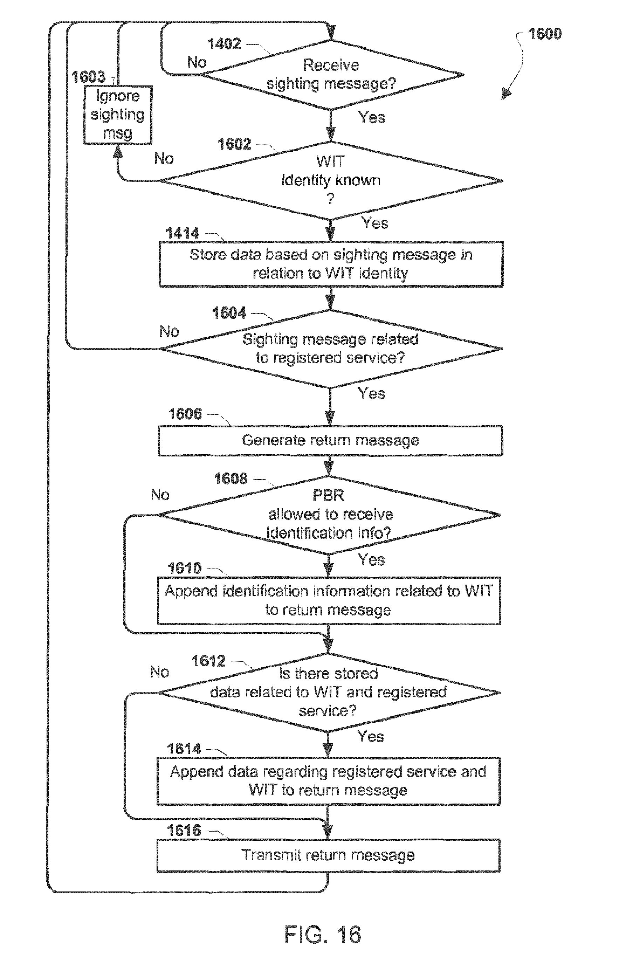

FIG. 16 illustrates an embodiment method 1600 for a central server to process sighting messages received from a proximity broadcast receiver. In general, based on the information within sighting messages, the central server may identify a wireless identity transmitter (and related user), determine whether there is a relationship between the proximity broadcast receiver and the wireless identity transmitter (i.e., related to a registered service), and transmit return messages with various data and/or information based on the sighting messages. Accordingly, return messages may be provided to proximity broadcast receivers such that no identifying information about the wireless identity transmitter is included. This may enable the proximity broadcast receiver to anonymously personalize equipment, devices, or other facilities, as described above, to benefit the user of the wireless identity transmitter without disclosing his/her identity. For example, a return message from the central server may include a user's configuration data for a piece of equipment but not the user's identity. In an embodiment, the method 1600 may be performed by the central server in connection with the proximity broadcast receiver performing the operations of the method 1100 as described above with reference to FIG. 11. In various embodiments, such return messages may be transmitted to any devices related to received sighting messages and/or the related wireless identity transmitter, such as third-parties (e.g., emergency services, retailers, etc.) or user devices associated with the sighting message.

In determination block 1402, the central server may determine whether a sighting message is received. If no sighting message is received (i.e., determination block 1402 = "No"), the central server may continue with the operations in determination block 1402. If a sighting message is received (i.e., determination block 1402 = "Yes"), in determination block 1602 the central server may determine whether the wireless identity transmitter identity is known. In other words, the central server may perform the operations in block 1404-1410 as described above with reference to FIG. 14A in order to evaluate, decode, decrypt, and otherwise access the data within the received sighting message to determine whether it includes a wireless identity transmitter identity (or identifier) that is associated with a user registered with the central server. For example, the central server may decrypt a rolling identifier within the received sighting message to identify a device identifier of a wireless identity transmitter and may match that identifier to stored information representing all registered users and/or devices. If the wireless identity transmitter is not known (i.e., determination block 1602 = "No"), in block 1603 the central server may ignore the sighting message and continue to perform the operations in determination block 1402. If the wireless identity transmitter is known (i.e., determination block 1602 = "Yes"), in block 1414 the central server may store data based on the sighting message in relation to the wireless identity transmitter identity, such as storing location data within the sighting message in a database in relation to the user of the wireless identity transmitter.

In determination block 1604, the central server may determine whether the received sighting message relates to a registered service. In other words, the central server may compare information obtained from the sighting message to lists of registered services to determine whether the sighting message is valid (or authenticated) and corresponding to a third-party, merchant, or other service registered with the central server. To make the determination, the central server may analyze the received sighting message and evaluate any metadata or header information that identifies the proximity broadcast receiver, the subject matter of the sighting message, or other descriptive information regarding the proximity broadcast receiver and/or the wireless identity transmitter that transmitted the broadcast message reported by the sighting message. For example, the sighting message may contain metadata that indicates the sighting message was sent by a proximity broadcast receiver in response to an active alert. Alternatively, the sighting message may contain header information that indicates relevance to a particular vendor facility or service. For example, the sighting message may contain metadata that indicates the proximity broadcast receiver is associated with a particular third-party application (e.g., a retail store app ID). As another example, the central server may evaluate metadata within the sighting message to detect a code that identifies a registered merchant or retail store that is associated with a marketing service or data collection scheme. A sighting message may not relate to a registered service if the transmitting proximity broadcast receiver is not registered, authenticated, or otherwise known to the central server.

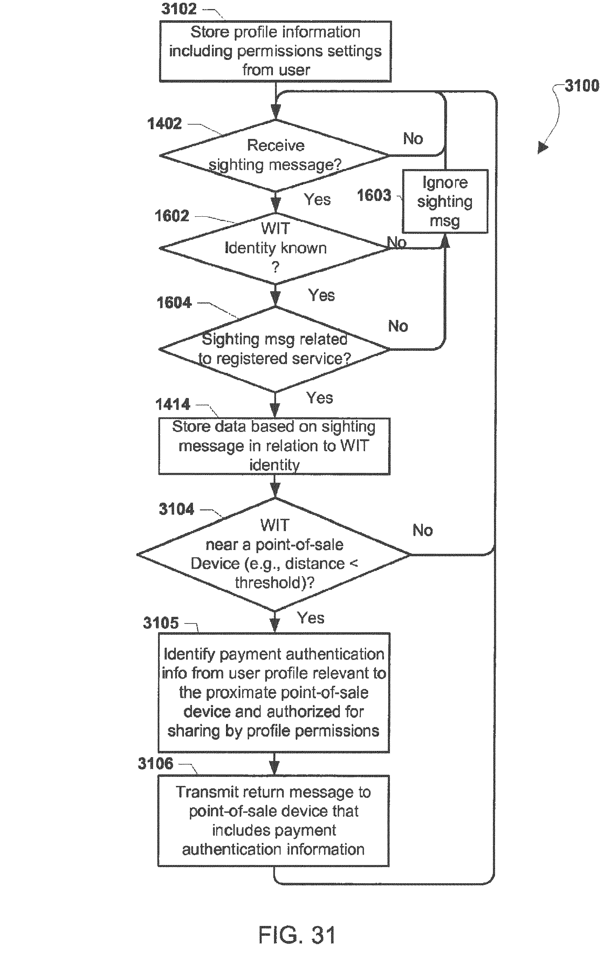

If the sighting message is not related to a registered service (i.e., determination block 1604 = "No"), the central server may continue with the operations in determination block 1402. If the sighting message does relate to a registered service, such as a valid vendor service or an active alert (i.e., determination block 1604 = "Yes"), in block 1606 the central server may generate a return message. The return message may include information that indicates the sighting message, the proximity broadcast receiver, related services, time of receipt of the sighting message, and other informational data. In determination block 1608, the central server may determine whether the proximity broadcast receiver is allowed to receive identification info. In other words, the central server may determine whether the proximity broadcast receiver has permission or is authorized to receive identification information of the wireless identity transmitter. For example, based on metadata within the sighting message indicating that the proximity broadcast receiver is associated with a vendor or a registered service, the central server may determine that the identification of the wireless identity transmitter (or its user) may not be included within the return message. In an embodiment, the central server may evaluate a stored database that describes information permissions based on the identity of the proximity broadcast receiver and its associated services. For example, the database may indicate that the proximity broadcast receiver is associated with a service that is allowed to receive identification information about the wireless identity transmitter. Such permissions or privacy settings are described below with reference to FIGS. 31-32. For example, using user identification information obtained based on the sighting message, the central server may lookup user permissions to identify whether the user authorized user data to be shared with registered services.

If the proximity broadcast receiver is allowed to receive identification information (i.e., determination block 1608 = "Yes"), in block 1610 the central server may append identification information to the return message. For example, the return message may include the username, customer ID, address and/or name of the user of the wireless identity transmitter. If the proximity broadcast receiver is not allowed to receive identification information (i.e., determination block 1608 = "No") or if the central server appended identification information to the return message in block 1610, the central server may determine whether there is stored data related to the wireless identity transmitter and the registered service in determination block 1612. The central server may evaluate a database and identify whether the proximity broadcast receiver, its associated devices or services (e.g., a local server), and/or the wireless identity transmitter require data based on the sighting message. Examples of such data may include firmware, software instructions, configuration information, proprietary information (e.g., customer ID), activity information (e.g., information describing recent wireless identity transmitter activities related to the proximity broadcast receiver), or any other relevant information. The central server may query the database using the wireless identity transmitter identification information in combination with the proximity broadcast receiver identification information to detect data within the database that may be included in the return message. For example, the return message may contain personalization information for the user of the wireless identity transmitter to be used by the proximity broadcast receiver. In an embodiment, the database may indicate that the proximity broadcast receiver is associated with a service (e.g., vendor, merchant, etc.) that stores proprietary data within the central server database.

If there is stored data related to the wireless identity transmitter and the registered service (i.e., determination block 1612 = "Yes"), in block 1614 the central server may append the data regarding registered service and the wireless identity transmitter to the return message. If there is no stored data related to the wireless identity transmitter and the registered service (i.e., determination block 1612 = "No"), or if data is already appended, in block 1616 the central server may transmit the return message, such as to the proximity broadcast receiver. The central server may then continue to perform the operations in determination block 1402.

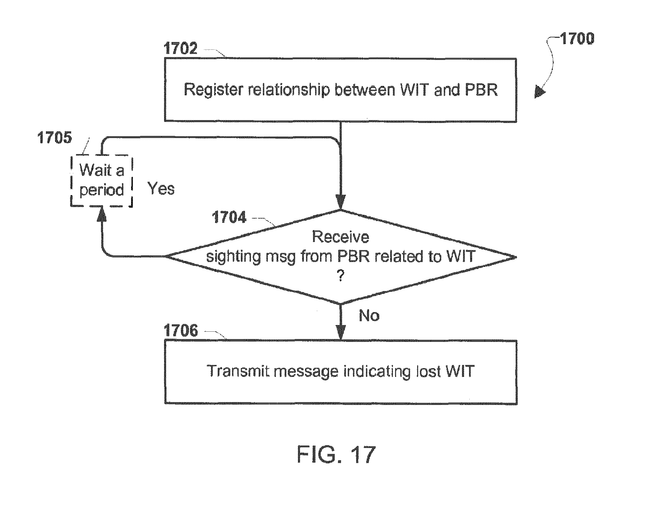

FIG. 17 illustrates an embodiment method 1700 for a central server determining whether a proximity broadcast receiver has lost a wireless identity transmitter. In the central server, the proximity broadcast receiver may be associated with the wireless identity transmitter. For example, the proximity broadcast receiver may be a user's smartphone that is associated with the wireless identity transmitter within an asset (e.g., wallet, purse, luggage, medicine bag, clothing, etc.). In response to failing to receive sighting messages from a proximity broadcast receiver associated with a particular wireless identity transmitter, the central server may be configured to transmit messages, such as warnings, indicating that the wireless identity transmitter (and the object it is connected to) is lost, absent, forgotten, or otherwise non-proximate to the proximity broadcast receiver. This embodiment method 1700 may be useful for leashing certain assets, such as possessions, pets, and children. For example, when a child runs from a parent, broadcast messages from the child's wireless identity transmitter may no longer be received by the parent's proximity broadcast receiver. As a result, the parent's proximity broadcast receiver may not transmit sighting messages to the central server and the central server may determine the child has been lost or run away.

In block 1702, the central server may register a relationship between the proximity broadcast receiver and the wireless identity transmitter, such as by storing information within a database. In various embodiments, each proximity broadcast receiver and wireless identity transmitter may be involved in numerous relationships. Additionally, the relationship information may be stored based on user input data to the central server via a registration web portal (e.g., the user may access a website and indicate all of his/her wireless identity transmitters). During such a registration, the central server may prompt the user to provide conditions under which the central server should transmit messages when wireless identity transmitters are lost or otherwise outside of the proximity of the proximity broadcast receiver. For example, the user may enter configuration data stored by the central server that indicates that if the proximity broadcast receiver does not receive broadcast messages from the wireless identity transmitter between certain hours of the day, the central server should transmit a warning message.

In determination block 1704, the central server may determine whether a sighting message has been received from the proximity broadcast receiver related to the wireless identity transmitter. In other words, based on whether or not such a sighting message is received, the central server may detect if the wireless identity transmitter is close to the proximity broadcast receiver. The central server may also evaluate sighting messages received over a period to determine whether the wireless identity transmitter is (or has recently been) within proximity of the proximity broadcast receiver. In an embodiment, the central server may determine whether it receives a sighting message for each wireless identity transmitter registered in the relationship. For example, if the registered relationship includes multiple wireless identity transmitters, the central server may expect to receive sighting messages from the proximity broadcast receiver regarding all the wireless identity transmitters. If the central server receives a sighting message related to the wireless identity transmitter (i.e., determination block 1704 = "Yes"), in optional block 1705 the central server may wait a period and may continue with the operations in determination block 1704. In various embodiments, the central server may perform the operations in determination block 1704 periodically, such as every few seconds, minutes, or hours.

If the central server does not receive a sighting message related to the wireless identity transmitter (i.e., determination block 1704 = "No"), in block 1706 the central server may transmit a message indicating the wireless identity transmitter is lost. In various embodiments, the central server may transmit such a message to the proximity broadcast receiver, other devices associated with the user of the proximity broadcast receiver (e.g., a smartphone, tablet), and/or any other device relevant to the wireless identity transmitter. For example, the central server may transmit a warning message to a police server when the wireless identity transmitter is lost and associated with a child.

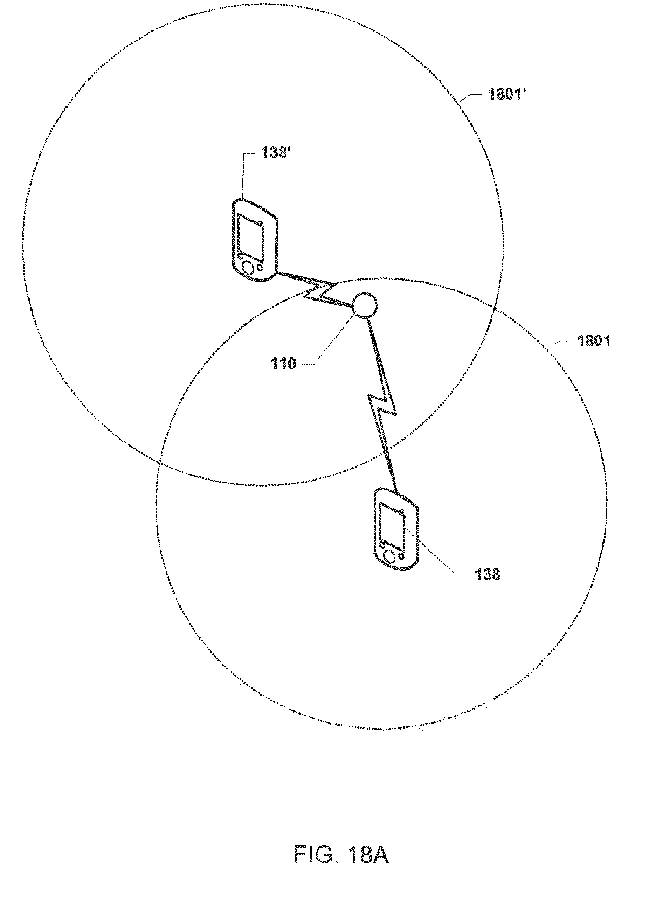

FIG. 18A illustrates two proximity broadcast receivers 138, 138' receiving short-range broadcast messages from a wireless identity transmitter 110. In various embodiments, the communication system may provide increased location or proximity granularity when multiple proximity broadcast receivers (e.g., mobile proximity broadcast receivers) are able to successfully communicate with a wireless identity transmitter. As previously discussed, since the wireless identity transmitter relies on a short-range radio to broadcast its identifier to proximity broadcast receivers, the location of a proximity broadcast receiver receiving such a short-range broadcast message provides an approximate location for the wireless identity transmitter (i.e., the proximity broadcast receiver and wireless identity transmitter are within proximity of each other when a broadcast message is received). However, if multiple proximity broadcast receivers receive the broadcast message from the wireless identity transmitter, the location of the wireless identity transmitter may be more precisely approximated.

In particular, two proximity broadcast receivers 138, 138' may receive broadcast messages from a wireless identity transmitter 110. Since the reception range of signals transmitted by wireless identity transmitters 110 is limited, proximity broadcast receivers 138, 138' may receive the broadcast messages only if the wireless identity transmitter 110 is within that reception range 1801, 1801'. Thus, if both proximity broadcast receivers 138, 138' receive the same broadcast message from the wireless identity transmitter 110, then the wireless identity transmitter 110 must be located in the overlapping region that is within the reception range 1801, 1801' of both of the two proximity broadcast receivers 138, 138'. Since the reception range 1801, 1801' will depend upon signal attenuators (e.g., structures and vegetation) along the transmission path and the sensitivity of proximity broadcast receivers 138, 138', this variability may be taken into account by a central server, such as by treating the reception range 1801, 1801' as a statistical parameter (e.g., average range with standard deviations, which may be determined through field testing). In such an embodiment, the central server may assign probabilities to different overlapping region sizes, which may help searchers focus initial search efforts.

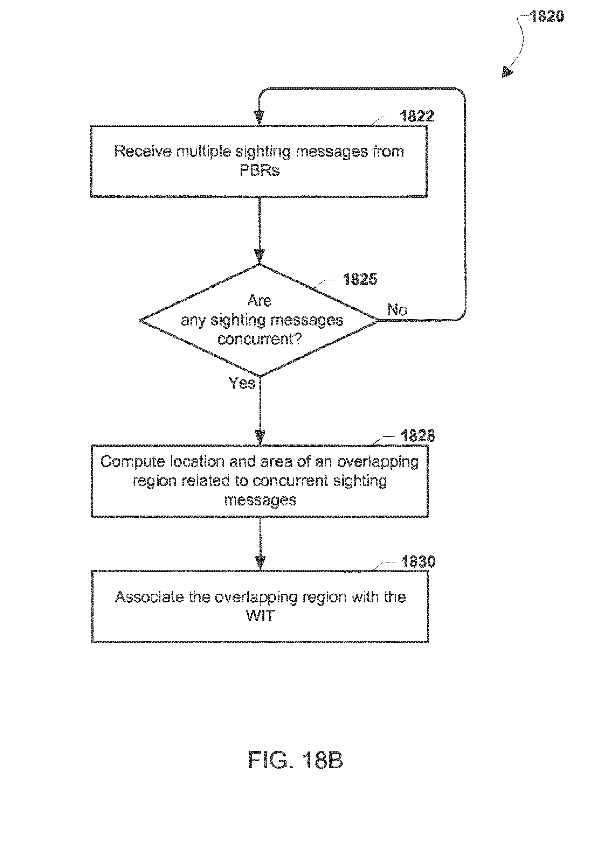

FIG. 18B illustrates an embodiment method 1820 for a central server providing a finer grained location for a wireless identity transmitter. The central server may receive multiple sighting messages from proximity broadcast receivers in block 1822. The central server may determine whether any of the received sighting messages are concurrent in determination block 1825 (i.e., whether broadcast messages from the same wireless identity transmitter are reported as being received at approximately the same time from two different proximity broadcast receivers). The central server may not consider sighting messages concurrent unless they are associated with the same wireless identity transmitter (i.e., include the same identifier or corresponding rolling identifiers) and come from different proximity broadcast receivers. Further, the central server may determine whether sighting messages are concurrent based on the contents of the messages, such as by comparing and matching timestamps in the received sighting messages (i.e., the time the proximity broadcast receivers received broadcast messages from the same wireless identity transmitter). The timestamps may be matched without being exactly the same in order to accommodate differences due to unsynchronized clocks within the proximity broadcast receivers, transmission delays, etc. In some cases, such as if the wireless identity transmitter is assumed or determined to be stationary, received sighting messages may be matched for purposes of refining the position despite the messages being received at different times. The acceptable time range for matching may be adjustable. Alternately, if the wireless identity transmitter is using a rolling identifier that shifts with each broadcast message, the central server may match received sighting messages based on the rolling identifier rather than on timestamps. If none of the sighting messages are determined to be concurrent (i.e., determination block 1825 = "No"), the central server may continue with the operations in block 1822.

If the central server determines that two or more sighting messages are concurrent (i.e., determination block 1825 = "Yes"), the central server may compute the location and area of an overlapping region related to the concurrent sighting messages in block 1828. For example, based on the locations of each of the proximity broadcast receivers associated with the concurrent sighting messages and the known transmission range of the wireless identity transmitter, the central server may compute the reception radius of each proximity broadcast receiver to determine the overlapping region. The location of each proximity broadcast receiver may be included in sighting messages transmitted by each proximity broadcast receiver.

In block 1830, the central server may associate the overlapping region (i.e., the computed location and area of the overlapping region) with the wireless identity transmitter. In other words, the central server may associate a finer grained location of the wireless identity transmitter by calculating multiple reception radii for each of the proximity broadcast receivers and identifying an overlapping region that falls within the reception range of each proximity broadcast receiver. This finer grained location may also be associated with the contents of one or more of the proximity broadcast receiver sighting messages (e.g., timestamp, sensor data, etc.). Also as part of block 1830, the central server may identify a number of overlapping area boundaries and assign a probability value to each based on the average and variability of the transmission range.

Embodiment method 1820 may be applied to many concurrent sighting messages received from several proximity broadcast receivers, which may enable the overlapping area to be more narrowly defined. For example, the central server may compute the overlapping region between several proximity broadcast receiver listening ranges or refine a previously computed overlapping region based on another overlapping report (i.e., compute the overlapping region shared by a previous overlapping region and another proximity broadcast receiver listening area). For example, as searchers close in on the wireless identity transmitter, each of their respective mobile proximity broadcast receivers will begin to transmit sighting messages related to the wireless identity transmitter, which the central server may combine to further narrow the search area as searchers approach from different directions. This capability may be further leveraged by having some searchers move away from a suspected location of the wireless identity transmitter until their mobile proximity broadcast receivers are transmitting sighting messages only intermittently, indicating they are on the edge of the transmission range. With multiple proximity broadcast receivers positioned near the apparent maximum transmission range, the overlapping area computed by the central server can be minimized, thereby helping to further pinpoint the location of the wireless identity transmitter.

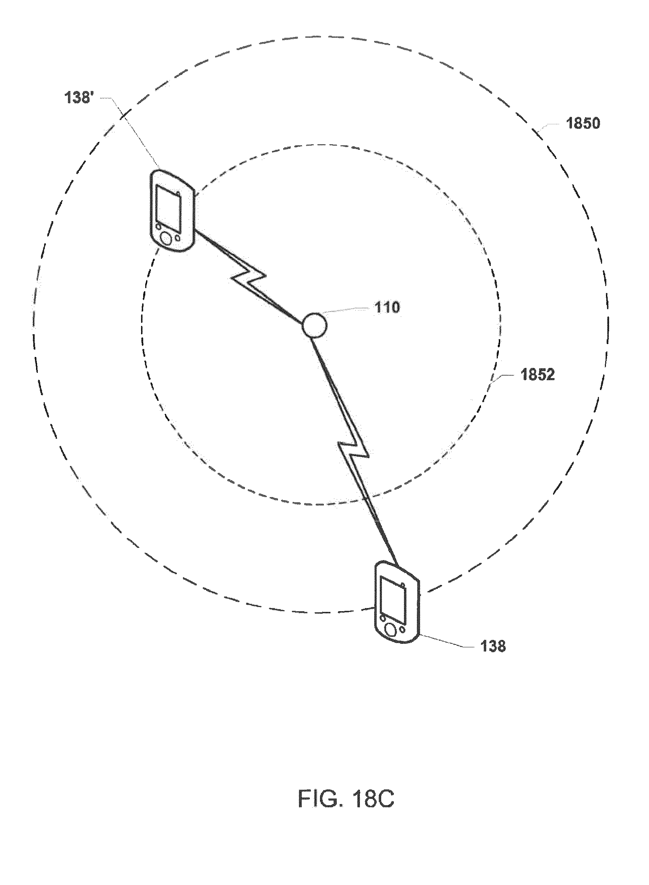

Further embodiments may provide increased location granularity by considering the power level of the broadcast messages received by multiple proximity broadcast receivers. As is well known, the signal strength of a radio transmission from a point transmitter decreases with distance by a factor proportional to the inverse of the square of the distance (i.e., $1/R^2$), with any intervening structure or vegetation causing further attenuation. Thus, proximity broadcast receivers located at different distances from a wireless identity transmitter will typically receive the broadcast messages with different signal strengths. For, example, FIG. 18C illustrates a wireless identity transmitter 110 whose transmissions (i.e., broadcast messages) are being received by two proximity broadcast receivers 138, 138' at different ranges. Due to the attenuation of radio signals with distance, the proximity broadcast receiver 138' at distance 1852 from the wireless identity transmitter 110 may typically receive the transmissions with a higher signal strength than a more distant proximity broadcast receiver, such as the proximity broadcast receiver 138 at distance 1850. Thus, by including the signal strength of received transmissions in sighting messages transmitted by proximity broadcast receivers 138, 138' to a central server, the central server may be able to further refine the location of a wireless identity transmitter 110.

A proximity broadcast receiver's distance to the wireless identity transmitter 110 may be estimated as inversely proportional to the power level. Distance estimations may also account for channel conditions such as intervening signal attenuators (e.g., vegetation, buildings, etc.), echoes (i.e., multipath reception) or other interferences. The distance may be estimated locally on the proximity broadcast receiver 138,138' or alternately by the central server if the proximity broadcast receiver 138, 138' includes the power level in a sighting message. Each proximity broadcast receiver's own location and estimated distance from the wireless identity transmitter 110 may be used to triangulate the approximate location of the wireless identity transmitter 110. For example, as searchers close in on the wireless identity transmitter, the signal strength of received broadcast messages from the wireless identity transmitter may increase, enabling the central server to further narrow the search area as searchers approach from different directions. Thus, when proximity broadcast receivers 138, 138' include signal strength data in sighting messages, the central server can reduce the overlap area for searching as multiple searchers approach the wireless identity transmitter 110 (which would not be the case in the circumstances similar to illustrated above with reference to FIGs. 18A and 18B as the overlap area was determined solely upon the maximum reception range).

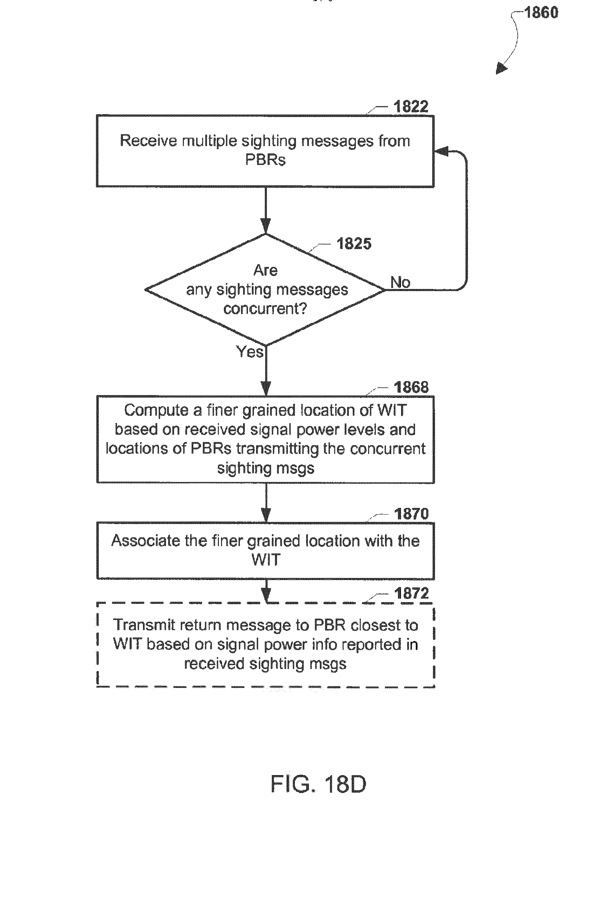

FIG. 18D illustrates an embodiment method 1860 for a central server providing a finer grained location for a wireless identity transmitter based on the power level of broadcast messages received by proximity broadcast receivers. The central server may receive multiple sighting messages from proximity broadcast receivers in block 1822. The sighting messages may include the power level of a broadcast messages received by the reporting proximity broadcast receivers, or an estimated distance from the proximity broadcast receiver to the wireless identity transmitter determined based on the received signal strength. The central server may determine whether any of the sighting messages are concurrent in determination block 1825. The central server may not consider sighting messages concurrent unless they are associated with the same wireless identity transmitter (i.e., include the same identifier or corresponding rolling identifiers) and are received from different proximity broadcast receivers. Further, the central server may determine whether sighting messages are concurrent based on the contents of the sighting messages as described above with reference to FIG. 18B. If none of the sighting messages are concurrent (i.e., determination block 1825 = "No"), the central server may continue with the operations in block 1822.

If the central server determines that two or more sighting messages are concurrent (i.e., determination block 1825 = "Yes"), the central server may compute a finer grained location of the wireless identity transmitter based on the received signal power levels and the locations of proximity broadcast receivers transmitting the concurrent sighting messages in block 1868. The central server may estimate the distance between the proximity broadcast receivers and the wireless identity transmitter or may receive an estimated distance in the sighting messages as discussed above. Each proximity broadcast receiver's location and estimated distance from the wireless identity transmitter may be used to triangulate the finer grained location. Triangulation based on information within sighting messages received from only two proximity broadcast receivers may result in two possible locations for the wireless identity transmitter. However, information in sighting messages from three or more proximity broadcast receivers may be used to better approximate the wireless identity transmitter's location. The central server may associate the finer grained location (i.e., the triangulated location) with the wireless identity transmitter in block 1870. This finer grained location may also be associated with the contents of one or more of the proximity broadcast receiver sighting messages (e.g., timestamp, sensor data, etc.).

In optional block 1872, the central server may transmit a return message to a proximity broadcast receiver that is closest to the wireless identity transmitter based on signal power information reported in received sighting messages. In other words, the central server may determine the closest proximity broadcast receiver to the wireless identity transmitter among the plurality of proximity broadcast receivers that transmitted the concurrent sighting messages. Often, a user of a wireless identity transmitter may intend to use a device associated with a single proximity broadcast receiver within a plurality of proximity broadcast receivers (e.g., a point-of-sale device in a line of point-of-sale devices each connected to proximity broadcast receivers). The central server may use signal strength or signal power indicators within concurrent sighting messages, as well as any other relevant data (e.g., location information, direction of the wireless identity transmitter based on previous sighting messages, etc.) to determine the single proximity broadcast receiver the user of the wireless identity transmitter likely intends to interface. The return message may indicate to the proximity broadcast receiver that the wireless identity transmitter is likely intending to interface with that proximity broadcast receiver, and may additionally include instructions, data, or other information for the proximity broadcast receiver. For example, the return message may include a message indicating the user of the wireless identity transmitter is near, or alternatively instructions on how to handle the user.

In an embodiment, the return message may indicate information describing the certainty of the determination that the recipient proximity broadcast receiver is the closest to the wireless identity transmitter. Additionally, the return message may request a confirmation of proximity to the wireless identity transmitter. For example, the closest proximity broadcast receiver may confirm that it is the closest proximity broadcast receiver based on subsequent input data related to the user of the wireless identity transmitter (e.g., the user of the wireless identity transmitter pressed a 'confirm' button on the proximity broadcast receiver). In another embodiment, the central server may transmit messages to the proximity broadcast receivers determined to not be the closest proximity broadcast receiver, indicating that these proximity broadcast receivers are not closest and/or the identity of the determined closest proximity broadcast receiver. In response, the proximity broadcast receivers that are not the closest may modify their subsequent transmission of sighting messages regarding the wireless identity transmitter. For example, the proximity broadcast receivers may adjust (i.e., increase or decrease) the frequency of transmitting sighting messages regarding the wireless identity transmitter (i.e., adjust receiver thresholds) or alternatively may ignore future broadcast messages from the wireless identity transmitter for a period of time.

FIG. 19 illustrates an embodiment method 1900 that may be implemented within a central server. The method 1900 may be performed by the central server in response to receiving a sighting message from a proximity broadcast receiver that includes encoded, rolling, or otherwise protected data originally broadcast by a wireless identity transmitter. Privacy of users of wireless identity transmitters may be protected by using a rolling or randomly varying identifier for each wireless identity transmitter so the identifier changes with time. New identifiers may be generated periodically or based on certain events, such when a wireless identity transmitter broadcasts an identifier a certain number of times or for a certain time period (e.g., an hour), or after one or more pairings. This rolling of identifiers may be coordinated with the central server so that the wireless identity transmitter may still be tracked. For example, the wireless identity transmitter and the central server may each have a cryptographically secure pseudo-random number generator algorithm that is used to generate identifiers on a common time scale so that any given moment, the central server can calculate the identifier being transmitted by a particular wireless identity transmitter.

Generating rolling identifiers, or other methods of obfuscating identifiers, is important in that it may prevent sniffing attacks from a third party. For example, if the identifier was static, a third party could sniff the identifier, such as by impersonating a proximity broadcast receiver, and then use the identifier to track the wireless identity transmitter. A rolling identifier may hinder such an attack impossible if the third party lacks the pseudo-random number generator or other means of generating the latest rolling identifiers.

In block 1902, the central server may receive a wireless identity transmitter's rolling identifier in a sighting message from a proximity broadcast receiver. In block 1904, the central server may compare the rolling identifier with code calculated by an algorithm shared with the wireless identity transmitter, such as a pseudo-random function or an encryption algorithm with shared secret keys. The algorithm may be software instructions, routines, algorithms, circuitry, or modules that are utilized by the central server to calculate codes that are expected to align with rolling identifiers generated and broadcast by the wireless identity transmitter over a period. In various embodiments, the central server may compare the received identifier with the next several codes in case some identifiers were missed. If the received identifier matches any codes generated or expected by the central server, in block 1906 the central server may associate the matching identifier and any associated data with a serial code corresponding to the wireless identity transmitter. This way, if the central server later receives a user request with the wireless identity transmitter's serial code, such as a request from a parent to locate the wireless identity transmitter carried by a child, then the central server can find all the prior matches and any associated data without having to search for every previous rolling identifier.

In an embodiment, when initiating a search for a target wireless identity transmitter, the central server may use the shared algorithm and information (e.g., key) to generate a target device ID that is transmitted in an alert message. In this embodiment, alert messages may be retransmitted with an updated target device ID whenever the target wireless identity transmitter is scheduled to roll its identifier. Various algorithms for generating rolling identifiers or other encoded identifiers, as well as other decoding algorithms, are discussed below.

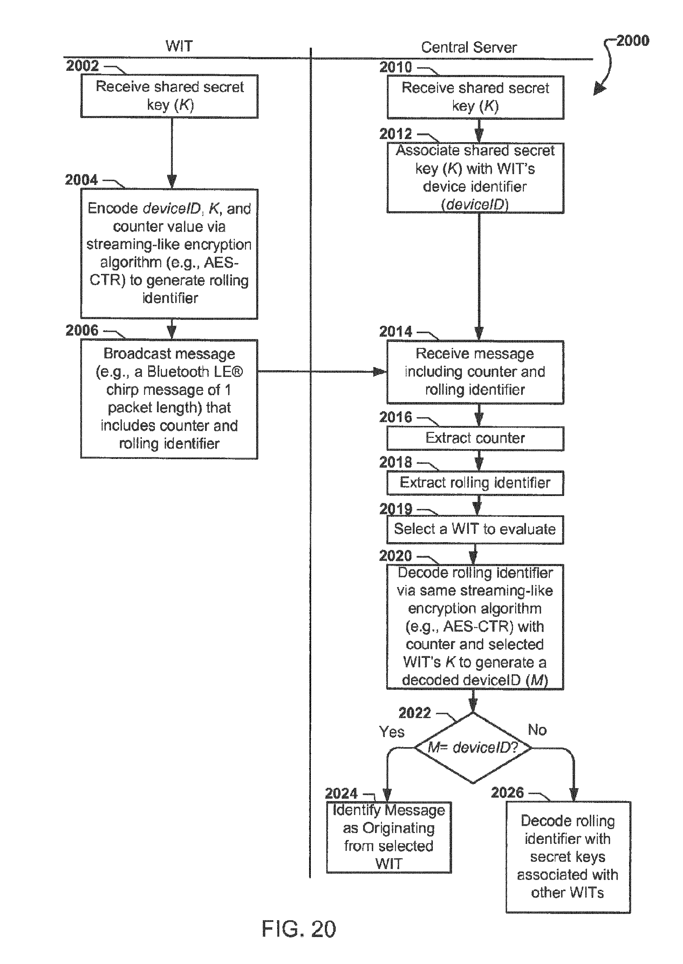

FIGS. 20-23B illustrate various embodiment methods for synchronizing a counter between a wireless identity transmitter and a central server to enable transmitting and receiving obscured information. The wireless identity transmitter may perform various methods for broadcasting messages that include obscured identifiers and data (i.e., payloads) that identify the wireless identity transmitter to the central server and provide a relative reading on the wireless identity transmitter clock. Likewise, the central server may perform various methods for processing obscured information within received messages corresponding to the wireless identity transmitter. As described above, the broadcast messages from the wireless identity transmitter may be sent to the central server directly or through intermediary devices, such as proximity broadcast receivers transmitting sighting messages.

Due to privacy concerns regarding unintended tracking of devices described above, the wireless identity transmitter may obscure information within the transmitted messages through obfuscation measures (e.g., encryption or pseudo-random data generation) known only to the central server and wireless identity transmitter. In general, the wireless identity transmitter may maintain a clock or timer mechanism that is represented by a counter value (or a "nonce") and that may begin once the device is operational (e.g., activated through the insertion of a battery). The clock may be relatively low-quality and therefore may drift unlike more accurate clocks, such as in the central server (e.g., clocks calibrated by periodic atomic clock readings). The counter (or nonce) may be a non-repeating number generated by the wireless identity transmitter, and may be changed each time wireless identity transmitter encodes its identifier for broadcasting, such as once every hour or even once every broadcast message. In various embodiments, counters (or counter values) may be encrypted or encoded using pseudo-random functions or other encryptions algorithms (e.g., AES). For example, a wireless identity transmitter may encode a counter value with an AES-CTR block cipher to create a nonce for use in generating the payload including a rolling identifier of a broadcast message. As another example, a nonce may be generated by applying a linear feedback shift register (LFSR) to a counter value.

As described throughout the disclosure, the wireless identity transmitter may also store a unique device identification code or number (i.e., a device identifier or '*deviceID*') and be pre-provisioned with a per-device shared secret key (or *K*) which is associated with the unique identifier at the central server. For example, the central server may store the unique device identifier and the secret key in a database and may maintain a table of *deviceID* and *K* pairs for all wireless identity transmitters registered with the central server. The central server may use the device identifier and secret key, along with other information such as reported counter values, to identify, decrypt and otherwise process obscured messages from the wireless identity transmitter. In an embodiment, the device identifier (or *deviceID*) may be generated sequentially or randomly.

FIG. 20 illustrates an embodiment method 2000 for a central server to identify a wireless identity transmitter indicated by encrypted data within a message broadcast by the wireless identity transmitter. In block 2002, the wireless identity transmitter may receive a shared secret key (i.e., "*K*"). In other words, the wireless identity transmitter may be pre-provisioned with a per-device shared secret key (*K*), such as during manufacturing. In another embodiment, the wireless identity transmitter may receive the secret key in a messages broadcast from a proximate proximity broadcast receiver, such as described above with reference to FIG. 4. The secret key may be associated with the wireless identity transmitter's unique device identifier (i.e., *deviceID*) at the central server. In an embodiment, the secret key may be a 128 bit secret key.

In block 2004, the wireless identity transmitter may encode the device identifier (*deviceID*), secret key (*K*), and a counter value via a streaming-like encryption algorithm (e.g., AES-CTR encryption) to generate a rolling identifier. "AES-CTR" is one of the confidentiality modes recommended by the National Institute of Standards and Technology for implementations of the Advanced Encryption Standard (AES). In an embodiment, the wireless identity transmitter may include an AES coprocessor that is configured to support the "CTR" mode. In an embodiment, the rolling identifier may be represented by the following equation:

$$\text{Rolling identifier} = (\mathit{deviceID} \parallel \mathit{bat\_stat}) \text{ XOR } (\text{MSB\_N}(\text{AES\_K}(t)))$$

where *t* is the value of the wireless identity transmitter's counter (e.g., a 20 bit value), '*bat_stat*' is the battery status information of the wireless identity transmitter (e.g., a 4-bit code), '‖' means concatenation, 'XOR' denotes the bitwise exclusive-or operation, 'AES_K()' is the AES block cipher with key '*K*,' and 'MSB_N()' means the 'N' most significant bits (e.g., 60 bits).

In block 2006, the wireless identity transmitter may then broadcast a message that includes the counter and the rolling identifier. In an embodiment, the broadcast message may be a single packet length Bluetooth® LE® chirp message. In various embodiments, the counter included in the broadcast message may be 20 bits and the rolling identifier may be 60 bits, so that the entire broadcast message is 80 bits.

In an embodiment, the broadcast message (or the payload of the broadcast message) may be represented by the following equation:

$$\text{Payload} = t \mid (\mathit{deviceID} \parallel \mathit{bat\_stat}) \text{ XOR } (\text{MSB\_N}(\text{AES\_K}(t)))$$

where *t* is the value of the wireless identity transmitter's counter (e.g., a 20 bit value), '*bat_stat*' is the battery status information of the blip device (e.g., a 4-bit code), '‖' means concatenation, 'XOR' denotes the bitwise exclusive-or operation, 'AES_K()' is the AES block cipher with key '*K*', and 'MSB_N()' means the 'N' most significant bits (e.g., 60 bits). In other words, the embodiment broadcast message may include the counter in the clear (i.e., not encrypted) in addition to a rolling identifier that includes a battery level indicator. In another embodiment, the battery level indicator (i.e., *bat_stat*) may not be encrypted.

In block 2010, the central server may receive the shared secret key (*K*), such as during the account creation operations described above with reference to FIG. 13. For example, the central server may generate the secret key in response to receiving account registration information from the user of the wireless identity transmitter (e.g., *deviceID* and registration request information). In block 2012, the central server may associate the shared secret key (i.e., *K*) with the wireless identity transmitter's device identifier (i.e., *deviceID*). For example, the central server may store the *deviceID* and *K* in a data table of registered devices.

In block 2014, the central server may receive a message including the counter and the rolling identifier. For example, the received message may be a sighting message from a proximity broadcast receiver that includes the information broadcast by the wireless identity transmitter with the operations in block 2006. In block 2016, the central server may extract the counter from the received message, and in block 2018 may extract the rolling identifier. In block 2019, the central server may select a wireless identity transmitter (i.e., selected wireless identity transmitter) to evaluate. In other words, the central server may obtain a stored *deviceID*, *K*, and counter for a registered wireless identity transmitter known to the central server, such as from the database or data table storing such information for all registered wireless identity transmitters. In block 2020, the central server may decode the rolling identifier via the same streaming-like encryption algorithm (e.g., AES-CTR) with the counter and the selected wireless identity transmitter's secret key (*K*) to generate a decoded device identifier (or *M*). For example, the central server may perform a decoding operation based on the AES-CTR algorithm that uses the rolling identifier as input along with the selected wireless identity transmitter's secret key (*K*) and the counter indicated in the received message.

In an embodiment, the decoded device identifier (*M*) may be represented by the following equation:

$$M = (\text{rolling identifier}) \; \text{XOR} \; (\text{MSB\_}\{N\text{-}a\}( \; \text{AES\_K}(t) )),$$

where *t* is the value of the wireless identity transmitter's counter (e.g., a 20 bit value), 'XOR' denotes the bitwise exclusive-or operation, 'AES_K()' is the AES block cipher with key '*K*', and 'MSB_{N-*a*}' means the 'N-*a*' most significant bits (e.g., 56 bits when *a* is 4 bits and N is 60 bits).

In determination block 2022, the central server may determine whether the decoded device identifier (*M*) and the *deviceID* match. In other words, the central server may compare the decoded device identifier (*M*) to the *deviceID* for the selected wireless identity transmitter whose secret key (*K*) was used with the AES-CTR algorithm operations to obtain the decoded device identifier (*M*). If *M* and the *deviceID* do match (i.e., determination block 2022 = "Yes"), in block 2024, the central server may identify the broadcast message as originating from the selected wireless identity transmitter. If *M* and the *deviceID* do not match (i.e., determination block 2022 = "No"), in block 2026 the central server may decode the rolling identifier with secret keys associated with other wireless identity transmitters. For example, the central server may select the next registered wireless identity transmitter and use the corresponding stored pair of a secret key (*K*) and corresponding *deviceID*. In this manner, all *K* and *deviceID* pairs stored for all registered wireless identity transmitters and/or users of the system may be tried by the central server until a match is found that indentifies the originator of the broadcast message.

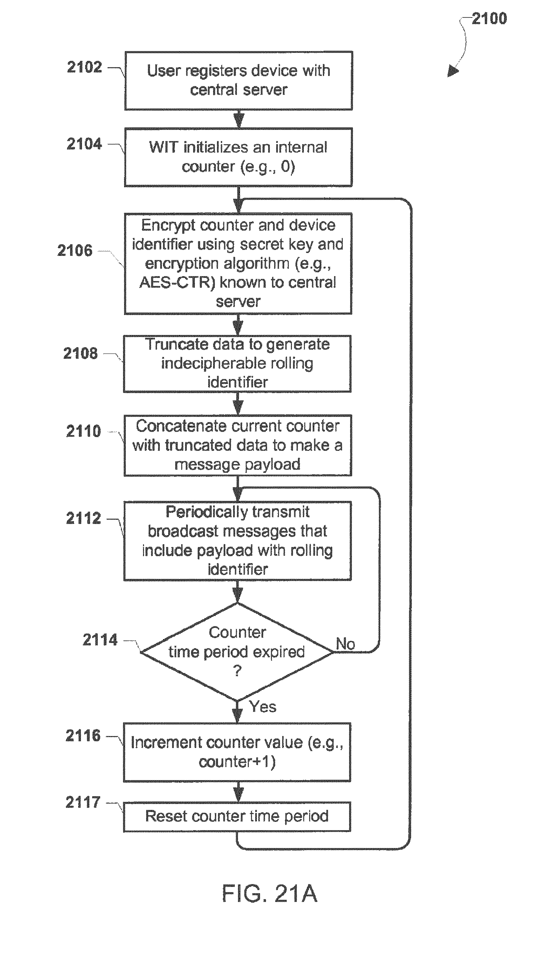

FIG. 21A illustrates the embodiment method 2100 for a wireless identity transmitter generating and broadcasting an encrypted message (i.e., a rolling identifier) for receipt/use by a central server.

In block 2102, a user of the wireless identity transmitter may register the device with the central server. The services the wireless identity transmitter utilizes may require registrations of all active devices employed by users (e.g., customers, proprietors, etc.). The registration process may include an initial synchronization with the central server by the user of the wireless identity transmitter. For example, the user of the wireless identity transmitter may register the device with the central server through a Web application, in a mobile device or a PC able to receive wireless identity transmitter messages and operated by the user. The wireless identity transmitter may be required to be registered with the central server within a certain time period from activation of the device. For example, the wireless identity transmitter may be required to be registered within the first 24 hours after the device is initiated (e.g., a battery is placed within the wireless identity transmitter). Registration operations are further described above with reference to FIG. 13.

In block 2104, the wireless identity transmitter may initialize an internal counter, such as by setting the counter to a zero value. The counter initialization may occur due to a triggering event, such as the placement of a battery or power source within the wireless identity transmitter. For example, the counter may begin incrementing once the wireless identity transmitter is activated or powered on. Alternatively, the initialization may occur in response to registration operations described above. The counter may begin with '0' (or any other starting value, such as '1') and may be incremented periodically by the wireless identity transmitter. In an embodiment, when the battery of the wireless identity transmitter is replaced (e.g., due to battery failure) or the wireless identity transmitter is otherwise reset/ restarted/ rebooted, the counter may return to the initial value (e.g., '0'). The counter may not repeat the value it represents unless the wireless identity transmitter is reset/ restarted/ rebooted. In an alternative embodiment, during initialization of the counter, the wireless identity transmitter may read from flash memory a predefined initial counter value. For example, the wireless identity transmitter may initialize the counter with a value set at a factory or updated by an installed application.

In an embodiment, the counter (or nonce) may be initialized and adjusted in a random or pseudo-random fashion using methods well known in the art. The counter may be a pseudo-randomly generated value that can be replicated in both the wireless identity transmitter and the central server. In another embodiment, the counter or nonce may be generated by the wireless identity transmitter using a linear feedback shift register (LFSR) with a proper period configured to create counter values that do not repeat during the lifetime of the device. Such counters derived from the LFSR may also be pseudo-random.

In block 2106, the wireless identity transmitter may encrypt the concatenated data using a secret key and encryption algorithm known to the central server. For example, the wireless identity transmitter may encode the counter and/or the device identifier (i.e., *deviceID*) using an AES-CTR block cipher. The encryption algorithm may utilize the secret key for encryption and decryption purposes, as the secret key is known by both the central server and wireless identity transmitter. The encryption algorithm may result in encrypted (or encoded) data of a certain size. For example, using the AES-CTR cipher, the wireless identity transmitter may generate encoded data of 128-bits. In an embodiment, the wireless identity transmitter may generate encrypted data represented by the following equation:

$$( \mathit{deviceID} \parallel \mathit{bat\_stat}) \; \mathrm{XOR} \; (\mathrm{MSB\_N}( \; \mathrm{AES\_K}(t))),$$

where $t$ is the value of the wireless identity transmitter's counter (e.g., a 20 bit value), '*bat_stat*' is the battery status information of the wireless identity transmitter (e.g., a 4-bit code), '$\parallel$' means concatenation, 'XOR' denotes the bitwise exclusive-or operation, 'AES_K()' is the AES block cipher with key '*K*', and 'MSB_N()' means the 'N' most significant bits (e.g., 60 bits). In other words, the embodiment broadcast message may include the counter in the clear (i.e., not encrypted) in addition to a rolling identifier that includes a battery level indicator. In another embodiment, the encrypted data may be represented by the following equation:

$$(\mathrm{deviceID}) \; \mathrm{XOR} \; (\mathrm{AES\_K}(t)),$$

where *deviceID* is a unique device identifier, $t$ is the value of the wireless identity transmitter's counter (e.g., a 20 bit value), 'XOR' denotes the bitwise exclusive-or operation, 'AES_K()' is the AES block cipher with key '*K*', and 'MSB_N()' means the 'N' most significant bits (e.g., 60 bits).

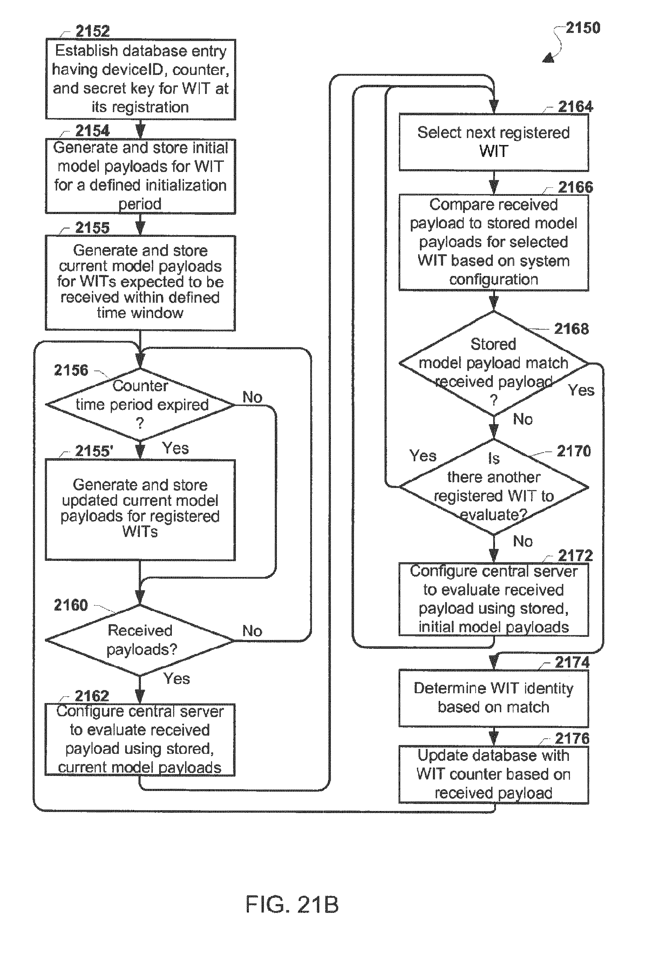

Due to the limited communication capabilities of the wireless identity transmitter, the payload of broadcast messages (e.g., the payloads supported by Bluetooth® LE broadcast packets) may not be able to contain the entire encrypted message, but instead only include a portion of an encrypted piece of data. Accordingly, in block 2108, the wireless identity transmitter may truncate data to generate an indecipherable rolling identifier. In other words, by truncating the encrypted data, the wireless identity transmitter may create an identifier to be put in a broadcast message (or payload) such that the identifier's size may be supported by the utilized communication format, such as Bluetooth® LE. For example, the wireless identity transmitter may truncate the encrypted data to fit within an 80-bit payload maximum size. When encrypted data is truncated, the decryption of that data within the central server may be impossible. However, the incomplete encrypted data may still be used by the central server as described below with reference to FIG. 21B. In an embodiment, truncation may be accomplished with a function, such as a most-significant-bit operation. In another embodiment, the truncated data may be represented by the following equation:

$$\mathrm{TRUNC} \; (\mathit{deviceID} \; \mathrm{XOR} \; \mathrm{AES\_K}(t)),$$

where $t$ is the value of the wireless identity transmitter's counter (e.g., a 20 bit value), 'XOR' denotes the bitwise exclusive-or operation, 'AES_K()' is the AES block cipher with key '*K*', and 'TRUNC ()' denotes a truncation operations that may create a certain number of bits or bytes (e.g., 56 bits or 7 bytes).

In block 2110, the wireless identity transmitter may concatenate the current counter with the truncated data to make a message payload. For example, the wireless identity transmitter may combine the current wireless identity transmitter system clock value (e.g., 20 bits long) with the unique identification code of the wireless identity transmitter truncated to be 60 bits long. In an embodiment, the payload may include both encrypted data and unencrypted data (or "in the clear" data). For example, the payload may contain many bits representing the encrypted and/or truncated data and several other bits that represent the battery status of the wireless identity transmitter or a counter value.

In block 2112, the wireless identity transmitter may periodically transmit broadcast messages that include the payload with the rolling identifier, such as by broadcasting via short-range wireless communication techniques as described above. The frequency of transmissions of the broadcast messages may vary dependent upon system configurations, user settings, or any other source of scheduling and timing relevant for wireless identity transmitters communicating via radio signals. For example, the wireless identity transmitter may broadcast the rolling identifier every few seconds.

In determination block 2114, the wireless identity transmitter may determine whether a predefined counter time period has expired. This counter time period may be set in a similar manner as the broadcast frequency periodicity as described above. For example, the manufacturer or may establish the counter time period using various techniques, such as hard-coding variables within the wireless identity transmitter's processor circuitry.

If the counter time period has not expired (i.e., determination block 2114 = "No"), the wireless identity transmitter may continue with the operations in block 2112. For example, the wireless identity transmitter may broadcast the payload via short-range radio transmissions at a frequency of a few seconds for a time period of many minutes.

If the device determines the counter time period has expired (i.e., determination block 2114 = "Yes"), in block 2116 the wireless identity transmitter may increment the counter value, such as by adding 1. In block 2117, the wireless identity transmitter may reset the counter time period. For example, after a counter time period has expired, the wireless identity transmitter may increase the counter by a value of 1 and reset the counter time period to 0. The wireless identity transmitter may continue with the operations in block 2106 (e.g., the wireless identity transmitter may create a new payload and broadcast it for another counter time period).

FIG. 21B illustrates an embodiment method 2150 for a central server receiving messages and syncing timing counters based on payload information. In block 2152, the central server may establish a database entry having the device identifier (i.e., *deviceID*), counter, and secret key data for the wireless identity transmitter at its registration. The central server may maintain a database containing data records for each wireless identity transmitter associated with the central server and/or the central server's affiliated services. The database may be populated with information obtained via registration operations described above. Thus, there may be a data record for each wireless identity transmitter associated with the central server, and each record may contain information that represents a particular device's identification, its current counter (e.g., clock value), and a secret key associated with the wireless identity transmitter. In an embodiment, the secret key may be unique to each wireless identity transmitter registered with the central server. In an embodiment, the central server may also store the initial counter value for each wireless identity transmitter registered with the central server.

In various embodiments, when a wireless identity transmitter is registered, the central server may store the initial counter value for the wireless identity transmitter. Dependent upon the time between the activation of the wireless identity transmitter (e.g., when the battery was inserted and the device became operational) and the registration of the device, the initial counter for the wireless identity transmitter may or may not be 0. For example, if the registration of the wireless identity transmitter with the central server occurred several hours after a user inserted a battery in the wireless identity transmitter, the initial counter may not be 0. In an embodiment, the central server may also indicate the registration status of the wireless identity transmitter by setting a registration flag or other indicator and may store information describing wireless identity transmitters that have yet to be registered in the database. In an embodiment, the central server may maintain a database with initial values provided for all known wireless identity transmitter whether or not they have been registered. For example, based on manufacturing records, the central server may contain a database having information about every wireless identity transmitter created.

The central server may generate and store model payloads using operations similar to those described above with reference to blocks 2106-2110. Model payloads may be payloads the central server expects to receive from the wireless identity transmitter based on stored secret key, device identifier (deviceID), and counter information. For example, for each registered wireless identity transmitter, the central server may create a model payload by concatenating the device's *deviceID* to a counter value, encrypting the concatenated data using an encryption protocol that employs the secret key for the wireless identity transmitter, and truncating the encrypted data. Each model payload may be stored in a central server data table (or lookup table) in relation to the corresponding *deviceID* and counter values used to generate the respective model payloads. For example, for each model payload for each wireless identity transmitter, the central server may store in the data table the model payload, a time offset value (e.g., -2, -1, 1, 2, etc.), and the counter, all in relation to the *deviceID* of the wireless identity transmitter.

In block 2154, the central server may generate and store initial model payloads for the wireless identity transmitter for a defined initialization period. For example, starting at the initial counter value (e.g., 0 or a pseudo-random value known to the device and the central server), the central server may generate model payloads using counter values that are the same, lower, and/or higher than the actual initial counter of a wireless identity transmitter such that these model counters cover the initialization period. In an embodiment, the initialization period may be an hour, several hours, days, etc.). The central server may store the initial model payloads for use in the event of a registration/reset/reboot of a wireless identity transmitter.

In block 2155, the central server may also generate and store current model payloads for wireless identity transmitters expected to be received within a defined time window. To account for possible clock drift in wireless identity transmitters, the central server may generate and store model payloads for the defined time window (or time period) by using multiple derivative counter values that represent a range of possible counters. In other words, derivative counter values may be offsets to the current counter value stored for a wireless identity transmitter. For example, the central server may generate model payloads for derivative counter values that are lower and higher than the currently stored counter value in the database. A derivative counter value may be the result of an offset value (e.g., -2, -1, 1, 2, etc.) added to the stored counter value for a wireless identity transmitter. The central server may generate model payloads to represent the stored counter value and derivative counter values that incrementally represent the window time period. For example, the model payloads may represent counters increasing by a small time value, such as an hour, and covering a large period of time, such as multiple hours. As another example, the central server may store a payload corresponding to the current counter value stored for a wireless identity transmitter, a payload corresponding to the previous counter value for the device, and a payload corresponding to the next counter value for the device.

In an embodiment, the first generated current model payloads for a given wireless identity transmitter may be identical to the initial model payloads for the wireless identity transmitter as both sets of payloads may be generated by the central server based on the same initial counter values. In an embodiment, the initialization period may coincide with the defined time window. For example, the initialization period may involve a similar number of days, hours, minutes, etc. as the defined time window.

In determination block 2156, the central server may determine whether a counter time period has expired. The central server may initialize the evaluation of a counter time period at an arbitrary time or, alternatively, upon the receipt of a wireless identity transmitter registration. The counter time period may be the same period of time used by the wireless identity transmitters as described above with reference to determination block 2114.

If the counter time period has expired (i.e., determination block 2156 = "Yes"), in block 2155' the central server may generate and store updated current model payloads for registered wireless identity transmitters. The updated current model payloads may replace the previous current model payloads and may be based on the stored counter value in each respective wireless identity transmitter's database record.

If the counter time period has not expired (i.e., determination block 2156 = "No") or if the counter time period has expired and the central server has generated updated current model payloads, in determination block 2160, the central server may determine whether any payloads have been received. In an embodiment, payloads may be delivered directly from wireless identity transmitters or alternatively indirectly from proximity broadcast receivers via sighting messages which include (or relay) rolling identifier payloads from proximate wireless identity transmitters to the central server. If no payloads have been received (i.e., determination block 2160 = "No"), the central server may continue with the operations in determination block 2156.

If a payload has been received (i.e., determination block 2160 = "Yes"), in block 2162, the central server may be configured to evaluate the received payload using stored, current model payloads, such as the current model payloads stored for each registered wireless identity transmitter. As described above, the central server may maintain two sets of stored model payloads for each registered wireless identity transmitter, an initial model payload set that may include model payloads based on the initial counter and derivative counter values that span the initialization period, and a current model payload set that is based on the current counter value stored within the database record for each wireless identity transmitter. In an embodiment, the central server may set a system variable indicating the central server should compare the received payload to stored, current model payloads. The system variable may be set to direct the central server to evaluate either the current or initial model payloads for wireless identity transmitters.

In blocks 2164-2172, the central server may perform an operational loop in which the central server compares the received payload (i.e., data broadcast by the wireless identity transmitter) to stored model payloads for all registered wireless identity transmitters until a match is found. In block 2164, the central server may select a next registered wireless identity transmitter. The central server may determine the next registered device based on the database of registered wireless identity transmitters and may sequentially iterate through each device during the operations in blocks 2164-2172. In block 2166, the central server may compare the received payload to the stored model payloads for the selected wireless identity transmitter based on the system configuration, such as the configuration set in the operations in block 2162. For example, based on the system variable set to 'current' with the operations in block 2162, the central server may compare the received payload to stored current model payloads for the selected wireless identity transmitter. Based on the form of the encrypted data of the received payload, the comparison may be a pattern-matching routine in which the central server compares the data of the model payloads against the received payload. For example, the central server may compare the bit values for the stored and received payloads.

In determination block 2168, the central server may determine whether any of the stored model payloads match the received payload. If none of the stored model payloads match the received payload (i.e., determination block 2168 = "No"), in determination block 2170, the central server may determine whether there is another registered wireless identity transmitter to evaluate. In other words, the central server may determine whether the stored model payloads of all registered wireless identity transmitters have been evaluated. If there is another registered wireless identity transmitter to evaluate (i.e., determination block 2170 = "Yes"), the central server may continue by selecting the next registered wireless identity transmitter with the operations in block 2164.

If the central server has evaluated the stored model payloads of all registered wireless identity transmitters (i.e., determination block 2170 = "No"), in block 2172, the central server may be configured to evaluate the received payload using stored, initial model payloads, such as the initial model payloads stored for each registered wireless identity transmitter at the time of the devices' registration. For example, the central server may set a system variable indicating the central server should compare the received payload to stored, initial model payloads for evaluated registered wireless identity transmitters (e.g., the system variable may be set to 'initial'). The operational loop may then continue with the operations in blocks 2164-2168 wherein the central server may select each registered wireless identity transmitter and compare the initial model payloads of that selected device to the received payload.

If the central server does find a match between the received payload and any of the stored model payloads (current or initial) of a registered wireless identity transmitter (i.e., determination block 2168 = "Yes"), in block 2174, the central server may determine a wireless identity transmitter identity based on the match. In other words, the central server may identify the wireless identity transmitter corresponding to the received payload based on the identification information (e.g., *deviceID*) stored in relation to the matching stored model payload. In block 2176, the central server may update the database with the identified wireless identity transmitter's counter based on the received payload. Based on the database record corresponding to the matching stored model payload, the central server may determine the derivative counter value corresponding to the received payload and may update the stored counter value to represent the derivative counter value, thus syncing the identified wireless identity transmitter's counter and the central server counter. In an embodiment, the central server may also store in the database the central server counter (or time) at which the central server received the received payload.

In an embodiment, the central server may maintain a list (or data table) of recently received messages and the corresponding wireless identity transmitter identification. For example, the central server may record within a data table the *deviceID* and payload information for messages received within a certain period. The central server may compare any subsequently received payload to the data table to determine whether the subsequently received payload is redundant based on recently received payloads from the same wireless identity transmitter. For example, a subsequently received payload may represent a certain counter value from a particular wireless identity transmitter that was already received and processed by the central server a few minutes ago. This may expedite the method 2150 process and decrease search times for the operations in blocks 2164-2172. In an embodiment, the central server may expunge (or clear) the data table of recently identified payloads and wireless identity transmitters and may schedule the clearing operations similarly as described in block 2176 (e.g., the recent data table may be cleaned every time the counter time period is determined to be expired).

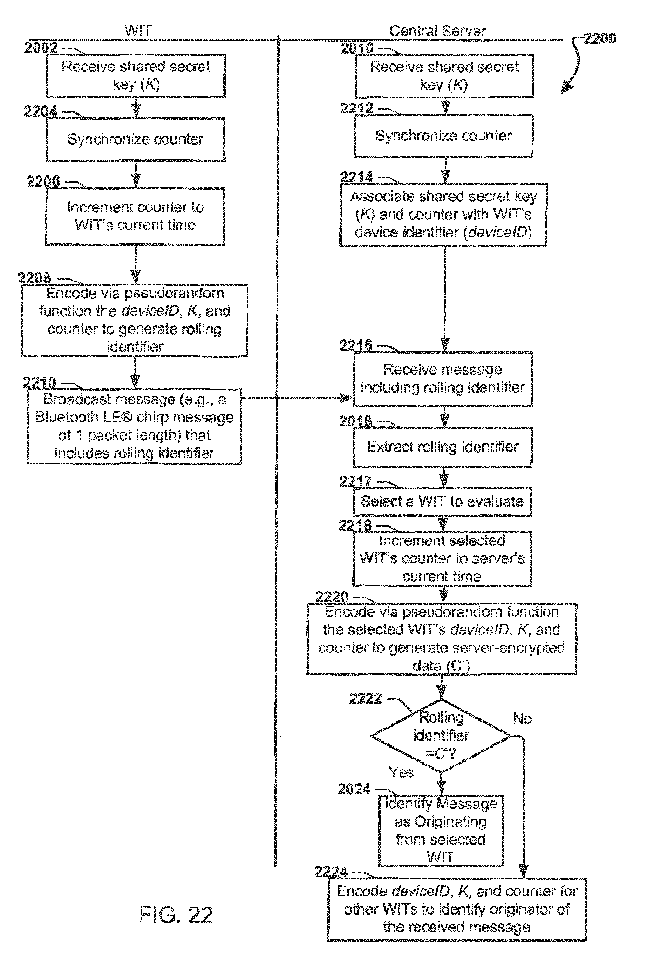

FIG. 22 illustrates another embodiment method 2200 for a central server to identify a wireless identity transmitter indicated by encrypted data within a message broadcast by the wireless identity transmitter. In the operations of the method 2200, counter values may never be included in broadcast messages to increase the security with which wireless identity transmitters transmit their identities. For example, as counter values may differ among different wireless identity transmitters, an attacker with the ability to capture a broadcast message may be able to easily predict values within future broadcast messages from the wireless identity transmitter. However, without counter data transmitted in the clear, nefarious snoopers may be better thwarted from following broadcasts from a particular wireless identity transmitter.

In block 2002, the wireless identity transmitter may receive a shared secret key (i.e., "*K*"). For example, each wireless identity transmitter may be pre-provisioned with a per-device shared secret key which is associated with the wireless identity transmitter's unique device identifier (or *deviceID*) at the central server. In block 2204, the wireless identity transmitter may synchronize a counter. The counter may be synchronized with the central server upon registration of the wireless identity transmitter at the central server. The synchronized counter value may also be associated with the *deviceID* and *K* in a data table stored in the central server (e.g., a table with stored pairs of IDs and *K* values).

In block 2206, the wireless identity transmitter may increment the counter to the wireless identity transmitter's current device time. For example, the counter may be incremented after a predefined number of seconds (e.g., one second, one hour, etc.). As another example, every 3600 seconds the wireless identity transmitter may increment the counter by one value. In this manner, the counter value may change to the current time as counted by the oscillator on the wireless identity transmitter. In block 2208, the wireless identity transmitter may encode via a pseudo-random function the device identifier (i.e., *deviceID*), the shared secret key (i.e., *K*), and the counter to generate a rolling identifier. In this manner, the rolling identifier may be generated as the counter value changes. In an embodiment, the pseudo-random function may be a polynomial time computable function with a seed ('*s*') and input variable ('*x*'), such that when the seed is randomly selected and not known to observers, the pseudo-random function (e.g., PRF(*s*, *x*)) may be computationally indistinguishable from a random function defined on the same domain with output to the same range. For example, the Keyed-Hash Message Authentication Code (HMAC) or the Cipher-Based Message Authentication Code (CMAC) may be used as the pseudo-random function.

In block 2210, the wireless identity transmitter may broadcast a message (e.g., a Bluetooth® LE chirp message of 1 packet length) that includes the rolling identifier. In an embodiment, the broadcast message (or the payload of the broadcast message) may be represented by the following equation:

$$\text{Payload} = \text{MSB\_N}(\text{PRF}(K, (deviceID \parallel t)))$$

where *t* is the value of the wireless identity transmitter's counter, '‖' means concatenation, 'PRF ()' is the pseudo-random function, and 'MSB_N()' means the 'N' most significant bits (e.g., 80 bits). In other words, the wireless identity transmitter may intentionally obscure (or skew) the device identifier and the counter information, thus the broadcast message's payload may not include either the device identifier or the counter information in the clear.

In block 2010, the central server may receive the shared secret key (*K*). In block 2212, the central server may synchronize a counter. For example, the counter may be set to represent a value included in a previous message related to the wireless identity transmitter, such as a registration message. In block 2214, the central server may associate the shared secret key (i.e., *K*) and counter with the wireless identity transmitter's device identifier (i.e., *deviceID*). For example, the central server may store the *deviceID*, *K*, and counter in a data table of registered devices (e.g., in a tuple record of a database). In an embodiment, the central server may also store an indicator or flag indicating whether each wireless identity transmitter has been registered or activated.

In block 2216, the central server may receive a message including the rolling identifier. For example, the received message may be a sighting message from a proximity broadcast receiver that includes the rolling identifier broadcast by the wireless identity transmitter with the operations in block 2210. In block 2018, the central server may extract the rolling identifier, such as by parsing the received message to identify the payload of the rolling identifier.

In block 2019, the central server may select a wireless identity transmitter (i.e., selected wireless identity transmitter) to evaluate. In other words, the central server may obtain a stored *deviceID*, *K*, and counter for a registered wireless identity transmitter known to the central server, such as from the database or data table storing such information for all registered wireless identity transmitters. In block 2218, the central server may increment the selected wireless identity transmitter's counter to the server's current time. In an embodiment, the central server may then increment the stored counter value to account for the time that has elapsed since the stored counter value was synchronized. As an example, the central server may compare the time of receipt of the message with the operations in block 2216 to the central server's current time (e.g., via a central server clock or time mechanism). Based on a known periodicity that wireless identity transmitters may increment their individual counters (e.g., once every hour), the central server may increment the selected counter value to account for the time difference.

In an embodiment, the central server may only increment the selected counter an amount that represents the time between broadcasts by a wireless identity transmitter. In other words, the central server may not increment the selected counter to include the time between receiving the message within the operations in block 2216 and the time a proximity broadcast receiver received the broadcast message. For example, the proximity broadcast receiver may have buffered broadcast messages before relaying sighting messages to the central server. The central server may calculate this time difference based on metadata within the message received with the operations in block 2216. For example, a sighting message from a proximity broadcast receiver may indicate when a broadcast message was received. Thus, the amount the selected counter is incremented may be based on when the proximity broadcast receiver actually received the broadcast message and not when the message from the proximity broadcast receiver was received by the central server.

In block 2220, the central server may encode via a pseudo-random function the selected wireless identity transmitter's device identifier, secret key, and counter to generate a server-encrypted data (i.e., *C'*). The pseudo-random function may be the same pseudo-random function utilized in the operations in block 2208. In an embodiment, the generated server-encrypted data may be represented by the following equation:

$$C' = \text{MSB\_N}(\text{PRF}(sel\_K, (sel\_deviceID \parallel sel\_t)))),$$

where *sel_K* is the value of the selected wireless identity transmitter's secret key, *sel*_deviceID is the value of the selected wireless identity transmitter's unique device identifier, *sel_t* is the value of the selected wireless identity transmitter's counter, '‖' means concatenation, 'PRF ()' is the pseudo-random function, and 'MSB_N()' means the 'N' most significant bits (e.g., 60 bits, 74 bits, 80 bits, etc.).

In determination block 2222, the central server may determine whether the generated server-encrypted data (*C'*) is the same as the received rolling identifier. In other words, the central server may compare the received rolling identifier to the generated server-encrypted data to determine whether they match. If the rolling identifier and the generated server-encrypted data match (i.e., determination block 2222 = "Yes"), in block 2024 the central server may identify the received message as originating from the selected wireless identity transmitter (e.g., corresponding to the selected wireless identity transmitter's unique identifier).

If the rolling identifier and the generated data do not match (i.e., determination block 2222 = "No"), in block 2224 the central server may encode device identifiers, secret keys, and counters for other wireless identity transmitters to identify the originator of the received message. In other words, the central server may select the next stored *deviceID*, counter, and *K* group from the database, increment that selected counter value, encode the selected *deviceID*, counter, and *K*, and compare the generated encoded data to the received rolling identifier until a match is found and the identity of the originator of the rolling identifier in the received message is known.

In an embodiment, when the wireless identity transmitter's battery has been removed and re-installed, the latest counter value may be persisted in the non-volatile memory of the wireless identity transmitter, so that the counter value can be read back from the non-volatile memory of the wireless identity transmitter when the battery is removed and then put back in. Alternatively, if no non-volatile memory is available or is not used, the wireless identity transmitter may fall back to the initial counter value after a battery re-installation. The central server may be required to be modified slightly to accommodate such a "counter synchronization". More specifically, in addition to trying values greater than the largest counter value for the pre-computed counter (or nonce) list, the central server may also try values, such as (counter+$i$) where $i$=0, ..., $n$, when a "counter synchronization" is performed. In this case, a wireless identity transmitter user may need to be informed that the battery needs to be re-installed when "counter synchronization" fails multiple times.

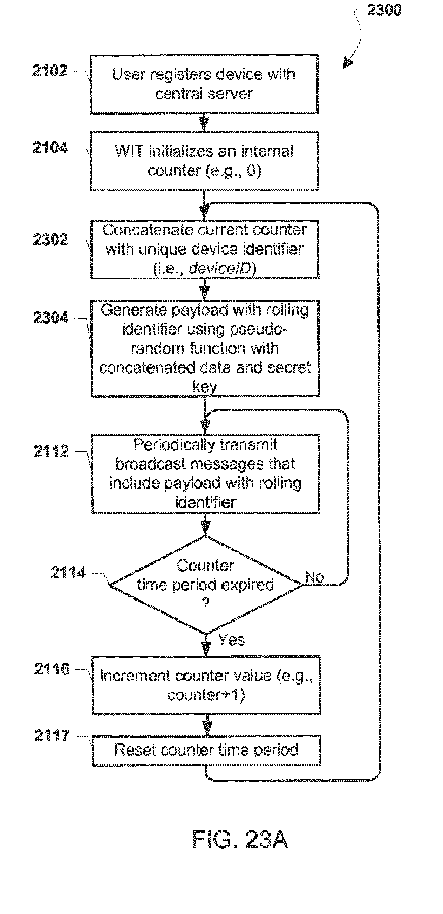

FIG. 23A illustrates an embodiment method 2300 for a wireless identity transmitter employing a pseudo-random function to generate a rolling identifier for broadcasting. The operations in the method 2300 may be similar to the embodiment method 2100 described above. However, instead of encrypting data, such as a counter value, with an AES-CTR encryption algorithm, the method 2300 may generate payloads based on the application of a pseudo-random function. As described above, the pseudo-random function and secret keys for each wireless identity transmitter may be known to both the corresponding wireless identity transmitter and a central server so that both may generate similar payloads based on similar data.

In block 2102, a user of the wireless identity transmitter may register the device with the central server. In block 2104, the wireless identity transmitter may initialize an internal counter, such as by setting the counter to a zero value. In block 2302, the wireless identity transmitter may concatenate the current counter with the wireless identity transmitter's unique device identifier (i.e., *deviceID*). In block 2304, the wireless identity transmitter may generate a payload with a rolling identifier using pseudo-random function with the concatenated data and the secret key. For example, the pseudo-random function may take as inputs the concatenated data (i.e., the *deviceID* + counter) and may use the secret key for the wireless identity transmitter as a randomness seed variable. The payload with the rolling identifier may include the output data from the pseudo-random function. In an embodiment, the payload with the rolling identifier may also include in-the-clear information regarding other aspects of the wireless identity transmitter. For example, the wireless identity transmitter may append to the payload several bits (e.g., 4 bits) of information which describe the battery status of the wireless identity transmitter. In an embodiment, the pseudo-random function may be a polynomial time computable function that is computationally indistinguishable from a random function defined on the same domain with output to the same range as the pseudo-random function. For example, the keyed hash Message Authentication Code (HMAC) or the Cipher-based Message Authentication Code (CMAC) may be used as the pseudo-random function. In an embodiment, the wireless identity transmitter may or may not perform a truncation operation to the generated rolling identifier payload. For example, the payload with the rolling identifier may be the result of performing a most-significant-bit operation on the results of the pseudo-random function.

In block 2112, the wireless identity transmitter may periodically transmit broadcast messages that include the payload with the rolling identifier, such as by broadcasting via short-range wireless communication techniques as described above. In determination block 2114, the wireless identity transmitter may determine whether a predefined counter time period has expired. If the counter time period has not expired (i.e., determination block 2114 = "No"), the wireless identity transmitter may continue with the operations in block 2112. If the device determines the counter time period has expired (i.e., determination block 2114 = "Yes"), in block 2116 the wireless identity transmitter may increment the counter value, such as by adding 1. In block 2117, the wireless identity transmitter may reset the counter time period, and may continue with the operations in block 2302.

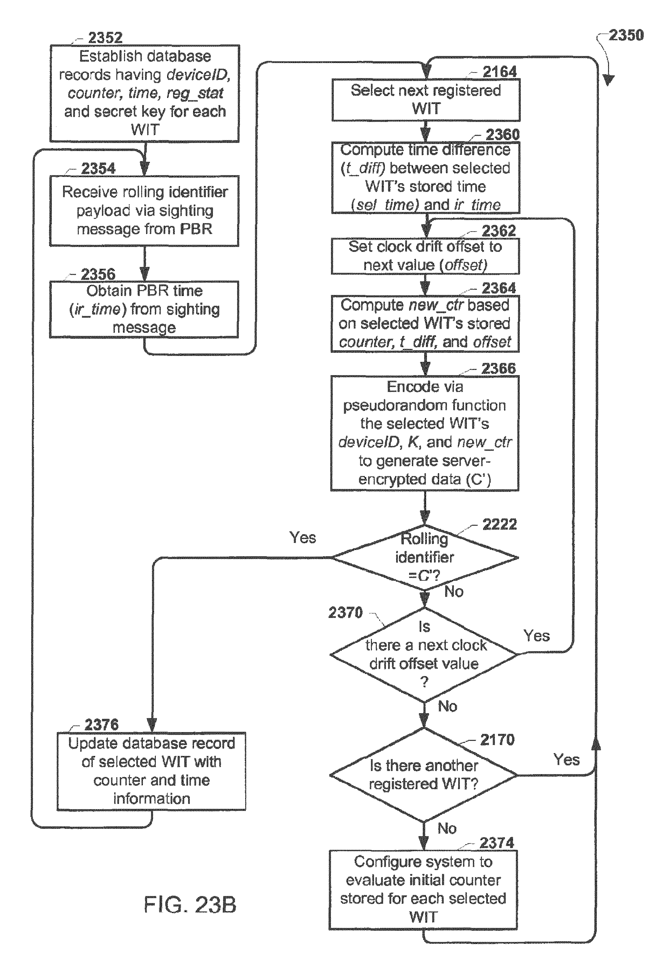

FIG. 23B illustrates an embodiment method 2350 for a central server responding to received messages containing pseudo-random function rolling identifiers. The embodiment method 2350 operations may be similar to the operations described above with reference to FIG. 21B, with the exception that the central server may compare outputs of a pseudo-random function with time-synchronized information stored in the central server to match payloads in messages received from wireless identity transmitters.

In block 2352, the central server may establish database records having device identifier (i.e., *deviceID*), counter, time, registration status (i.e., '*reg_stat*'), and secret key (i.e., '*K*') information for each wireless identity transmitter in a system. The time may indicate the last time the central server received a message corresponding to a particular wireless identity transmitter (e.g., a sighting message relaying a broadcast message), or in other words, the central server clock value at the moment when the counter value for a wireless identity transmitter was received/ recorded in the database. It may be assumed that the period between when a wireless identity transmitter broadcasts a message with a rolling identifier (or rolling identifier payload) and when the central server receives the rolling identifier is very short. Thus, the stored counter and time values may be assumed to create a roughly accurate clock status of a wireless identity transmitter.

Additionally, once a wireless identity transmitter transmits registration information, the central server may indicate a valid registration by setting a registration flag in the database for the wireless identity transmitter (e.g. '*reg_stat*'). The central server may query the database for all wireless identity transmitter records where the *reg_stat* indicates a valid registration has been conducted and may create data tables that include only registered wireless identity transmitters based on the *reg_stat* values.

In block 2354, the central server may receive a rolling identifier payload via a sighting message from a proximity broadcast receiver. The sighting message may have time information appended to the payload that describes the time at which the proximity broadcast receiver encountered the payload via a broadcast message from the respective wireless identity transmitter. For example, a payload may be received by a smartphone proximity broadcast receiver which in turn may append its own system clock reading to the payload information and transmit the data to the central server as a sighting message. The time measurement provided by the proximity broadcast receiver may be approximately synchronized with the central server system time. In an embodiment, the proximity broadcast receiver may append other additional information to the sighting message, such as location information (e.g., GPS coordinates) of the proximity broadcast receiver. In block 2356, the central server may obtain a proximity broadcast receiver time (i.e., '*ir_time*') from the sighting message, such as indicated within the sighting message. For example, the central server may parse the sighting message and extract a time value indicating when the proximity broadcast receiver received a broadcast message that corresponds to the rolling identifier payload.

In blocks 2164-2374, the central server may perform an operational loop in which the central server may evaluate all registered wireless identity transmitters stored within the central server's database to find a device record that matches the received rolling identifier payload. In block 2164, the central server may select a next registered wireless identity transmitter. For example, the central server may iteratively select the next wireless identity transmitter represented in a data table of all wireless identity transmitters that have the *reg_stat* variable set to indicate registration occurred. The central server may sequentially iterate through such a data table or list for each device during the operations in blocks 2164-2374. In an embodiment, the central server may access a stored database record corresponding to the selected registered wireless identity transmitter that contains the current values for the information established with registration operations in block 2352.

In block 2360, the central server may compute the time difference (i.e., '*t_diff*') between the time indicated in the sighting message (*ir_time*) and the time stored within the database record of the selected registered wireless identity transmitter (i.e., '*sel_time*'). For example, the *t_diff* value may be a non-zero or a zero value. This time difference may be a measure of the expected elapsed time between instances of the central server receiving payloads from the selected wireless identity transmitter.

In block 2362, the central server may set a clock drift offset (i.e., '*offset*') to a next value. In general, the central server may account for possible wireless identity transmitter clock drift (e.g., inaccurate device system clock readings) by setting the clock drift offset value. The clock drift offset values may represent offsets that, when applied to counter values, may represent counters lower, the same, or higher than an expected counter value. In other words, the clock drift offsets may represent time before, during, or after the time represented by the current counter for the selected registered device. The clock drift offset value may be one of a sequence of clock drift offset values. In an embodiment, the clock drift offset value may be 0. In an embodiment, possible clock drift offset values may include numbers within a set {-N, ..., -1, 0, 1, ..., N}, where N is an arbitrary number.

In block 2364, the central server may compute an expected counter value (i.e., '*new_ctr*') using the selected wireless identity transmitter's stored counter value, the computed time difference (i.e., *t_diff*) and the set offset value (i.e., *offset*). As described above, the counter may be stored within the selected registered wireless identity transmitter database record. For example, the central server may calculate *new_ctr* by adding the clock drift offset value to the sum of the *t_diff* value and the stored counter value.

In determination block 2366, the central server may encode via a pseudo-random function the selected wireless identity transmitter's device identifier, secret key, and computed counter (i.e., *new_ctr*) to generate a server-encrypted data (i.e., C'). The pseudo-random function may be the same pseudo-random function utilized by a wireless identity transmitter as described above with reference to FIG. 23A.

In determination block 2222, the central server may determine whether the generated server-encrypted data (*C'*) is the same as the received rolling identifier. In other words, the central server may compare the received rolling identifier to the generated server-encrypted data to determine whether they match. If the rolling identifier and the generated server-encrypted data match (i.e., determination block 2222 = "Yes"), the central server may identify the received message as originating from the selected wireless identity transmitter (e.g., corresponding to the selected wireless identity transmitter's unique identifier). In an embodiment, the secret key ($K$) may be the seed value of the pseudo-random function. In an embodiment, the central server may concatenate the selected wireless identity transmitter's *deviceID* and the computed *neu_ctr* value and provide that concatenated data to the pseudo-random function. The pseudo-random function may return (or output) encrypted data having a similar structure as received rolling identifier payload.

If the rolling identifier, such as received in the sighting message, and the generated server-encrypted data (i.e., C') match (i.e., determination block 2222 = "Yes"), in block 1276 the central server may update the database record of the selected wireless identity transmitter with the counter and time information, such as the *new_ctr* and the *ir_time*. For example, the central server may update the database record's time value to represent the time of receipt of the payload within the proximity broadcast receiver (e.g., *ir_time*) and may also update the stored counter value to represent the *new_ctr* value. The central server may continue with the operations in block 2354.

If the rolling identifier, such as received in the sighting message, and the generated server-encrypted data (i.e., C') do not match (i.e., determination block 2222 = "No"), the central server may determine whether there is a next clock drift offset value in determination block 2370. In other words, the central server may determine whether *new_ctr* values have been computed using all possible clock drift offset values (e.g., -1, 0, 1, etc.). If there is a next clock drift offset value (i.e., determination block 2370 = "Yes"), the central server may continue with the operations in block 2362. However, if there is not a next clock drift offset value (i.e., determination block 2370 = "No"), in determination block 2170, the central server may determine whether there is another registered wireless identity transmitter to evaluate. If there is another registered wireless identity transmitter to evaluate (i.e., determination block 2170 = "Yes"), the central server may continue with the operations in block 2164. However, if there is no other registered wireless identity transmitter (i.e., determination block 2170 = "No"), in block 2374 the central server may configure the system to evaluate initial counter values stored for each registered wireless identity transmitter. In an embodiment, the registration database described above may further include data that represents the initial counter value corresponding to each registered wireless identity transmitter. This initial counter value may be used if/when the various wireless identity transmitters are rebooted or otherwise reset their counters. For example, a wireless identity transmitter may operate and deliver payloads describing non-initial counters for a period of time before resetting its internal counter due to battery replacement. In such a scenario, the wireless identity transmitter may broadcast messages that include rolling identifier payloads based on reset counter information.

In another embodiment, the operations in block 2374 may be performed for individual registered selected devices during the operational loop in blocks 2362-2370, wherein the stored counter value in block 2364 may be replaced with the initial stored counter value. For example, once the central server determines a selected registered wireless identity transmitter's stored counter value with the various clock drift offset values cannot be used to generate encrypted data that matches the received rolling identifier payload, the central server may evaluate the initial stored counter value of the selected wireless identity transmitter before selecting the next registered wireless identity transmitter.

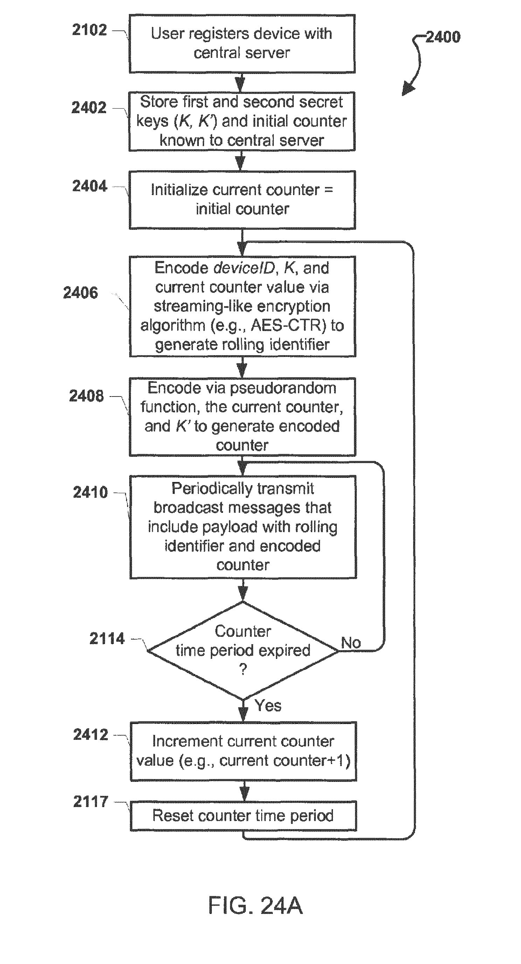

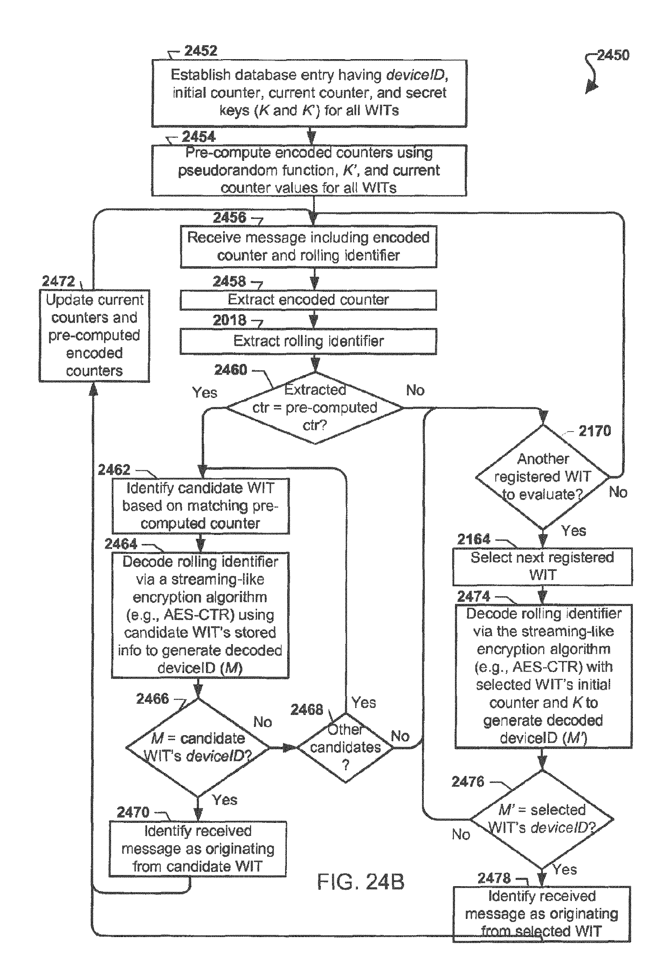

FIG. 24A illustrates an embodiment method 2400 for a wireless identity transmitter generating and broadcasting messages with rolling identifiers and encoded counters. The method 2400 may have operations performed by a wireless identity transmitter that are similar to those described above with reference to FIGS. 20, 21A, 22, and 23A. However, the method 2400 may involve broadcasting messages that include a rolling identifier (i.e., an encoded device identifier) as well as an encoded counter that may be evaluated separately by the central server with the operations described below with reference to FIG. 24B. In this manner, the wireless identity transmitter's counter value (or nonce) may not be sent in the clear in the payload of the broadcast message.

In block 2102, a user of the wireless identity transmitter may register the device with the central server. For example, the wireless identity transmitter may provide the unique device identifier (i.e., *deviceID*) to a central server for storage in a database of registered wireless identity transmitters. In block 2402, the wireless identity transmitter may store a first secret key (K) and a second secret key (K') and an initial counter that are known to the central server. For example, these values may be shared between the central server and the wireless identity transmitter during registration operations described in this disclosure. In block 2404, the wireless identity transmitter may initialize a current counter by setting it to the value of the initial counter value.

Similar to as described above with reference to FIG. 20, in block 2406, the wireless identity transmitter may encode the device identifier (*deviceID*), the first secret key (K), and the current counter via a streaming-like encryption algorithm (e.g., AES-CTR) to generate a rolling identifier. In block 2408, the wireless identity transmitter may encode via a pseudo-random function, the current counter, and the second secret key (K') to generate an encoded counter (or nonce). In an embodiment, the encoded counter may be represented by the following equation:

$$\text{Encoded counter} = \text{MSB\_M}(\text{PRF}(K', t)),$$

where 'K'' is a per-device second secret key (usually different from the first per-device secret key $K$), '$t$' is the current counter, PRF ()' is the pseudo-random function, and 'MSB_M()' means the 'M' most significant bits (e.g., 20 bits).

In block 2410, the wireless identity transmitter may periodically transmit broadcast messages that include the payload with the rolling identifier and the encoded counter. In determination block 2114, the wireless identity transmitter may determine whether a predefined counter time period has expired. If the counter time period has not expired (i.e., determination block 2114 = "No"), the wireless identity transmitter may continue with the operations in block 2410. If the device determines the counter time period has expired (i.e., determination block 2114 = "Yes"), in block 2412 the wireless identity transmitter may increment the current counter value, such as by adding 1. In block 2117, the wireless identity transmitter may reset the counter time period and may continue with the operations in block 2406.

FIG. 24B illustrates an embodiment method 2450 for a central server receiving and handling messages including rolling identifiers and encoded counters. The central server may perform the operations of method 2450 in combination or response to a wireless identity transmitter performing the method 2400 described above. The method may include two passes: a first pass wherein the central server attempts to identify a wireless identity transmitter based on an encoded counter within a received message (e.g., a sighting message), and a second pass wherein the central server attempts the identification based on a rolling identifier to within the received message

In block 2452, the central server may establish a database entry having a device identifier (i.e., *deviceID*), initial counter, current counter, and secret keys ($K$ and $K'$) for all wireless identity transmitters in the system. The current counter values may be the same as the initial counters at the time of registration of wireless identity transmitters. In block 2454, the central server may pre-compute encoded counters using a pseudo-random function, the second secret key (K'), and current counter values for all wireless identity transmitters. For example, the central server may generate a plurality of encoded counter values for each registered wireless identity transmitter, such as one based on the current counter value, another based on a value one larger than the current counter value, etc. In an embodiment, the central server may pre-compute 24 encoded counters for each registered wireless identity transmitter. In an embodiment, the central server may store a separate list (or data table) of the pre-computed encoded counters for all registered wireless identity transmitters that also includes the device identifiers associated with each stored pre-computed encoded counter.

In block 2456, the central server may receive a message including an encoded counter and a rolling identifier, such as within a sighting message transmitted by a proximity broadcast receiver. In block 2458, the central server may extract an encoded counter from the received message, and in block 2018 may extract a rolling identifier from the received message. In determination block 2460, the central server may determine whether the extracted counter (or '*ctr*') matches any of the pre-computed counters. For example, the central server may compare the encoded counter value extracted from the received message to the plurality of central server-encoded counter values for each registered wireless identity transmitter to identify any matches.

If the extracted counter matches a pre-computed counter (i.e., determination block 2460 = "Yes"), in block 2462 the central server may identity a candidate wireless identity transmitter based on the matching pre-computed counter. In other words, the central server may identity the candidate as the *deviceID* stored in relation to the pre-computed counter in a data table in the central server. In block 2464, the central server may decode the rolling identifier via a streaming-like encryption algorithm (e.g., the same AES-CTR wireless identity transmitters use when performing the operations in FIG. 24A) using the candidate wireless identity transmitter's stored information (e.g., *deviceID,* secret key, etc.) to find a decoded device identifier (or *M*). In determination block 2466, the central server may determine whether the decoded device identifier (*M*) matches the candidate wireless identity transmitter's *deviceID*. Such a match may enable the central server to identify the wireless identity transmitter associated with that received rolling identifier without decoding the rolling identifier or the encoded counter value.

If the *deviceID* and decoded identifier (*M*) match (i.e., determination block 2466 = "Yes"), in block 2470 the central server may identity the received message as originating from the candidate wireless identity transmitter. In block 2472, the central server may update current counters and pre-computed encoded counters. For example, the database entry for the wireless identity transmitter identified as the originator of the received message may be updated with new current counter information as well as new pre-computed encoded counters. Additionally, any stored lists of pre-computed encoded counters may have older pre-computed encoded counters removed at the same time newly computed encoded counters corresponding to the identified wireless identity transmitter are added to the list.

In another embodiment, if the wireless identity transmitter identified as the originator of the received message is indicated in the central server's database as "not activated" (i.e., a flag is not set), then the central server may also adjust the database to reflect that the identified wireless identity transmitter is now activated (e.g., set a flag). The central server may then continue with the operations in block 2456.

If the *deviceID* and decoded identifier (*M*) do not match (i.e., determination block 2466 = "No"), in determination block 2468, the central server may determine whether there are other candidates, such as other registered wireless identity transmitters that have not been evaluated by the central server. If there are other candidates (i.e., determination block 2468 = "Yes"), the central server may continue with the operations in block 2462, such as by identifying the next wireless identity transmitter to evaluate regarding the rolling identifier.

If there are no other candidates (i.e., determination block 2468 = "No"), or if the extracted counter does not match the pre-computed counter (i.e., determination block 2460 = "No"), the central server may attempt to identify the originator of the received message by comparing the extracted rolling identifier to information associated with all registered wireless identity transmitters in the system. Thus, in determination block 2170 the central server may determine whether there is another registered wireless identity transmitter to evaluate. For example, the central server may iteratively use information of all registered wireless identity transmitters. If there is not another (i.e., determination block 2170 = "No"), the central server may continue with the operations in block 2456.

If there is another (i.e., determination block 2170 = "Yes"), in block 2164 the central server may select the next registered wireless identity transmitter. In block 2474, the central server may decode the rolling identifier via the streaming-like encryption algorithm (e.g., AES-CTR) with the selected wireless identity transmitter's initial counter and first secret key ($K$) to find a decoded device identifier ($M'$), similar to as described above with reference to FIG. 20. In determination block 2476, the central server may determine whether the decoded device identifier ($M'$) matches the selected wireless identity transmitter's *deviceID*. If the identifiers do not match (i.e., determination block 2476 = "No"), the central server may continue with the operations in determination block 2170. However, if the identifiers match (i.e., determination block 2476 = "Yes"), in block 2478 the central server may identify the received messages as originating from the selected wireless identity transmitter, and may continue with the operations in block 2472.

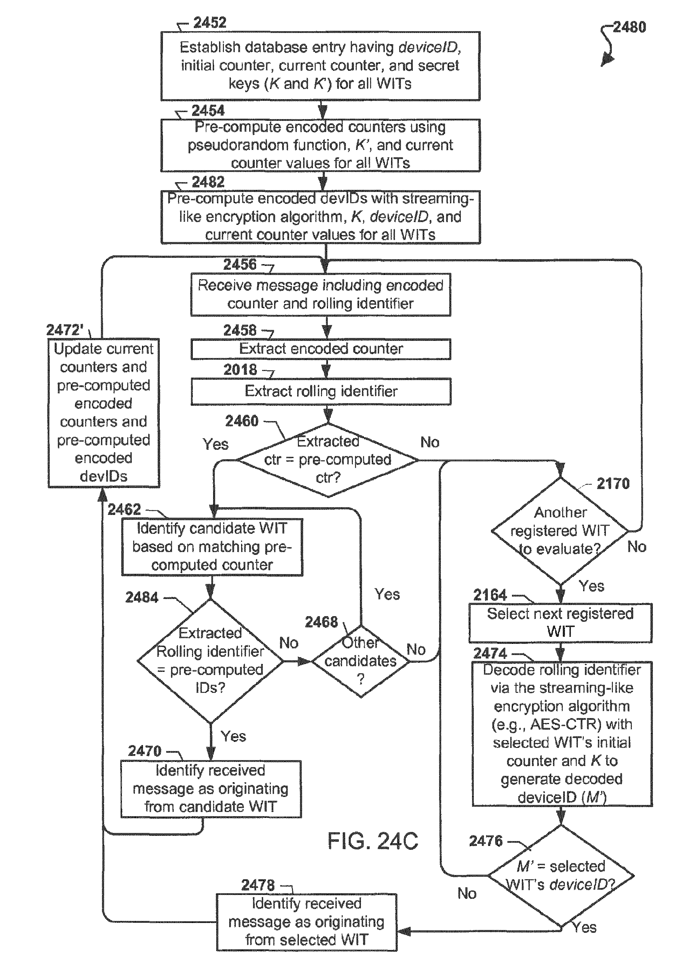

FIG. 24C illustrates an embodiment method 2480 for a central server receiving and handling messages including rolling identifiers and encoded counters. The operations of method 2480 are similar to the operations of method 2450, except that rather than perform a two pass process as discussed above in FIG. 24B, the central server may perform method 2480 as a one pass process. In particular, the central server may generate both a plurality of central server encrypted counter values for each registered wireless identity transmitter and a plurality of central server-encrypted device identifiers (i.e., *deviceID*). The central server may use the data stored in the database for each wireless identity transmitter (e.g., *deviceID*, $K$, $K'$, initial counter, and current counter) and the plurality of pre-computed counter values for each device to encode a plurality of central server encrypted counter values and a plurality of server encrypted device IDs. When the central server receives the sighting message including the rolling identifier and encoded counter, the central server may compare the plurality of central server encrypted counter values and the plurality of central server encoded device IDs to the rolling identifier and encoded counters obtained from the received sighting message. The device identifier of the wireless identity transmitter that originated the rolling identifier may then be identified based entirely on matching the pre-computed counter values and device identifiers without requiring actual decoding of the rolling identifier itself.

In block 2452, the central server may establish a database entry having a device identifier (i.e., *deviceID*), initial counter, current counter, and secret keys ($K$ and $K'$) for all wireless identity transmitters in the system. In block 2454, the central server may pre-compute encoded counters using a pseudo-random function, the second secret key ($K'$), and current counter values for all wireless identity transmitters. In block 2482, the central server may pre-compute encoded device identifiers with a streaming-like encryption algorithm (e.g., AES-CTR block cipher), the device identifier, current counter, and the first secret key ($K$) for all wireless identity transmitters. In other words, the central server may generate a plurality of encoded device identifiers for each registered wireless identity transmitter, such as by using the current counter and predefined offset counter values, or alternatively, only a single encoded device identifier based only on the current counter stored within the central server.

In block 2456, the central server may receive a message including an encoded counter and a rolling identifier, such as within a sighting message transmitted by a proximity broadcast receiver. In block 2458, the central server may extract an encoded counter from the received message, and in block 2018 may extract a rolling identifier from the received message. In determination block 2460, the central server may determine whether the extracted counter (or '$ctr$') matches any of the pre-computed counters. If the extracted counter matches a pre-computed counter (i.e., determination block 2460 = "Yes"), in block 2462 the central server may identify a candidate wireless identity transmitter based on the matching pre-computed counter. In determination block 2484, the central server may determine whether the extracted rolling identifier matches any of the pre-computed identifiers, such as the pre-computing device identifiers for the candidate wireless identity transmitter.

If the extracted rolling identifier does match any of the pre-computed identifiers for the candidate wireless identity transmitter (i.e., determination block 2484 = "Yes"), in block 2470 the central server may identity the received message as originating from the candidate wireless identity transmitter. In block 2472', the central server may update current counters and pre-computed encoded counters and pre-computed encoded device identifiers. For example, the database entry for the wireless identity transmitter identified as the originator of the received message may be updated with new current counter information as well as new pre-computed encoded counters and pre-computed encoded device identifiers. Additionally, any stored lists of pre-computed encoded counters may have older pre-computed encoded counters or encoded device identifiers removed at the same time newly computed encoded counters or device identifiers corresponding to the identified wireless identity transmitter are added to the list. In another embodiment, if the wireless identity transmitter identified as the originator of the received message is indicated in the central server's database as "not activated" (i.e., a flag is not set), then the central server may also adjust the database to reflect that the identified wireless identity transmitter is now activated (e.g., set a flag). The central server may then continue with the operations in block 2456.

If the extracted rolling identifier does not match any of the pre-computed identifiers for the candidate wireless identity transmitter (i.e., determination block 2484 = "No"), in determination block 2468, the central server may determine whether there are other candidates, such as other registered wireless identity transmitters that have not been evaluated by the central server. If there are other candidates (i.e., determination block 2468 = "Yes"), the central server may continue with the operations in block 2462, such as by identifying the next wireless identity transmitter to evaluate regarding the rolling identifier.

If there are no other candidates (i.e., determination block 2468 = "No"), or if the extracted counter does not match the pre-computed counter (i.e., determination block 2460 = "No"), the central server may attempt to identify the originator of the received message by comparing the extracted rolling identifier to information associated with all registered wireless identity transmitters in the system. Thus, in determination block 2170 the central server may determine whether there is another registered wireless identity transmitter to evaluate. For example, the central server may iteratively use information of all registered wireless identity transmitters. If there is not another (i.e., determination block 2170 = "No"), the central server may continue with the operations in block 2456.

If there is another (i.e., determination block 2170 = "Yes"), in block 2164 the central server may select the next registered wireless identity transmitter. In block 2474, the central server may decode the rolling identifier via the streaming-like encryption algorithm (e.g., AES-CTR) with the selected wireless identity transmitter's initial counter and first secret key ($K$) to find a decoded device identifier (M'). In determination block 2476, the central server may determine whether the decoded device identifier ($M'$) matches the selected wireless identity transmitter's *deviceID*. If the identifiers do not match (i.e., determination block 2476 = "No"), the central server may continue with the operations in determination block 2170. However, if the identifiers match (i.e., determination block 2476 = "Yes"), in block 2478 the central server may identify the received messages as originating from the selected wireless identity transmitter, and may continue with the operations in block 2472'.

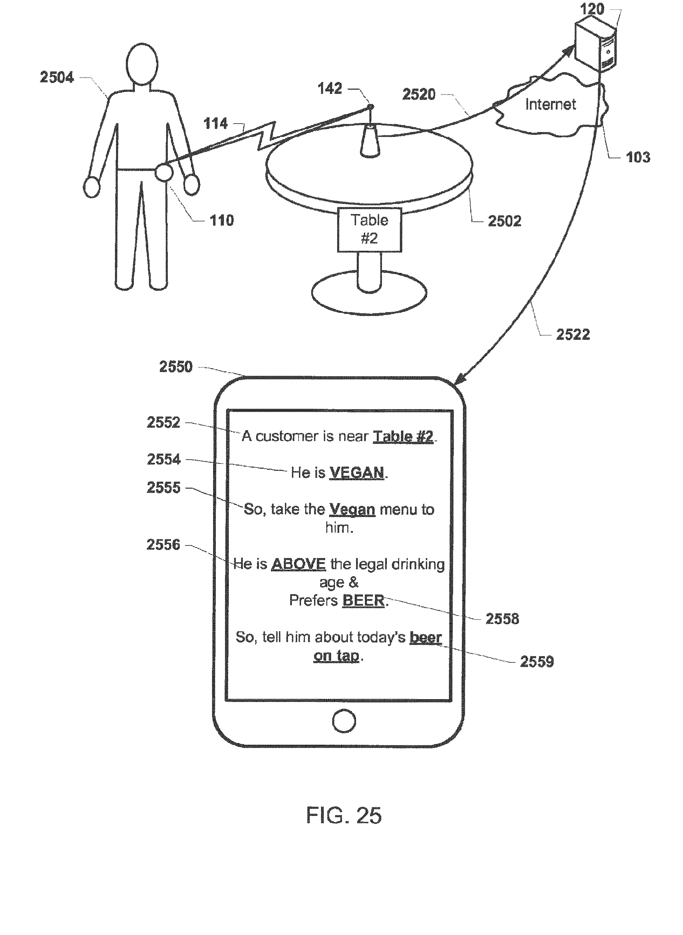

FIGS. 25A-32C describe profile information as used within various embodiments. In general, users registered with a central server (e.g., a party with a wireless identity transmitter, proximity broadcast receiver, or a wireless identity transceiver) may provide the central server with various information, such as during a registration procedure as described above. The information may be stored by the central server as data within user profiles (or accounts), and may include information about individual users, such as their preferences (e.g., food, drinks, restaurants, shops, products, etc.), demographic information (e.g., sex, age, region of residence, race, etc.), payment authentication information (e.g., signature samples, photos, account numbers, etc.), and other personal information

(e.g., medical information, financial institution memberships, etc.). The central server may update information within profiles based on subsequent input (e.g., editing information via a website connected to the central server) or behaviors indicated via sighting messages. For example, the central server may update a user's profile information to indicate purchase habits, travel routes, preferred items based on information within sighting messages corresponding to devices used by the user over a period of time.

The central server may store such profile information within databases or other structures and may also include descriptions, codes, tokens, tags, variables, or other indicators that describe the nature, topic, subject, or characteristics (referred to below as 'categories' or a 'category') of the various information. For example, the central server may store within a data table associated with a "Restaurants" category the names of a plurality of eating establishments that a user indicated were favorites of his/hers. As another example, the central server may store within a data table associated with a "Food" category the types of food (e.g., pizza, hotdogs, etc.), the brands of food products (e.g., "John's Cookies," "Soft Drink X," etc.), and the providers of food (e.g., "Store X") that a user indicated were favorites of his/hers. In other words, profiles may include information that may be categorized and identified as relevant to parties related to similar categories.

In various embodiments, the central server may transmit profile information stored within a profile (or account) of a registered user in response to receiving sighting messages corresponding to a device (e.g., wireless identity transmitter, wireless identity transceiver, mobile proximity broadcast receiver, etc.) associated with the user. For example, as a customer walks around carrying a wireless identity transmitter, a retail store's stationary proximity broadcast receivers may receive and relay a broadcast message, causing the central server to transmit relevant profile information. As another example, the central server may transmit relevant profile information in response to receiving sighting messages from mobile proximity broadcast receivers carried by customers within the retail store configured with stationary wireless identity transmitters. In various embodiments, registered services, such as government entities or retail stores, may employ both proximity broadcast receivers and wireless identity transmitters (or identity transceivers) to receive, relay, and process data from both users carrying wireless identity transmitters and/or mobile proximity broadcast receivers.

Such profile information may be identified as relevant by the central server when related to the device (e.g., proximity broadcast receiver, mobile proximity broadcast receiver, etc.) and/or associated registered service (e.g., merchants, marketing services, stores, users of mobile proximity broadcast receivers, etc.) that transmitted the corresponding sighting message. For example, upon receiving a sighting message from a proximity broadcast receiver within a restaurant, the central server may identify characteristics or categories associated with a proximity broadcast receiver (e.g., "Food," "Dining, "Restaurants," etc.) and match those identified categories to a user's profile to obtain relevant profile information to return to the proximity broadcast receiver. In this way, the central server may dynamically grant access to profile information that is relevant to those registered services within proximity of a user.

FIG. 25 illustrates an embodiment scenario in which relevant profile information is transmitted to a mobile device 2550 when a wireless identity transmitter 110 is within proximity of a proximity broadcast receiver 142. A user 2504 may carry the wireless identity transmitter 110 within proximity of a table 2502 (labeled in FIG. 25A as "Table #2), such as a bar table within a restaurant. The proximity broadcast receiver 142 (i.e., a stationary proximity broadcast receiver) may be collocated with the table 2502. For example, the proximity broadcast receiver 142 may be within, on top of, or underneath the table 2502. In other embodiments, the proximity broadcast receiver 142 may be in other places in the restaurant, such as at the entry way or at the bar. As the proximity broadcast receiver 142 may be within short-range wireless broadcast range (e.g., a few feet), the proximity broadcast receiver may receive a broadcast message that includes the wireless identity transmitter's rolling identifier via short-range wireless signals 114 from the wireless identity transmitter 110. As described above, in response to receiving the broadcast message, the proximity broadcast receiver 142 may transmit a sighting message via a connection 2520 to the Internet 103 and a central server 120. The central server 120 may process the sighting message as described above, such as decrypting/decoding the rolling identifier and identifying the wireless identity transmitter 110 as being within proximity of the proximity broadcast receiver 142. In various embodiments, the proximity broadcast receiver 142 may be configured to transmit sighting messages to the central server 120 via various types of connection 2520, such as wireless long-range communications via a cellular network, a WiFi connection to a local WiFi router, and/or a wired local area network connection.

The mobile device 2550 may also be within the restaurant for use by the wait staff, the restaurant manager, or other personnel. For example, the mobile device 2550 may be a tablet device used by a hostess at the front of the restaurant. The mobile device 2550 may receive a message from the central server via the Internet 103 through a wired or wireless communications connection 2522. The message may be received in response to the central server processing the sighting message transmitted by the proximity broadcast receiver 142, and thus may include relevant profile information corresponding to the user 2504. The mobile device 2550 may render the received information for use by the restaurant personnel to approach, accommodate, and otherwise provide effective and efficient customer service to the user 2504.

For illustration purposes, the mobile device 2550 may display various notices, statements, messages, or other information based on the received relevant profile information. In particular, the mobile device 2550 may render a first notice 2552 that the user (or customer) is near a particular table 2502, such as Table #2. A second rendered notice 2554 may indicate the customer is a vegan. A third rendered notice 2555 may be a command to the restaurant staff indicating that only vegan items on the restaurant's menu should be offered to the user 2504. The third rendered notice 2555 may be generated based on the profile information of the user 2504 by software executing on the mobile device 2550 or alternatively by the central server 120. A fourth rendered notice 2556 may indicate the user 2504 is above the legal drinking age and a fifth rendered notice 2558 may indicate the user 2504 has a preference for beer. A sixth rendered notice 2559 may include a command or other instructions to the restaurant staff that they should tell the user 2504 about the beers on tap based on the received profile information that indicates the user 2504 prefers beer. In various embodiments, notices rendered by the mobile device 2550 may include varying specificity and identifying information about the user 2504 based on privacy permissions or settings stored by the central server, as described below. For example, the mobile device 2550 may render a notice that includes the name of the user 2504 for use by wait staff in addressing the user 2504.

In another exemplary scenario, the proximity broadcast receiver 142 and mobile device 2550 may be used within a hospital. In such an implementation, the system may function as a virtual medical alert bracelet by causing the central server 120 to transmit medical information of the user 2504 for use by the mobile device 2550 accessed by emergency room staff (e.g., nurses, doctors, EMTs, etc.). For example, when the user 2504 enters an emergency room, an attendant carrying the mobile device 2550 may receive a list of medicine allergies and prior medical procedures related to the user 2504.

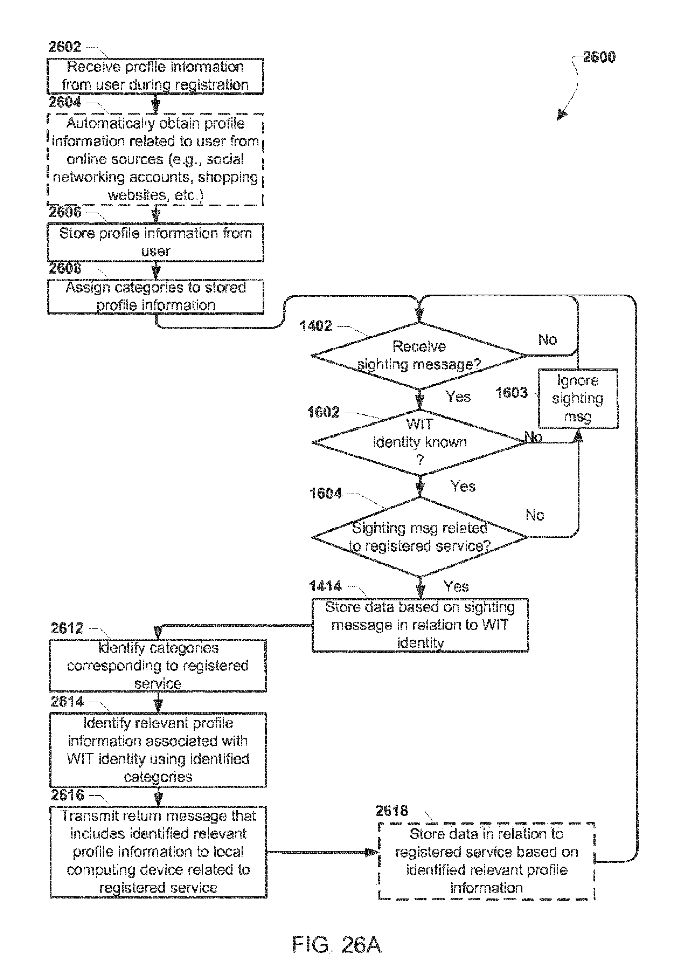

FIG. 26A is a process flow diagram illustrating an embodiment method 2600 for a central server to transmit relevant profile information to a computing device. In general, as users execute various activities and movements, their wireless identity transmitters may transmit broadcast messages received by proximate proximity broadcast receivers associated with registered services, such as stationary proximity broadcast receivers within a merchant's restaurant or retail store. The central server may receive sighting messages from these proximity broadcast receivers and identify any information within the users' profiles that may be relevant to the registered services. In other words, only profile information that is needed by the registered services to properly assist, approach, or otherwise engage with the users may be transmitted by the central server. For example, a computing device associated with a restaurant may never receive profile information describing a proximate user's favorite type of undergarments or high school alma mater.

In block 2602, the central server may receive profile information from a user during registration, such as during registration procedures described above. For example, the central server may receive profile information (e.g., dietary restrictions and clothing preferences) when a user registers a wireless identity transmitter via a web portal. In optional block 2604, the central server may automatically obtain profile information related to the user from online sources, such as social networking accounts and shopping websites and/or accounts. For example, the central server may access the user's Facebook account to get information about preferred topics or products, or alternatively access the user's shopping account on the Amazon website and gather purchase history information. In block 2606, the central server may store profile information from the user. For example, the profile information may be stored as a profile or as data entries within a database. In various embodiments, the profile may be associated with the unique identity (i.e., device identifier or deviceID) of the user's wireless identity transmitter. In other words, the central server may use the device identifier as a database key to access relevant stored profile information corresponding to the user. In block 2608, the central server may assign categories to the profile information. For example, food preference information may be assigned a "Food" category, medical data may be assigned a "Personal Info" category, and the names of the user's favorite shirts may be assigned a "Clothing" category.

As described above, in determination block 1402, the central server may determine whether a sighting message is received, such as a sighting message transmitted by a proximity broadcast receiver located within a retail store or restaurant. For example, as a user carrying a wireless identity transmitter walks near the entry of a diner, a proximity broadcast receiver located within the diner may receive broadcast messages from the wireless identity transmitter, create sighting messages based on the received broadcast messages, and transmit the sighting messages to the central server. In an embodiment, the sighting message may also contain indicators of attractions, incentives, point-of-sale devices, and/or products within proximity of the proximity broadcast receiver transmitting the sighting message. For example, a proximity broadcast receiver may be configured to indicate within sighting messages that it is stationed near a wait staff desk, a bar, a cash register, or a 'returns' area in a department store. If the central server does not receive a sighting message (i.e., determination block 1402 = "No"), the central server may continue with the operations in determination block 1402.

However, if the central server does receive a sighting message (i.e., determination block 1402 = "Yes"), in determination block 1602 the central server may determine whether a wireless identity transmitter identity is known based on the received sighting message. The central server may detect identification information related to the broadcast message within the sighting message, such as by parsing the sighting message, decrypting or decoding identification information related to a wireless identity transmitter (i.e., a rolling identifier), and matching the identification information to a registered user or registered wireless identity transmitter. For example, the central server may compare decrypted (or decoded) identification information from the sighting message to a list of all rolling identifiers related to registered wireless identity transmitters. If the wireless identity transmitter identity is not known by the central server (i.e., determination block 1602 = "No"), in block 1603 the central server may ignore the sighting message and continue with the operations in determination block 1402.

If the wireless identity transmitter identity is known by the central server (i.e., determination block 1602 = "Yes"), in determination block 1604 the central server may determine whether the sighting message is related to a registered service. For example, the central server may evaluate metadata within the sighting message to detect a code that identifies a merchant or retail store as being registered. In an embodiment, registered services may be affiliated with a profile information delivery service managed by the central server. If the sighting message is not related to a registered service (i.e., determination block 1604 = "No"), the central server may continue with the operations in block 1603. If the sighting message is related to a registered service (i.e., determination block 1604 = "Yes"), in block 1414 the central server may store data based on the sighting message in relation to the wireless identity transmitter identity. In other words, the central server may store data in relation to the user of the wireless identity transmitter. The stored data may be used to update individual customer accounts, records, or profiles within the central server. For example, the central server may update a database entry related to the identified wireless identity transmitter (or its associated customer or user account), indicating the wireless identity transmitter was within proximity of the proximity broadcast receiver associated with the sighting message, as well as any other relevant information indicated in the sighting message (e.g., timestamps, etc.). In various embodiments, such stored data may be used by the central server to generate foot traffic reports or statistics for the registered service.

In block 2612, the central server may identify categories corresponding to the registered service, such as the registered service associated with the received sighting message. In an embodiment, the central server may maintain a database that describes merchants, retailers, and other third-parties in relation to relevant categories or service labels.

For example, the central server may store a database that indicates that "Tom's Bar and Grill" relates to "food," "alcohol," and "beverage" categories. Alternatively, the central server may identify categories based on a stored profile associated with the registered service. For example, the central server may identify the registered service's business type, services offered, products offered, demographics, interests, and/or target audience within a business profile stored at the time the registered service registered with the central server. In block 2614, the central server may identify relevant profile information associated with the wireless identity transmitter identity by using the identified categories. In other words, the central server may generate a data table that includes subsets of relevant information from the stored profile information corresponding to the user associated with the known wireless identity transmitter. The relevant information may be the data within the user's stored profile information having assigned categories that match the categories identified in the operations in block 2612. For example, the data table may include data describing the user's favorite alcoholic beverage when identifying information relevant to the category "alcohol. In block 2616, the central server may transmit a return message that includes the identified relevant profile information to a local computing device related to the registered service. For example, the central server may transmit a message to a mobile device carried by a waiter working at the restaurant associated with the proximity broadcast receiver that transmitted the received sighting message.

In optional block 2618, the central server may store data in relation to the registered service based on the identified relevant profile information, and then the central server may then continue with the operations in determination block 1402. For example, the central server may update a database entry for a merchant with the user's (or customer's) proximity or location information determined based on the sighting message. As another example, the central server may record the type of profile information that was determined to be relevant to the registered service for particular users. In general, such stored data may be valuable to stores, merchants, and various services registered with the central server for generating profit equations, mapping foot traffic, calibrating building floor plans, and otherwise understanding user trends (e.g., purchase convergence, number of visits to the retail store per user per time period, etc.). Stored information may also include indicators of behavioral information of users, such as where users are moving within a stores, how long users stay in particular areas (e.g., how long a shopper was in front of an end cap), movement routes within evaluated areas (e.g., data showing a user moves from the Toys department to the Automotive department, etc.). In an embodiment, behavioral information may include data describing a user's usage of in-store WiFi provided in relation to a registered service. For example, the central server may store information that indicates a user entered a retail store and accessed a free WiFi local area network to view a website of a competitor store.

The central server may also update and store statistical information based on the sighting message and/or the transmitted return message, such as modifying data that indicates the number of unique users within a building (e.g., a retail store), the amount of time (i.e., "dwell" time) the user was within a particular area (e.g., aisle, department, cash register line, etc.), the interests of such users, and the travel routes users make within observed places, such as a retail store. The central server may store data that indicates an aggregated amount of time that all users dwelled within a particular area. In another embodiment, the central server may store information from individual sighting messages and/or return message or alternatively may only store summary or average data based on a plurality of messages. For example, each time the central server receives a new sighting message or transmits a return message associated with a particular user's wireless identity transmitter, the central server may store an updated average of the user's dwell time within a particular department of a retail store.

In various embodiments, the data stored in relation to the registered service may vary based on relevant permissions settings associated with a user's registered account or profile. For example, if the user related to the sighting message and/or wireless identity transmitter does authorize his/her data to be used by registered services, the central server may store behavioral information that identifies the user in relation to his/her activities (e.g., user A walked to a certain area within a local coffee shop, user X bought a coffee and sat in the lobby for an hour, etc.). However, the central server may act as a shield for the user's identity by storing but not providing identifying information to merchants without permission or authorization from the users. For example, this stored information may not be communicated, transmitted, or other made available to merchants, retailers, or the retail store, but may instead be used exclusively by the central server. The central server's use of stored permissions is further described below.

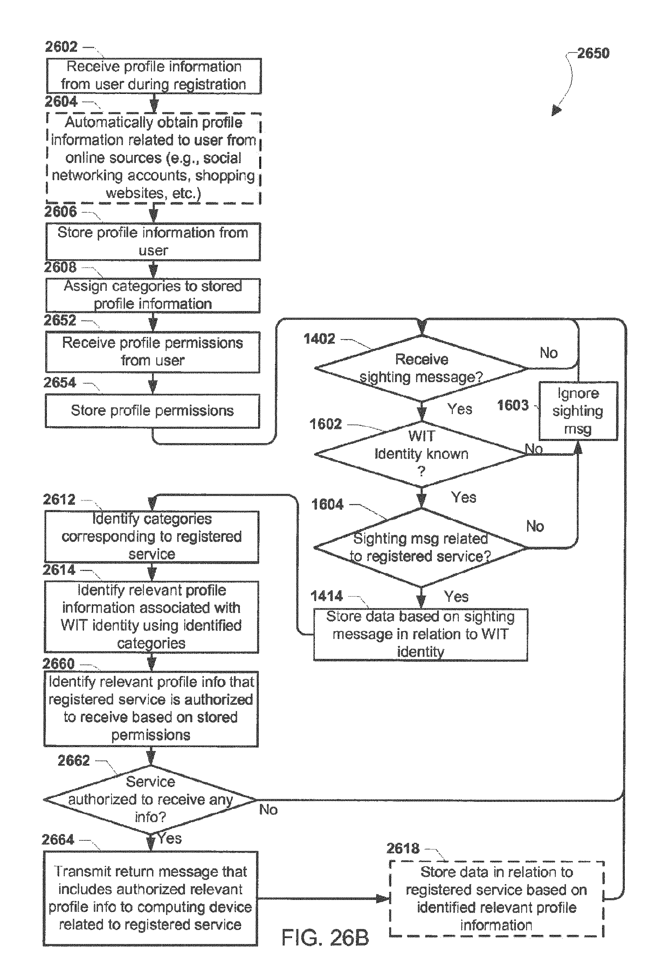

FIG. 26B is a process flow diagram illustrating an embodiment method 2650 for a central server to transmit relevant profile information to a computing device when authorized by permissions indicated in a user profile. The method 2650 is similar to the method 2600 described above, except that the central server may perform operations to transmit profile information that has been authorized to be transmitted to a particular registered service by the user. In other words, relevant profile information may not be transmitted when the user has configured his profile to disallow sharing of that information. This may be important to ensure privacy and enable users to finely control the dissemination of their profile information. For example, based on a prior bad experience with a particular vendor, a user may provide the central server with permissions settings that forbid the transmissions of personal information to that vendor.

In block 2602, the central server may receive profile information from a user during registration, such as during registration procedures described above. In optional block 2604, the central server may automatically obtain profile information related to the user from online sources, such as social networking accounts and shopping accounts. In block 2606, the central server may store profile information from the user. In block 2608, the central server may assign categories to the profile information.

In block 2652, the central server may receive profile permissions from the user. As described above, the user may provide identities of third-parties or registered services (e.g., merchants, marketing services, etc.) that are authorized to receive categories of profile information or particular data within the user's profile. The user may also provide permissions that indicate any merchant or third-party (or alternatively no merchant or third-party) may receive information in certain categories or particular data. In an embodiment, the profile permissions may indicate whether certain pieces of profile information are public or private. For example, the central server may store a permission that indicates that a user's name is private information not to be shared at large, and another permission setting that indicates the user's favorite sporting team is public to be shared to anyone. In block 2654, the central server may store the profile permissions. For example, each piece of profile data stored in relation to the user may have a tag, flag, or indicator that indicates whether the central server may transmit that data to a particular merchant.

In determination block 1402, the central server may determine whether a sighting message is received, such as a sighting message transmitted by a proximity broadcast receiver located within a retail store or restaurant. If the central server does not receive a sighting message (i.e., determination block 1402 = "No"), the central server may continue with the operations in determination block 1402. However, if the central server does receive a sighting message (i.e., determination block 1402 = "Yes"), in determination block 1602 the central server may determine whether a wireless identity transmitter identity is known based on the received sighting message. If the wireless identity transmitter identity is not known by the central server (i.e., determination block 1602 = "No"), in block 1603 the central server may ignore the sighting message and continue with the operations in determination block 1402.

If the wireless identity transmitter identity is known by the central server (i.e., determination block 1602 = "Yes"), in determination block 1604 the central server may determine whether the sighting message is related to a registered service. If the sighting message is not related to a registered service (i.e., determination block 1604 = "No"), the central server may continue with the operations in block 1603. If the sighting message is related to a registered service (i.e., determination block 1604 = "Yes"), in block 1414 the central server may store data based on the sighting message in relation to the wireless identity transmitter identity. In block 2612, the central server may identify categories corresponding to the registered service, such as the registered service associated with the received sighting message. In block 2614, the central server may identify relevant profile information associated with the wireless identity transmitter identity by using the identified categories.

In block 2660, the central server may identify relevant profile information the registered service is authorized to receive based on stored permissions. For example, the central server may evaluate permissions indicators associated with the identified relevant profile information and identify a subset (or window) of the profile information relevant to the identified categories that the user has authorized to be delivered to the registered service (e.g., merchant, retailer, etc.). In an embodiment, all, some, or none of the relevant information identified in the operations in block 2614 may be authorized to share with the registered service. For example, although the profile information includes several pieces of data relevant to the category of "Food," the central server may not identify any authorized information to transmit to a restaurant registered service when the user has indicated the restaurant may not receive any profile information.

In determination block 2662, the central server may determine whether the registered service is authorized to receive any information. If the registered service is not authorized to receive information (i.e., determination block 2662 = "No"), the central server may continue with the operations in determination block 1402. However, if the registered service is authorized to receive the information (i.e., determination block 2662 = "Yes"), in block 2664 the central server may transmit a return message that includes authorized, relevant profile information to a computing device related to the registered service. For example, the central server may transmit the return message to a point-of-sale device near the proximity broadcast receiver that transmitted the sighting message. In an embodiment, the computing device may display the profile information to an employee, such as a waiter. In another embodiment, the central server and/or the computing device may generate instructions for the employee based on the identified profile information. For example, the central server and/or the computing device may generate instructions that direct a waiter to present a vegetarian menu to the user/ customer when the identified profile information indicates the user doesn't eat meat. In optional block 2618, the central server may store data in relation to the registered service based on the identified relevant profile information, and then the central server may then continue with the operations in determination block 1402.

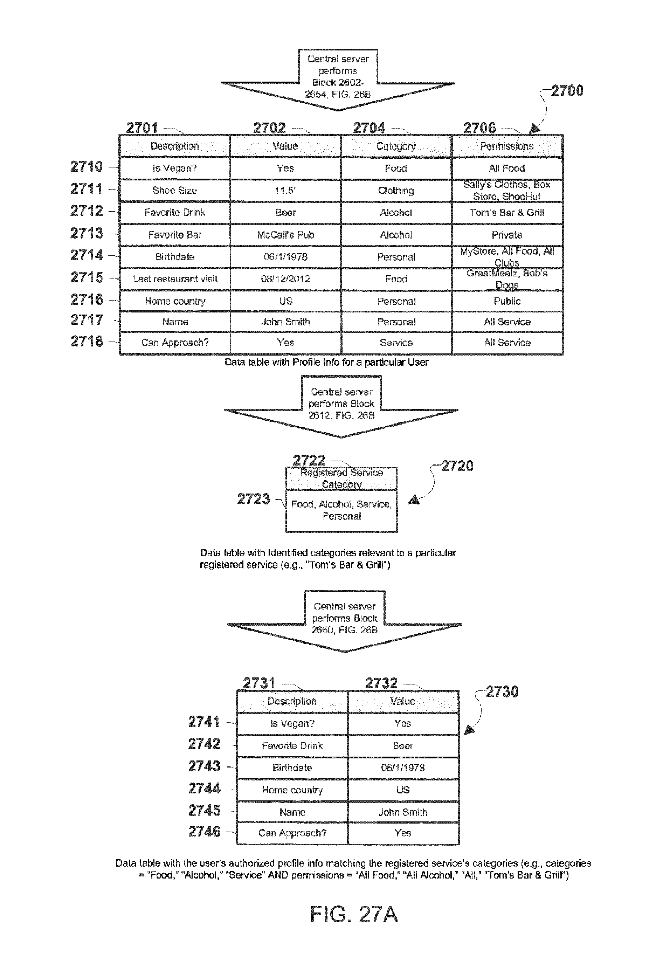

FIG. 27A shows exemplary data tables 2700, 2720, 2730 that include various profile information that may be stored by a central server and transmitted in response to receiving a sighting message in accordance with various embodiments. For example, the central server may generate the data tables 2700, 2720, 2730 while performing the operations described above with reference to FIG. 26B. As described above, the user may be associated with a wireless identity transmitter that has been registered with the central server and that has a unique identifier. The central server may use such an identifier as a key to generate data tables of the user's stored profile information. In various other embodiments, data tables of the user's profile information may be generated based on other unique information or look-up keys, such as the unique device identifier of a mobile proximity broadcast receiver associated with the user or the user's own personal identifier (e.g., a social security number, etc.). Further, although such exemplary data tables 2700, 2720, 2730 illustrate possible ways of storing and utilizing profile information, those skilled in the art may appreciate other manners of storing, organizing, and accessing such information.

The central server may generate a first data table 2700 that includes information obtained by the central server by performing the operations in blocks 2602-2654 in FIG. 26B. For example, the first data table 2700 may be the result of the user providing profile information to the central server during registration and/or subsequent updates via a web portal or web site associated with the central server. The first data table 2700 may include a complete set of profile information associated with a particular user. For example, the central server may generate the first data table 2700 by querying a database using only the device ID of the user's wireless identity transmitter.

The first data table 2700 may include numerous data columns 2701-2706 that describe various information stored in the profile. For the purposes of illustration, the first data table 2700 may include a first data column 2701 ("Description") that includes descriptive labels for stored profile information. For example, a description in the first data column 2701 may be a question posed to the user during registration ("What is your favorite drink?) or a general label (e.g., "Birthdate"). The first data table 2700 may also include a second data column 2702 ("Value") that includes the stored value of a profile entry, and a third data column 2703 ("Category") that indicates the general topic, subject matter, category, or other means of organizing and relating the profile information stored within a particular data entry. The first data table 2700 may also include a fourth column 2706 ("Permissions") that may include information representing the names and/or categories of registered services (e.g., merchants, vendors, stores, people, etc.) that are authorized to receive the profile information within an entry. The fourth column 2706 may also include tokens that indicate whether related profile information may be available to any recipient (i.e., "Public") or no recipient (i.e., "Private").

The first data table 2700 may also include numerous data rows 2710-2718 that include the stored profile information provided by the user. For illustration purposes, a first data row 2710 may include profile information that indicates the user is a vegan, a second data row 2711 may include profile information that indicates the user's show size is 11.5", a third data row 2712 may include profile information that indicates the user's favorite type of drink is beer, a fourth data row 2713 may include profile information that indicates the user's favorite bar is McCall's Pub, a fifth data row 2714 may include profile information that indicates the user's birth date is June 1, 1978, a sixth data row 2715 may include profile information that indicates the date the user last visited any restaurant as August 12, 2012, a seventh data row 2716 may include profile information that indicates the user's home country as the United States, an eighth data row 2717 may include profile information that indicates the user's name is John Smith, and a ninth data row 2718 may include profile information that indicates that the user does not mind if customer service people approach him.

The central server may also generate a second data table 2720 that includes information related to the operations in block 2612 in FIG. 26B. In particular, once a registered service is determined to be related to the sighting message (e.g., the central server detects identifying information within metadata of the sighting message), the central server may identify the categories related to the registered service based on information stored within the central server. For example, the central server may perform a look-up on a database of all registered services to find categories relevant to the registered service. Stored information about registered services may be provided by the various services, such as via a registration procedure as described above. In an embodiment, the second data table 2720 may be the result of the central server performing a look-up using a key that is the registered service's name (e.g., "Tom's Bar & Grill") or other unique information, such as a unique proximity broadcast receiver device ID. The second data table 2720 may include only categories (or labels) that define the services, activities, characteristics, or other indicators of the registered service. For illustration purposes, the second data table 2720 may include a data column 2722 ("Registered Service Category") that includes the categories relevant to the registered service. The second data table 2720 may include a first data row 2723 that includes information indicating the categories of "Food," "Alcohol," "Service," and "Personal." In other words, the registered service may be identified as relevant to (or concerned with) any profile information that is related to personal information of users, food and alcohol products, and the service industry (i.e., the registered service may be a restaurant).

The central server may generate a third data table 2730 that includes profile information from the first data table 2700 based on a comparison with the information from the second data table 2720. In other words, the third data table 2730 may be generated by the central server by performing the operations in block 2660 in FIG. 26B, and may include all of the user's profile information that is relevant and authorized to be transmitted to the registered service. For the purposes of illustration, the third data table 2730 may include a first data column 2731 ("Description") that includes descriptive labels for stored profile information, and a second data column 2732 ("Value") that includes values related to the descriptions indicated in the first column 2731.

The third data table 2730 may include data rows 2741-2746 that include profile information that are both relevant to the categories of the registered service indicated within the second data table 2720 and authorized by the user based on permissions indicated within the first data table 2700. For the purposes of illustration, a first data row 2741 may include profile information that indicates the user is vegan because that information is relevant to the "Food" category and authorized by the "All Food" permission, a second data row 2742 may include profile information that indicates the user's favorite drink is beer because that information is relevant to the "Alcohol" category and authorized by the "Tom's Bar & Grill" permission, a third data row 2743 may include profile information that indicates the user's birth date because that information is relevant to the "Personal" category and authorized by the "All Food" permission, a fourth data row 2744 may include profile information that indicates the user's country because that information is relevant to the "Personal" category and authorized by the "Public" permission, a fifth data row 2745 may include profile information that indicates the user's name because that information is relevant to the "Personal" category and authorized by the "All Services" permission, and a sixth data row 2746 may include profile information that indicates the user does not mind being approached by customer service agents because that information is relevant to the "Service" category and authorized by the "All Services" permission.

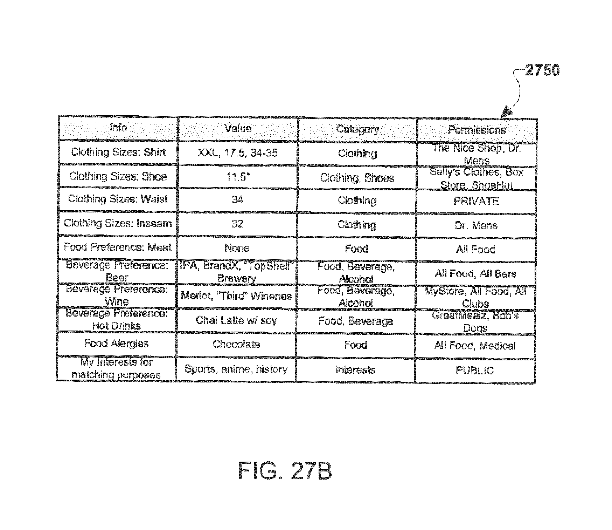

FIG. 27B shows another exemplary data table 2750 that includes various profile information that may be stored by a central server and transmitted in response to receiving a sighting message in accordance with various embodiments. The data table 2750 may be generated in a similar manner as the data table 2700 described above, and may include profile information of various specificity and nature. For example, the data table 2750 may include profile information indicating that a user is allergic to chocolate, as well as the user's specific preferences, such as beer and wine product preferences. Further, the data table 2750 may include profile information indicating the user's interests, such as sports or anime, which may be used by the central server for performing profile matching. For example, the central server may use the user's interests to compare to interests stored in other's profiles to find matches, such as part of a dating or friend-finding service.

FIGS. 28A-28B are diagrams illustrating proximity broadcast receivers and a mobile device receiving different authorized information based on related profiles. As described above, a central server may transmit profile information from stored profiles of registered users. For example, in response to receiving a sighting message from a proximity broadcast receiver within proximity of a user's wireless identity transmitter (or wireless identity transceiver) within a juice bar, the central server may transmit a return message that includes the user's beverage preference. However, it should be emphasized that different profile information may be transmitted to various registered services, even when the services are within the same proximity to the user. For example, when a user carrying a wireless identity transmitter walks within proximity of a movie theater employing a proximity broadcast receiver, the movie theater proximity broadcast receiver may receive profile information indicating the user is over 18 and may watch rated 'R' movies. However, when that same user also walks within proximity of a candy shop employing a proximity broadcast receiver, the candy shop proximity broadcast receiver may receive profile information indicating the user is allergic to nuts and may not eat peanut brittle.

FIG. 28A illustrates a user's wireless identity transmitter 110 in proximity of a plurality of proximity broadcast receivers 142, 142', 142". The user may also carry a mobile device 2810, such as a smartphone. In various embodiments, the mobile device 2810 may be configured to operate as a wireless identity transmitter or transceiver such that the separate wireless identity transmitter 110 may be unneeded by the user in order to transmit broadcast messages for receipt by proximate devices of registered services, such as retail stores.

For the purposes of illustration, the user and the proximity broadcast receivers 142, 142', 142" may be within a mall or some other place where each may be within proximity of the wireless identity transmitter 110 at the same time. Additionally, each proximity broadcast receiver 142, 142', 142" may be associated with different registered services. For example, the first proximity broadcast receiver 142 may be associated with a "Shop A" (e.g., an electronics shop), the second proximity broadcast receiver 142 may be associated with a "Shop B" (e.g., a restaurant), and the third proximity broadcast receiver 142 may associated with a "Shop C" (e.g., an accounting firm office), all within the mall.

As the proximity broadcast receivers 142, 142', 142" are within proximity of the wireless identity transmitter 110 (i.e., each is within the broadcast range), broadcast messages may be received by each of the proximity broadcast receivers 142, 142', 142" via short-range wireless signals 114. As described above, in response, the proximity broadcast receivers 142, 142', 142" may transmit sighting messages 2802, 2804, 2806 via the Internet 103 to a central server 120 for processing. Each of the sighting messages 2802, 2804, and 2806 may include different information (i.e., metadata or header information) that indicates the various associated registered services, location information, etc. However, the sighting messages 2802, 2804, and 2806 may all report similar information based on the received broadcast message from the user's wireless identity transmitter 110. In other words, each of the sighting messages 2802, 2804, and 2806 may include the same rolling identifier of the wireless identity transmitter 110.

FIG. 28B illustrates different information transmitted by a central server 120 in response to receiving sighting messages from a plurality of proximity broadcast receivers 142, 142', 142" concurrently within proximity of a wireless identity transmitter 110 described above with reference to FIG. 28A. In other words, FIG. 28B shows how messages 2852, 2854 with differing profile information may be transmitted to proximate devices in response to the central server 120 processing sighting messages from proximity broadcast receivers 142, 142', 142" associated with various registered services. As indicated above, such sighting messages may be transmitted based on a user associated with a wireless identity transmitter 110 being within proximity of the proximity broadcast receivers 142, 142', 142".

For illustration purposes, the central server 120 may transmit to a first proximity broadcast receiver 142 associated with "Shop A" a first message 2852 that includes profile information indicating the user's customer identity (i.e.,

"customerId") and photo. Such profile information may be used for authenticating a payment, purchase, or other transaction within Shop A. The central server 120 may also transmit to a second proximity broadcast receiver 142 associated with "Shop B" a second message 2854 that includes profile information indicating the user's allergies, food preferences, and first name. Such profile information may be used for expediting food-related customer service with the user within Shop B.

In an embodiment, the user may provide the central server 120 with permissions that disallow transmission of profile information to any registered service when the user has not explicitly indicated that a particular registered service (or category of registered service) may receive profile information. For example, based on performing the method 2650 described above, the central server 120 may not identify any profile information that the user has authorized to be transmitted to the registered service associated with "Shop C," and thus the central server 120 may not transmit any message to a third proximity broadcast receiver 142 associated with Shop C.

As another illustration, the user carrying the wireless identity transmitter 110 may walk inside of a movie theater that houses a bar, a concessions stand, and a ticket counter, all of which having a proximity broadcast receiver. In response to sighting messages sent by the various proximity broadcast receivers, the central server may transmit a first message to the bar that includes the user's age, a second message to the concessions stand that includes the user's favorite candy type, and a third message to the ticket counter that indicates the user is eligible for a student discount.

In another embodiment, the central server 120 may perform operations as described above with reference to FIGS. 18A-18D to identify the closest proximity broadcast receiver 142, 142', 142" to the user based on signal strength information within the sighting messages 2802-2806. In such a case, the central server 120 may only transmit a signal return message to the closest proximity broadcast receiver to the user.

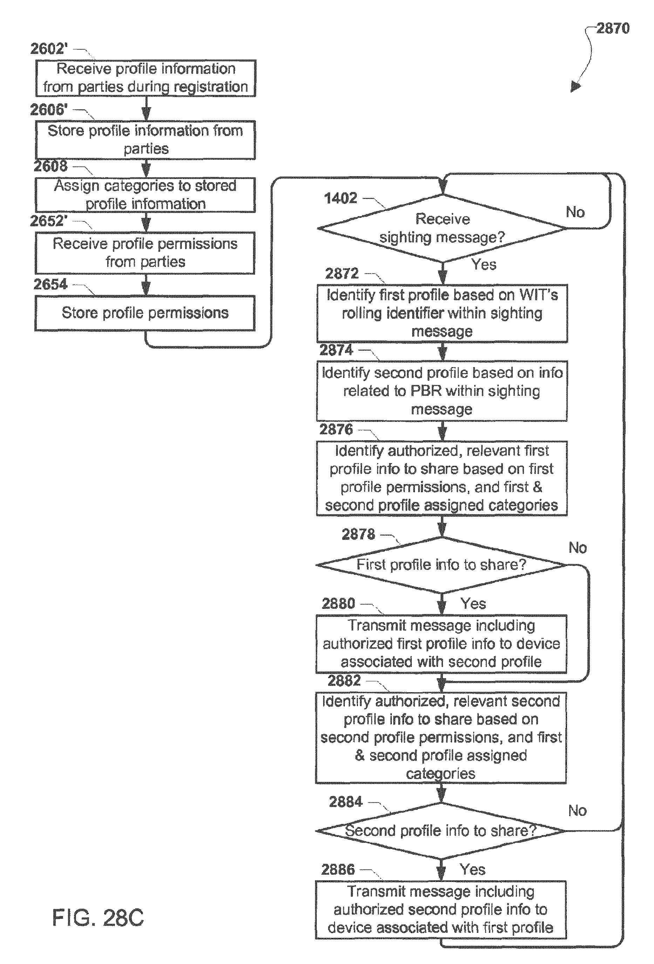

In further embodiments, the central server 120 may also transmit messages 2860, 2862, 2864 to the user's mobile device 2810 based on the sighting messages 2802, 2804, 2806 received from the proximity broadcast receivers 142, 142', 142". Such messages 2860, 2862, and 2864 may include information corresponding to the registered services associated with the proximity broadcast receivers 142, 142', 142". In other words, registered services may also wish to control their privacy (or information flow), and so the central server 120 may identify profile information of registered services that is authorized to be shared with the user. The information within such messages may be identified using operations similar to those described below with reference to FIGS. 28C.

For illustration purposes, the central server 120 may transmit to the mobile device 2810 a first message 2860 that includes information indicating Shop A's store hours, a second message 2862 that includes information indicating Shop B's culinary specialties, and a third message 2864 that includes information indicating Shop C's logo and mission statement.

In other embodiments, the central server 120 may also transmit coupons, promotions, and marketing information to the mobile device 2810. For example, the central server may generate coupons that are relevant to the user of the mobile device 2810 based on his/her profile information.

FIG. 28C illustrates an embodiment method 2870 for a central server to identify authorized data to share based on two different profiles. In various embodiments, the central server may store profiles and related permissions (or privacy settings) for any party registered with the central server. For example, vendors, individuals, merchants, and services may provide profile information that describes their interests, characteristics, qualities, and other identifying information as well as who may receive such information. By comparing categories of information within multiple profiles, such as a first profile associated with a proximity broadcast receiver in a retail store and a second profile associated with a proximate user's wireless identity transmitter, the central server may transmit messages to both parties with relevant, authorized profile information.

In block 2602', the central server may receive profile information from parties during registration. Such parties may include registered services, user, vendors, merchants, and any other parties that provide identifying information to the central server during a registration procedure. For example, a merchant registering with the central server may provide profile information that indicates the merchant's type of business, preferred customer base/demographics, Securities and Exchange Commission filings information, and any other identifying information. In block 2606', the central server may store the profile information from the parties, such as by storing profiles within a database. The central server may store the profiles in different databases based on the type of party being registered, such as by storing business profiles in a business database and individual profiles in a users database. In block 2608, the central server may assign categories to the stored profile information. In block 2652', the central server may receive profile permissions from the parties. For example, a merchant registering a profile may indicate to the central server that only other users who are shareholders of the merchant's corporation may receive certain profile information. In block 2654, the central server may store the profile permissions, such as within data tables associated with the parties as described above.

In determination block 1402, the central server may determine whether a sighting message is received, such as a sighting message transmitted by a proximity broadcast receiver located within a retail store or restaurant. If the central server does not receive a sighting message (i.e., determination block 1402 = "No"), the central server may continue with the operations in determination block 1402. However, if the central server does receive a sighting message (i.e., determination block 1402 = "Yes"), the central server may process the sighting message (e.g., decrypt, decode, access rolling identifiers, etc.) as described above. In block 2872 the central server may identity a first profile based on the wireless identity transmitter rolling identifier within the sighting message. For example, the central server may decode the rolling identifier and identify the profile corresponding to the user of the wireless identity transmitter. The operations in block 2872 may be similar to those described above with reference to determining whether a wireless identity transmitter identity is known by the central server (e.g., the operations in determination block 1602). In block 2874, the central server may identify a second profile based on information related to a proximity broadcast receiver within the sighting message. In other words, the central server may evaluate the received sighting message to detect the identity of the proximity broadcast receiver that transmitted the received sighting message and may use that identity to identify the second profile. For example, the sighting message may include metadata that indicates the sighting message was transmitted by a device within a certain retail store that has registered a profile with the central server. The operations in block 2874 may be similar to those described above with reference to determining whether a received sighting message relates to a registered service (e.g., the operations in determination block 1604).

In block 2876, the central server may identify authorized, relevant first profile information to share based on the permissions of the first profile and the assigned categories of the first and second profiles. The operations in block 2876 may be similar to the operations in blocks 2612, 2614, and 2660 with reference to FIG. 26B as described above. For example, the central server may find profile information having assigned categories within the first profile that matches assigned categories within the second profile.

In an embodiment, the central server may identify relevant, authorized first profile information based on public profile information within the second profile. The central server may only be enabled to match categories of information within the first profile with categories of information set as "public" within the second profile. For example, the central server may use the public information of "favorite sports team" within a second profile to match with the first profile, but not the second profile's private information of "religious affiliation." In this way, both parties and profiles may be secured from divulging private information.

In an embodiment, the central server may determine relevant information based on various characteristics stored within a profile. For example, the central server may identify food preferences from the first profile as relevant when the second profile includes profile information that indicates the user of the second profile is a waitress and/or affiliated with a restaurant. The central server may also determine relevance of profile information based on location information provided by the received sighting message. For example, the central server may determine the proximity broadcast receiver that transmitted the sighting message is within a restaurant based on metadata, and thus may combine that location information with profile information that indicates a waitress occupation to conclude that the user of the proximity broadcast receiver is a waitress on-duty within the restaurant.

In determination block 2878, the central server may determine whether there is any first profile information to share. In other words, the central server may determine whether any authorized and relevant information from the first profile was identified in the operations in block 2876. If there is first profile information is to be shared (i.e., determination block 2878 = "Yes"), in block 2880 the central server may transmit a message including the authorized first profile information to a device associated with the second profile. Such a device associated with the second profile may be a local server, proximity broadcast receiver, or mobile device that is indicated in the second profile as being an appropriate recipient for the first profile information. In various embodiments, such a device may be the proximity broadcast receiver that transmitted the received sighting message.

If no first profile information is to be shared (i.e., determination block 2878 = "No"), or if the message is transmitted in block 2880, in block 2882 the central server may identify authorized, relevant second profile information to share based on the permissions of the second profile and the assigned categories of the first and second profiles. The operations in block 2882 may be similar to the operations described above related to identifying authorized, relevant first profile information. In other words, the central server may compare assigned categories of the two profiles to identify relevant information of the second profile and check the second profile's permissions to determine whether any relevant information is authorized to be shared from the second profile.

In determination block 2884, the central server may determine whether there is any second profile information to share. In other words, the central server may determine whether any authorized and relevant information from the second profile was identified in the operations in block 2882. If there is second profile information is to be shared (i.e., determination block 2884 = "Yes"), in block 2886 the central server may transmit a message including the authorized second profile information to a device associated with the first profile. For example, the central server may transmit an email, SMS text message, or other message to a mobile device associated with the first profile as described above with reference to FIG. 28B. The central server may continue with the operations in determination block 1402.

In another illustration, when authorized by permissions, the central server may transmit medical information from the first profile to a device associated with the second profile (or vice versa) when the second profile corresponds to a user with a medical background (e.g., doctor, EMT, nurse, etc.). Due to the sensitive nature of medical information, the central server may utilize other determinations before transmitting such medical information, such as whether an emergency is indicated (e.g., sensor data within the received sighting message indicates the user of the first profile is sick/injured) and/or whether the user of the second profile is on active duty and/or within a medical care facility (e.g., the nurse is on-duty and within a hospital geofence, etc.).

In an embodiment, the method 2870 may be performed by the central server to enable speed dating. Based on received sighting messages from one or both identity transceivers carried by speed dating participants, the central server may identify related profiles, match the identified profiles, and transmit messages to the participants when there is matching profile information. For example, the central server may compare the occupations indicated in two profiles to identify if they are similar, within the same field, or other measures of commonality. Alternatively, the central server may simply analyze the two profiles and return any public profile information that may be of interest to the participants. For example, if a user sets permissions to allow her salary range to be a public or shared piece of information, the central server may transmit a message indicating the salary to another participant.

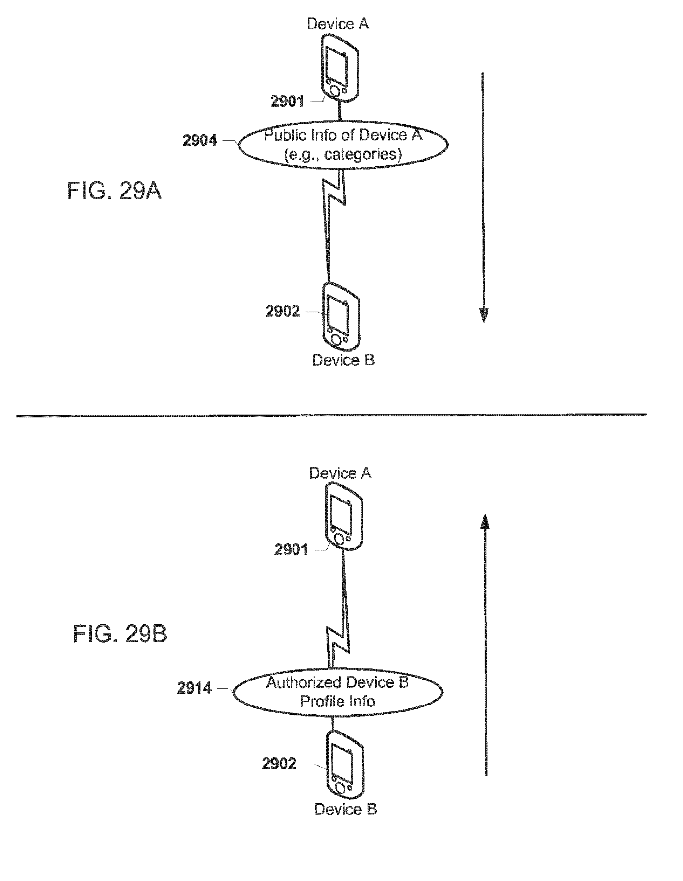

FIGS. 29A-29B illustrate a second device 2902 (referred to as "Device B") sharing authorized profile information in response to receiving short-range signals from a first device 2901 (referred to as "Device A") within proximity. The first device 2901 and the second device 2902 may be mobile computing devices (e.g., smartphones, tablets, etc.) that are configured to perform operations of wireless identity transceivers and that are associated with various users, such as a customer, or alternatively a merchant, vendor, or business (e.g., Starbucks, etc.). Alternatively, either of the devices 2901, 2902 may be proximity broadcast receivers stationed within a place. For example, the first device 2901 may be a stationary identity transceiver collocated with a cash register in a coffee shop and the second device 2902 may be a mobile identity transceiver carried by a customer. The communications described in FIGS. 29A-B and the method described below with reference to FIG. 29C may be important as they permit relevant, public profile information stored on devices to be transmitted by devices when within proximity. However, as a central server may not be included with reference to FIGS. 29A-B, the shared information may be less secure, as broadcasting messages with public information may be received by any proximate devices and as no authentication (or verification) of the information or parties may be provided via the central server. Accordingly, profile information transmitted in various embodiments may only be non-sensitive data authorized for sharing to the public by users.

FIG. 29A shows the first device 2901 broadcasting a message 2904 that includes information related to the first device 2901. The message 2904 may include public profile information that the user of the first device 2901 has authorized as open for anyone to receive. For example, the message 2904 may include indications of the categories, topics of interest, or the businesses or services relevant to the user of the first device 2901, such as a coffee shop. When within proximity of the first device 2901, the second device 2902 may receive the message 2904 via a short-range transceiver, such as a Bluetooth® LE radio.

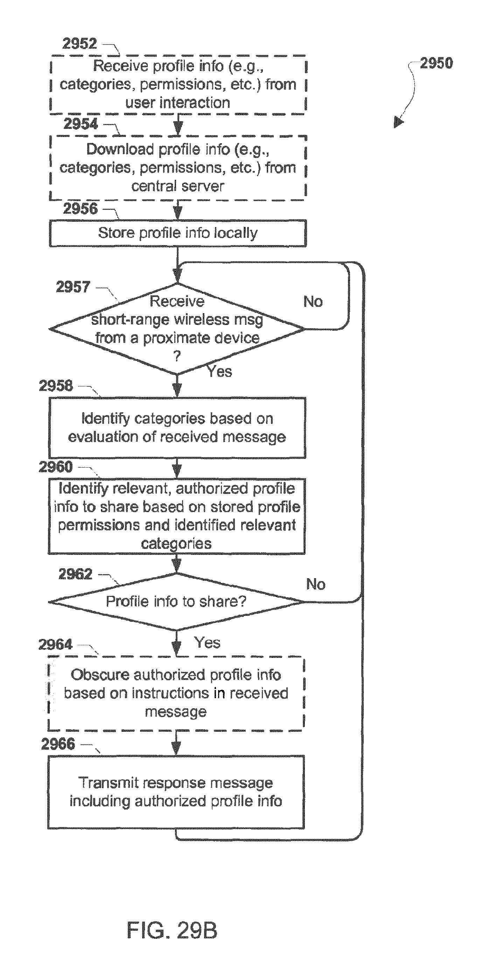

FIG. 29B shows the second device 2902 transmitting a response message 2914 that includes profile information related to the second device 2902. The response message 2914 may include public profile information the user of the second device 2902 has authorized as open for anyone to receive and that is relevant to the received message from the first device 2901. For example, the response message 2914 may include public information the user of the second device 2902 does not mind transmitting in the clear (i.e., authorized via permissions as 'public') and that is relevant based on matching information received from the first device 2901 with the profile stored on the second device 2902.

In an embodiment, the profile information within the response message 2914 may be normally set as private by the user of the second device 2902 and may only be transmitted when the received message from the first device 2901 includes certain information. For example, the second device 2902 may only transmit the response message 2914 when it receives a message from the first device 2901 that indicates the first device 2901 is associated with an emergency service (e.g., an EMT).

FIG. 29C is a process flow diagram of an embodiment method for a computing device to share authorized profile information in response to receiving short-range signals from a device within proximity. In various embodiments, the method 2950 may be performed by a mobile device, such as those described above with reference to FIGS. 29A-B. For example, the computing device may be a smartphone or an identity transceiver (e.g., a smartphone configured to transmit short-range signals as well as process incoming broadcast messages from proximate devices). Additionally, the method 2950 may be similar to the method described above with reference to FIG. 28C, except that the method 2950 may only include operations for transmitting profile information from a single profile that is stored locally on the computing device.

In optional block 2952, the computing device may receive profile information from user interaction, such as inputs on a smartphone graphical user interface. For example, a user input may provide text or selections that indicate personal information, categories of information relevant to the user of the computing device, as well as permissions for the profile information (e.g., indicators of the public/private nature of particular pieces of information, whether certain third-parties may receive certain data, etc.). In optional block 2954, the computing device may download profile information from a central server. For example, the computing device may be configured to periodically download profile information associated with the user of the computing device as is currently stored in the central server. In other words, users may download their current profiles from the central server for use with software and services executing on the computing device (e.g., an app executing on a smartphone).

In block 2956, the computing device may store profile information locally, such as in a database within the computing device. The profile information may also include permissions as described above, such as indicators whether various pieces of the profile may be shared with certain categories of third-parties (e.g., public, private, only for sharing with "Tom's BBQ Restaurant," etc.). In an embodiment, the computing device may store the profile information such that the information is connected to or otherwise accessible to software executing on the computing device that is in communication with the central server. In determination block 2957, the computing device may determine whether a short-range wireless message is received from a proximate device, such as a broadcast message from a proximate wireless identity transmitter. In various embodiments, the short-range wireless message may be transmitted by a wireless identity transceiver or alternatively any device configured to broadcast signals in a protocol and format recognized by the computing device. If a message is not received (i.e., determination block 2957 = "No"), the computing device may continue with the operations in determination block 2957.

If a message is received (i.e., determination block 2957 = "Yes"), in block 2958 the computing device may identify categories based on an evaluation of the received message. In particular, the computing device may parse the received message to detect whether any profile information and/or descriptive indicators are within the received message. The computing device may evaluate metadata, header information, or other information appended to or within the received message. In an embodiment, the computing device may generate categories for information included in the received message, such as by performing natural language evaluation routines to determine the content or meaning of any data within the message. In block 2960, the computing device may identity relevant, authorized profile information to share based on stored profile permissions and the identified categories. In other words, the computing device may match the identified categories related to the received message with the locally stored profile information to find relevant information, and may use stored permissions to identify any of such relevant information that may be shared. For example, in response to the computing device identifying that the received message includes information regarding a restaurant, the computing device may identify food-related profile information that has been authorized (or labeled) by the user to be public information. In determination block 2962, the computing device may determine whether there is profile information to share, such as profile information marked with a "public" permissions setting that also relates to the received message. If there is no profile information to share (i.e., determination block 2962 = "No"), the computing device may continue with the operations in determination block 702.

If there is profile information to share (i.e., determination block 2962 = "Yes"), in optional block 2964 the computing device may obscure authorized profile information based on instructions in the received message. In an embodiment, received messages may solicit response messages and may include instructions, such as encryption requests and transmissions scheduling, that the computing device may perform prior to transmitting the profile information. For example, the computing device may detect instructions which indicate a secret key that may be used to encrypt, encode, or otherwise obscure any authorized profile information such that only the device that transmitted the received message may access the profile information. In block 2966, the computing device may transmit a response message that includes the authorized profile information, and may continue with the operations in determination block 702.

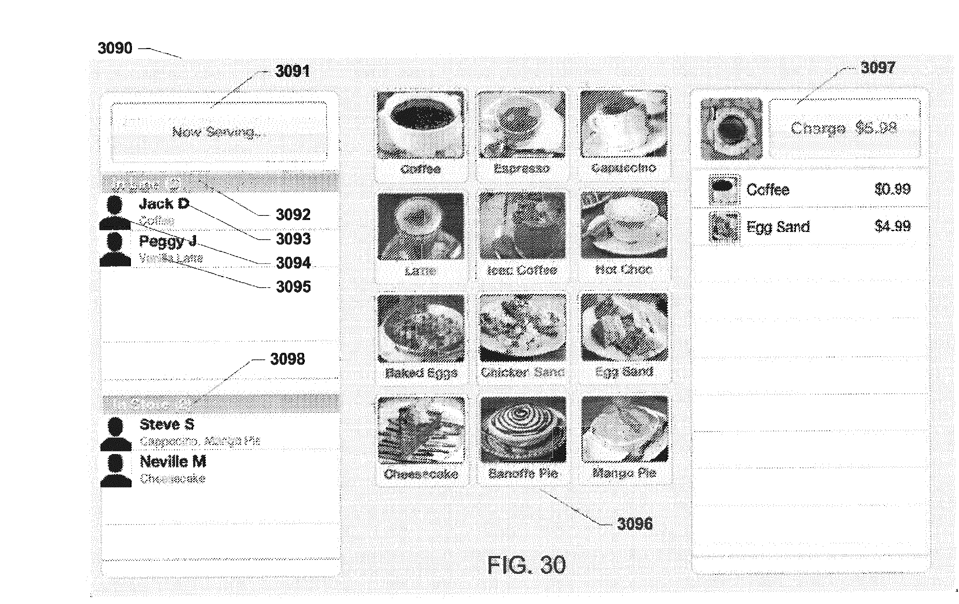

FIGS. 30-32C describe the use of profile information to authenticate a payment. Payment authentication information may be information stored within a registered user's profile that may be used by other parties to facilitate and verify transactions. As described above, payment authentication information may include profile information stored within a central server that is associated with a user, such as photographic information (e.g., Facebook imagery, driver's license photo, previous security footage from store surveillance, etc.), audio samples of the user's voice, signature samples, customer account information, and purchase history information. Additionally, the payment authentication information may include financial and/or credit data to facilitate payment processes. For example, credit card numbers, social security data, addresses, email addresses, phone numbers, and other personal information may be included within the payment authentication information received at the point-of-sale device.

Once received from the central server, merchants, vendors, and other registered services may utilize payment authentication to expedite a purchase or customer service with a registered user. For example, a proximity broadcast receiver within a retail store may receive payment authentication for a proximate user and may display photographic information of the user for use by customer service agents. As another example, a point-of-sale device may receive and display a list of previous purchases by a user along with a message to a retail store's agent instructing him/her to go talk to the user.

FIG. 30 illustrates an exemplary display 3090 of various payment authentication information on a local computing device within a retail store. As described below, the local computing device may be configured to receive return messages that include payment authentication information as stored within profiles and authorized by various permissions or other privacy settings corresponding to the profiles. The local computing device may be configured to operate as a point-of-sale device, such as a cash register or store kiosk. As described below, the local computing device configured to perform as a cash register may render payment authentication information on a display 3090, such as a computer screen viewed by store employees. For example, the local computing device may display information related to a restaurant or a food court area within the retail store.

For illustration purposes, the display 3090 may include a food items section 3096, a pricing section 3097, and a customer section 3091 that may include payment authentication information based on data within return messages received from the central server. In particular, the customer section 3091 of the display 3090 may include an in-line section 3092 that indicates customers (i.e., customers who are users registered with a central server) within proximity of the local computing device as well as an in-store section 3098 that indicates customers that are within the retail store but not within proximity of the local computing device. The display 3090 may indicate customer names 3093, customer photographs 3094, and even prior purchase information 3095, such as food items previously purchased by the various customers. Such displayed information may be used by store employees to identify and facilitate payments and customer interactions.

FIG. 31 describes an embodiment method 3100 for using wireless identity transmitters to improve experiences and services within a place (e.g., a retail store) by providing payment authentication information based on proximity of users to point-of-sale devices within the place. Additionally, the various methods may enable registered services (e.g., merchants) associated with the place to amass data based on broadcast messages that describes valuable foot traffic and other user information.

In general, as users walk around the retail store, they may pause to browse inventory, exit the retail store, and wait in particular areas of the retail store. For example, users may wait in line to pay for merchandise, return products, and/or receive user service assistance. In particular, users' wireless identity transmitters may transmit broadcast messages that are received by proximity broadcast receivers within the retail store. The central server may receive sighting messages from these proximity broadcast receivers and may determine whether a point-of-sale device is located near the users. If users are near point-of-sale devices, such as computing devices configured to perform as cash registers or user kiosks, the central server may transmit relevant, authorized payment authentication information for use in the retail store.

In block 3102, the central server may store profile information that may include permissions settings from a user. As described above, profile information, such as personal information (e.g., name, birth date, etc.) may be stored in databases or other data structures and may also include indicators of how, when, and/or to whom profile information may be shared. In determination block 1402, the central server may determine whether a sighting message is received. As described above, the sighting message may be transmitted by a proximity broadcast receiver located within the retail store. For example, as a user carrying a wireless identity transmitter walks within proximity of a point-of-sale device (e.g., a cash register device), a proximity broadcast receiver located within the point-of-sale device may receive broadcast messages from the wireless identity transmitter and transmit sighting messages to the central server based on the received broadcast messages. If the central server does not receive a sighting message (i.e., determination block 1402 = "No"), the central server may continue with the operations in determination block 1402.

However, if the central server does receive a sighting message (i.e., determination block 1402 = "Yes"), in determination block 1602 the central server may determine whether a wireless identity transmitter identity is known based on the received sighting message. If the wireless identity transmitter identity is not known by the central server (i.e., determination block 1602 = "No"), in block 1603 the central server may ignore the sighting message and continue with the operations in determination block 1402. If the wireless identity transmitter identity is known by the central server (i.e., determination block 1602 = "Yes"), in determination block 1604 the central server may determine whether the sighting message is related to a registered service, such as the retail store. If the sighting message is not related to a registered service (i.e., determination block 1604 = "No"), the central server may continue with the operations in block 1603. If the sighting message is related to a registered service (i.e., determination block 1604 = "Yes"), in block 1414 the central server may store data based on the sighting message in relation to the wireless identity transmitter identity, such as by updating information within the user's profile. In another embodiment, the central server may also store data that may be used by the registered service (e.g., merchant, retail store, etc.) for generating foot traffic data. For example, the central server may use the received sighting message to update and/or modify information describing the number of unique users within the retail store at a given time, day, week, or month.

In determination block 3104, the central server may determine whether the wireless identity transmitter is near a point-of-sale device. For example, the central server may determine whether the wireless identity transmitter is within a few inches, feet, or meters of any computing device within the retail store that is used for performing sales transactions. In various embodiments, the retail store may include various proximity broadcast receivers that are placed throughout the retail store (e.g., around show floors, at the entrance, on shelves, etc.). The central server may store data that indicates the location of such stationary proximity broadcast receivers within the retail store and well as data that indicates the location of various known point-of-sale devices within the retail store. For example, the central server may maintain a database that describes the GPS coordinates and/or relative location information of all stationary proximity broadcast receivers and point-of-sale devices within the retail store. Since the wireless identity transmitter is within proximity of the proximity broadcast receiver associated with the received sighting message, the central server may compare a location (e.g., GPS coordinates) of the proximity broadcast receiver to stored location data of point-of-sale devices to determine whether the wireless identity transmitter is near a point-of-sale device. When the distance between the location of the proximity broadcast receiver and the location of a point-of-sale device is within a proximity threshold, the wireless identity transmitter may be considered near to (or within proximity of) the point-of-sale device.

In various embodiments, proximity broadcast receivers within the retail store may be positioned near (or collocated) and connected to point-of-sale devices. For example, a proximity broadcast receiver positioned on top of a point-of-sale device may transmit text and/or audio data received from the central server to the point-of-sale device for rendering. Alternatively, proximity broadcast receivers and point-of-sale devices may be within a common (or same) device. For example, a cash register point-of-sale device may include a short-range wireless transceiver configured to receive short-range broadcast messages from proximate wireless identity transmitters.

In various embodiments, the central server may utilize additional information when determining whether the wireless identity transmitter is near a point-of-sale device. In particular, the central server may estimate the position of the wireless identity transmitter as within a circular area of the proximity broadcast receiver that transmitted the sighting message. The circular area may have a radius equal to the wireless identity transmitter's average broadcast range. The central server may also evaluate signal strength information describing the broadcast message reported within the sighting message to determine more precise proximity information of the wireless identity transmitter. For example, based on known capabilities of the proximity broadcast receiver and the signal strength of the associated broadcast message, the central server may determine that the wireless identity transmitter was within a certain distance from the proximity broadcast receiver at the time of transmitting the broadcast message within the sighting message. In an embodiment, the central server may use received signal strength indication (or "RSSI") information from within the sighting message to determine approximate distance of the wireless identity transmitter to the proximity broadcast receiver. In another embodiment, the central server may also employ schematics or other floor plan or blueprint data of the retail store to determine more precise location information of the proximity broadcast receiver and thus the wireless identity transmitter. For example, the central server may determine that the wireless identity transmitter is located to the east or south side of the proximity broadcast receiver based on a floor plan that indicates the proximity broadcast receiver is surrounded by exterior walls to the north and west. In an embodiment, the central server may also perform the operations of the methods 1820 and/or 1860 described above to determine more precise proximity information for the wireless identity transmitter. For example, the central server may compare information within concurrent sighting messages to define a precise proximity of a wireless identity transmitter within the retail store.

If the central server determines the wireless identity transmitter is within proximity of server point-of-sale devices, such as a cluster or line of check-out terminals, the central server may identify a closest point-of-sale device based on signal strength information within the sighting message. For example, if the proximity broadcast receiver (and thus the wireless identity transmitter) is determined to be within the proximity threshold of more than one cash register devices within a store, the central server may determine the closest register device (or the device that is most likely to be the closest) as the device with the shortest distance to the proximity broadcast receiver's estimated location. When point-of-sale devices are proximity broadcast receivers, the central server may simply determine the closest point-of-sale device as the device related to a sighting message indicating the strongest signal strength. In another embodiment, the central server may utilize dead reckoning and other estimation routines or algorithms to determine whether the customer (and the wireless identity transmitter) may be near a point-of-sale device in the near future. For example, the central server may evaluate recent movement patterns of the customer to determine within a few seconds he/she may be in front of a product display.

Returning to FIG. 31A, if the wireless identity transmitter is not near a point-of-sale device (i.e., determination block 3104 = "No"), the central server may continue with the operations in determination block 1402. For example, the user may be located near an aisle that is within the retail store but not within proximity of a cash register, so payment authentication information is not likely needed yet. However, if the wireless identity transmitter is near a point-of-sale device (i.e., determination block 3104 = "Yes"), the wireless identity transmitter may be in a position indicating that the associated user is attempting to pay for an item (e.g., the user is waiting in a check-out line). Thus, in block 3105, the central server may identify payment authentication information from the user's profile that is relevant to the proximate point-of-sale device and that is authorized for sharing by the profile permissions. In general, the central server may perform operations as described above to match categories relevant to the retail store to profile information stored for the user associated with the wireless identity transmitter. In particular, the central server may identify the profile information that may be useful for purchases or other transactions relevant to the retail store. For example, when the retail store is a restaurant, the central server may identify food-related profile information, such as previous food products purchased at the retail store, as well as the payment methods used previously used by the user (e.g., a store rewards card, a credit card, cash, etc.). Further, the central server may only identify the payment authentication information that is authorized by the user based on the stored permissions defined within the user's profile. For example, when the user indicates the central server may not provide credit card information to any registered service, the central server may only be able to identify payment authentication information that includes the user's name and photo. In an embodiment, the identified payment authentication information may be based on the capabilities of the near point-of-sale device. For example, if the central server stores information indicating a cash register device is configured to only display text information, the identified payment authentication information may only include text information identifying the user and not visual or audible data (e.g., photo, sound file, etc.).

In block 3106, the central server may transmit a return message to the point-of-sale device that includes payment authentication information. For example, the point-of-sale device may be a computing device that is configured to receive return messages via Internet protocols from the central server. This return message may be used by the point-of-sale device to assist in a transaction between the retail store and the user. In an embodiment, the central server may generate a return message for transmission to a local computing device within the retail store which in turn may deliver payment authentication information to the point-of-sale device near the user. For example, the point-of-sale device may be a computing device that is configured to receive return messages routed from a retail store server. Once the payment authentication information is transmitted, the central server may continue with the operations in determination block 1402.

In another embodiment, the central server may perform the method 3100 in response to receiving a sighting message transmitted by a mobile proximity broadcast receiver carried by the user within the retail store. As described above, instead of deploying proximity broadcast receivers, a retail store may deploy wireless identity transmitters throughout the building, such as in departments or at check-out or payment lines. When a user's mobile proximity broadcast receiver (e.g., such as smartphone configured to execute software that can relay broadcast messages to the central server) is within proximity of one of the retail store's wireless identity transmitters, the mobile proximity broadcast receiver may receive a broadcast message and transmit a sighting message to the central server. In such a scenario, the central server may identify that the wireless identity transmitter is a store device and that the proximity broadcast receiver that transmitted the received sighting message belongs to the user (i.e., the user may be considered a "registered service" as referred to in FIG. 31). Further, the central server may determine whether the wireless identity transmitter is near a point-of-sale device by comparing stored locations of point-of-sale devices to either location information within the sighting message (e.g., via metadata indicating the GPS coordinates of the user's mobile proximity broadcast receiver) or a stored list of locations of the wireless identity transmitters within the retail store. For example, the central server may compare a known location within the retail store corresponding to the wireless identity transmitter indicated in the received sighting message to all stored locations of cash register devices within the retail store.

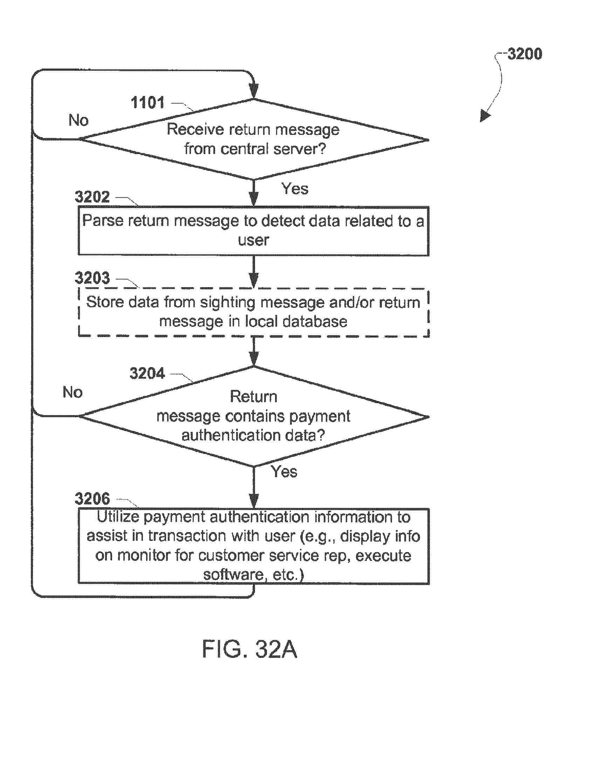

FIGS. 32A-32C illustrate embodiment methods 3200, 3250, and 3275 for a local computing device to utilize payment authentication information to facilitate transactions with a user within a retail store. As described above, the local computing device may be a retail store server, a point-of-sale device, proximity broadcast receiver, or other computing device within the retail store that is configured to utilize payment authentication information received from a central server. For example, the local computing device may be a point-of-sale device that is configured to be used by store agents when performing payment and other transaction operations with the user. In other embodiments, the local computing device may receive return messages from the central server and transmit payment authentication information to point-of-sale devices within the retail store. For example, the local computing device may be a local server that may transmit photographic information of a user to a cash register computing device at a payment area within the retail store.

FIG. 32A illustrates an embodiment method 3200 for a local computing device receiving payment authentication information from a central server. In determination block 1101, the local computing device may determine whether a return message is received from the central server. For example, the local computing device may monitor a buffer, message queue, communications port, etc. for incoming Internet protocol communications from the central server. If a return message is not received (i.e., determination block 1101 = "No"), the local computing device may continue with the operations in determination block 1101.

If a return message is received (i.e., determination block 1101 = "Yes"), in block 3202 the local computing device may parse the return message to detect data related to a user, such as identification and proximity (or location) information related to a user's wireless identity transmitter within the retail store. For example, the local computing device may evaluate the received return message and identify wireless identity transmitter identification information, a data segment that includes software instructions (e.g., firmware update instructions, etc.), and/or a data segment that contains payment authentication information associated with the user's profile stored on the central server. In an embodiment, the local computing device may also decode, decrypt, or otherwise access obscured data transmitted by the central server. For example, the local computing device and central server may share a secret code that may be used by the local computing device to decode contents of the return message.

In optional block 3203, the local computing device may store the data from the return message and/or sighting message in a local database. For example, payment authentication information for a particular user may be stored in the local computing device (e.g., a local store server) so that subsequent transactions may be more efficient without the need for the central server to retransmit the same data numerous times. In an embodiment, the local computing device may store data to generate statistical or historical information, as described above. For example, in addition to or in place of the central server accumulating data for foot traffic reports (e.g., the number of unique visitors to the retail store within a certain period, the duration of a particular user's dwelling within a certain area of the retail store, etc.), the local computing device may maintain similar statistical information. In an embodiment, the local computing device may be configured to only store data relevant to the particular store building, or alternatively, to interactions related to the local computing device itself. For example, when the local computing device is configured to operate as a proximity broadcast receiver and/or point-of-sale device, payment authentication information may be stored only when it relates to broadcast messages directly received by the local computing device.

In determination block 3204, the local computing device may determine whether the return message contains payment authentication data. For example, the local computing device may evaluate metadata associated with various data segments within the return message. In an embodiment, the return message may contain metadata and/or header information that indicates when payment authentication information is contained within the return message. For example, header information may include a code known by the local computing device to indicate the presence of payment authentication information. In an embodiment, the local computing device may determine whether imagery, credit card information, or other particular data types are contained within the return message and its data segments. For example, if the return message contains a photographic image of a face, or alternatively, facial characteristics data as generated by a facial recognition algorithm, the local computing device may determine that payment authentication information is contained within the return message. If the return message does not contain payment authentication information (i.e., determination block 3204 = "No"), the local computing device may continue with the operations in determination block 1101.

However, if the return message does contain payment authentication information (i.e., determination block 3204 = "Yes"), in block 3206 the local computing device may utilize the payment authentication information to assist in a transaction with the user. For example, the local computing device may display a picture of the user on a connected LCD screen so that a customer service agent using the local computing device may recognize the user waiting in line. In an embodiment, the local computing device may initiate software, applications, or routines based on receiving the payment authentication information. For example, upon receiving the return message, the local computing device may enter a transaction application and auto-fill data to represent the user's personal information. Additionally, the local computing device may transmit various messages to assist in the transaction based on the payment authentication information. For example, if the payment authentication information indicates the user is a preferred or rewards member, the local computing device may display a message for customer service representatives to make certain promotional offers and/or address the user in a particular manner (e.g., by name or by rewards zone experience or status indicators, etc.). As another example, the local computing device may instruct store agents by sending texts to employees, such as a manager or a particular sales rep, to come greet the user or try to conduct follow-up communications. After utilizing the payment authentication information, the local computing device may continue with the operations in determination block 1101.

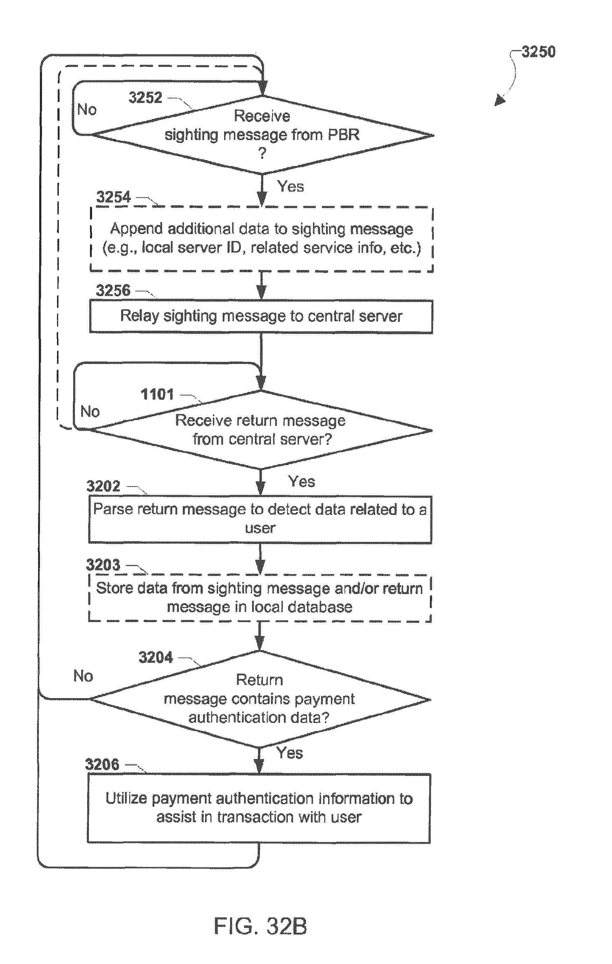

FIG. 32B illustrates an embodiment method 3250 for a local computing device receiving sighting messages from a proximity broadcast receiver and receiving payment authentication information from a central server. The method 3250 is similar to method 3200 described above with reference to FIG. 32A, except that method 3250 includes operations for the local computing device to receive and transmit sighting messages from associated proximity broadcast receivers. For example, stationary proximity broadcast receivers within a retail store may receive broadcast messages from users' wireless identity transmitters and transmit sighting messages to the local computing device, which may serve as a router or communications path to the Internet and thus the central server.

In determination block 3252, the local computing device may determine whether a sighting message is received from a proximity broadcast receiver. If the local computing device does not receive a sighting message (i.e., determination block 3252 = "No"), the local computing device may continue with the operations in determination block 3252. However, if the local computing device receives a sighting message (i.e., determination block 3252 = "Yes"), in optional block 3254 the local computing device may append additional data to the sighting message. For example, the appended information may include data identifying the local computing device, such as a local server ID, relative location information within the store, a registered service code known by the central server, the store's name/address/ contact information, etc.). In block 3256, the local computing device may relay the sighting message (and any additional data) to the central server.

In determination block 1101, the local computing device may determine whether a return message has been received from the central server. If a return message is not received (i.e., determination block 1101 = "No"), the local computing device may continue to perform the operations in determination block 1101. In an alternative embodiment, if a return message is not received (i.e., determination block 1101 = "No"), the local computing device may continue to perform the operations in determination block 3252.

However, if a return message is received (i.e., determination block 1101 = "Yes"), in block 3202 the local computing device may parse the return message to detect data related to a user, and in optional block 3203, the local computing device may store the data from the return message and/or sighting message in a local database. In determination block 3204, the local computing device may determine whether the return message contains payment authentication data. If the return message does not contain payment authentication information (i.e., determination block 3204 = "No"), the local computing device may continue with the operations in determination block 3252. If the return message does contain payment authentication information (i.e., determination block 3204 = "Yes"), in block 3206 the local computing device may utilize the payment authentication information to assist in a transaction with the user, and may continue with the operations in determination block 3252.

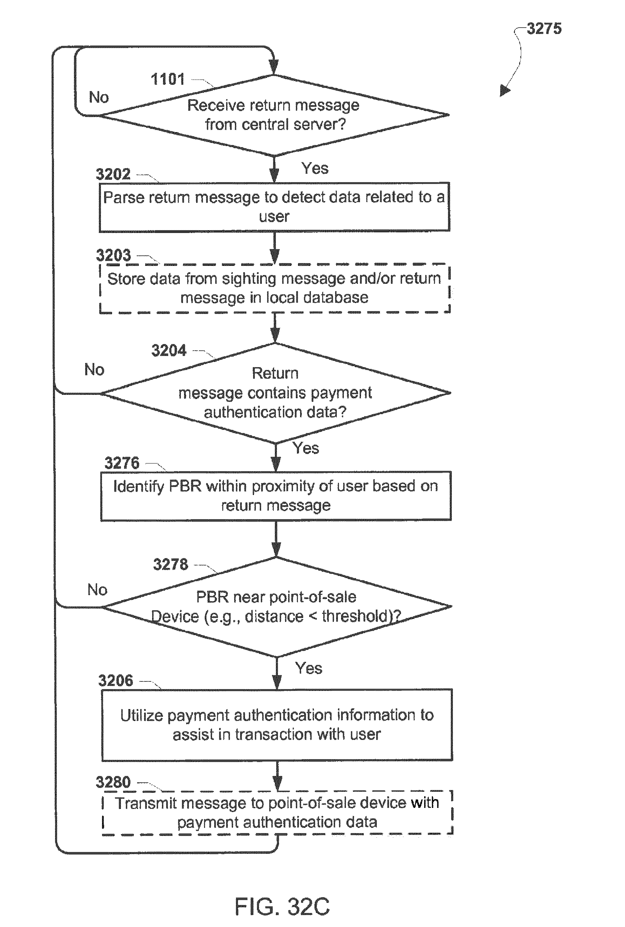

FIG. 32C illustrates an embodiment method 3275 for a local computing device associated with a retail store receiving payment authentication information from a central server. The method 3275 is similar to method 3200 described above with reference to FIG. 32A, except that method 3275 includes operations for the local computing device to determine whether the wireless identity transmitter is within proximity of a point-of-sale device. In other words, instead of the central server, the local computing device may perform operations to determine whether the wireless identity transmitter is near a point-of-sale device within the retail store. For example, the retail store may not provide location information of all point-of-sale devices within the store to the central server for storage, and thus may be required to determine to which cash registered computing device in the store a user's payment authentication information should be delivered.

In determination block 1101, the local computing device may determine whether a return message is received from the central server. If a return message is not received (i.e., determination block 1101 = "No"), the local computing device may continue with the operations in determination block 1101. If a return message is received (i.e., determination block 1101 = "Yes"), in block 3202 the local computing device may parse the return message to detect data related to a users, such as profile information related to the user's preferred payment methods and/or proximity information related to a user's wireless identity transmitter within the retail store. In optional block 3203, the local computing device may store the data from the return message. In determination block 3204, the local computing device may determine whether the return message contains payment authentication data. If the return message does not contain payment authentication information (i.e., determination block 3204 = "No"), the local computing device may continue with the operations in determination block 1101.

However, if the return message does contain payment authentication information (i.e., determination block 3204 = "Yes"), in block 3276 the local computing device may identify a proximity broadcast receiver within proximity of the user based on the return message. In other words, based on information within the return message (e.g., metadata, etc.) the local computing device may obtain the identifier (e.g., a unique code) of the proximity broadcast receiver that transmitted the sighting message reporting the user's wireless identity transmitter. For example, the return message may include data indicating that the return message was transmitted in response to receiving a sighting message from a particular proximity broadcast receiver within the retail store. In addition, the return message may include the identity of the wireless identity transmitter as well as the signal strength of the broadcast message related to the return message. In an embodiment, the return message may include the location information of the proximity broadcast receiver in addition to or instead of the proximity broadcast receiver identifier.

In determination block 3278, the local computing device may determine whether the proximity broadcast receiver is near a point-of-sale device. The operations in determination block 3278 may be similar to the operations in determination block 3104 described above with reference to FIG. 31. In particular, the local computing device may compare the location of the identified proximity broadcast receiver to locations of known point-of-sale devices within the retail store. For example, the local computing device may determine the distance between the identified proximity broadcast receiver's location information (as obtained from the return message or alternatively stored within a data table) to all known point-of-sale device locations within the retail store, and determine whether the shortest distance is within a proximity or distance threshold. In an embodiment, the local computing device may also use signal strength information (e.g., RSSI value) of broadcast messages indicated within the return message to determine an estimated distance from the proximity broadcast receiver (and the user's wireless identity transmitter) to the closest point-of-sale device.

In various embodiments, the proximity broadcast receivers of the retail store may be the same as the point-of-sale devices in the retail store. For example, the proximity broadcast receivers may all be cash register computing devices that are configured to receive and relay broadcast messages from users' wireless identity transmitters. In another embodiment, the proximity broadcast receiver related to the return message may be coincident with or the same as the local computing device. For example, the return message may correspond to a sighting message generated and transmitted by the local computing device.

If the proximity broadcast receiver is not near a point-of-sale device within the retail store (i.e., determination block 3278 = "No"), the local computing device may continue with the operations in determination block 1101. However, if the proximity broadcast receiver is near a point-of-sale device (i.e., determination block 3278 = "Yes"), in block 3206 the local computing device may utilize the payment authentication information to assist in a transaction with the user, as described above. In optional block 3280, the local computing device may transmit a message to a point-of-sale device with payment authentication. For example, based on the operations in blocks 3276-3278, the local computing device may identify a cash register computing device that is within proximity of the user and that is capable of presenting the user's payment authentication to customer service agents. The local computing device may then continue with the operations in determination block 1101.

FIG. 33A illustrates components of an exemplary wireless identity transmitter 110. The wireless identity transmitter 110 may include a microcontroller 3302, a short-range radio 3304 (e.g., a Bluetooth® radio or transceiver) coupled to an antenna 3306, a memory 3308, and a battery 3310. Although these components are shown linked by a common connection, they may be interconnected and configured in various ways. For example, a wireless identity transmitter 110 may be configured such that the microcontroller 3302 may determine when to transmit a message based on the contents of the memory 3308. In an embodiment, the microcontroller 3302 may be a Bluetooth® system-on-chip unit. The memory 3308 may also include one or more messages or message portions to be transmitted by the short-range radio 3304 via the antenna 3306 based on commands from the microcontroller 3302. The battery 3310 may supply power as needed by the other components. Also, in some implementations the microcontroller 3302, the short-range radio 3304 and/or the memory 3308 may be integrated together as a single integrated circuit. Since these components may be microchips of standard or off-the-shelf configuration, they are represented in FIG. 33A as blocks consistent with the structure of an example embodiment.

The wireless identity transmitter 110 may be coupled with or built into various objects, such as a bracelet. For example, an exemplary wireless identity transmitter 110 may be in a form easily attached to a strap, such as a watchband or dog collar. Alternate embodiments may incorporate a wireless identity transmitter 110 into any other mobile objects that may need tracking.

The wireless identity transmitter 110 may conserve power by periodically entering a power saving mode or going to sleep, such as regularly alternating between sleeping and broadcasting of the packet with the wireless identity transmitter 110's identification code. Various embodiments may include different cycles of broadcasting and sleeping, such as some embodiments broadcasting more or less frequently, such as waking and broadcasting every few seconds or minutes between periods of sleep.

In an embodiment, the battery 3310 may be a replaceable coin cell battery. In another embodiment, the wireless identity transmitter 110 may utilize the antenna 3306 to receive update software, instructions, or other data for storage and use in configuration operations, such as configuring transmission intervals and/or transmissions power. The wireless identity transmitter 110 may also store and execute software, algorithms, instructions, code, or other routines for generating rolling codes or identifiers, as described above. In an embodiment, the wireless identity transmitter may not maintain time (e.g., UTC) information, but may instead use a 30 ppm 16 kHz crystal as a clock. Such use of a crystal as a clock may create a timing drift of approximately 40 seconds per year.

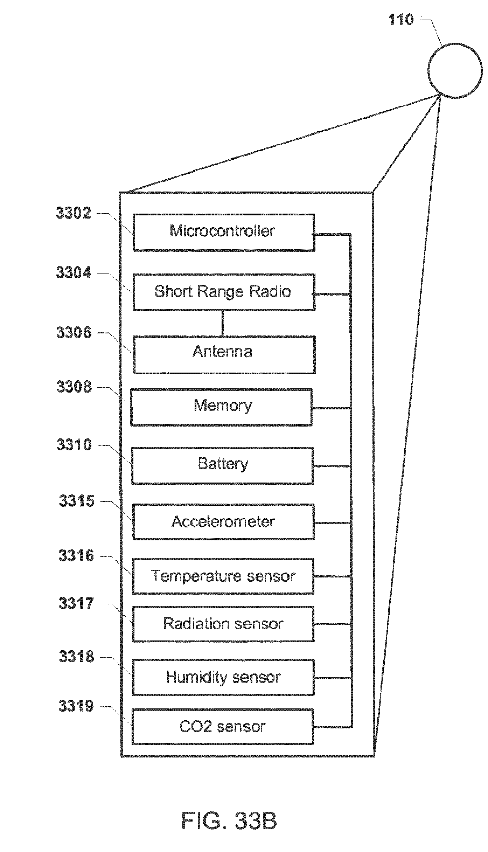

FIG. 33B illustrates components of an embodiment wireless identity transmitter 110. Similar to the embodiment described above with reference to FIG. 33A, the wireless identity transmitter 110 may include a microcontroller 3302, a short-range radio 3304 (e.g., Bluetooth®, BTLE, Zigbee®, Peanut®, etc.) connected to an antenna 3306 and coupled to the microcontroller 3302, memory 3308, and a battery unit 3310. Alternatively the memory 3308 may be contained within the microcontroller 3302, which may also include a separate processing unit. The short-range radio 3304 may be a transmitter capable of broadcasting messages or signals including a device ID or, alternatively, a transceiver configured to transmit and receive RF signals, enabling communications with other devices utilizing a communication protocol. For example, the wireless identity transmitter 110 may be configured to communicate with other short-range radio enabled devices, such as smartphones. In an embodiment, the short-range radio 3304 may be configured to communicate via various low-energy, wireless communication protocols, such as LTE-D, peer-to-peer LTE-D, and WiFi-Direct.

In an embodiment, the wireless identity transmitter 110 may include a speaker (not shown) configured to emit a sound capable of being received by a proximity broadcast receiver and/or being heard by a heard by a user. For example, the wireless identity transmitter 110 may emit audible communications that may indicate its presence to listening proximity broadcast receivers. In another embodiment, the wireless identity transmitter 110 may be configured to transmit signals at varying signal strengths, thereby varying the range at which broadcasts from the wireless identity transmitter 110 may be received by proximity broadcast receivers.

Additionally, the wireless identity transmitter 110 may include one or more sensors for measuring various conditions and variables. In an embodiment, the wireless identity transmitter 110 may include an accelerometer 3315 (or any other motion sensor such as a gyroscope or gravitometer), which may collect data indicative of motion of an asset associated with the wireless identity transmitter 110. For example, the accelerometer 3315 may generate motion data describing the movements of a child carrying the wireless identity transmitter 110. Other sensors that may be included within the wireless identity transmitter 110 include a temperature sensor 3316 (such as a thermistor), a radiation sensor 3317, a humidity sensor 3318, and a carbon dioxide ($CO_2$) sensor 3319. In the various embodiments, the wireless identity transmitter 110 may include any combination of these and other sensors. These potential sensors are only examples of the types of sensors that may be integrated into wireless identity transmitters 110 and other types of sensors may be included. For example, the wireless identity transmitter 110 may also include sensors not shown in the various diagrams, such as a microphone, a camera, a heat sensor, a pressure sensor, and a light sensor.

FIG. 34A illustrates primary components of an exemplary proximity broadcast receiver embodiment. The proximity broadcast receiver 142 may include a short-range radio 3404 (e.g., a Bluetooth radio or transceiver) capable of communicating with a short-range wireless radio (e.g., a Bluetooth® radio in the wireless identity transmitter) coupled to an antenna 3406, and a secondary network device 3408 capable of communicating directly or indirectly back to a central server via a network, such as the Internet. In some embodiments, the secondary network device 3408 may be a cellular or wireless radio or a modem or other wired network device. The proximity broadcast receiver 142 may also include a processor 3402, a memory 3412, and a battery 3410 either as the primary power supply or as a backup power supply in the case of proximity broadcast receiver 142 coupled to utility power. The proximity broadcast receiver 142 may include a GPS receiver 3414 or other type of location determining mechanism for determining a current location to associate with any message received from a wireless identity transmitter. If the proximity broadcast receiver is not mobile, it may not include a GPS receiver 3414 in some embodiments since the location may be known and constant. Although these components are shown linked by a common connection, they may interconnected and configured in various ways. Since these components may be microchips of standard or off-the-shelf configuration, they are represented in FIG. 34A as blocks consistent with the structure of an example embodiment.

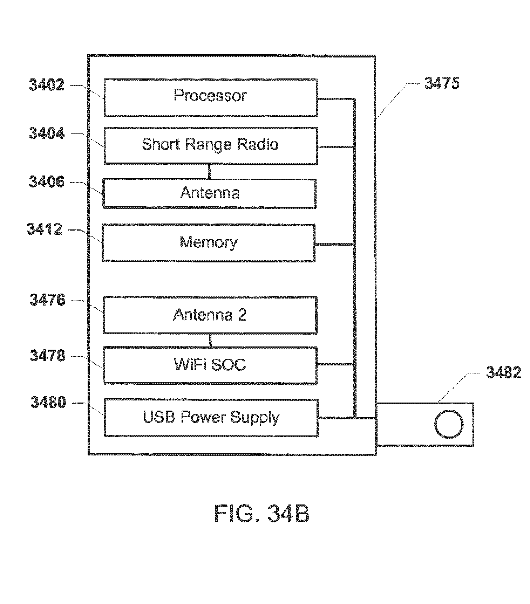

FIG. 34B illustrates an embodiment proximity broadcast receiver 3475 that can be plugged into a power outlet. Similar to the embodiment described above with reference to FIG. 34A, the proximity broadcast receiver 3475 may include a processor 3402, a memory unit 3412, and a short-range radio 3404 (e.g., Bluetooth®, Bluetooth® LE, LTE-D, peer-to-peer LTE-D, Zigbee®, Peanut®, etc.) connected to an antenna 3406. The proximity broadcast receiver 3475 may also include a WiFi system-on-chip 3478 (referred to as "SOC" in FIG. 34C) coupled to a second antenna 3476. In another embodiment, the system-on-chip 3478 may be a Bluetooth® Low Energy system-on-chip. The proximity broadcast receiver 3475 may utilize the system-on-chip 3478 to exchange data over a wireless local area network, such as by communicating with a WiFi router. Additionally, the proximity broadcast receiver 3475 may include a plug 3482 for interfacing with a power supply or otherwise receiving power, such as alternating current power (or "AC"). In various embodiments, the plug 3482 may be configured to connect with different power outlets standards (e.g., British Standards, National Electrical Manufacturers Association, etc.), and may include a grounding element (not shown). The plug 3482 may be coupled to a USB Power supply 3480 that provides power to the various components of the proximity broadcast receiver 3475, such as the processor 3402. In an alternative embodiment, the proximity broadcast receiver 3475 may recharge an internal battery (not shown) using power received from the plug 3482 and/or USB power supply 3480.

In an embodiment, the proximity broadcast receiver 3475 may store software instructions, such as within the memory 3412 or other circuitry that may be utilized by the processor 3402 and/or the system-on-chip 3478 to perform operations to transmit and/or receive short-range and long-range signals, respectively. In an embodiment, the proximity broadcast receiver 3475 may utilize the antennas 3406, 3476 to receive update software, instructions, or other data for storage and use in updating firmware, modifying operating parameters, and other configuration modifications.

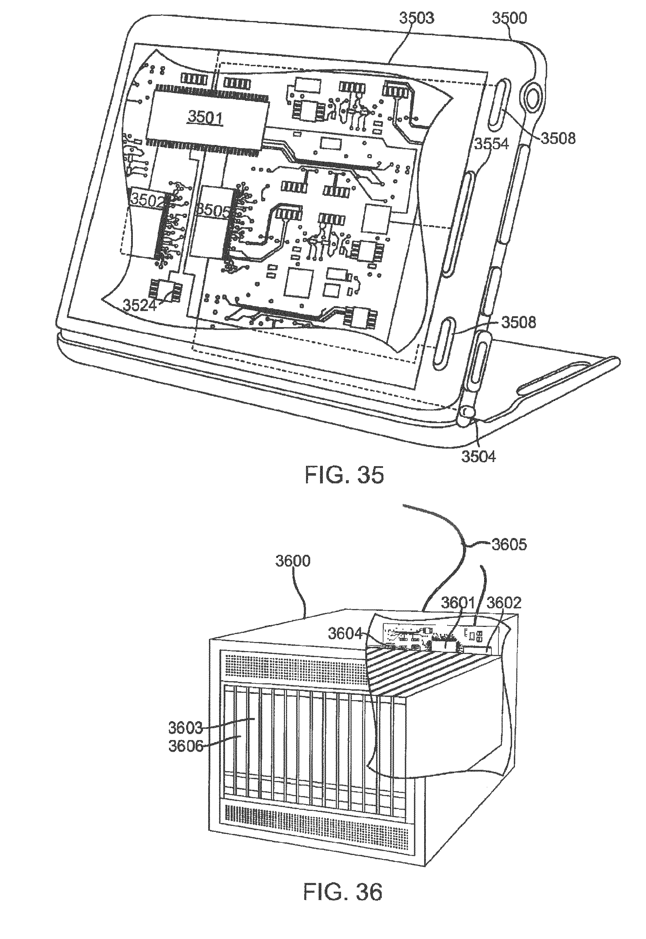

FIG. 35 is a system block diagram of a smartphone type mobile device suitable for use with various embodiments. A smartphone 3500 may include a processor 3501 coupled to internal memory 3502, a display 3503, and to a speaker 3554. Additionally, the smartphone 3500 may include an antenna 3504 for sending and receiving electromagnetic radiation that may be connected to a wireless data link and/or cell telephone transceiver 3505 coupled to the processor 3501 and capable of communicating over a wide area wireless communication network. Smartphones may include a separate short-range radio transceiver 3524 capable of communicating or pairing with wireless identity transmitters. Smartphones 3500 typically may also include menu selection buttons or rocker switches 3508 for receiving user inputs.

FIG. 36 is a system block diagram of a server 3600 suitable for implementing the various embodiments of this disclosure. The server 3600 may be a commercially available server device. Such a server 3600 typically includes a processor 3601 coupled to volatile memory 3602 and a large capacity nonvolatile memory, such as a disk drive 3603. The server 3600 may also include a floppy disc drive, compact disc (CD) or DVD disc drive 3606 coupled to the processor 3601. The server 3600 may also include network access ports 3604 coupled to the processor 3601 for establishing data connections with a network 3605, such as a local area network coupled to other broadcast system computers and servers.

The processors 3501, 3601 may be any programmable microprocessor, microcomputer or multiple processor chip or chips that can be configured by software instructions (applications) to perform a variety of functions, including the functions of the various embodiments described below. In some mobile proximity broadcast receivers, multiple processors 3501 may be provided, such as one processor dedicated to wireless communication functions and one processor dedicated to running other applications. Typically, software applications may be stored in the internal memory 3502, 3602 before they are accessed and loaded into the processor 3501, 3601. The processor 3501, 3601 may include internal memory sufficient to store the application software instructions.

The foregoing method descriptions and the process flow diagrams are provided merely as illustrative examples and are not intended to require or imply that the steps of the various embodiments must be performed in the order presented. As will be appreciated by one of skill in the art the order of steps in the foregoing embodiments may be performed in any order. Words such as "thereafter," "then," "next," etc. are not intended to limit the order of the steps; these words are simply used to guide the reader through the description of the methods. Further, any reference to claim elements in the singular, for example, using the articles "a," "an" or "the" is not to be construed as limiting the element to the singular.

The various illustrative logical blocks, modules, circuits, and algorithm steps described in connection with the embodiments disclosed herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention.

The hardware used to implement the various illustrative logics, logical blocks, modules, and circuits described in connection with the aspects disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but, in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration. Alternatively, some steps or methods may be performed by circuitry that is specific to a given function.

In one or more exemplary aspects, the functions described may be implemented in hardware, software, firmware, or any combination thereof. If implemented in software, the functions may be stored on or transmitted over as one or more instructions or code on a computer-readable medium. The steps of a method or algorithm disclosed herein may be embodied in a processor-executable software module, which may reside on a tangible, non-transitory computer-readable storage medium. Tangible, non-transitory processor-readable storage medium or non-transitory computer-readable storage media may be any available media that may be accessed by a computer. By way of example, and not limitation, such non-transitory processor-readable and computer-readable storage media may comprise RAM, ROM, EEPROM, CD-ROM or other optical disk storage, magnetic disk storage or other magnetic storage devices, or any other medium that may be used to store desired program code in the form of instructions or data structures and that may be accessed by a computer. Disk and disc, as used herein, includes compact disc (CD), laser disc, optical disc, digital versatile disc (DVD), floppy disk, and blu-ray disc where disks usually reproduce data magnetically, while discs reproduce data optically with lasers. Combinations of the above should also be included within the scope of non-transitory processor-readable storage medium. Additionally, the operations of a method or algorithm may reside as one or any combination or set of codes and/or instructions on a tangible, non-transitory machine readable medium and/or computer-readable medium, which may be incorporated into a computer program product.

The preceding description of the disclosed embodiments is provided to enable any person skilled in the art to make or use the present invention. Various modifications to these embodiments will be readily apparent to those skilled in the art, and the generic principles defined herein may be applied to other embodiments without departing from the spirit or scope of the invention. Thus, the present invention is not intended to be limited to the embodiments shown herein but is to be accorded the widest scope consistent with the following claims and the principles and novel features disclosed herein.

## OTHER STATEMENTS OF THE INVENTION

1. A method for providing profile information associated with a user based on proximity, comprising:

receiving in a server a sighting message that includes a rolling identifier of a wireless identity transmitter associated with an individual, wherein the rolling identifier is generated via an algorithm that uses a unique device identifier of the wireless identity transmitter, a secret key shared with the server, and a counter;
determining in the server whether the wireless identity transmitter is associated with the user based on the rolling identifier;
determining in the server whether the sighting message is related to a registered service based on information included within the sighting message regarding a proximity broadcast receiver;
identifying profile information within stored profile information associated with the user that is relevant to the registered service when the wireless identity transmitter is associated with the user and the sighting message is related to the registered service; and
transmitting a message that includes the identified relevant profile information.

2. The method of clause 1, wherein the relevant profile information includes at least one of personal demographics, interests, birth date, residence, medical information, health conditions, customer preferences, and clothing and shoe size information.

3. The method of clause 1, wherein identifying relevant profile information within the stored profile information associated with the user that is relevant to the registered service comprises:

identifying categories corresponding to the registered service, wherein categories describe at least one of services offered, products offered, a type of business, demographics, interests, and target audience of the registered service; and

matching the identified categories to the profile information associated with the user.

4. The method of clause 1, further comprising storing profile information received from the user during a registration process.

5. The method of clause 1, further comprising automatically obtaining the profile information related to the user from online sources, wherein the online sources include at least one of social networking accounts and shopping websites.

6. The method of clause 1, further comprising storing profile permissions from the user, wherein identifying profile information within stored profile information associated with the user that is relevant to the registered service when the wireless identity transmitter is associated with the user and the sighting message is related to the registered service comprises identifying the relevant profile information associated with the user that is relevant to the registered service and authorized by the stored profile permissions from the user when the wireless identity transmitter is associated with the user and the sighting message is related to the registered service.

7. The method of clause 1, wherein transmitting a message that includes the identified relevant profile information comprises transmitting the message to a local computing device associated with the registered service that includes the identified relevant profile information, wherein the local computing device is at least one of a point-of-sale device, a mobile device used by an employee of the registered service, and the proximity broadcast receiver associated with the registered service.

8. The method of clause 1, further comprising:

determining whether the wireless identity transmitter is near a point-of-sale device associated with the registered service when the wireless identity transmitter is associated with the user and the sighting message is related to the registered service,
wherein transmitting a message that includes the identified relevant profile information comprises transmitting the message to the point-of-sale device that is near the wireless identity transmitter, and
wherein the identified relevant profile information associated with the user includes payment authentication information for confirming an identity of the user.

9. The method of clause 8, wherein the payment authentication information includes at least one of address information, an email address, a photo, a signature sample, audio samples, credit card information, and preferred banking account information.

10. A method for sharing profile information of an individual based on proximity, comprising:

receiving in a server a sighting message that includes a rolling identifier of a wireless identity transmitter associated with the individual, wherein the rolling identifier is generated via an algorithm that uses a unique device identifier of the wireless identity transmitter, a secret key shared with the server, and a counter;
identifying a first profile based on the rolling identifier of the wireless identity transmitter;
identifying a second profile based on information related to a proximity broadcast receiver included within the sighting message;
identifying relevant profile information from the first profile that is authorized to be shared based on permissions of the first profile;
identifying relevant profile information from the second profile that is authorized to be shared based on permissions of the second profile;
transmitting a first message to a first device associated with the second profile when there is relevant profile information from the first profile that is identified and authorized to be shared; and
transmitting a second message to a second device associated with the first profile when there is relevant profile information from the second profile that is identified and authorized to be shared.

11. A server configured to provide profile information associated with a user based on proximity, comprising:

a server processor configured with server-executable instructions to perform operations comprising:

receiving in the server a sighting message that includes a rolling identifier of a wireless identity transmitter associated with an individual, wherein the rolling identifier is generated via an algorithm that uses a unique device identifier of the wireless identity transmitter, a secret key shared with the server, and a counter; determining in the server whether the wireless identity transmitter is associated with the user based on the rolling identifier; determining in the server whether the sighting message is related to a registered service based on information included within the sighting message regarding a proximity broadcast receiver; identifying profile information within stored profile information associated with the user that is relevant to the registered service when the wireless identity transmitter is associated with the user and the sighting message is related to the registered service; and transmitting a message that includes the identified relevant profile information.

12. The server of clause 11, wherein the relevant profile information includes at least one of personal demographics, interests, birth date, residence, medical information, health conditions, customer preferences, and clothing and shoe size information.

13. The server of clause 11, wherein the server processor is configured with server executable instructions to perform operations such that identifying relevant profile information within the stored profile information associated with the user that is relevant to the registered service comprises:

identifying categories corresponding to the registered service, wherein categories describe at least one of services offered, products offered, a type of business, demographics, interests, and target audience of the registered service; and matching the identified categories to the profile information associated with the user.

14. The server of clause 11, wherein the server processor is configured with server executable instructions to perform operations further comprising storing profile information received from the user during a registration process.

15. The server of clause 11, wherein the server processor is configured with server executable instructions to perform operations further comprising automatically obtaining the profile information related to the user from online sources, wherein the online sources include at least one of social networking accounts and shopping websites.

16. The server of clause 11, wherein the server processor is configured with server executable instructions to perform operations further comprising storing profile permissions from the user, wherein the server processor is configured with server executable instructions to perform operations such that identifying profile information within stored profile information associated with the user that is relevant to the registered service when the wireless identity transmitter is associated with the user and the sighting message is related to the registered service comprises identifying the relevant profile information associated with the user that is relevant to the registered service and authorized by the stored profile permissions from the user when the wireless identity transmitter is associated with the user and the sighting message is related to the registered service.

17. The server of clause 11, wherein the server processor is configured with server executable instructions to perform operations such that transmitting a message that includes the identified relevant profile information comprises transmitting the message to a local computing device associated with the registered service that includes the identified relevant profile information, wherein the local computing device is at least one of a point-of-sale device, a mobile device used by an employee of the registered service, and the proximity broadcast receiver associated with the registered service.

18. The server of clause 11, wherein the server processor is configured with server executable instructions to perform operations further comprising:

determining whether the wireless identity transmitter is near a point-of-sale device associated with the registered service when the wireless identity transmitter is associated with the user and the sighting message is related to the registered service,

72

wherein the server processor is configured with server executable instructions to perform operations such that transmitting a message that includes the identified relevant profile information comprises transmitting the message to the point-of-sale device that is near the wireless identity transmitter, and

wherein the identified relevant profile information associated with the user includes payment authentication information for confirming an identity of the user.

19. The server of clause 18, wherein the payment authentication information includes at least one of address information, an email address, a photo, a signature sample, audio samples, credit card information, and preferred banking account information.

20. A server configured to share profile information of an individual based on proximity, comprising:

a server processor configured with server-executable instructions to perform operations comprising:

receiving in the server a sighting message that includes a rolling identifier of a wireless identity transmitter associated with the individual, wherein the rolling identifier is generated via an algorithm that uses a unique device identifier of the wireless identity transmitter, a secret key shared with the server, and a counter;
identifying a first profile based on the rolling identifier of the wireless identity transmitter;
identifying a second profile based on information related to a proximity broadcast receiver included within the sighting message;
identifying relevant profile information from the first profile that is authorized to be shared based on permissions of the first profile;
identifying relevant profile information from the second profile that is authorized to be shared based on permissions of the second profile;
transmitting a first message to a first device associated with the second profile when there is relevant profile information from the first profile that is identified and authorized to be shared; and
transmitting a second message to a second device associated with the first profile when there is relevant profile information from the second profile that is identified and authorized to be shared.

21. A server configured to provide profile information associated with a user based on proximity, comprising:

means for receiving in the server a sighting message that includes a rolling identifier of a wireless identity transmitter associated with an individual, wherein the rolling identifier is generated via an algorithm that uses a unique device identifier of the wireless identity transmitter, a secret key shared with the server, and a counter;
means for determining in the server whether the wireless identity transmitter is associated with the user based on the rolling identifier;
means for determining in the server whether the sighting message is related to a registered service based on information included within the sighting message regarding a proximity broadcast receiver;
means for identifying profile information within stored profile information associated with the user that is relevant to the registered service when the wireless identity transmitter is associated with the user and the sighting message is related to the registered service; and
means for transmitting a message that includes the identified relevant profile information.

22. The server of clause 21, wherein the relevant profile information includes at least one of personal demographics, interests, birth date, residence, medical information, health conditions, customer preferences, and clothing and shoe size information.

23. The server of clause 21, wherein means for identifying relevant profile information within the stored profile information associated with the user that is relevant to the registered service comprises:

means for identifying categories corresponding to the registered service, wherein categories describe at least one of services offered, products offered, a type of business, demographics, interests, and target audience of the registered service; and
means for matching the identified categories to the profile information associated with the user.

24. The server of clause 21, further comprising means for storing profile information received from the user during a registration process.

25. The server of clause 21, further comprising means for automatically obtaining the profile information related to the user from online sources, wherein the online sources include at least one of social networking accounts and shopping websites.

26. The server of clause 21, further comprising means for storing profile permissions from the user, wherein means for identifying profile information within stored profile information associated with the user that is relevant to the registered service when the wireless identity transmitter is associated with the user and the sighting message is related to the registered service comprises means for identifying the relevant profile information associated with the user that is relevant to the registered service and authorized by the stored profile permissions from the user when the wireless identity transmitter is associated with the user and the sighting message is related to the registered service.

27. The server of clause 21, wherein means for transmitting a message that includes the identified relevant profile information comprises means for transmitting the message to a local computing device associated with the registered service that includes the identified relevant profile information, wherein the local computing device is at least one of a point-of-sale device, a mobile device used by an employee of the registered service, and the proximity broadcast receiver associated with the registered service.

28. The server of clause 21, further comprising:

means for determining whether the wireless identity transmitter is near a point-of-sale device associated with the registered service when the wireless identity transmitter is associated with the user and the sighting message is related to the registered service,
wherein means for transmitting a message that includes the identified relevant profile information comprises means for transmitting the message to the point-of-sale device that is near the wireless identity transmitter, and wherein the identified relevant profile information associated with the user includes payment authentication information for confirming an identity of the user.

29. The server of clause 28, wherein the payment authentication information includes at least one of address information, an email address, a photo, a signature sample, audio samples, credit card information, and preferred banking account information.

30. A server configured to share profile information of an individual based on proximity, comprising:

means for receiving in the server a sighting message that includes a rolling identifier of a wireless identity transmitter associated with the individual, wherein the rolling identifier is generated via an algorithm that uses a unique device identifier of the wireless identity transmitter, a secret key shared with the server, and a counter;
means for identifying a first profile based on the rolling identifier of the wireless identity transmitter;
means for identifying a second profile based on information related to a proximity broadcast receiver included within the sighting message;
means for identifying relevant profile information from the first profile that is authorized to be shared based on permissions of the first profile;
means for identifying relevant profile information from the second profile that is authorized to be shared based on permissions of the second profile;
means for transmitting a first message to a first device associated with the second profile when there is relevant profile information from the first profile that is identified and authorized to be shared; and
means for transmitting a second message to a second device associated with the first profile when there is relevant profile information from the second profile that is identified and authorized to be shared.

31. A non-transitory server-readable storage medium having stored thereon server-executable instructions configured to cause a server to perform operations for providing profile information associated with a user based on proximity, the operations comprising:

receiving in the server a sighting message that includes a rolling identifier of a wireless identity transmitter associated with an individual, wherein the rolling identifier is generated via an algorithm that uses a unique device identifier of the wireless identity transmitter, a secret key shared with the server, and a counter;
determining in the server whether the wireless identity transmitter is associated with the user based on the rolling identifier;

determining in the server whether the sighting message is related to a registered service based on information included within the sighting message regarding a proximity broadcast receiver;

identifying profile information within stored profile information associated with the user that is relevant to the registered service when the wireless identity transmitter is associated with the user and the sighting message is related to the registered service; and

transmitting a message that includes the identified relevant profile information.

32. The non-transitory server-readable storage medium of clause 31, wherein the relevant profile information includes at least one of personal demographics, interests, birth date, residence, medical information, health conditions, customer preferences, and clothing and shoe size information.

33. The non-transitory server-readable storage medium of clause 31, wherein the stored server-executable instructions are configured to cause the server to perform operations such that identifying relevant profile information within the stored profile information associated with the user that is relevant to the registered service comprises:

identifying categories corresponding to the registered service, wherein categories describe at least one of services offered, products offered, a type of business, demographics, interests, and target audience of the registered service; and

matching the identified categories to the profile information associated with the user.

34. The non-transitory server-readable storage medium of clause 31, wherein the stored server-executable instructions are configured to cause the server to perform operations further comprising storing profile information received from the user during a registration process.

35. The non-transitory server-readable storage medium of clause 31, wherein the stored server-executable instructions are configured to cause the server to perform operations further comprising automatically obtaining the profile information related to the user from online sources, wherein the online sources include at least one of social networking accounts and shopping websites.

36. The non-transitory server-readable storage medium of clause 31, wherein the stored server-executable instructions are configured to cause the server to perform operations further comprising storing profile permissions from the user, and wherein the stored server-executable instructions are configured to cause the server to perform operations such that identifying profile information within stored profile information associated with the user that is relevant to the registered service when the wireless identity transmitter is associated with the user and the sighting message is related to the registered service comprises identifying the relevant profile information associated with the user that is relevant to the registered service and authorized by the stored profile permissions from the user when the wireless identity transmitter is associated with the user and the sighting message is related to the registered service.

37. The non-transitory server-readable storage medium of clause 31, wherein the stored server-executable instructions are configured to cause the server to perform operations such that transmitting a message that includes the identified relevant profile information comprises transmitting the message to a local computing device associated with the registered service that includes the identified relevant profile information, wherein the local computing device is at least one of a point-of-sale device, a mobile device used by an employee of the registered service, and the proximity broadcast receiver associated with the registered service.

38. The non-transitory server-readable storage medium of clause 31, wherein the stored server-executable instructions are configured to cause the server to perform operations further comprising:

determining whether the wireless identity transmitter is near a point-of-sale device associated with the registered service when the wireless identity transmitter is associated with the user and the sighting message is related to the registered service,

wherein the stored server-executable instructions are configured to cause the server to perform operations such that transmitting a message that includes the identified relevant profile information comprises transmitting the message to the point-of-sale device that is near the wireless identity transmitter, and

wherein the identified relevant profile information associated with the user includes payment authentication information for confirming an identity of the user.

39. The non-transitory server-readable storage medium of clause 38, wherein the payment authentication information includes at least one of address information, an email address, a photo, a signature sample, audio samples, credit card information, and preferred banking account information.

40. A non-transitory server-readable storage medium having stored thereon server-executable instructions configured to cause a server to perform operations for sharing profile information of an individual based on proximity, the operations comprising:

receiving in the server a sighting message that includes a rolling identifier of a wireless identity transmitter associated with the individual, wherein the rolling identifier is generated via an algorithm that uses a unique device identifier of the wireless identity transmitter, a secret key shared with the server, and a counter; identifying a first profile based on the rolling identifier of the wireless identity transmitter; identifying a second profile based on information related to a proximity broadcast receiver included within the sighting message; identifying relevant profile information from the first profile that is authorized to be shared based on permissions of the first profile; identifying relevant profile information from the second profile that is authorized to be shared based on permissions of the second profile; transmitting a first message to a first device associated with the second profile when there is relevant profile information from the first profile that is identified and authorized to be shared; and transmitting a second message to a second device associated with the first profile when there is relevant profile information from the second profile that is identified and authorized to be shared.

41. A system, comprising:

a server; a wireless identity transmitter; and a proximity broadcast receiver, wherein the wireless identity transmitter comprises:

a first memory; a first transceiver configured to broadcast short-range wireless signals capable of being received by the proximity broadcast receiver; and a first processor coupled to the first memory and the first transceiver, and configured with processor-executable instructions to perform operations comprising:

generating a rolling identifier periodically via an algorithm that uses a unique device identifier of the wireless identity transmitter that is associated with an individual, a secret key shared with the server, and a counter; and periodically broadcasting via the first transceiver a short-range wireless signal including the rolling identifier of the wireless

identity transmitter, and

wherein the proximity broadcast receiver comprises:

a second memory;

a second transceiver configured to exchange short-range wireless signals with the wireless identity transmitter;

a network device configured to exchange signals with the server; a second processor coupled to the second memory, the second transceiver, and the network device and configured with processor-executable instructions to perform operations comprising:

receiving via the second transceiver the short-range wireless signal including the rolling identifier broadcast by the wireless identity transmitter within proximity; generating a sighting message in response to the received signal, wherein the sighting message includes the rolling identifier and associated data; and

transmitting the sighting message via long-range communications using the network device, and

wherein the server is configured with server-executable instructions to perform operations comprising:

storing the profile information associated with a user;
receiving in the server the sighting message that includes the rolling identifier;
determining in the server whether the wireless identity transmitter is associated with the user based on the rolling identifier;
determining in the server whether the sighting message is related to a registered service based on information included within the sighting message regarding the proximity broadcast receiver;
identifying relevant profile information within the stored profile information associated with the user that is relevant to the registered service when the wireless identity transmitter is associated with the user and the sighting message is related to the registered service; and
transmitting a message that includes the identified relevant profile information.

42. The system of clause 41, wherein the relevant profile information includes at least one of personal demographics, interests, birth date, residence, medical information, health conditions, customer preferences, and clothing and shoe size information.

43. The system of clause 41, wherein the server is configured with server-executable instructions to perform operations such that identifying relevant profile information within the stored profile information associated with the user that is relevant to the registered service comprises:

identifying categories corresponding to the registered service, wherein categories describe at least one of services offered, products offered, a type of business, demographics, interests, and target audience of the registered service; and

matching the identified categories to the profile information associated with the user.

44. The system of clause 41, wherein the server is configured with server-executable instructions to perform operations such that storing the profile information associated with the user comprises storing data received from the user during a registration that includes the profile information.

45. The system of clause 41, wherein the server is configured with server-executable instructions to perform operations further comprising automatically obtaining the profile information related to the user from online sources, wherein the online sources include at least one of social networking accounts and shopping websites.

46. The system of clause 41, wherein:

the server is configured with server-executable instructions to perform operations further comprising storing profile permissions from the user; and
the server is configured with server-executable instructions to perform operations such that identifying relevant profile information within the stored profile information associated with the user that is relevant to the registered service when the wireless identity transmitter is associated with the user and the sighting message is related to the registered service comprises identifying the relevant profile information within the stored profile information associated with the user that is relevant to the registered service and authorized by the stored profile permissions from the user when the wireless identity transmitter is associated with the user and the sighting message is related to the registered service.

47. The system of clause 41, wherein the server is configured with server-executable instructions to perform operations such that transmitting a message that includes the identified relevant profile information comprises transmitting the message to a local computing device associated with the registered service that includes the identified relevant profile information, wherein the local computing device is at least one of a point-of-sale device, a mobile device used by an employee of the registered service, and the proximity broadcast receiver associated with the registered service.

48. The system of clause 41, wherein the server is configured with server-executable instructions to perform operations further comprising:

determining whether the wireless identity transmitter is near a point-of-sale device associated with the registered service when the wireless identity transmitter is associated with the user and the sighting message is related to the registered service, and

wherein the server is configured with server-executable instructions to perform operations such that transmitting a message that includes the identified relevant profile information comprises transmitting the message to the point-of-sale device that is near the wireless identity transmitter, and

wherein the identified relevant profile information associated with the user includes payment authentication information for confirming an identity of the user.

49. The system of clause 48, wherein the payment authentication information includes at least one of address information, an email address, a photo, a signature sample, audio samples, credit card information, and preferred banking account information.

50. A system, comprising:

a server;
a wireless identity transmitter; and
a proximity broadcast receiver,
wherein the wireless identity transmitter comprises:

a first memory;
a first transceiver configured to broadcast short-range wireless signals capable of being received by the proximity broadcast receiver; and
a first processor coupled to the first memory and the first transceiver, and configured with processor-executable instructions to perform operations comprising:

generating a rolling identifier periodically via an algorithm that uses a unique device identifier of the wireless identity transmitter that is associated with an individual, a secret key shared with the server, and a counter; and
periodically broadcasting via the first transceiver a short-range wireless signal including the rolling identifier of the wireless

identity transmitter, and

wherein the proximity broadcast receiver comprises:

a second memory;

a second transceiver configured to exchange short-range wireless signals with the wireless identity transmitter;
a network device configured to exchange signals with the server;
a second processor coupled to the second memory, the second transceiver, and the network device and configured with processor-executable instructions to perform operations comprising:

receiving via the second transceiver the short-range wireless signal including the rolling identifier broadcast by the wireless identity transmitter within proximity;
generating a sighting message in response to the received signal, wherein the sighting message includes the rolling identifier and associated data; and
transmitting the sighting message via long-range communications using the network device, and

wherein the server is configured with server-executable instructions to perform operations comprising:

receiving in the server the sighting message that includes the rolling identifier;
identifying a first profile based on the rolling identifier of the wireless identity transmitter;
identifying a second profile based on information related to the proximity broadcast receiver included within the sighting message;
identifying relevant profile information from the first profile that is authorized to be shared based on permissions of the first profile;
identifying relevant profile information from the second profile that is authorized to be shared based on permissions of the second profile;
transmitting a first message to a first device associated with the second profile when there is relevant profile information from the first profile that is identified and authorized to be shared; and
transmitting a second message to a second device associated with the first profile when there is relevant profile information from the second profile that is identified and authorized to be shared.

51. A method for a mobile device to provide profile information associated with a user based on proximity, comprising:

storing the profile information locally within the mobile device;
receiving a short-range wireless message from a proximate device;
identifying relevant profile information within the stored profile information that is authorized to be shared based on the received message; and
transmitting a response message including the identified relevant profile information that is authorized to be shared.

52. A mobile device configured to provide profile information associated with a user based on proximity, comprising:

means for storing the profile information locally within the mobile device;
means for receiving a short-range wireless message from a proximate device;
means for identifying relevant profile information within the stored profile information that is authorized to be shared based on the received message; and
means for transmitting a response message including the identified relevant profile information that is authorized to be shared.

53. A mobile device configured to provide profile information associated with a user based on proximity, comprising:

a memory; and
a processor coupled to the memory, wherein the processor is configured with processor-executable instructions to perform operations comprising:

storing the profile information locally within the mobile device;
receiving a short-range wireless message from a proximate device;
identifying relevant profile information within the stored profile information that is authorized to be shared based on the received message; and
transmitting a response message including the identified relevant profile information that is authorized to be shared.

54. A non-transitory processor-readable storage medium having stored thereon processor executable instructions configured to cause a mobile device to perform operations to provide profile information associated with a user based on proximity, the operations comprising:

storing the profile information locally within the mobile device;
receiving a short-range wireless message from a proximate device;
identifying relevant profile information within the stored profile information that is authorized to be shared based on the received message; and
transmitting a response message including the identified relevant profile information that is authorized to be shared.

## Claims

1. A method for a mobile device (2902) to provide profile information associated with a user based on proximity, comprising:

storing (2956) the profile information;
receiving (2957) a short-range wireless message from a proximate device (2901);
identifying (2960) relevant profile information within the stored profile information that is authorized to be shared based on the received message; and

transmitting (2966) a message including the identified relevant profile information that is authorized to be shared.

2. A method according to claim 1, further comprising receiving (2952) the profile information from user interaction.

3. A method according to any of claims 1 and 2, further comprising downloading (2954) the profile information from a central server.

4. A method according to any of claims 1 to 3, further comprising identifying (2958) categories of information based on the short-range wireless message.

5. A method according to any of claims 1 to 4, wherein the profile information includes pieces of information and permissions associated with the pieces of information.

6. A method according to claims 4 and 5, wherein the identifying (2960) is based on the identified categories and the permissions associated with the pieces of information.

7. A method according to any of claims 1 to 6, further comprising obscuring (2964) the identified relevant profile information that is authorized to be shared.

8. A method according to any of claims 1 to 7, wherein the short-range wireless message includes an encryption request and/or a transmission schedule, that the mobile device (2902) may perform prior to transmitting the identified relevant profile information that is authorized to be shared.

9. A method according to claim 8, wherein the encryption request includes an encryption key that may be used by the mobile device (2902) to obscure the identified relevant profile information that is authorized to be shared.

10. A method according to any of claims 1 to 9, wherein the proximate device (2901) is a mobile device or a stationary device.

11. A mobile device (2902) configured to provide profile information associated with a user based on proximity, comprising:

   means for storing the profile information;
   means for receiving a short-range wireless message from a proximate device (2901);
   means for identifying relevant profile information within the stored profile information that is authorized to be shared based on the received message; and
   means for transmitting a message including the identified relevant profile information that is authorized to be shared.

12. A non-transitory processor-readable storage medium having stored thereon processor executable instructions configured to cause a mobile device (2902) to perform operations to provide profile information associated with a user based on proximity, the operations comprising:

   storing the profile information;
   receiving a short-range wireless message from a proximate device (2901);
   identifying relevant profile information within the stored profile information that is authorized to be shared based on the received message; and
   transmitting a message including the identified relevant profile information that is authorized to be shared.

120 ⌐                                    ⌐100

## Central Server

| 104 ⌐ | 105 ⌐ | 106 ⌐ |
|---|---|---|
| **Data Warehouse**<br><br>Long-term data | **OA & M**<br><br>-Portal<br>-Scripts<br>-Tools | **Developer Portal**<br><br>-Registration<br>-Acct Mgmt<br>-Alert Mgmt<br><br>Accounts |

| 107 ⌐ | 108 ⌐ | 109 ⌐ |
|---|---|---|
| **Rolling ID Resolver**<br><br>Factory Keys | **Core**<br><br>-Authentication<br>-Alert Engine<br>-APIs<br><br>Sightings | **User Portal**<br><br>-Registrations<br>-Acct Mgmt<br>-Search<br><br>Accounts |

Internet — 103

121 ⌐

Cellular network

| 142 ⌐ | 138 ⌐ | 101 ⌐ | 102 ⌐ |
|---|---|---|---|
| **PBRs**<br><br>Core Client | **MPBRs**<br>⌐ 116<br>3rd Party Apps<br><br>Core Client | **3rd Party Systems** | **Other Support Systems and/or Services** |

115 ⌐                                    115

116

WITs

110 ⌐

## FIG. 1

FIG. 2

110 ◯

**302** Broadcast a message (i.e., broadcast message) including an identifier

↓

**304** Enter a sleep mode

↓

**306** Wake up

↓

**308** Generate new device identifier from algorithm (e.g., rolling identifier algorithm)

300

142

**312** Receive the broadcast message

↓

**314** Transmit a sighting message to central server including the identifier, location info, and time corresponding to receipt of the broadcast message

120

**322** Receive the sighting message from PBR

↓

**324** Associate identifier indicated by sighting message with the WIT

↓

**326** Store data from sighting message in database (e.g., location info and time)

↓

**340** Perform action in response to sighting message (e.g., transmit msg, send coupon, calculate rewards, etc.)

FIG. 3

400

**402** Boot-up

**403** Activate short range radio

**404** Broadcast configuration message indicating there are configuration parameters that can be set

**406** Receive configuration settings ?
No
Yes

**411** Wait a period

**408** Set parameters based on received configuration settings

**410** Config period elapsed?
No
Yes

**302'** Broadcast a message including an identifier based on config parameters

**412** Go to sleep for period based on config parameters

**308** Generate new device identifier from algorithm

FIG. 4

550

Reset counter — 552

Generate message including identification information, counter, and time of availability for receiving messages — 554

Broadcast generated message via short-range wireless transmissions — 556

No ⟨ Has counter time period expired? ⟩ — 558

Yes

Increment counter — 560

No ⟨ Available for receiving based on counter? ⟩ — 562

Yes

Listen for incoming messages — 564

Process received incoming messages — 566

No ⟨ Has receiving time period expired? ⟩ — 568

Yes

FIG. 5

EP 2 942 928 A1

600

138

116
3ʳᵈ Party Applications

115
Core Client

606
API

608
Authorization System

610
Radio Specific Sightings receiver (BTLE, LTE-D, WiFi, etc.)

612
OA&M Module

614
WIT Network Manager

616
Event Registration
Look-ahead IDs

618
Sightings Manager
Cache

620
OS & Platform

622
BTLE | LTE-D, etc. | Time Services | Location Services | Storage | WWAN/WLAN

624
626
628
630
632

103
Internet

110
WITs

120
Central Server

FIG. 6

86

700

702

No

Receive
broadcast message from a
WIT?

Yes

704

Generate sighting message based on info
from the received broadcast message (e.g.,
rolling identifier) and other associated data
(e.g., time of broadcast message receipt,
location info, etc.)

706

Transmit sighting message to a central server

FIG. 7

~800

Wireless
Identity          PBR          Central        User
Transmitter                    Server         Device

Short Range
Broadcast Message
802

sighting message
804

User Request
806

Response
808

FIG. 8

900

902

Receive broadcast message (e.g.,
advertisement packet) from a WIT

904

Perform an action based on a code in the
received message

FIG. 9

1000

1002

Receive a broadcast message from a WIT containing an identification code and/or second segment

1005

Is an action associated with the identification code and/or second segment stored locally?

No

Yes

1008

Perform the action

1010

Transmit a sighting message with the identifier code and/or second segment to a central server

1012

Receive an instruction message

1014

Perform an action based on the received instruction

FIG. 10

1100

```
                          ┌──────────────────────────────────┐
          No              │      702                          │
          ┌───────◇ Receive broadcast message from a WIT? ◇
          │              └──────────────────────────────────┘
          │                          │ Yes
          │              ┌─────706───────────────────────┐
          │              │ Transmit sighting message to central server │
          │              └──────────────────────────────┘
          │                          │
          │        No    ◇ 1101 Receive return message from central server? ◇
          │        ┌────◇
          │        │              │ Yes
          │        │    No  ◇ 1102 Return message includes WIT identification info? ◇
          │        │    ┌──◇
          │        │    │          │ Yes
          │        │    │  ┌─1104─────────────────────────┐
          │        │    │  │ Transmit message to local device (e.g., local server) for processing │
          │        │    │  └──────────────────────────────┘
          │        │    │          │
          │        │    No  ◇ 1106 Return message includes data for use? ◇
          │        │    └──◇
          │        │              │ Yes
          │        │    ┌─1108─────────────────────────┐
          │        │    │ Use data within return message │
          │        │    └──────────────────────────────┘
```

FIG. 11

FIG. 12

| Wireless Identity Transmitter | User's Mobile Device | Central Server |
|---|---|---|

**1302** Install application for use with WIT

**1304** Transmit registration request with user info (e.g., deviceID)

**1306** Receive user info for account registration

**1308** Register account for user

**402** Boot-up (e.g., battery inserted)

**1312** Store account info (e.g., authentication info, deviceID, etc.)

**1310** Provide account creation info to user

**1313** Broadcast a message including an encoded (or rolling) identifier

**1314** Receive the broadcast message

**1316** Transmit message with WIT's rolling identifier and other info (e.g., deviceID, and authentication info)

**1318** Receive message with encoded info, etc.

**1320** Validate authentication info

**1322** Generate set of rolling identifiers using deviceID and possible counter values

**1324** When matched with received rolling identifier, store relevant counter value and time in relation to WIT

**FIG. 13**

**1328** Receive registration result msg

**1326** Transmit registration result msg to user

93

**No** — 1402 — Receive sighting message?

1400

**Yes**

1404 — Identify WIT info, PBR info, and associated data based on sighting message

1406 — Obtain WIT identity based on rolling identifier within sighting message

1408 — Retrieve WIT user info based on obtained WIT identity

1410 — Retrieve PBR identification info (e.g., PBR user info, related services, etc.) based on identified PBR info

1411 — Authenticate sighting message

1412 — Generate hashed data based on obtained and/or retrieved data

1414 — Store data based on sighting message in relation to WIT identity

FIG. 14A

FIG. 14B

┌─1500

Wireless
Identity      PBR        Local       Central
Transmitter              Server      Server

Short Range
Broadcast Message

**802**

sighting message

**804** ─

Return message     **1502** ─

Message with data/
configuration info

**1504** ─

Message with ID/
configuration info

└─ **1506**

Response message

└─ **1508**

FIG. 15A

FIG. 15B

FIG. 16

**1700**

**1702**
Register relationship between WIT and PBR

**1705**
Wait a period    Yes

**1704**
Receive
sighting msg from PBR related to WIT
?

No

**1706**
Transmit message indicating lost WIT

FIG. 17

FIG. 18A

1820

1822

Receive multiple sighting messages from PBRs

1825

Are any sighting messages concurrent?

No

Yes

1828

Compute location and area of an overlapping region related to concurrent sighting messages

1830

Associate the overlapping region with the WIT

FIG. 18B

FIG. 18C

1860

```
                                                    ─ 1822
┌──────────────────────────────────────┐
│   Receive multiple sighting messages from │ ◀─┐
│                 PBRs                     │   │
└──────────────────────────────────────┘   │
                    │                        │
                    ▼         ─ 1825         │
              ╱─────────────╲               │
             ╱      Are       ╲     No       │
            ╱  any sighting messages ╲──────┘
             ╲   concurrent?   ╱
              ╲─────────────╱
                    │
                   Yes
                    │
                    ▼              ─ 1868
┌──────────────────────────────────────┐
│   Compute a finer grained location of WIT │
│   based on received signal power levels and │
│  locations of PBRs transmitting the concurrent │
│              sighting msgs               │
└──────────────────────────────────────┘
                    │
                    ▼              ─ 1870
┌──────────────────────────────────────┐
│   Associate the finer grained location with the │
│                  WIT                     │
└──────────────────────────────────────┘
                    │              ─ 1872
┌ ─ ─ ─ ─ ─ ─ ─ ─ ─ ─ ─ ─ ─ ─ ─ ─ ─ ─ ┐
│  Transmit return message to PBR closest to │
│  WIT based on signal power info reported in │
│           received sighting msgs          │
└ ─ ─ ─ ─ ─ ─ ─ ─ ─ ─ ─ ─ ─ ─ ─ ─ ─ ─ ┘
```

## FIG. 18D

1900

1902

Receive a WIT rolling identifier in a sighting
message from a PBR

1904

Compare the rolling identifier with code
calculated by algorithm shared with WIT (e.g.,
pseudo-random function, etc.)

1906

Associate matching identifier and any
associated data with a serial code
corresponding to the WIT

FIG. 19

WIT | Central Server | 2000

**2002** Receive shared secret key (*K*)

**2004** Encode *deviceID*, *K*, and counter value via streaming-like encryption algorithm (e.g., AES-CTR) to generate rolling identifier

**2006** Broadcast message (e.g., a Bluetooth LE® chirp message of 1 packet length) that includes counter and rolling identifier

**2010** Receive shared secret key (*K*)

**2012** Associate shared secret key (*K*) with WIT's device identifier (*deviceID*)

**2014** Receive message including counter and rolling identifier

**2016** Extract counter

**2018** Extract rolling identifier

**2019** Select a WIT to evaluate

**2020** Decode rolling identifier via same streaming-like encryption algorithm (e.g., AES-CTR) with counter and selected WIT's *K* to generate a decoded deviceID (*M*)

**2022** *M = deviceID?*  Yes / No

**2024** Identify Message as Originating from selected WIT

**2026** Decode rolling identifier with secret keys associated with other WITs

FIG. 20

2100

2102 — User registers device with central server

2104 — WIT initializes an internal counter (e.g., 0)

2106 — Encrypt counter and device identifier using secret key and encryption algorithm (e.g., AES-CTR) known to central server

2108 — Truncate data to generate indecipherable rolling identifier

2110 — Concatenate current counter with truncated data to make a message payload

2112 — Periodically transmit broadcast messages that include payload with rolling identifier

2114 — Counter time period expired ? — No

Yes

2116 — Increment counter value (e.g., counter+1)

2117 — Reset counter time period

FIG. 21A

FIG. 21B

**FIG. 22**

```
                                                              ⌐2300

2102 ─┐  ┌─────────────────────┐
       │  │ User registers device with
       │  │ central server       │
          └─────────────────────┘
                    │
                    ▼
2104 ─┐  ┌─────────────────────┐
       │  │ WIT initializes an internal
       │  │ counter (e.g., 0)    │
          └─────────────────────┘
                    │
                    ▼
2302 ─┐  ┌─────────────────────┐
       │  │ Concatenate current counter
       │  │ with unique device identifier
       │  │ (i.e., deviceID)     │
          └─────────────────────┘
                    │
                    ▼
2304 ─┐  ┌─────────────────────┐
       │  │ Generate payload with rolling
       │  │ identifier using pseudo-
       │  │ random function with
       │  │ concatenated data and secret
       │  │ key                  │
          └─────────────────────┘
                    │
                    ▼
2112 ─┐  ┌─────────────────────┐
       │  │ Periodically transmit
       │  │ broadcast messages that
       │  │ include payload with rolling
       │  │ identifier           │
          └─────────────────────┘
                    │
                    ▼
2114 ─┐      ◇ Counter
       │      time period expired ?  ── No ──
                    │
                   Yes
                    │
                    ▼
2116 ─┐  ┌─────────────────────┐
       │  │ Increment counter value (e.g.,
       │  │ counter+1)           │
          └─────────────────────┘
                    │
                    ▼
2117 ─┐  ┌─────────────────────┐
       │  │ Reset counter time period │
          └─────────────────────┘
```

FIG. 23A

EP 2 942 928 A1

**2352**
Establish database
records having *deviceID,
counter, time, reg_stat*
and secret key for each
WIT

**2354**
Receive rolling identifier
payload via sighting
message from PBR

**2356**
Obtain PBR time
(*ir_time*) from sighting
message

**2350**

**2164**
Select next registered
WIT

**2360**
Compute time difference
(*t_diff*) between selected
WIT's stored time
(*sel_time*) and *ir_time*

**2362**
Set clock drift offset to
next value (*offset*)

**2364**
Compute *new_ctr* based
on selected WIT's stored
*counter, t_diff,* and *offset*

**2366**
Encode via
pseudorandom function
the selected WIT's
*deviceID, K,* and *new_ctr*
to generate server-
encrypted data (C')

**2222**
Rolling
identifier
=C'?
Yes          No

**2370**
Is
there a next clock
drift offset value
?
Yes          No

**2170**
Is there another
registered WIT?
Yes          No

**2376**
Update database record
of selected WIT with
counter and time
information

**2374**
Configure system to
evaluate initial counter
stored for each selected
WIT

FIG. 23B

110

2102 — User registers device with central server

2400

2402 — Store first and second secret keys (*K*, *K'*) and initial counter known to central server

2404 — Initialize current counter = initial counter

2406 — Encode *deviceID*, *K*, and current counter value via streaming-like encryption algorithm (e.g., AES-CTR) to generate rolling identifier

2408 — Encode via pseudorandom function, the current counter, and *K'* to generate encoded counter

2410 — Periodically transmit broadcast messages that include payload with rolling identifier and encoded counter

2114 — Counter time period expired ? — No

Yes

2412 — Increment current counter value (e.g., current counter+1)

2117 — Reset counter time period

FIG. 24A

FIG. 24B

2480

2452
Establish database entry having *deviceID*, initial counter, current counter, and secret keys (*K* and *K*') for all WITs

2454
Pre-compute encoded counters using pseudorandom function, *K*', and current counter values for all WITs

2482
Pre-compute encoded devIDs with streaming-like encryption algorithm, *K*, *deviceID*, and current counter values for all WITs

2456
Receive message including encoded counter and rolling identifier

2472'
Update current counters and pre-computed encoded counters and pre-computed encoded devIDs

2458
Extract encoded counter

2018
Extract rolling identifier

2460
Extracted ctr = pre-computed ctr?
Yes
No

2462
Identify candidate WIT based on matching pre-computed counter

2170
Another registered WIT to evaluate?
No
Yes

2484
Extracted Rolling identifier = pre-computed IDs?
No

2468
Other candidates?
Yes
No

2164
Select next registered WIT

2474
Decode rolling identifier via the streaming-like encryption algorithm (e.g., AES-CTR) with selected WIT's initial counter and *K* to generate decoded deviceID (*M'*)

2470
Identify received message as originating from candidate WIT
Yes

FIG. 24C

2476
*M'* = selected WIT's *deviceID*?
No
Yes

2478
Identify received message as originating from selected WIT

FIG. 25

**2602**
Receive profile information
from user during registration

**2604**
Automatically obtain profile
information related to user from
online sources (e.g., social
networking accounts, shopping
websites, etc.)

**2606**
Store profile information from
user

**2608**
Assign categories to stored
profile information

**2600**

**1402**
Receive
sighting message?
No

Yes

**1603**
Ignore
sighting
msg

**1602**
WIT
Identity known
?
No

Yes

**1604**
Sighting msg related
to registered service?
No

Yes

**1414**
Store data based on sighting
message in relation to WIT
identity

**2612**
Identify categories
corresponding to registered
service

**2614**
Identify relevant profile
information associated with
WIT identity using identified
categories

**2616**
Transmit return message that
includes identified relevant
profile information to local
computing device related to
registered service

**2618**
Store data in relation to
registered service based on
identified relevant profile
information

FIG. 26A

2602 — Receive profile information from user during registration

2604 — Automatically obtain profile information related to user from online sources (e.g., social networking accounts, shopping websites, etc.)

2606 — Store profile information from user

2608 — Assign categories to stored profile information

2652 — Receive profile permissions from user

2654 — Store profile permissions

1402 — Receive sighting message? — No

Yes — 1603 — Ignore sighting msg

1602 — WIT Identity known ? — No

Yes

1604 — Sighting msg related to registered service? — No

1414 — Yes — Store data based on sighting message in relation to WIT identity

2612 — Identify categories corresponding to registered service

2614 — Identify relevant profile information associated with WIT identity using identified categories

2660 — Identify relevant profile info that registered service is authorized to receive based on stored permissions

2662 — Service authorized to receive any info? — No

2664 — Yes — Transmit return message that includes authorized relevant profile info to computing device related to registered service

2618 — Store data in relation to registered service based on identified relevant profile information

2650

FIG. 26B

Central server
performs
Block 2602-
2654, FIG. 26B

2700

| Description | Value | Category | Permissions |
|---|---|---|---|
| 2701 | 2702 | 2704 | 2706 |
| Is Vegan? | Yes | Food | All Food |
| Shoe Size | 11.5" | Clothing | Sally's Clothes, Box Store, ShoeHut |
| Favorite Drink | Beer | Alcohol | Tom's Bar & Grill |
| Favorite Bar | McCall's Pub | Alcohol | Private |
| Birthdate | 06/1/1978 | Personal | MyStore, All Food, All Clubs |
| Last restaurant visit | 08/12/2012 | Food | GreatMealz, Bob's Dogs |
| Home country | US | Personal | Public |
| Name | John Smith | Personal | All Service |
| Can Approach? | Yes | Service | All Service |

2710, 2711, 2712, 2713, 2714, 2715, 2716, 2717, 2718

Data table with Profile Info for a particular User

Central server
performs Block
2612, FIG. 26B

2722
Registered Service
Category

2720

2723
Food, Alcohol, Service,
Personal

Data table with Identified categories relevant to a particular
registered service (e.g., "Tom's Bar & Grill")

Central server
performs Block
2660, FIG. 26B

| Description | Value |
|---|---|
| 2731 | 2732 |
| Is Vegan? | Yes |
| Favorite Drink | Beer |
| Birthdate | 06/1/1978 |
| Home country | US |
| Name | John Smith |
| Can Approach? | Yes |

2730

2741, 2742, 2743, 2744, 2745, 2746

Data table with the user's authorized profile info matching the registered service's categories (e.g., categories
= "Food," "Alcohol," "Service" AND permissions = "All Food," "All Alcohol," "All," "Tom's Bar & Grill")

## FIG. 27A

2750

| Info | Value | Category | Permissions |
|------|-------|----------|-------------|
| Clothing Sizes: Shirt | XXL, 17.5, 34-35 | Clothing | The Nice Shop, Dr. Mens |
| Clothing Sizes: Shoe | 11.5" | Clothing, Shoes | Sally's Clothes, Box Store, ShoeHut |
| Clothing Sizes: Waist | 34 | Clothing | PRIVATE |
| Clothing Sizes: Inseam | 32 | Clothing | Dr. Mens |
| Food Preference: Meat | None | Food | All Food |
| Beverage Preference: Beer | IPA, BrandX, "TopShelf" Brewery | Food, Beverage, Alcohol | All Food, All Bars |
| Beverage Preference: Wine | Merlot, "Tbird" Wineries | Food, Beverage, Alcohol | MyStore, All Food, All Clubs |
| Beverage Preference: Hot Drinks | Chai Latte w/ soy | Food, Beverage | GreatMealz, Bob's Dogs |
| Food Alergies | Chocolate | Food | All Food, Medical |
| My Interests for matching purposes | Sports, anime, history | Interests | PUBLIC |

FIG. 27B

EP 2 942 928 A1

FIG. 28A

FIG. 28B

119

2870

**2602'**
Receive profile information from parties during registration

**2606'**
Store profile information from parties

**2608**
Assign categories to stored profile information

**2652'**
Receive profile permissions from parties

**2654**
Store profile permissions

**1402**
Receive sighting message? — No

Yes

**2872**
Identify first profile based on WIT's rolling identifier within sighting message

**2874**
Identify second profile based on info related to PBR within sighting message

**2876**
Identify authorized, relevant first profile info to share based on first profile permissions, and first & second profile assigned categories

**2878**
First profile info to share? — No

Yes

**2880**
Transmit message including authorized first profile info to device associated with second profile

**2882**
Identify authorized, relevant second profile info to share based on second profile permissions, and first & second profile assigned categories

**2884**
Second profile info to share? — No

Yes

**2886**
Transmit message including authorized second profile info to device associated with first profile

FIG. 28C

EP 2 942 928 A1

FIG. 29A

Device A
2901
2904 — Public Info of Device A
(e.g., categories)
2902
Device B

FIG. 29B

Device A
2901
2914 — Authorized Device B
Profile Info
2902
Device B

2952

Receive profile info (e.g., categories, permissions, etc.) from user interaction

2954

Download profile info (e.g., categories, permissions, etc.) from central server

2956

Store profile info locally

2957

Receive short-range wireless msg from a proximate device ?

No

Yes

2958

Identify categories based on evaluation of received message

2960

Identify relevant, authorized profile info to share based on stored profile permissions and identified relevant categories

2962

Profile info to share?

No

Yes

2964

Obscure authorized profile info based on instructions in received message

2966

Transmit response message including authorized profile info

2950

FIG. 29B

FIG. 30

**3102**
Store profile information including permissions settings from user

**3100**

**1402** Receive sighting message?

No → **1603** Ignore sighting msg

Yes ↓

**1602** WIT Identity known ? — No →

Yes ↓

**1604** Sighting msg related to registered service? — No →

Yes ↓

**1414** Store data based on sighting message in relation to WIT identity

**3104** WIT near a point-of-sale Device (e.g., distance < threshold)? — No →

Yes ↓

**3105** Identify payment authentication info from user profile relevant to the proximate point-of-sale device and authorized for sharing by profile permissions

**3106** Transmit return message to point-of-sale device that includes payment authentication information

FIG. 31

3200

**1101**

No — Receive return message from central server?

Yes

**3202** — Parse return message to detect data related to a user

**3203** — Store data from sighting message and/or return message in local database

**3204**

No — Return message contains payment authentication data?

Yes

**3206** — Utilize payment authentication information to assist in transaction with user (e.g., display info on monitor for customer service rep, execute software, etc.)

FIG. 32A

3250

3252
No

Receive
sighting message from PBR
?

Yes

3254
Append additional data to sighting message
(e.g., local server ID, related service info, etc.)

3256
Relay sighting message to central server

1101
No

Receive return message
from central server?

Yes

3202
Parse return message to detect data related to a
user

3203
Store data from sighting message and/or return
message in local database

3204
No

Return
message contains payment
authentication data?

Yes

3206
Utilize payment authentication information to
assist in transaction with user

FIG. 32B

3275

**1101**
No

Receive return message
from central server?

Yes

**3202**

Parse return message to detect data related to a
user

**3203**

Store data from sighting message and/or return
message in local database

**3204**
No

Return
message contains payment
authentication data?

Yes

**3276**

Identify PBR within proximity of user based on
return message

**3278**
No

PBR near point-of-sale
Device (e.g., distance < threshold)?

Yes

**3206**

Utilize payment authentication information to
assist in transaction with user

**3280**

Transmit message to point-of-sale device with
payment authentication data

FIG. 32C

**110**

3302 — Microcontroller

3304 — Short Range Radio

3306 — Antenna

3308 — Memory

3310 — Battery

FIG. 33A

FIG. 33B

142

3402 — Processor

3404 — Short Range Radio

3406 — Antenna

3408 — Secondary Network Device

3410 — Battery

3412 — Memory

3414 — GPS Receiver

FIG. 34A

FIG. 34B

FIG. 35

FIG. 36

Europäisches
Patentamt

European
Patent Office

Office européen
des brevets

# EUROPEAN SEARCH REPORT

**Application Number**

EP 15 17 3937

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2008/123683 A1 (CHENG TSZ S [US] ET AL CHENG TSZ SIMON [US] ET AL) 29 May 2008 (2008-05-29) * abstract * * page 2, paragraph 21 * * page 3, paragraphs 33,37 * ----- | 1-12 | INV. H04L29/08 H04W4/00 G06Q30/00 |
| X | US 2011/179064 A1 (RUSSO ANTHONY PETER [US]) 21 July 2011 (2011-07-21) * page 4, paragraphs 53,54 and 57 * * page 6, paragraphs 71,72 * ----- | 1-12 | |

TECHNICAL FIELDS
SEARCHED      (IPC)

H04L
G06Q
H04W

The present search report has been drawn up for all claims

| Place of search | Date of completion of the search | Examiner |
|---|---|---|
| The Hague | 7 October 2015 | Blanco Cardona, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT**
**ON EUROPEAN PATENT APPLICATION NO.**                    EP 15 17 3937

This annex lists the patent family members relating to the patent documents cited in the above-mentioned European search report.
The members are as contained in the European Patent Office EDP file on
The European Patent Office is in no way liable for these particulars which are merely given for the purpose of information.

07-10-2015

| Patent document cited in search report | Publication date | Patent family member(s) | Publication date |
|---|---|---|---|
| US 2008123683 A1 | 29-05-2008 | CN 101127684 A<br>US 2008123683 A1 | 20-02-2008<br>29-05-2008 |
| US 2011179064 A1 | 21-07-2011 | NONE | |

EPO FORM P0459

For more details about this annex : see Official Journal of the European Patent Office, No. 12/82

**EP 2 942 928 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 77337913 A
- US 77333613 A
- US 61601620 A
- US 61637834 A
- US 61693169 A
- US 61670226 A
- US 61701457 A
- US 61713239 A
- US 61716373 A
- US 61717964 A
- US 61728677 A
- US 61745395 A
- US 61745308 A
- US 773336 A